(19) Europäisches Patentamt
European Patent Office
Office européen des brevets

(11) EP 2 464 015 A1

(12) **EUROPEAN PATENT APPLICATION**
published in accordance with Art. 153(4) EPC

(43) Date of publication:
**13.06.2012 Bulletin 2012/24**

(21) Application number: **10806248.0**

(22) Date of filing: **06.08.2010**

(51) Int Cl.:
***H03M 7/30*** *(2006.01)* ***H04N 7/30*** *(2006.01)*
***H04N 7/32*** *(2006.01)*

(86) International application number:
**PCT/JP2010/004951**

(87) International publication number:
**WO 2011/016248 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:
**06.08.2009 JP 2009183791**
**21.08.2009 JP 2009192618**
**21.08.2009 JP 2009192627**
**29.04.2010 US 329406 P**
**18.05.2010 US 345703 P**
**15.07.2010 US 364580 P**

(71) Applicant: **Panasonic Corporation**
**Kadoma-shi**
**Osaka 571-8501 (JP)**

(72) Inventors:
- **SHIBAHARA, Youji**
  **Osaka 540-6207 (JP)**
- **NISHI, Takahiro**
  **Osaka 540-6207 (JP)**
- **SASAI, Hisao**
  **Osaka 540-6207 (JP)**
- **TANIKAWA, Kyoko**
  **Osaka 540-6207 (JP)**
- **NARROSCHKE, Matthias**
  **63225 Langen (DE)**
- **DRUGEON, Virginie**
  **Osaka 540-6207 (JP)**
- **WITTMANN, Steffen**
  **Osaka 540-6207 (JP)**

(74) Representative: **Grünecker, Kinkeldey, Stockmair & Schwanhäusser**
**Leopoldstrasse 4**
**80802 München (DE)**

# (54) ENCODING METHOD, DECODING METHOD, ENCODING DEVICE AND DECODING DEVICE

(57) A coding method according to the present invention comprises: transforming an input signal (S110a); quantizing a transformed output signal (S120); and entropy coding quantized coefficients (S130), wherein the transforming (S110a) includes: generating a first transformed output signal by performing a first transform on the input signal using a first transform coefficient (S112); generating a second transformed output signal by performing, using a second transform coefficient, a second transform on a first partial signal which is a part of the first transformed output signal, and outputting the transformed output signal including the generated second transformed output signal and a second partial signal which is the remaining part of the first transformed output signal other than the first partial signal (S116a); and modifying the first transformed output signal.

FIG. 10

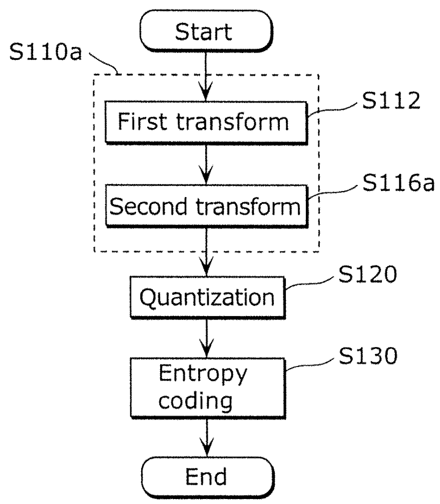


EP 2 464 015 A1

Printed by Jouve, 75001 PARIS (FR)

## Description

[Technical Field]

The present invention relates to coding methods for coding audio, still images, and video, and particularly to a coding method involving a process of transforming an input signal from spatio-temporal domain to frequency domain.

[Background Art]

A plurality of audio coding standards and video coding standards has been developed in order to compress audio data, video data, etc. Such video standards are, for instance, the ITU-T standards denoted with H. 26x and the ISO/IEC standards denoted with MPEG-x. The most up-to-date and advanced video coding standard is currently the standard denoted as H. 264/MPEG-4 AVC.

FIG. 1 is a block diagram showing a structure of a conventional coding apparatus 1600. As shown in FIG. 1, the coding apparatus 1600 includes a transform unit 1610, a quantization unit 1620, and an entropy coding unit 1630. The coding apparatus 1600 codes audio data, video data, etc. at a low bit rate.

The transform unit 1610 transforms, as various kinds of target data, one of an input signal and a transform target input signal generated by performing some processing on the input signal, from spatio-temporal domain to frequency domain, and thereby generates a transformed output signal having a reduced correlation. The generated transformed output signal is output to the quantization unit.

The quantization unit 1620 quantizes the transformed output signal output from the transform unit 1610, and thereby generates quantized coefficients having a small total data amount. The generated quantized coefficients are output to the entropy coding unit.

The entropy coding unit 1630 codes the quantized coefficients output from the quantization unit 1620 using an entropy coding algorithm, and thereby generates a coded signal having a compressed amount of data. The generated coded signal is, for example, recorded on a recording medium, or transmitted to a decoding apparatus or the like via a network.

The transform processing performed by the transform unit 1610 is described in detail below.

The transform unit 1610 receives an input of an n-point vector (N-dimensional signal) that is a transform target signal (that is, an input signal to be transformed), as a transform input vector $x^n$. The transform unit performs predetermined transform processing (a transform T) on the transform input vector $x^n$, and outputs a transform output vector $y^n$ as the transformed output signal (See Expression 1).

[Math. 1]

$$y^n = T[x^n] \quad \text{(Expression 1)}$$

When a transform T is a linear transform, the transform T can be represented as the product of a transform matrix A that is an n × n square matrix and the transform input vector $x^n$. It is to be noted that Expression 3 is an expression for calculating, for each of the elements $y_i$ of the transform matrix A, the transform output vector $y^n$ using a transform coefficient $a_{ik}$ denoting each element of the transform matrix A.

[Math. 2]

$$T[x^n] = Ax^n \quad \text{(Expression 2)}$$

[Math. 3]

$$y_i = \sum_{k=1}^{n} a_{ik} x_k \quad \text{(Expression 3)}$$

The transform matrix A is designed to reduce the correlation within an input signal, and focus the signal energy to the elements having a small n (at the low-frequency side) among the elements of the transform output vector $y^n$. Examples of known methods in designing such a transform matrix A include a transform coefficient deriving scheme or a transform method called Karhunen Loeve Transform (KLT).

KLT is a method for deriving optimum transform coefficients or a transform method using derived optimum transform coefficients, based on statistical properties of an input signal. KLT is known as a technique which makes it possible to completely eliminate the correlation within an input signal, and to focus the energy on the low-frequency side most efficiently.

In other words, KLT is ideal transform processing, and makes it possible to perform coding of a current signal to be coded transformed according to KLT with an excellent coding efficiency.

[Summary of Invention]

[Technical Problem]

However, KLT shown in the conventional technique has a problem of requiring a large calculation amount and a large data amount of transform coefficients that are the coefficients of a transform matrix for use in the transform. A detailed description is provided below.

As shown in FIG. 2, in Discrete Cosine Transform (DCT) involving a high-speed algorithm such as a butterfly structure, the number of multiplications in the case of an M-dimensional input signal is obtained according to $M \times \mathrm{Log}_2(M)$ (the dimension is hereinafter also referred to as the number of input points). On the other hand, in KLT, the number of multiplications in the same case is obtained according to $M \times M$. For example, the numbers of multiplications in DCT are 8 and 24 when the numbers of the input points is 4 and 8, respectively. On the other hand, in KLT, the number of multiplications is 16 (2 times larger than the number of multiplications in DCT) when the number of the input points is 4, and the number of multiplications is 64 (2.6 times larger than the number of multiplications in DCT) when the number of the input points is 8. When the number of the input points is 16, the number of multiplications is 4.0 times larger than the number of multiplications in DCT. The calculation amount in KLT significantly increases with increase in the transform size. Therefore, KLT has a problem of requiring a large calculation amount compared to DCT.

Furthermore, in KLT, the transform matrix A is derived based on the statistical properties of a set $S_A$ including the input signal vector $x^n$. The transform using the transform matrix A makes it possible to de-correlate the input signal vector $x^n$ in the set $S_A$ and compress the energy by focusing the energy to the low-frequency side. However, in the case of an input signal vector included in a set $S_B$ having statistical properties different from those of the set $S_A$ assumed at the designing time, the result of the transform using the transform matrix A is not the optimum one. In contrast, in the case of generating transform coefficients according to minor changes in the statistical properties of an input signal, the data amount of the transform coefficients is huge.

As described above, transform such as KLT using transform matrices each composed of transform coefficients calculated based on the statistical properties of an input signal has a problem of requiring a large calculation amount and a large data amount of transform coefficients. Therefore, it has been difficult to use KLT in conventional coding.

The present invention has been conceived to solve the aforementioned problem, and thus has an object to provide a coding method and a coding apparatus which make it possible to suppress increase in the calculation amount and the data amount of transformed coefficients and thereby to increase the coding efficiency. Furthermore, the present invention has an object to provide a decoding method and a decoding apparatus which make it possible to correctly decode a signal coded using the coding method and the coding apparatus of the present invention.

[Solution to Problem]

In order to solve the aforementioned problems, a coding method according to an aspect of the present invention comprises: transforming an input signal to generate a transformed output signal; quantizing the transformed output signal to generate quantized coefficients; and entropy coding the quantized coefficients to generate a coded signal, wherein the transforming includes: generating a first transformed output signal by performing a first transform on the input signal using a first transform coefficient; generating a second transformed output signal by performing, using a second transform coefficient, a second transform on a first partial signal which is a part of the first transformed output signal, and generating the transformed output signal including the generated second transformed output signal and a second partial signal which is the remaining part of the first transformed output signal other than the first partial signal; and modifying the first transformed output signal.

The method includes performing a first transform at a first stage on an input signal to generate a first transform output signal, and performing a second transform at a second stage on a first partial signal that is a part of the transformed output signal. The first partial signal that is a target for a second transform has the number of dimensions reduced from the number of dimensions of the first transformed output signal. Thus, it is possible to reduce the calculation amount and the total number of transform coefficients. Furthermore, the two transforms consisting of the first transform and the second transform reduce the correlation than conventional. Thus, it is possible to increase the coding efficiency. Furthermore, since the first transformed output signal is modified before the second transform, the second transform can be performed more appropriately.

In addition, in the generating of the first transformed output signal, the first transform may be performed using a predetermined coefficient as the first transform coefficient.

There is a case where the sizes of the bases of the transform coefficients vary when a transform (such as DCT) using a predetermined coefficient is performed as a first transform. This structure makes it possible to perform the second transform more appropriately by modifying the first transformed output signal before the second transform. Furthermore, it is possible to reduce the calculation amount because there is no need to derive the first transform coefficient for use in the first transform.

In addition, in the modifying, the first transformed output signal may be modified by normalizing the first transformed output signal using a modification parameter determined based on the first transform coefficient.

With this structure, the first transformed output signal is normalized, and thus it is possible to solve the problem that the sizes of the bases vary and thereby to perform the second transform more appropriately.

In addition, in the modifying, the first transformed output signal may be modified by weighting the first transformed output signal using a weight scale of a quantization matrix that is used in the quantizing.

With this structure, it is possible to perform also the weighting in the scaling of the quantization matrix in the transform process although such weighting is normally performed in the quantization process.

In addition, in the modifying, the first partial signal and the second partial signal may be separately modified.

In the case where the properties of a signal vary between the target part and non-target part for the second transform, this structure makes it possible to perform more appropriate transform by modifying the signal parts separately.

In addition, in the modifying, the first transformed output signal may be modified by shifting down coefficient values that compose the first partial signal such that an effective data length in the second transform is equal to or smaller than a predetermined value.

With this structure, it is possible to maintain the data size (bit length) which can be stored in a memory before and after the transform.

In addition, in the modifying, coefficient values that compose the first partial signal or coefficient values that compose the second transformed output signal may be shifted down such that the bit length of the coefficient values of the first partial signal or the second transformed output signal is equal to a bit length of coefficient values that compose the second partial signal.

With this structure, it is possible to maintain the data size (bit length) which can be stored in a memory before and after the transform.

Furthermore, a decoding method according to an aspect of the present invention comprises: entropy decoding a coded signal to generate decoded quantized coefficients; inverse quantizing the decoded quantized coefficients to generate a decoded transformed output signal; and inverse transforming the decoded transformed output signal to generate a decoded signal, wherein the inverse transforming includes: generating a first decoded partial signal by performing, using the second inverse transform coefficient, a second inverse transform on a second decoded transformed output signal which is a part of the decoded transformed output signal; generating the decoded signal by performing, using a first inverse transform coefficient, a first transform on a first decoded transformed output signal including the first decoded partial signal and a second decoded partial signal which is the remaining part of the decoded transformed output signal other than the second decoded transformed output signal; and modifying the first decoded partial signal.

With this configuration, it is possible to decode a coded signal by a small calculation amount and a small number of transform coefficients.

In addition, in the generating of the decoded signal, the first inverse transform may be performed using a predetermined coefficient as the first inverse transform coefficient.

In addition, in the modifying, the first decoded transformed output signal may be modified by normalizing the first decoded transformed output signal using a modification parameter determined based on the first inverse transform coefficient.

In addition, in the modifying, the first decoded transformed output signal may be modified by weighting the first decoded partial signal using a weight scale of a quantization matrix that is used in the inverse quantizing.

In addition, in the modifying, the first decoded partial signal and the second decoded partial signal may be separately modified.

In addition, in the modifying, the first decoded transformed output signal may be modified by shifting down coefficient values that compose the second decoded transformed output signal such that an effective data length in the second inverse transform is equal to or smaller than a predetermined value.

In addition, in the modifying, coefficient values that compose the first decoded partial signal or coefficient values that compose the second decoded transformed output signal may be shifted down such that a bit length of each of the coefficient values of the first decoded partial signal or the second decoded transformed output signal is equal to a bit length of a corresponding one of coefficient values that compose the second decoded partial signal.

Any one of the decoding methods described above makes it possible to suppress increase in the calculation amount and the data amount of transform coefficients, as in the case of a corresponding one of the coding methods. Furthermore, it is possible to correctly decode a coded signal coded using the corresponding coding method.

It is to be noted that the present invention can be realized or implemented not only as coding methods and decoding methods, but also as coding apparatuses and decoding apparatuses which include processing units for performing the processing steps included in the coding methods and the decoding methods. In addition, the present invention may be realized as a program causing a computer to execute these steps. Furthermore, the present invention may be implemented as recording media such as computer-readable Compact Disc-Read Only Memories (CD-ROMs) including the program recorded thereon, and information, data, and/or signals representing the program. Naturally, the program, information, data, and signals may be distributed through communication networks such as the Internet.

Some or all of the structural elements which make up each of the coding and decoding apparatuses may be configured in the form of a single system Large Scale Integration (LSI). Such a system LSI is a super multifunctional LSI manufactured by integrating plural structural element units on a single chip. For example, the system LSI is a computer system configured to include a macro processor, a ROM, a RAM, and the like.

[Advantageous Effects of Invention]

The present invention makes it possible to suppress increase in the calculation amount and the data amount of transform coefficients, and thereby to increase the coding efficiency.

[Brief Description of Drawings]

[FIG. 1]
FIG. 1 is a block diagram showing a structure of a conventional coding apparatus.
[FIG. 2]
FIG. 2 is a table of comparison of calculation amounts between DCT and KLT.
[FIG. 3]
FIG. 3 is a block diagram showing an example of a structure of a coding apparatus according to Embodiment 1 of the present invention.
[FIG. 4]
FIG. 4 is a flowchart showing an example of transform processing according to Embodiment 1 of the present invention.
[FIG. 5A]
FIG. 5A is a diagram conceptually showing an example of a data flow in a transform unit according to Embodiment 1 of the present invention.
[FIG. 5B]
FIG. 5B is a diagram conceptually showing another example of a data flow in the transform unit according to Embodiment 1 of the present invention.
[FIG. 6]
FIG. 6 is a flowchart showing another example of transform processing according to Embodiment 1 of the present invention.

[FIG. 7]

FIG. 7 is a diagram conceptually showing an example of derivation of transform coefficients in the transform unit according to Embodiment 1 of the present invention.

[FIG. 8]

FIG. 8 is a diagram conceptually showing an example of matrix calculation according to Embodiment 1 of the present invention.

[FIG. 9]

FIG. 9 is a block diagram showing an example of a structure of a coding apparatus according to Variation of Embodiment 1 of the present invention.

[FIG. 10]

FIG. 10 is a flowchart showing an example of operations performed by the coding apparatus according to Variation of Embodiment 1 of the present invention.

[FIG. 11A]

FIG. 11A is a block diagram showing an example of a structure of a decoding apparatus according to Embodiment 2 of the present invention.

[FIG. 11B]

FIG. 11B is a block diagram showing an example of a structure of an inverse transform unit in the decoding apparatus according to Embodiment 2 of the present invention.

[FIG. 12]

FIG. 12 is a flowchart showing an example of operations performed by the decoding apparatus according to Embodiment 2 of the present invention.

[FIG. 13A]

FIG. 13A is a diagram conceptually showing an example of a data flow in an inverse transform unit according to Embodiment 2 of the present invention.

[FIG. 13B]

FIG. 13B is a diagram conceptually showing another example of a data flow in the inverse transform unit according to Embodiment 2 of the present invention.

[FIG. 14]

FIG. 14 is a flowchart showing an example of inverse transform processing according to Embodiment 2 of the present invention.

[FIG. 15]

FIG. 15 is a block diagram showing an example of a structure of a decoding apparatus according to Variation of Embodiment 2 of the present invention.

[FIG. 16]

FIG. 16 is a flowchart showing an example of operations performed by the decoding apparatus according to Variation of Embodiment 2 of the present invention.

[FIG. 17]

FIG. 17 is a block diagram showing an example of a structure of a coding apparatus according to Embodiment 3 of the present invention.

[FIG. 18]

FIG. 18 is a flowchart showing an example of operations performed by the coding apparatus according to Embodiment 3 of the present invention.

[FIG. 19]

FIG. 19 is a block diagram showing an example of a structure of a transform unit according to Embodiment 3 of the present invention.

[FIG. 20]

FIG. 20 is a block diagram showing an example of a structure of another transform unit according to Embodiment 3 of the present invention.

[FIG. 21]

FIG. 21 is a diagram conceptually showing an example of derivation of transform coefficients in the transform unit according to Embodiment 3 of the present invention.

[FIG. 22]

FIG. 22 is a block diagram showing an example of a structure of a transform unit according to Variation of Embodiment 3 of the present invention.

[FIG. 23]

FIG. 23 is a block diagram showing an example of a structure of a coding apparatus according to Variation of Embodiment 3 of the present invention.

[FIG. 24A]
FIG. 24A is a block diagram showing an example of a structure of the coding apparatus according to Variation of Embodiment 3 of the present invention.
[FIG. 24B]
FIG. 24B is a block diagram showing an example of a structure of the coding apparatus according to Variation of Embodiment 3 of the present invention.
[FIG. 25]
FIG. 25 is an example of an association table of second transform coefficients and division and synthesis information stored in a memory in the coding apparatus according to Variation of Embodiment 3 of the present invention.
[FIG. 26A]
FIG. 26A is a diagram conceptually showing an example of correlations between (i) a first transformed output signal and (ii) a first partial signal and a second partial signal according to Embodiment 3 of the present invention.
[FIG. 26B]
FIG. 26B is a diagram conceptually showing an example of division and synthesis information according to Embodiment 3 of the present invention.
[FIG. 26C]
FIG. 26C is a diagram conceptually showing an example of division and synthesis information according to Embodiment 3 of the present invention.
[FIG. 27]
FIG. 27 is a block diagram showing an example of a structure of a decoding apparatus according to Embodiment 4 of the present invention.
[FIG. 28]
FIG. 28 is a flowchart showing an example of operations performed by the decoding apparatus according to Embodiment 4 of the present invention.
[FIG. 29]
FIG. 29 is a block diagram showing an example of a structure of an inverse transform unit according to Embodiment 4 of the present invention.
[FIG. 30]
FIG. 30 is a block diagram showing an example of a structure of a decoding apparatus according to Variation of Embodiment 4 of the present invention.
[FIG. 31]
FIG. 31 is a block diagram showing an example of a structure of another decoding apparatus according to Variation of Embodiment 4 of the present invention.
[FIG. 32]
FIG. 32 is a block diagram showing an example of a structure of a transform unit according to Embodiment 5 of the present invention.
[FIG. 33]
FIG. 33 is a diagram conceptually showing an example of derivation of transform coefficients in the transform unit according to Embodiment 5 of the present invention.
[FIG. 34]
FIG. 34 is a block diagram showing an example of a structure of a transform unit according to Variation of Embodiment 5 of the present invention.
[FIG. 35]
FIG. 35 is a block diagram showing an example of a structure of another transform unit according to Variation of Embodiment 5 of the present invention.
[FIG. 36]
FIG. 36 is a block diagram showing an example of a structure of an inverse transform unit according to Embodiment 6 of the present invention.
[FIG. 37]
FIG. 37 is a block diagram showing an example of a structure of an inverse transform unit according to Variation of Embodiment 6 of the present invention.
[FIG. 38]
FIG. 38 is a block diagram showing an example of a structure of an inverse transform unit according to Variation of Embodiment 6 of the present invention.
[FIG. 39]
FIG. 39 is a diagram conceptually showing an example of a data flow in a transform unit according to Embodiment 7 of the present invention.
[FIG. 40]

FIG. 40 is a diagram conceptually showing an example of a data flow in a second transform that is of a separable type according to Embodiment 7 of the present invention.
[FIG. 41]
FIG. 41 is a diagram conceptually showing an example of a data flow in the case where a multi-dimensional transform target input signal according to Embodiment 7 of the present invention includes signals Y, U, and V.
[FIG. 42]
FIG. 42 is a diagram conceptually showing an example of a data flow in the case where a multi-dimensional transform target input signal according to Embodiment 7 of the present invention corresponds to a signal of spatially adjacent blocks.
[FIG. 43]
FIG. 43 is a diagram conceptually showing an example of a data flow in an inverse transform unit according to Embodiment 8 of the present invention.
[FIG. 44]
FIG. 44 is a diagram conceptually showing an example of a data flow in another inverse transform unit according to Embodiment 8 of the present invention.
[FIG. 45]
FIG. 45 is a diagram conceptually showing an example of a data flow in the case where a multi-dimensional decoded transformed output signal according to Embodiment 8 of the present invention includes signals Y, U, and V.
[FIG. 46]
FIG. 46 is a diagram conceptually showing an example of a data flow in the case where a multi-dimensional decoded transformed output signal according to Embodiment 8 of the present invention corresponds to a signal of a spatially adjacent block.
[FIG. 47]
FIG. 47 is a diagram conceptually showing an example of a data flow in a transform unit according to Embodiment 9 of the present invention.
[FIG. 48A]
FIG. 48A is a flowchart showing an example of transform processing according to Embodiment 9 of the present invention.
[FIG. 48B]
FIG. 48B is a flowchart showing an example of transform processing according to Embodiment 9 of the present invention.
[FIG. 49]
FIG. 49 is a flowchart showing an example of transform processing according to Variation of Embodiment 9 of the present invention.
[FIG. 50]
FIG. 50 is a flowchart showing an example of transform processing according to Variation of Embodiment 9 of the present invention.
[FIG. 51A]
FIG. 51A is a flowchart showing an example of inverse transform processing according to Embodiment 10 of the present invention.
[FIG. 51B]
FIG. 51B is a flowchart showing an example of inverse transform processing according to Embodiment 10 of the present invention.
[FIG. 52]
FIG. 52 is a flowchart showing an example of inverse transform processing according to Variation of Embodiment 10 of the present invention.
[FIG. 53]
FIG. 53 is a flowchart showing an example of inverse transform processing according to Variation of Embodiment 10 of the present invention.
[FIG. 54A]
FIG. 54A is a block diagram showing an example of a structure of a coding apparatus according to Embodiment 11 of the present invention.
[FIG. 54B]
FIG. 54B is an example of a table of how shown signals are processed differently in the coding apparatus according to Embodiment 11 of the present invention.
[FIG. 55A]
FIG. 55A is a block diagram showing an example of a structure of a decoding apparatus according to Embodiment 12 of the present invention.

[FIG. 55B]
FIG. 55B is an example of a table of how shown signals are processed differently in the decoding apparatus according to Embodiment 12 of the present invention.
[FIG. 56A]
FIG. 56A is a diagram showing an example of a transform matrix according to Embodiment 13 of the present invention.
[FIG.56B]
FIG. 56B is a diagram showing an example of absolute average values according to Embodiment 13 of the present invention.
[FIG. 56C]
FIG. 56C is a diagram showing an example of header description values (that is, differences) according to Embodiment 13 of the present invention.
[FIG. 56D]
FIG. 56D is a diagram showing an example of a second transform matrix according to Embodiment 13 of the present invention.
[FIG. 56E]
FIG. 56E is a diagram showing a relationship of signs between the elements of an upper triangle and the elements of a lower triangle according to Embodiment 13 of the present invention.
[FIG. 56F]
FIG. 56F is a diagram showing an example of a transform matrix according to Embodiment 13 of the present invention.
[FIG. 57A]
FIG. 57A is a diagram showing an example of a timing chart of transform and quantization according to Embodiment 14 of the present invention.
[FIG. 57B]
FIG. 57B is a diagram showing an example of a timing chart of transform and quantization according to Embodiment 14 of the present invention.
[FIG. 58A]
FIG. 58A is a diagram showing an example of a timing chart of inverse quantization and inverse transform according to Embodiment 15 of the present invention.
[FIG. 58B]
FIG. 58B is a diagram showing an example of a timing chart of inverse transform and inverse quantization according to Embodiment 15 of the present invention.
[FIG. 59]
FIG. 59 is a diagram showng an overall configuration of a content providing system for providing content distribution services.
[FIG. 60]
FIG. 60 is a diagram showng an overall configuration of a digital broadcasting system.
[FIG. 61]
FIG. 61 is an illustration of an external view of a mobile phone.
[FIG. 62]
FIG. 62 is a block diagram showing an exemplary structure of the mobile phone.
[FIG. 63]
FIG. 63 is a block diagram showing an exemplary structure of a television receiver.
[FIG. 64]
FIG. 63 is a block diagram showing an exemplary structure of an information reproducing and recording unit which reads and writes information from and onto a recording medium that is an optical disc.
[FIG. 65]
FIG. 65 is an illustration of an exemplary structure of the recording medium that is the disc.
[FIG. 66]
FIG. 66 is a block diagram showing an exemplary structure of an integrated circuit for realizing the video coding method and the video decoding method according to each of the embodiments.

[Description of Embodiments]

Hereinafter, embodiments of the present invention will be described with reference to the drawings.

[Embodiment 1]

A coding apparatus according to Embodiment 1 of the present invention includes a transform unit configured to transform an input signal into a transformed output signal, a quantization unit configured to quantize the transformed output signal to generate quantized coefficients, and an entropy coding unit configured to entropy codes the quantized coefficients to generate a coded signal. The transform unit includes (i) a first transform unit configured to perform a first transform on the input signal using a first transform matrix composed of first transform coefficients to generate a first transformed output signal, and (ii) a second transform unit configured to perform a second transform on a first partial signal which is a part of the first transformed output signal using a second transform matrix composed of second transform coefficients to generate a second transformed output signal, and to output a synthesized transformed output signal including the generated second transformed output signal and a second partial signal which is the remaining part of the first transformed output signal other than the first partial signal.

In other words, the coding apparatus according to Embodiment 1 of the present invention is characterized by performing two-stage transform processes on the input signals. More specifically, the coding apparatus according to Embodiment 1 of the present invention is characterized by performing the first transform on the input signal, and performing the second transform on the first partial signal which is the part of the signal resulting from the first transform.

In this DESCRIPTION, a transform matrix may substantially mean transform coefficients.

A transform in this DESCRIPTION may be described as a matrix representation even when the transform can be performed without performing a simple matrix calculation, for example, in the case of using a circuit having a butterfly structure and shift and addition calculation. A transform described as a matrix representation does not exclude various kinds of transform requiring a reduced calculation amount. Examples of such various kinds of transform include transform using a circuit having a lifting structure or the like in addition to the aforementioned circuit having the butterfly structure and shift and addition calculation.

FIG. 3 is a block diagram showing an example of a structure of a coding apparatus 100 according to Embodiment 1 of the present invention. As shown in FIG. 3, the coding apparatus 100 includes a transform unit 110, a quantization unit 120, and an entropy coding unit 130.

The transform unit 110 transforms an input signal (transform target input signal) into a transformed output signal. As shown in FIG. 3, the transform unit 110 includes a first transform unit 200, a dividing unit 210, a second transform unit 220, and a synthesizing unit 230.

The first transform unit 200 performs a first transform on the transform target input signal using a first transform matrix to generate a first transformed output signal.

The dividing unit 210 divides the first transformed output signal into two parts. More specifically, the dividing unit 210 divides the first transformed output signal generated by the first transform unit 200 into a first partial signal and a second partial signal using division and synthesis information. Here, the division and synthesis information is an example of selection range information indicating which part of the first transformed output signal corresponds to the first partial signal.

The second transform unit 220 performs a second transform on the first partial signal using a second transform matrix to generate a second transformed output signal.

The synthesizing unit 230 synthesizes the second transformed output signal and the second partial signal to generate a synthesized transformed output signal.

Operations performed by the respective processing units of the transform unit 110 will be described in detail later.

The quantization unit 120 quantizes the transformed output signal generated by the transform unit 110, and thereby generates quantized coefficients.

The entropy coding unit 130 performs entropy coding of the quantized coefficients generated by the quantization unit 120, and thereby generates a coded signal.

Here, the coding apparatus 100 receives, as a coding target signal, an input signal of one data among various kinds of data such as audio data, still image data, and video data. The transform unit 110 receives, as a transform target input signal, one of a coding target signal (original signal) and a prediction error signal which represents a difference between the coding target signal and a prediction signal generated based on a previously-input coding target signal. Generally, a prediction error signal is input as a transform target. However, when no prediction is performed assuming a case where an error is included in a transmission path or a case where an energy is small, the original signal is input as a transform target without performing any prediction. Such a transform target input signal is represented as a vector $x^n$ as shown by Expression 4.

[Math. 4]

$$x^n = (x_1, x_2, \ldots, x_n)^t$$

(Expression 4)

Next, a description is given of an example of operations performed by the coding apparatus 100 according to Embodiment 1 of the present invention.

FIG. 4 is a flowchart showing an example of operations performed by the coding apparatus 100 according to Embodiment 1 of the present invention. Each of FIG. 5A and FIG. 5B is a diagram conceptually showing an example of a data flow in the transform unit 110 of the coding apparatus 100 according to Embodiment 1 of the present invention.

First, the transform unit 110 transforms the transform target input signal $x^n$ into a transformed output signal $y^n$ (Step S110).

More specifically, first, the first transform unit 200 performs a first transform on the transform target input signal $x^n$ using a first transform matrix to generate a first transformed output signal $y_1^n$ (Step S112). More specifically, the first transform unit 200 transforms the transform target input signal $x^n$ into the first transformed output signal $y_1^n$ such that the correlation within the transform target input signal $x^n$ is reduced and that the energy is focused on the low frequency band.

At this time, for example, when performing the first transform of the transform target input signal $x^n$ previously input, it is possible to use already calculated coefficients as the first transform coefficients for use in the first transform. In other words, there is no need to calculate first transform coefficients each time a first transform is performed. Thus, it is possible to reduce the calculation amount required to calculate first transform coefficients. Details of processing in the case of calculating first transform coefficients are described later.

Next, the dividing unit 210 divides the first transformed output signal $y_1^n$ into a first partial signal $y_{1L}^m$ and a second partial signal $y_{1H}^{n-m}$ (Step S114). More specifically, based on division and synthesis information, the dividing unit 210 divides the first transformed output signal $y_1^n$ such that a correlation energy within the first partial signal $y_{1L}^m$ is larger than the correlation energy within the second partial signal $y_{1H}^{n-m}$.

The division and synthesis information is information for allowing the dividing unit 210 to perform control of dividing the first transformed output signal $y_1^n$ by determining the low frequency band to be the first partial signal $y_{1L}^m$ and the high frequency band to be the second partial signal $y_{1H}^{n-m}$. The division and synthesis information may be instruction information for dynamically controlling the division according to an input signal such that components having a large energy are determined to be the first partial signal $y_{1L}^m$ and components having a small energy are determined to be the second partial signal $y_{1H}^{n-m}$.

At this time, for example, it is possible to use, as such division and synthesis information, division and synthesis information already determined in the division of a first transformed output signal $y_1^n$ previously input. In other words, there is no need to determine new division and synthesis information each time such a division is performed.

As shown in FIG. 5A, the first partial signal $y_{1L}^m$ resulting from the division by the dividing unit 210 is rearranged into a one-dimensional signal, and is input to the second transform unit 220.

Next, the second transform unit 220 performs a second transform on the first partial signal $y_{1L}^m$ using a second transform matrix to generate a second transformed output signal $y_2^m$ (Step S116). More specifically, the second transform unit 220 transforms the first partial signal $y_{1L}^m$ into the second transformed output signal $y_2^m$ such that the correlation within the first partial signal $y_{1L}^m$ is reduced such that the energy is focused on the low frequency band.

At this time, for example, it is possible to use, as second transform coefficients, coefficients already calculated in the second transform of a first partial signal $y_{1L}^m$ previously input. In other words, there is no need to calculate second transform coefficients each time a second transform is performed. Thus, it is possible to reduce the calculation amount required to calculate second transform coefficients. Details of processing in the case of calculating second transform coefficients are described later.

Next, the synthesizing unit 230 synthesizes the second transformed output signal $y_2^m$ and the second partial signal $y_{1H}^{n-m}$ to generate a synthesized transformed output signal $y^n$ (Step S118). More specifically, the synthesizing unit 230 rearranges the second transformed output signal $y_2^m$ in the dimension before the rearrangement into one-dimension, and synthesizes the second transformed output signal $y_2^m$ after the rearrangement and the second partial signal $y_{1H}^{n-m}$.

Next, the quantization unit 120 quantizes the transformed output signal $y^n$ generated in this way to generate quantized coefficients (Step S120). Lastly, the entropy coding unit 130 performs entropy coding of the quantized coefficients, and thereby generates a coded signal (Step S130).

Here, as shown in FIG. 5B, the dividing unit 210 may output the raw first partial signal $y_{1L}^m$ without rearranging the first partial signal $y_{1L}^m$ into a one-dimensional signal. In this case, the second transform unit 220 performs a second transform on a two-dimensional first partial signal $y_{1L}^m$ to generate a two-dimensional second transformed output signal $y_2^m$. Here, the second transform unit 220 performs, for example, a second transform that is of a non-separable type. Next, the synthesizing unit 230 synthesizes the second transformed output signal $y_2^m$ and the second partial signal $y_{1H}^{n-m}$ without rearranging the second transformed output signal $y_2^m$.

Each of FIG. 5A and 5B shows an example where the target of the second transform is an arbitrary area (non-rectangular area) of a first transformed output signal. However, the target is not limited to the area, and a rectangular area is also possible. More specifically, in the example of each of FIG. 5A and 5B, the second transform unit 220 performs the second transform assuming, as the first partial signal, a signal including coefficient values which (i) include a coefficient value of a low frequency component of the first transformed output signal and (ii) are included in a rectangular area in the transform matrix. On the other hand, the second transform unit 220 may perform the second transform assuming, as the first partial signal, a signal including coefficient values which (i) include a coefficient value of a low frequency component of the first transformed output signal and (ii) are included in a rectangular area in the transform matrix.

Next, a description is given of operations and a structure of transform in the case of determining first transform coefficients, second transform coefficients, and division and synthesis information.

FIG. 6 is a flowchart showing another example of transform processing performed by the transform unit 110 according to Embodiment 1 of the present invention. FIG. 7 is a diagram conceptually showing an example of derivation of transform coefficients in the transform unit 110 according to Embodiment 1 of the present invention.

As shown in FIG. 7, the transform unit 110 further includes a first transform coefficient deriving unit 202 and a second transform coefficient deriving unit 222. Here, FIG. 7 does not show the dividing unit 210 and the synthesizing unit 230.

First, as shown in FIG. 6, the first transform coefficient deriving unit 202 determines first transform coefficients based on the transform target input signal $x^n$ (Step S111). Next, the first transform unit 200 performs a first transform on the transform target input signal $x^n$ using a first transform matrix composed of first transform coefficients determined by the first transform coefficient deriving unit 202 (Step S112).

Next, division and synthesis information is determined (Step S113). When division and synthesis information is information for controlling the dividing unit 210 to perform a predetermined division, the division and synthesis information is read out from a memory or the like of the coding apparatus 100. On the other hand, when division and synthesis information is information for controlling the dividing unit 210 to perform division according to the first transformed output signal $y_1^n$, the division and synthesis information is derived in view of the distribution of energy based on the first transformed output signal $y_1^n$.

The dividing unit 210 divides the first transformed output signal $y_1^n$ based on the division and synthesis information determined in this way (Step S114).

Next, the second transform coefficient deriving unit 222 determines a second transform coefficients based on the first partial signal $y_{1L}^m$ (Step S115). Next, the second transform unit 220 performs a second transform on the first partial signal $y_{1L}^m$ using a second transform matrix composed of second transform coefficients determined (Step S116).

Lastly, the synthesizing unit 230 synthesizes the second transformed output signal $y_2^m$ and the second partial signal $y_{1H}^{n-m}$, and outputs the synthesized signal as a transformed output signal $y^n$ (Step S118).

The first transform in the first transform unit 200 and the second transform in the second transform unit 220 are described in detail with reference to FIG. 7.

A set $S_A$ including many samples includes transform target input signals $X^n$ input to the first transform unit 200. The first transform coefficient deriving unit 202 calculates first transform coefficients optimized, as a whole, for the many samples included in the set $S_A$, for example, using KLT.

Calculating the first transform coefficients based on the set $S_A$ including the many samples in this way makes it possible to perform a first transform using a first transform matrix composed of the first transform coefficients having the same values for the samples having somewhat different properties without being affected so much by the statistical properties of the individual transform target input signals $x^n$. Thus, it is possible to reduce the update frequency of the first transform coefficients. In other words, it is possible to increase the number of skipping determinations of first transform coefficients, and thus to reduce the calculation amount.

Furthermore, even in the case of updating current first transform coefficients, it is possible to reduce the difference information amount because the individual values of the transform coefficients change slightly before and after the update. Thus, it is possible to suppress increase in the coding amount when the first transform coefficients are transmitted to the decoding apparatus.

On the other hand, the second transform unit 220 receives an input of a first partial signal $y_{1L}^m$ which is a part having a large correlation energy among the coefficient values composing the first transformed output signal $y_1^n$. As

with the first transform coefficient deriving unit 202, the second transform coefficient deriving unit 222 calculates second transform coefficients optimized, as a whole, for the samples included in a set $S_c$ including the first partial signal $y_{1L}^m$ and having a smaller number of samples than the number of set $S_A$.

Using the set $S_c$ smaller than the set $S_A$ in this way makes it possible to immediately follow changes in the statistical properties of the first transformed output signals $y_1^n$ to be input, and to achieve further correlation reduction and energy compression. Here, the smaller set $S_c$ increases update frequency of the transform matrices, but reduces the number of elements of a second transform matrix required for the first partial signal $y_{1L}^m$ because the first partial signal $y_{1L}^m$ is a part of the first transformed output $y_1^n$ and thus its dimension is smaller than the dimension of the transform target input $x^n$. Therefore, it is possible to achieve both highly efficient transform and reduction in the calculation amount and the data amount.

As mentioned above, the second transform unit 220 receives an input of the first partial signal $y_{1L}^m$ which is a part having a large correlation energy among the coefficient values composing the first transformed output signal $y_1^n$. In other words, a high auto-correlation position of the first transformed output signal $y_1^n$ is selected. As a similar method, it is also possible to select a high cross-correlation position of the first transformed output signal $y_1^n$.

As mentioned above, the dividing unit 210 and the synthesizing unit 230 perform dimensional arrangements according to the first partial signal $y_{1L}^m$ and the second transformed output signal $y_2^m$, respectively. However, the second transform unit 220 may perform both the rearrangements instead. Such rearrangement processing is unnecessary in the case where a coding target is a one-dimensional signal such as an audio data because a one-dimensional transform target input signal $x^n$ is input to the transform unit 110 in each of the transforms of separable transform. Each of the transforms can be regarded as one-dimensional signal processing.

As described up to this point, the coding apparatus 100 according to Embodiment 1 of the present invention is characterized by performing the first transform on the input signal, and performing the second transform on the first partial signal which is the part of the signal resulting from the first transform. In this way, the coding apparatus 100 according to Embodiment 1 of the present invention is capable of reducing the calculation amount after the transform and reducing the number of elements (data amount) of the transform matrix in the transform using transform coefficients calculated based on the statistical properties of an input signal.

Here, in Embodiment 1, the coding apparatus 100 divides the first transformed output signal $y_1^n$ into the first partial signal $y_{1L}^m$ and the second partial signal $y_{1H}^{n-m}$, and then synthesizes the both after the second transform. However, it is also good for the coding apparatus 100 to perform substantial division instead of performing such explicit division. In other words, it is also good for the coding apparatus 100 to determine the part which is the target for the second transform in the first transformed output signal $y_1^n$. For example, it is possible to substantially perform a second transform only on the first partial signal $y_{1L}^m$ by determining, to be 1, the diagonal elements in a row with respect to the elements which are not the targets for the second transform and determining, to be 0, the non-diagonal elements in the row. FIG. 8 shows a specific example of a matrix calculation.

In FIG. 8, (a) shows the result of multiplying three points ($X_1$, $X_2$, and $X_3$) among four vectors $X_n$ by a $3 \times 3$ matrix $A^3$ and (b) shows the result of multiplying four points ($X_1$, $X_2$, $X_3$, and $X_4$) by a $4 \times 4$ matrix $A^4$ extended from the $A^3$ by determining the diagonal elements to be 1 and the non-diagonal elements to be 0. The three points in (a) match the corresponding three points among the four points in (b).

FIG. 9 is a block diagram showing an example of a structure of a coding apparatus 100a according to Variation of Embodiment 1 of the present invention.

The coding apparatus 100a includes a transform unit 110a, a quantization unit 120, and an entropy coding unit 130. The processing units which operate in the same manner as the processing units of the coding apparatus 100 shown in FIG. 3 are assigned with the same reference signs, and the same descriptions thereof are not repeated here.

The transform unit 110a includes a first transform unit 200 and a second transform unit 220a. In other words, the transform unit 110a differs from the transform unit 110 shown in FIG. 3 in the point of not including the dividing unit 210 and the synthesizing unit 230 and including a second transform unit 220a instead of the second transform unit 220.

The second transform unit 220a generates a second transformed output signal $y_2^m$ by performing a second transform on a first partial signal $y_{1L}^m$ using a second transform matrix composed of second transform coefficients determined based on the statistical properties of a set including the first partial signal $y_{1L}^m$ which is a part of the first transformed output signal $y_1^n$. Specifically, the second transform unit 220a determines coefficient values to be the target for the second transform from among the coefficient values composing the first transformed output signal $y_1^n$, and performs the second transform regarding the signal composed of the determined coefficient values as the first partial signal $y_{1L}^m$. More specifically, the second transform unit 220a determines, as the first partial signal $y_{1L}^m$, the signal including coefficient values having a value larger than a threshold value from among the coefficient values composing the first transformed output signal $y_1^n$, and performs the second transform regarding the signal as the first partial signal $y_{1L}^m$.

Next, the second transform unit 220a outputs a transformed output signal $y^n$ including (i) the generated second transformed output signal $y_2^m$ and (ii) the second partial signal $y_{1H}^{n-m}$ which is the remaining part of the first transformed

output signal $y_1^n$ other than the first partial signal $y_{1L}^m$.

FIG. 10 is a flowchart showing an example of operations performed by the coding apparatus 100a shown in FIG. 9.

First, the transform unit 110a transforms the transform target input signal $x^n$ into a transformed output signal $y^n$ (Step S110a). More specifically, first, the first transform unit 200 performs a first transform on the transform target input signal $x^n$ to generate the first transformed output signal $y_1^n$ (Step S112).

Next, the second transform unit 220a performs a second transform on the first partial signal $y_{1L}^m$ (Step S116a). For example, the second transform unit 220a determines the part to be the target for the second transform in the first transformed output signal $y_1^n$, and performs the second transform on the determined first partial signal $y_{1L}^m$ using a second transform matrix.

Next, the quantization unit 120 quantizes the transformed output signal $y^n$ including the second transformed output signal $y_2^m$ to generate quantized coefficients $C^n$ (Step S120). Lastly, the entropy coding unit 130 performs entropy coding of the quantized coefficients $C^n$, and thereby generates a coded signal (Step S130).

In this way, the coding apparatus 100a according to Variation of Embodiment 1 is also capable of suppressing increase in the calculation amount in coding processing and increase in the data amount of transform coefficients by partly performing two kinds of transforms.

[Embodiment 2]

A decoding apparatus according to Embodiment 2 of the present invention includes an entropy decoding unit configured to entropy decode a coded signal to generate decoded quantized coefficients, an inverse quantization unit configured to inverse quantize the decoded quantized coefficients to generate a decoded transformed output signal, and an inverse transform unit configured to inverse transform the decoded transformed output signal to generate a decoded signal. The inverse transform unit includes a second inverse transform unit configured to generate a first decoded partial signal by performing a second transform on a second decoded transformed output signal which is a part of a decoded transformed output signal, using a second inverse transform matrix composed of second inverse transform coefficients, and a first inverse quantization unit configured to generate a decoded signal by performing a first transform, using a first inverse transform matrix composed of first inverse transform coefficients, on the first decoded transformed output signal including the first decoded partial signal and the second decoded partial signal which is the remaining part of the decoded transformed output signal other than the second decoded transformed output signal.

In other words, the decoding apparatus according to Embodiment 2 of the present invention is characterized by performing two kinds of inverse transform on the part of the coded signal. More specifically, the decoding apparatus according to Embodiment 2 of the present invention is characterized by performing the second inverse transform on the second decoded transformed output signal which is the part of the decoded transformed output signal generated by performing entropy decoding and inverse quantization on the coded signal, and performing the first inverse transform on the first decoded transformed output signal including the signal resulting from the second inverse transform and the second decoded partial signal which is the remaining part of the decoded transformed output signal.

FIG. 11A is a block diagram showing an example of a structure of a decoding apparatus 300 according to Embodiment 2 of the present invention. The decoding apparatus 300 receives, as an input, the coded signal generated by coding audio data, video data, and/or the like at a low bit rate. The decoding apparatus 300 decodes a coded signal to generate a decoded signal of the audio data, video data and/or the like.

The decoding apparatus 300 performs entropy decoding, inverse quantization, and inverse transform on the coded signal. These processes are approximately inverse to the coding processes performed to generate the coded signal. As shown in FIG. 11A, the decoding apparatus 300 includes an entropy decoding unit 310, an inverse quantization unit 320, and an inverse transform unit 330.

The entropy decoding unit 310 entropy decodes the input coded signal to generate decoded quantized coefficients. The decoded quantized coefficients correspond to quantized coefficients generated by the quantization unit 120 according to Embodiment 1.

The inverse quantization unit 320 inverse quantizes the decoded quantized coefficients generated by the entropy decoding unit 310 to generate a decoded transformed output signal. The decoded transformed output signal corresponds to the transformed output signal generated by the transform unit 110 according to Embodiment 1.

The inverse transform unit 330 inverse transforms the decoded transformed output signal generated by the inverse quantization unit 320 to generate a decoded signal. The decoded signal corresponds to the transform target input signal input by the transform unit 110 according to Embodiment 1.

Hereinafter, the inverse transform unit 330 according to Embodiment 2 of the present invention is described in detail. FIG. 11B is a block diagram showing an example of a structure of the inverse transform unit 330 in the decoding apparatus 300 according to Embodiment 2 of the present invention. As shown in FIG. 11B, the inverse transform unit 330 includes a dividing unit 400, a second inverse transform unit 410, a synthesizing unit 420, and a first inverse transform unit 430.

The dividing unit 400 divides the decoded transformed output signal into two parts. More specifically, the dividing unit 400 divides, using division and synthesis information, the decoded transformed output signal generated by the inverse quantization unit 320 into a second decoded transformed output signal and a second decoded partial signal.

The second decoded transformed output signal corresponds to the second transformed output signal generated by the second transform unit 220 according to Embodiment 1. In other words, the second decoded transformed output signal corresponds to the part already subjected to the second transform in the coding and to be subjected to a second inverse transform. In addition, the second decoded partial signal corresponds to the second partial signal divided by the dividing unit 210 according to Embodiment 1.

The second inverse transform unit 410 performs a second inverse transform on the second decoded transformed output signal to generate a first decoded partial signal. The first decoded partial signal corresponds to the first partial signal divided by the dividing unit 210 according to Embodiment 1.

The synthesizing unit 420 generates the first decoded transformed output signal by synthesizing the first decoded partial signal generated by the second inverse transform unit 410 and the second decoded partial signal. The first decoded transformed output signal corresponds to the first transformed output signal generated by the first transformed unit 200 according to Embodiment 1.

The first inverse transform unit 430 generates a decoded signal by performing, using a first inverse transform matrix, a first inverse transform on the first decoded transformed output signal. The first decoded transformed output signal is a signal including the second decoded transformed output signal and the second decoded partial signal.

Here, the decoding apparatus 300 receives, as an input, a coded signal generated by coding a signal of one data among various kinds of data such as audio data, still image data, and video data. The inverse transform unit 330 receives, as a decoded transformed output signal $y\hat{}^{n}$, the signal generated by performing entropy decoding and inverse quantization on the coded signal. Here, although the symbol "^ (hat)" is normally placed on an alphabet (the immediately-before alphabet here), the symbol "^ (hat)" is placed next to the alphabet and represents the same meaning in this DESCRIPTION.

Next, a description is given of an example of operations performed by the coding apparatus 300 according to Embodiment 2 of the present invention.

FIG. 12 is a flowchart showing an example of operations performed by the decoding apparatus 300 according to Embodiment 2 of the present invention. Each of FIG. 13A and FIG. 13B is a diagram conceptually showing an example of a data flow in the inverse transform unit 330 of the decoding apparatus 300 according to Embodiment 2 of the present invention.

First, the entropy decoding unit 310 entropy decodes the coded signal to generate decoded quantized coefficients (Step S210). Next, the inverse quantization unit 320 inverse quantizes the decoded quantized coefficients to generate a decoded transformed output signal $y\hat{}^{n}$ (Step S220).

Next, the inverse transform unit 330 inverse transforms the decoded transformed output signal $y\hat{}^{n}$ to generate a decoded signal $x\hat{}^{n}$ (Step S230).

More specifically, first, the dividing unit 400 divides the decoded transformed output signal $y\hat{}^{n}$ into two areas, based on the division and synthesis information (Step S232). In other words, the dividing unit 400 divides the decoded transformed output signal $y\hat{}^{n}$ into a second decoded transformed output signal $y\hat{}_{2}^{m}$ and a second decoded partial signal $y\hat{}_{1H}^{n-m}$. The second decoded transformed output signal $y\hat{}_{2}^{m}$ is a part that is a target for the second inverse transform among the coefficient values composing the decoded transformed output signal $y\hat{}^{n}$. The second decoded partial signal $y\hat{}_{1H}^{n-m}$ is a part that is not a target for the second inverse transform among the coefficient values composing the decoded transformed output signal $y\hat{}^{n}$.

At this time, it is possible to use, as the division and synthesis information to be used, the division and synthesis information used when dividing a previously-input decoded transformed output signal $y\hat{}^{n}$. In other words, there is no need to determine new division and synthesis information each time such a division is performed.

The second decoded transformed output signal $y\hat{}_{2}^{m}$ resulting from the division by the dividing unit 400 is rearranged into a one-dimensional signal, and is input to the second inverse transform unit 410.

Next, the second inverse transform unit 410 generates a first decoded partial signal $\hat{}_{1L}^{m}$ by performing, using a second inverse transform matrix, a second inverse transform on the second decoded transformed output signal $y\hat{}_{2}^{m}$ (Step S234).

At this time, for example, it is possible to use coefficients already determined in the second inverse transform of a previously-input second decoded transformed output signal $y\hat{}_{2}^{m}$. In other words, there is no need to determine new second inverse transform coefficients each time a second inverse transform is performed.

Next, the synthesizing unit 420 generates a first decoded transformed output signal $y\hat{}_{1}^{n}$ by synthesizing the second decoded partial signal $y\hat{}_{1H}^{n-m}$ and the first decoded partial signal $y\hat{}_{1L}^{m}$ (Step S236). More specifically, the synthesizing unit 420 rearranges the first decoded partial signal $y\hat{}_{1L}^{m}$ into the dimension before the rearrangement into one dimension, and synthesizes the first decoded partial signal $y\hat{}_{1L}^{m}$ after the rearrangement and the second decoded

partial signal $y\hat{}_{1H}^{n-m}$.

Next, the first inverse transform unit 430 generates a decoded signal $x\hat{}^n$ by performing, using a first inverse transform matrix, a first inverse transform on the first decoded transformed output signal $y\hat{}_1^n$ (Step S238).

At this time, for example, it is possible to use, as first inverse transform coefficients, coefficients already determined in the first inverse transform of a previously-input first decoded transformed output signal $y\hat{}_1^n$. In other words, there is no need to determine new first inverse transform coefficients each time a first inverse transform is performed.

Here, as shown in FIG. 13B, the dividing unit 400 may output the raw second decoded transformed output signal $y\hat{}_2^m$ without rearranging the second decoded transformed output signal $y\hat{}_2^m$ into a one-dimensional signal. In this case, the second inverse transform unit 410 generates a two-dimensional decoded partial signal $y\hat{}_{1L}^m$ by performing a second inverse transform on a two-dimensional decoded transformed output signal $y\hat{}_2^m$. Next, the synthesizing unit 420 synthesizes the first decoded partial signal $y\hat{}_{1L}^m$ and the second decoded partial signal $y\hat{}_{1H}^{n-m}$ without rearranging the first decoded partial signal $y\hat{}_{1L}^m$.

Each of FIG. 13A and 13B shows an example where the target of the second inverse transform is an arbitrary area (non-rectangular area) of a decoded transformed output signal. However, the target is not limited to the area, and a rectangular area is also possible. More specifically, in each of the examples of FIG. 13A and FIG. 13B, the second inverse transform unit 410 performs a second inverse transform on the second decoded transformed output signal, that is, the signal including coefficient values which (i) include a coefficient value of a low frequency component of the decoded transformed output signal and (ii) are included in a rectangular area in the transform matrix. On the other hand, the second inverse transform unit 410 may perform the second inverse transform assuming, as the second decoded transformed output signal, a signal including coefficient values which (i) include a coefficient value of a low frequency component of the decoded transformed output signal and (ii) are included in a rectangular area in the transform matrix.

Next, a description is given of operations for determining the division and synthesis information, the first inverse transform coefficients, and the second inverse transform coefficients.

FIG. 14 is a flowchart showing an example of inverse transform processing performed by the inverse transform unit 330 according to Embodiment 2 of the present invention.

With reference to the flowchart, inverse transform processing is described.

First, as shown in FIG. 14, the dividing unit 400 obtains the division and synthesis information (Step S231). Next, the dividing unit 400 divides the decoded transformed output signal $y\hat{}^n$ described above into a second decoded transformed output signal $y\hat{}_2^m$ including low frequency band and a second decoded partial signal $y\hat{}_{1H}^{n-m}$ including high frequency band (Step S232). More specifically, the dividing unit 400 divides the decoded transformed output signal $y\hat{}^n$ based on the division and synthesis information such that the correlation energy within the second decoded transformed output signal $y\hat{}_2^m$ is larger than the correlation energy within the second decoded partial signal $y\hat{}_{1H}^{n-m}$.

The division and synthesis information here is the same as the division and synthesis information in Embodiment 1. The division and synthesis information may be obtained by reading out from a predetermined memory or the like, or may be dynamically determined according to a decoded transformed output signal $y\hat{}_2^m$.

Next, the second inverse transform unit 410 obtains second inverse transform coefficients to be used in a second inverse transform (Step S233). The second inverse transform matrix composed of second inverse transform coefficients is an inverse matrix of transform coefficients in a second transform according to Embodiment 1 or a matrix approximated thereto. The second inverse transform coefficients may be calculated based on a set $S_D$ including the second decoded transformed output signal $y\hat{}_2^m$, using KLT or the like as in Embodiment 1, or may be calculated from second transform coefficients used in the second transform in the coding apparatus.

Next, the second inverse transform unit 410 generates a first decoded partial signal $\hat{}_{1L}{}^m$by performing, using a second inverse transform matrix composed of second inverse transform coefficients determined, a second inverse transform on the second decoded transformed output signal $y\hat{}_2{}^m$ (Step S234). Next, the synthesizing unit 420 generates a first decoded transformed output signal $y\hat{}_1^n$ by synthesizing the first decoded partial signal $y\hat{}_{1L}^m$ and the second decoded partial signal $y\hat{}_{1H}^{n-m}$ (Step S236).

Next, the first inverse transform unit 430 obtains first inverse transform coefficients to be used in a first inverse transform (Step S237). The first inverse transform matrix composed of first inverse transform coefficients is an inverse matrix of transform coefficients in a first transform according to Embodiment 1 or a matrix approximated thereto. The first inverse transform coefficients may be calculated based on a set $S_E$ including the first decoded transformed output signal $y\hat{}_1^n$, using KLT or the like as in Embodiment 1, or may be calculated from first transform coefficients used in the first transform in the coding apparatus. Such inverse transform coefficients may be calculated in the following embodiments.

The first inverse transform unit 430 generates a decoded signal $x\hat{}^n$ by performing a first inverse transform on the first decoded transformed output signal $y\hat{}_1^n$ using a first inverse transform matrix composed of first inverse transform coefficients determined (Step S238).

Here, the relationship between a set $S_D$ and a set $S_E$ corresponds to the relationship between the set $S_C$ and the set $S_A$, and the set $S_D$ is a smaller set composed of samples fewer than those of the set $S_E$. In this way, as in Embodiment 1, the decoding apparatus 300 including the inverse transform unit 330 according to Embodiment 2 of the present invention is capable of achieving both highly efficient transform and reduction in the calculation amount and in the data amount.

Although the dividing unit 400 and the synthesizing unit 420 perform dimensional rearrangements on the second decoded transformed output signal $y\hat{}_2^m$ and the first decoded partial signal $y\hat{}_{1L}^m$ in this embodiment, the second inverse transform unit 410 may perform the rearrangement instead. In other words, it is possible to use separable transform, or a transform matrix $A^4$ including a row in which the diagonal elements are 1 and the non-diagonal elements are 0 as shown in (b) of FIG. 8. In addition, the above-described dimensional rearrangement (the rearrangement into the one-dimensional signal in the dividing unit 400 and the rearrangement into a signal of the original dimension in the synthesizing unit 420) is unnecessary in the case where a decoding target is a one-dimensional signal such as an audio data and/or the like and in the case where a multi-dimensional signal is generated using a separable transform. This is because the signal in each of the dimensions of a multi-dimensional signal in separable transform can be regarded as a one-dimensional signal, and thus each of decoded transformed output signal $y\hat{}^n$ input to the inverse transform unit 330 is one dimensional.

More specifically, the decoding apparatus 300 according to Embodiment 2 of the present invention is characterized by performing the second inverse transform on the second decoded transformed output signal which is the part of the decoded transformed output signal generated by performing entropy decoding and inverse quantization on the coded signal, and performing the first inverse transform on the first decoded transformed output signal including the signal resulting from the second inverse transform and the second decoded partial signal that is the remaining part of the decoded transformed output signal. In this way, the decoding apparatus 300 according to Embodiment 2 of the present invention is capable of reducing the calculation amount after the transform and reducing the number of elements in the inverse transform matrix in the inverse transform using inverse transform coefficients calculated based on the statistical properties of the input signal. Furthermore, as with the coding apparatus 100 shown in Embodiment 1, the decoding apparatus 300 is capable of correctly decoding the coded signal generated by performing two-stage transform processes using transform coefficients calculated based on the statistical properties of the input signal.

In this embodiment, the decoding apparatus 300 divides the decoded transformed output signal $y\hat{}^n$ into the second decoded transformed output signal $y\hat{}_2^m$ and the second decoded partial signal $y\hat{}_{1H}^{n-m}$, and synthesizes the both after the second inverse transform. However, the decoding apparatus 300 may not perform such an explicit division. In other words, it is only necessary for the decoding apparatus 300 to determine the part that is the target for the second inverse transform to be executed, in the decoded transformed output signal $y\hat{}^n$. For example, it is possible to substantially perform such a division and synthesis in the second inverse transform by performing the second inverse transform using a transform matrix $A^4$ including a row in which the diagonal elements are 1 and the non-diagonal elements are 0 as shown in (b) of FIG. 8.

FIG. 15 is a block diagram showing an example of a structure of a decoding apparatus 300a according to Variation of Embodiment 2 of the present invention.

The decoding apparatus 300a includes an entropy decoding unit 310, an inverse quantization unit 320, and an inverse transform unit 330a. The processing units which operate in the same manner as the processing units of the decoding apparatus 300 shown in FIG. 11A are assigned with the same reference signs, and the same descriptions thereof are not repeated here.

The inverse transform unit 330a includes a second inverse transform unit 410a and a first inverse transform unit 430. In other words, the inverse transform unit 330a differs from the inverse transform unit 330 shown in FIG. 11B in the point of not including a dividing unit 400 and a synthesizing unit 420 and further including a second inverse transform unit 410a instead of the second inverse transform unit 410.

The second inverse transform unit 410a generates a first decoded partial signal $Y\hat{}_{1L}^m$ by performing a second inverse transform, using a second inverse transform matrix, on a second decoded transformed output signal $y\hat{}_2^m$ which is a part of the decoded transformed output signal $y\hat{}^n$. For example, the second inverse transform unit 410a determines coefficient values which are targets for the second inverse transform from among the coefficient values composing the decoded transformed output signal $y\hat{}^n$, and performs the second inverse transform regarding the signal composed of the determined coefficient values as the second decoded transformed output signal $y\hat{}_2^m$. More specifically, the second inverse transform unit 410a determines coefficient values larger than a threshold value from among the coefficient values composing the decoded transformed output signal $y\hat{}^n$, and performs the second inverse transform regarding the signal composed of the determined coefficient values as the second decoded transformed output signal $y\hat{}_2^m$.

For example, the second inverse transform unit 410a is capable of substantially performing such a second inverse transform only on the second decoded transformed output signal $y\hat{}_2^m$ by multiplying the second decoded partial signal $y\hat{}_{1H}^{n-m}$ by an inverse transform matrix including a row in which the diagonal elements are 1 and the non-diagonal elements are 0 because the second decoded partial signal $y\hat{}_{1H}^{n-m}$ is not the target for the second inverse transform in the decoded transformed output signal $y\hat{}^n$.

FIG. 16 is a flowchart showing an example of operations performed by the decoding apparatus 300a shown in FIG. 15.

First, the entropy decoding unit 310 entropy decodes the input coded signal to generate decoded quantized coefficients $C^{\wedge n}$ (Step S210). Next, the inverse quantization unit 320 inverse quantizes the decoded quantized coefficients $C^{\wedge n}$ to generate a decoded transformed output signal $y^{\wedge n}$ (Step S220b).

Next, the inverse transform unit 330 inverse transforms the decoded transformed output signal $y^{\wedge n}$ to generate a decoded signal $x^{\wedge n}$ (Step S230a). More specifically, first, the second inverse transform unit 410a generates a first decoded partial signal $y^{\wedge}{}_{1L}{}^{m}$ by inverse transforming the second decoded transformed output signal $y^{\wedge}{}_{2}{}^{m}$ that is the part to be the target for the second inverse transform in the decoded transformed output signal $y^{\wedge n}$ (Step S234a). Next, the second inverse transform unit 410a outputs a first decoded transformed output signal $y^{\wedge}{}_{1}{}^{n}$ including the generated first decoded partial signal $y^{\wedge}{}_{1L}{}^{m}$ and the second decoded partial signal $y^{\wedge}{}_{1H}{}^{n-m}$ that is the part not to be the target for the second inverse transform in the decoded transformed output signal $y^{\wedge n}$.

Next, the first inverse transform unit 430 generates a decoded signal $x^{\wedge n}$ by performing, using a first inverse transform matrix, a first inverse transform on the first decoded transformed output signal $y^{\wedge}{}_{1}{}^{n}$ (Step S238).

In this way, the decoding apparatus 300a according to Variation of Embodiment 2 is also capable of decoding a coded signal subjected to two-stage transform processes so as to suppress increase in the calculation amount and in the data amount of inverse transform coefficients.

[Embodiment 3]

A coding apparatus and a coding method according to Embodiment 3 of the present invention respectively include a transform unit and a transform method for transforming a coding target signal of audio data, still image data, video data, and/or the like by combining plural kinds of transforms. The coding apparatus and the coding method according to Embodiment 3 are characterized by performing two-stage transform processes on a transform target input signal that is a prediction error signal indicating a difference between a coding target signal (an input signal) and a prediction signal.

FIG. 17 is a block diagram showing an example of a structure of a coding apparatus 500 according to Embodiment 3 of the present invention. As shown in FIG. 17, the coding apparatus 500 according to Embodiment 3 of the present invention includes a subtractor 505, a transform unit 510, a quantization unit 120, an entropy coding unit 130, an inverse quantization unit 540, an inverse transform unit 550, an adder 560, a memory 570, a prediction unit 580, and a control unit 590. The same structural elements as those of the coding apparatus 100 according to Embodiment 1 shown in FIG. 3 are assigned as the same reference signs, and the same descriptions thereof are not repeated here.

The subtractor 505 calculates a difference (prediction error) between a coding target input signal and a prediction signal generated from a previous coding target signal. The signal representing the calculated prediction error is input to the transform unit 510.

The transform unit 510 performs two-stage transform processes on a transform target input signal, as with the transform unit 110 described in Embodiment 1. More specifically, the transform unit 510 performs a first transform on the transform target input signal to generate a first transformed output signal, and performs a second transform on a first partial signal which is a part of the generated first transform target output signal to generate a second transformed output signal. Next, the transform unit 510 outputs, to the quantization unit 120, a transformed output signal including the generated second transformed output signal and a second partial signal which is the remaining part of the first transformed output signal other than the first partial signal. The transform unit 510 is described in detail later. Here, the transform unit 510 receives the signal of a prediction error image as the transform target input signal.

The inverse quantization unit 540 inverse quantizes the quantized coefficients generated by the quantization unit 120 to generate a decoded transformed output signal. The decoded transformed output signal corresponds to the transformed output signal generated by the transformed unit 510.

The inverse transform unit 550 inverse transforms the decoded transformed output signal generated by the inverse quantization unit 540 to generate a decoded transformed input signal. The decoded transformed input signal corresponds to the transform target input signal generated by the subtractor 505.

The adder 560 generates a decoded signal by adding the decoded transformed input signal generated by the inverse transform unit 550 and the prediction signal generated from the previous coding target signal.

The memory 570 is an example of a storage unit for storing generated decoded signals.

The prediction unit 580 predicts a coding target signal using a decoded signal to generate a prediction signal. More specifically, the prediction unit 580 generates prediction pixels (a prediction signal) of a coding target block in the coding target input image, based on a predetermined coding parameter. The subtractor 505 generates a prediction error image that is the difference between the pixels of the coding target block and the prediction pixels.

The control unit 590 outputs a control signal for controlling operations by the transform unit 510, based on local information. The local information is information indicating an index associated with (i) transform coefficients and (ii) division and synthesis information, or information indicating a prediction mode. The control unit 590 determines the transform coefficients and the division and synthesis information, based on the local information, and outputs the control information indicating the determined coefficients and information to the transform unit 510.

Under control by the control unit 590, the coding apparatus 500 according to Embodiment 3 of the present invention performs the second transform after determining adaptively and temporally or spatially at least one of a range to be a target for the second transform in the first transformed output signal and second transform coefficients, whichever is determined as the first partial signal. For example, based on a predetermined coding parameter, the coding apparatus 500 determines, as the first partial signal, at least one of the range to be a target for the second transform in the first transformed output signal and the second transform coefficients.

Here, the memory 570 functions as a delay unit which enables comparison between the coding target signal and the prediction signal generated from a previous coding target signal. The original information has been compressed (with a partial loss of information) by the quantization unit 120. Thus, in order to extract the coded information in the coded signal, the inverse quantization unit 540 inverse quantizes the quantized coefficients to generate a decoded transformed output signal, and the inverse transform unit 550 inverse transforms the decoded transformed output signal to generate a decoded transformed input signal.

Here, the inverse transform processing performed by the inverse transform unit 550 must be inverse to the transform processing performed by the transform unit 510. However, there is a case where a transform and an inverse transform are not represented as matrices due to simplification of multiplication or rounding performed to suppress the bit lengths required for the calculations. In addition, there is a case where the inverse transform by the inverse transform unit 550 is designed not to be strictly inverse to the corresponding transform by the transform unit 510.

An input signal of a sound or audio data is one dimensional, and an input signal of a still image or a video data is two dimensional.

Next, coding processes executed by the coding apparatus 500 according to Embodiment 3 of the present invention are described with reference to FIG. 18. FIG. 18 is a flowchart showing an example of operations performed by the coding apparatus 500 according to Embodiment 3 of the present invention.

First, when a coding target signal (input signal) is input to the coding apparatus 500, the prediction unit 580 generates a prediction signal using an already coded signal (decoded signal) stored in the memory 570. Next, the subtractor 505 generates a prediction error signal representing the difference between the input signal and the prediction signal (Step S305). It is to be noted here that Step S305 for generating a prediction error signal is skipped when directly transforming the input signal instead of the prediction error signal.

The prediction error signal or the input signal generated by the subtractor 505 is input to the transform unit 510. The vector that is the prediction error signal input to the transform unit is determined as a transform target input signal $x^n$ (See Expression 4). The transform target input signal $x^n$ is generally a prediction error because prediction is generally performed in compression coding. However, a coding target signal (original signal) that is an input signal may be directly input to the transform unit without performing any prediction when it is assumed that an error is included in a transmission path or the energy is already sufficiently low.

The transform unit 510 transforms the transform target input signal $x^n$ using a transform T to generate a transformed output signal $y^n$ (See Expression 5) (Step S110). The transformed output signal (transformed output vector) $y^n$ may be simply referred to as a coefficient.

[Math. 5]

$$y^n = T[x^n] \qquad \text{(Expression 5)}$$

Next, the quantization unit 120 quantizes the transformed output signal $y^n$ to generate quantized coefficients $C^n$ (Step S120). The quantization process performed by the quantization unit 120 is a process of adding a rounding offset a to the transformed output signal $y^n$ and then dividing the addition result by an even quantization step s, as represented by Expression 6. Here, the rounding offset a and the even quantization step s are controlled for highly efficient coding.

[Math. 6]

$$C^n = \lfloor (y^n + a)/s \rfloor \quad \text{(Expression 6)}$$

Next, the entropy coding unit 130 entropy codes the quantized coefficient $C^n$ to generate a coded signal (Step S130). The generated coded signal is transmitted to the decoding apparatus.

Next, the inverse quantization unit 540 inverse quantizes the quantized coefficient $C^n$ according to Expression 7 to generate a decoded transformed output signal y^n (Step S340).

[Math. 7]

$$\hat{y}^n = sC^n \quad \text{(Expression 7)}$$

In lossy coding which significantly reduces the amount of data but disables complete recovery of the original data, the original information is partly lost in the quantization process. Thus, the decoded transformed output signal y^n does not match the transformed output signal $y^n$. In other words, the decoded transformed output signal y^n includes distortion resulting from the quantization. Thus, when a prediction is performed before transform, the decoded transformed output signal y^n may be referred to as a quantized prediction error. It is to be noted that the decoded transformed output signal y^n approximately matches the transformed output signal $y^n$ in the case where a sufficiently large amount of data is coded in lossy coding because the loss of information is small.

Next, according to Expression 8, the inverse transform unit 550 performs an inverse transform $T^{-1}$ on the decoded transformed output signal y^n to generate the decoded transformed input vector X^n (Step S350).

[Math. 8]

$$\hat{x}^n = T^{-1}[\hat{y}^n] \quad \text{(Expression 8)}$$

Next, the adder 560 adds the prediction signal and the decoded transformed input signal to generate a decoded signal. Next, the adder 560 stores the generated decoded signal in the memory 570 for future reference (Step S360).

Here, the transform T is represented as a matrix multiplication using an n × n transform matrix A as shown in Expression 9, and the inverse transform $T^{-1}$ is represented as a matrix multiplication using an n × n transform matrix B as shown in Expression 10.

[Math. 9]

$$T[x^n] = A^{n\times n}x^n \quad \text{(Expression 9)}$$

[Math. 10]

$$T^{-1}[\hat{y}^n] = B^{n\times n}\,\hat{y}^n \qquad \text{(Expression 10)}$$

In a general transform (orthogonal transform), a transform matrix B is an inverse matrix of a transform matrix A and thus is a transposed matrix ($B = A^T$). However, in addition to the above case, there is a case where a transform matrix B is designed not to be a precise inverse matrix of a transform matrix A, and thus is not a precise transposed matrix in order to suppress the calculation amount of the inverse transform $T^{-1}$ in the coding apparatus 500. In addition, the transform may be what is called bi-orthogonal transform using Transform A and an Inverse transform B not involving orthogonal transform if stated strictly.

The matrix multiplication of multiplying the transform target $x^n$ by the transform matrix $A^{n\times n}$ in Experssion 9 is represented as Expression 11. The number of multiplications of a transform matrix and the number of elements of the transform matrix is $n^{\wedge 2}$.

[Math. 11]

$$y_i = \sum_{k=1}^{n} a_{ik} x_k \qquad \text{(Expression 11)}$$

Next, descriptions are given of a structure of and operations by the transform unit 510 according to Embodiment 3 of the present invention. FIG. 19 is a block diagram showing an example of a detailed structure of the transform unit 510 according to Embodiment 3 of the present invention.

As shown in FIG. 19, the transform unit 510 includes a first transform unit 200, a first memory 601, a first transform coefficient deriving unit 202, a dividing unit 210, a second memory 611, a division and synthesis information calculating unit 612, a second transform unit 220, a third memory 621, a second transform coefficient deriving unit 222, and a synthesizing unit 230. The same structural elements as those of the transform unit 110 shown in FIG. 3 are assigned with the same reference signs.

The transform target input signal $x^n$ input to the transform unit 510 is input to the first memory 601 and the first transform unit 200.

The first memory 601 is a memory for storing information related to plural transform target input signals $x^n$.

The first transform coefficient deriving unit 202 generates, from information stored in the first memory 601, first transform coefficients composing a first transform matrix $A_1^n$ to be used for a first transform $T_1$, and outputs the generated first transform coefficients to the first transform unit 200.

The first transform unit 200 generates a first transformed output signal $y_1^n$ by performing, using the first transform matrix $A_1^n$, the first transform $T_1$ on the transform target input signal $X^n$ composed of the first transform coefficients calculated by the first transform coefficient deriving unit 202. The first transformed output signal $y_1^n$ is input to the second memory 611 and the dividing unit 210.

The second memory 611 is a memory for storing information related to plural first transformed output signals $y_1^n$.

The division and synthesis information calculating unit 612 generates division and synthesis information from information stored in the second memory 611, and outputs the generated division and synthesis information to the dividing unit 210 and the synthesizing unit 230. The division and synthesis information is information for controlling division such that the low frequency components in the first transformed output signal $y_1^n$ is divided as a first partial signal $y_{1L}^{m}$ and the high frequency components in the first transformed output signal $y_1^n$ is divided as a second partial signal $y_{1H}^{n-m}$. Alternatively, the division and synthesis information may be information for controlling division such that the components having a large energy in the first transformed output signal $y_1^n$ is divided as a first partial signal $y_{1L}^{m}$ and the components having a small energy in the first transformed output signal $y_1^n$ is divided as a second partial signal $y_{1H}^{n-m}$.

Based on the division and synthesis information, the dividing unit 210 divides the first transformed output signal $y_1^n$ into a first partial signal $y_{1L}^{m}$ at a point m and a second partial signal $y_{1H}^{n-m}$ at a point n - m (here, m is a natural number smaller than n). In other words, the dividing unit 210 divides the first transformed output signal $y_1^n$ composed of n number of coefficient values into the first partial signal $y_{1L}^{m}$ composed of m number of coefficient values and the second partial signal $y_{1H}^{n-m}$ composed of n - m number of coefficient values, The first partial signal $y_{1L}^{m}$ is input to the third memory 621 and the second transform unit 220. In addition, the second partial signal $y_{1H}^{n-m}$ is input to the synthesizing unit 230.

The third memory 621 is a memory for storing information related to plural first partial signals $y_{1L}^{m}$.

The second transform coefficient deriving unit 222 generates, from information stored in the third memory 621, second transform coefficients composing a second transform matrix $A_2^m$ to be used for a second transform $T_2$, and outputs the generated second transform coefficients to the second transform unit 220.

The second transform unit 220 generates the second transformed output signal $y_2^m$ by performing a second transform $T_2$ using the second transform matrix $A_2^m$ composed of the second transform coefficients calculated by the second transform coefficient deriving unit 222.

The synthesizing unit 230 generates a transformed output signal $y^n$ by synthesizing the second transformed output signal $y_2^m$ and the second partial signal $y_{1H}^{n-m}$ according to the division and synthesis information. Here, synthesis is inverse to division.

The second transform coefficients determined by the second transform coefficient deriving unit 222 are transform coefficients designed to be optimum for the first partial signal $y_{1L}^{m}$. For this reason, the second transform $T_2$ using the second transform matrix $A_2^m$ is a transform that reduces redundancy remaining in the first transformed output signal $y_1^n$, and thus provides an advantageous effect of contributing to the compression of the coded signal.

In addition, since the dividing unit 210 divides the first transformed output signal $y_1^n$, it is possible to reduce the number of elements (coefficient values) of an input signal (that is, the first partial signal) input to the second transform unit 220. Since the number of coefficient values is reduced, it is possible to provide advantageous effects of reducing the amount of calculation by the second transform unit 220 and reducing the total number of transform coefficients (that is, the data amount) required for the second transform unit 220.

The following describes how the first transform coefficient deriving unit 202 generates first transform coefficients and how the second transform coefficient deriving unit 222 generates second transform coefficients. The first and second transform coefficient deriving units use, for example, the aforementioned Karhunen Loeve Transform (KLT) when generating the first and second transform coefficients.

The KLT is an approach for designing transform into frequency domain for completely de-correlating an input signal, based on the statistical properties of a set including the input signal. More specifically, the KLT is a transform into a variance-covariance matrix in which the non-diagonal elements are 0, which is equivalent to solving a unique value problem of the variance-covariance matrix. Here, a derived unique vector is a basis function, and the unique value is the magnitude (that is, the energy) of the axis of each of the components of the transform coefficients. The transform coefficients are arranged from the largest axis to the smallest axis in terms of the unique (variance or energy) values. According to this order of the transform coefficients, the energy of the i-th ($1 \leq i < n$) element is larger than the energy of the j-th ($i < j \leq n$) element (the transform coefficients can be designed to satisfy the condition that the i-th element is larger than the j-th element), when, for example, the transform target input signal is a vector at a point n.

In the present invention, when expressions of low frequency band and high frequency band are used, the low frequency band and the high frequency band respectively correspond to elements having a comparatively smaller number and elements having a comparatively larger number, without strictly differentiating these bands from each other. The present invention mainly aims to reduce resources (the calculation amount and the required memory area) for transform and inverse transform. However, resources and transform performances are set according to the purposes of methods and apparatuses to which the present invention is applied because resources and transform performances are in a trade-off relationship in a broad sense.

As mentioned as the problem of the conventional art, when a set having statistical properties different from those of the set referred to in the derivation of coefficient values is input, the transform using the derived transform coefficients are not optimum any more. On the other hand, the data amount of the transform coefficients is huge in the case where transform coefficients are derived according to the properties of an input signal each time an input signal is input.

To solve this problem, this embodiment uses plural kinds of transforms. First, a first transform is performed using a transform matrix composed of transform coefficients derived to be optimum according to the statistical properties of a larger set $S_A$. Next, a second transform is performed using a transform matrix composed of transform coefficients derived to be optimum according to the statistical properties of a smaller set $S_B$ (the first transformed output signal).

It is to be noted that the coding apparatus 500 according to Embodiment 3 of the present invention may include a local set determining unit which analyzes the characteristics of an input signal when deriving second transform coefficients. In other words, the coding apparatus 500 according to Embodiment 3 of the present invention may include a transform unit 510a shown in FIG. 20, instead of the transform unit 510. The transform unit 510a includes the local set determining unit 623 as shown in FIG. 20.

The local set determining unit 623 analyzes the characteristics of the transform target input signal $x^n$, and controls the second transform coefficient deriving unit 222 based on the analysis result. Here, the local set determining unit 623 may control the division and synthesis information calculating unit 612 that is shown in FIG. 19 but not shown in FIG. 20. Detailed processing by the local set determining unit 623 is described below with reference to FIG. 21.

FIG. 21 is a diagram conceptually showing an example of derivation of transform coefficients in the transform unit 510a according to Embodiment 3 of the present invention.

The transform target input signal $x^n$ is assumed to be included in the larger set $S_A$ and in one of a smaller set $S_{B\,(1)}$ and a smaller set $S_{B\,(2)}$. In FIG. 21, the set $S_B$ is included in the set $S_A$. However, the same deriving method is applicable in the case where the set $S_B$ is not included in the set $S_A$ such as the case where the transform target input signal $x^n$ is included in the set $S_B$ but is not included in the set $S_A$.

The first transform coefficients used by the first transform unit 200 are generated by the first transform coefficient deriving unit 202. The first transform coefficient deriving unit 202 optimizes the first transform coefficients, based on the set $S_A$ including a larger number of samples.

Since the set $S_A$ includes a larger number of samples, it is possible to optimize, as a whole, the first transform coefficients, and thus to significantly reduce the influence of differences between the respective transform target inputs. In this way, it is possible to suppress the update frequency of the first transform coefficients. Furthermore, it is possible to reduce the amount of difference information because the variation in the values of the respective transform coefficients is reduced even when the first transform coefficients are updated. Accordingly, it is possible to suppress the coding amount when the first transform coefficients are transmitted to the decoding apparatus.

The second transform coefficients are derived to be optimum for the respective transform target inputs that are the set $S_{B\,(1)}$ and the set $S_{B\,(2)}$. It is possible to reduce the calculation amount and the data amount of the transform coefficients for the second transform because the number of elements of the first partial signal to be the target for the second transform is reduced from the number of elements of the transform target input signal, due to the division of the transform target input signal. In other words, the input signal that is the target for the second transform and is input to the second transform unit 220 is not the raw transform target input signal $x^n$ included in the set $S_{B\,(1)}$ and $S_{B\,(2)}$, but the first partial signal $y_{1L}{}^m$ which is a part of the transformed output signal $y_1{}^n$.

The local set determining unit 623 detects statistical variation in sub sets by analyzing the characteristics of the transform target input signal $X^n$. Upon detecting the variation, the local set determining unit 623 determines plural samples belonging to the subsets, and notifies the samples to the second transform coefficient deriving unit 222. Alternatively, the local set determining unit 623 may determine the subsets to which the transform target input signal $X^n$ belongs.

The input signal (that is, the first partial signal $y_{1L}{}^m$) to the second transform unit 220 may depend on the generation method of a prediction signal. For this reason, the local set determining unit 623 may determine a target range for the second transform as the first partial signal $y_{1L}{}^m$ among the plural coefficient values composing the first transformed output signal $y_1{}^n$, according to a prediction signal generation method (prediction mode), for example, the intra prediction direction in H. 264. Alternatively, the local set determining unit 623 may determine N number of subsets in advance, estimate, as indices, the information amounts obtainable when the N number of respective subsets are used, select, as one of the indices, the subset which reduces the information amount most significantly, and determine a target range for the second transform as the first partial signal $y_{1L}{}^m$, based on the selected index.

The second transform coefficient deriving unit 222 derives the second transform coefficients designed to minimize the information amount for the first transformed output signal $y_1{}^n$ of plural samples belonging to the subsets, based on the indication of the statistical variation detected by the local set determining unit 623. Alternatively, the second transform coefficient deriving unit 222 may call transform coefficients calculated in advance from a memory.

At this time, the division and synthesis information calculating unit 612 determines division and synthesis information as in the case of transform coefficients. Otherwise, the division and synthesis information calculating unit 612 may call division and synthesis information obtained in advance from a memory.

The second transform coefficients designed to be optimum for (the first transformed output signal of) the respective smaller sets $S_{B\,(1)}$ and $S_{B\,(2)}$ can follow changes in the statistical properties, and thus provide a synergy effect of de-correlation and energy compression. Furthermore, the dividing unit 210 reduces the number of dimensions of the input signal, the number of elements, and the calculation amount for the second transform. Thus, the second transform is efficiently performed.

The smaller set $S_B$ is a set including the transform target input signal $X^n$ including a local change. Thus, the smaller set $S_B$ is, for example, a set obtainable by locally dividing the set $S_A$ along the time axis or in a spatial domain. Otherwise, the set $S_B$ is a set which has different properties when a transform target input signal having statistical properties different from those of the transform target input signal $X^n$ belonging to the set $S_A$ is input in a short period of time. In this way, even when the transform target input signal $X^n$ that belongs to the set $S_B$ but does not belong to the set $S_A$ is input in a short period of time, it is possible to perform efficient transform following the variation in statistical properties only requiring a reduced calculation amount, by determining the first transform coefficients based on the larger set $S_A$, and determining the second transform coefficients based on the smaller set $S_B$.

More specifically, the local set determining unit 623 determines at least one of sets of transform coefficients and division and synthesis information, based on a predetermined coding parameter. The coding parameter is one of predetermined prediction methods. For example, the local set determining unit 623 may switch the transform coefficients and the division and synthesis information, according to one of the intra prediction mode and the inter prediction mode which are examples of such coding parameters. Alternatively, it is possible to explicitly multiplex, in a coded stream, a selection of one of sets of transform coefficients and division and synthesis information.

In addition, it is possible to associate some of the prediction modes with a corresponding one of sets of transform coefficients and division and synthesis information, when switching between the transform coefficients and the division and synthesis information according to one of the intra prediction mode and the inter prediction mode. The division and synthesis information is information having a comparatively small variation. Thus, it is possible to reduce the memory use amount for the division and synthesis information by using a smaller number of switching for the division and synthesis information than the number of kinds of switching for the transform coefficients.

FIG. 19 illustrates an example of a structure including a memory for deriving the first transform coefficients, the division and synthesis information, and the second transform coefficients, and the deriving unit. However, it is possible to derive, in advance, one or all sets of first transform coefficients, division and synthesis information, and second transform coefficients, according to experience or a suitable method that is approximate next to the optimum method, instead of seeking the completely optimal solution. FIG. 22 is a block diagram showing an example of a structure of another transform unit according to Embodiment 3 of the present invention.

The transform unit 510b shown in FIG. 22 differs from the transform unit 510 shown in FIG. 19 in the point of not including the first memory 601, the second memory 611, the third memory 621, the first transform coefficient deriving unit 202, the second transform coefficient deriving unit 222, and the division and synthesis information calculating unit 612. In other words, the transform unit 510b obtains, from the outside, the first transform coefficients, the second transform coefficients, and the division and synthesis information which have been derived in advance, and performs transform and division based on the obtained coefficients and information.

Here, it is possible to employ a structure for reducing the calculation amount of a high frequency signal in the second transform, by reducing or zeroing the multiplication coefficients of transform coefficients for the high frequency signal (that is, decreasing the effective accuracy of the transform coefficients). In this case, the dividing unit and the synthesizing unit are included as elements of the present invention although they are not explicitly shown in the block diagram (See FIG. 9).

FIG. 23 is a block diagram showing a structure of a coding apparatus 500a including the transform unit 510a shown in FIG. 20. The coding apparatus 500a shown in FIG. 23 differs from the coding apparatus 500 shown in FIG. 17 in the point of including the transform unit 510a instead of the transform unit 510, and not including the control unit 590.

The flow of transform processes performed by the transform unit 510a according to Variation of Embodiment 3 of the present invention is the same as the flow of transform processes in Embodiment 1. More specifically, as shown in FIG. 6, first, the first transform coefficient deriving unit 202 determines first transform coefficients (Step S111). Next, the first transform unit 200 generates a first transformed output signal by performing a first transform on a transform target input signal, using a first transform matrix composed of first transform coefficients determined (Step S112).

Next, one of the division and synthesis information calculating unit 612 (not shown) and the local set determining unit 623 determines division and synthesis information (Step S113). Next, the dividing unit 210 divides the first transformed output signal into a first partial signal and a second partial signal (Step S110). At this time, the dividing unit 210 divides the first transformed output signal such that the correlation energy of the first partial information is larger than the correlation energy of the second partial signal.

Next, the local set determining unit 623 analyses the statistical properties of the local set of the first partial signal. Then, the second transform coefficient deriving unit 222 determines second transform coefficients based on the analysis result (Step S115). Next, the second transform unit 220 generates a second transformed output signal by performing a second transform using a second transform matrix composed of second transform coefficients determined for the first partial signal (Step S116).

Lastly, the synthesizing unit 230 generates the transformed output signal by synthesizing the second partial signal and the second transformed output signal (Step S118). Here, Steps S111, S113, and S115 may be performed according to other methods, and thus do not always need to be performed as parts of this embodiment.

As described above, the coding apparatus and the coding method according to Embodiment 3 of the present invention are intended to adaptively change transform coefficients and division and synthesis information according to a transform target input signal. Therefore, the coding apparatus and the coding method make it possible to be adaptive to the changes in the statistical properties of the input signal and to reduce the calculation amount required for the transform processing and the data amount of the transform coefficients.

The coding apparatus according to Variation of Embodiment 3 of the present invention is described below with reference to FIGS. 24A and 24B.

The coding apparatus 500c shown in FIG. 24A according to Variation of Embodiment 3 of the present invention is capable of performing a second transform using a predetermined transform matrix composed of predetermined transform coefficients (previously derived transform coefficients). FIG. 24A is a block diagram showing an example of a structure of the coding apparatus 500c according to Variation of Embodiment 3 of the present invention.

As shown in FIG. 24A, the coding apparatus 500c differs from the coding apparatus 500a shown in FIG. 23 in the point of including the transform unit 510c instead of the transform unit 510a, and further including a memory 624.

The transform unit 510c differs from the transform unit 510a in the point of including a second transform coefficient deriving unit 222c and a local set determining unit 623c instead of the second transform coefficient deriving unit 222 and the local set determining unit 623. The second transform coefficient deriving unit 222c generates second transform coefficients based on a derivation control signal that is output from the local set determining unit 623c. The generated second transform coefficients are stored in the memory 624.

The memory 624 is an example of a storage unit for storing at least one second transform matrix. The memory 624 outputs, to the second transform unit 220 and the entropy coding unit 130, at least one second transform coefficient which is (or are included) in the at least one second transform matrix stored therein and selected based on a selection signal that is output from the local set determining unit 623c.

For example, the memory 624 stores indices and the second transform matrices in association with each other. The selection signal is a signal indicating one of the indices. The memory 624 outputs a second transform matrix associated with the index indicated by the selection signal.

More specifically, the memory 624 stores, as candidate second transform coefficients, plural transform matrices each composed of coefficient values which are different, as a whole, from the coefficient values of the other transform matrices. Each of the transform matrices is associated one-to-one with index information that is an example of coding parameters. In the second transform, the transform matrix specified by the index information indicated by the selection signal is determined as the second transform matrix.

FIG. 25 is an example of an association table of second transform coefficients and division and synthesis information stored in a memory in the coding apparatus according to Variation of Embodiment 3 of the present invention. As described above, the memory 624 stores the indices and the second transform matrices in association with each other. In addition, as shown in FIG. 25, the memory 624 may further store selection range information items (here, division and synthesis information items) and the indices in association with each other.

More specifically, first, the local set determining unit 623c outputs the selection signal for selecting one of sets of transform coefficients and division and synthesis information which is predetermined, based on one of the properties of the input signal and the magnitude of the estimated values of information after compression. Based on the output selection signal, the memory 624 outputs the predetermined transform coefficients to the second transform unit 220. In addition, in the case where the memory 624 also holds the division and synthesis information, the local set determining unit 623c outputs the division and synthesis information to the dividing unit 210 and the synthesizing unit 230 (not shown in FIG. 24A).

The selection signal is compressed to have a reduced information amount as necessary (for example, a difference signal representing a difference from a prediction index predicted from an index of an adjacent block is output), and then is multiplexed onto a coded signal by the entropy coding unit 130.

Alternatively, the local set determining unit 623c may output a derivation control signal for directing the second transform coefficient deriving unit 222c to derive new second transform coefficients. At this time, the newly derived second transform coefficients are stored in the memory 624. Alternatively, the local set determining unit 623c may cause the division and synthesis information calculating unit (not shown) to calculate new division and synthesis information, by outputting a derivation control signal. Here, the second transform coefficient deriving unit 222c may calculate the division and synthesis information.

The new set of second transform coefficients and division and synthesis information is compressed to have reduced information amounts as necessary, and multiplexed onto a coded signal by the entropy coding unit 130. In other words, the coding apparatus 500c according to Variation of Embodiment 3 shown in FIG. 24A outputs the second transform coefficients and the division and synthesis information to the decoding apparatus. Alternatively, it is possible to allow the decoding apparatus side to select second transform coefficients stored in the decoding apparatus by transmitting a selection signal indicating an index instead of outputting the raw second transform coefficients.

As described above, the transform target input signal is the difference between the input signal and the prediction signal, and depends on the properties of the prediction signal. The properties of the transform target input signal may differ depending on whether the prediction signal is accurately predicted or not. Thus, the local set determining unit 623c may switch sets of second transform coefficients and division and synthesis information according to the magnitude of the transform target input signal.

Alternatively, the coding apparatus 500d shown in FIG. 24B is capable of deriving second transform coefficients, based on information indicating a prediction mode type (a prediction mode signal). FIG. 24B is a block diagram showing an example of a structure of the coding apparatus 500d according to Variation of Embodiment 3 of the present invention.

As shown in FIG. 24B, the coding apparatus 500d differs from the coding apparatus 500c shown in FIG. 24A in the point of including a transform unit 510d instead of the transform unit 510c, and further including a prediction control unit 585. In addition, the transform unit 510d differs from the transform unit 510c in the point of including the local set determining unit 623d instead of the local set determining unit 623c.

The prediction control unit 585 determines a prediction mode signal, and outputs the determined prediction mode signal to the prediction unit 580 and the local set determining unit 623d. The prediction mode signal is compressed, as necessary, to have a reduced amount of information such as the difference from the estimated value from the information of an adjacent block, and the compressed information is multiplexed onto the coded signal by the entropy coding unit 130.

The local set determining unit 623d outputs the selection signal for selecting a predetermined one of sets of transform coefficients and division and synthesis information, based on the prediction mode signal. Based on the selection signal, the memory 624 outputs the predetermined second transform coefficients to the second transform unit 220, or outputs the division and synthesis information to the dividing unit 210 and the synthesizing unit 230.

Alternatively, the local set determining unit 623d may output a derivation control signal for directing the second transform coefficient deriving unit 222c to derive new second transform coefficients. At this time, the newly derived second transform coefficients are stored in the memory 624. Alternatively, the local set determining unit 623d may cause the division and synthesis information calculating unit (not shown) to calculate new division and synthesis information, by outputting a derivation control signal. Here, the second transform coefficient deriving unit 222c may calculate the division and synthesis information.

The new set of second transform coefficients and division and synthesis information is compressed to have reduced information amounts as necessary, and are multiplexed onto a coded signal by the entropy coding unit 130.

Alternatively, the local set determining unit 623d may switch sets of second transform coefficients and division and synthesis information according to the magnitude of the transform target input signal. Here, one of the prediction mode signals respectively presenting plural kinds of prediction modes is indicated using a prediction mode signal. The prediction may be inter-frame prediction (inter prediction) or intra-frame prediction (intra prediction). The intra-frame prediction may be a prediction mode by extrapolating coded (decoded) adjacent pixels in a predetermined direction.

Alternatively, the division and synthesis information may be determined based on an angle of the prediction mode used to generate the prediction signal so as to enable division and synthesis optimized for the angle (the angle is a predetermined extrapolation angle in the case of intra-frame prediction). The concept of the division and synthesis information is described with reference to FIGs. 26A to 16C.

FIG. 26A shows a first transformed output signal of a $4 \times 4$ block in which the upper-left side is the low frequency side. In general, the first partial signal is further compressed by a second transform assuming that the low frequency side on which the energy is likely to be focused to be the first partial signal and that the high frequency side other than the low frequency side is to be the second partial signal. For explanation, one of the low frequency side and the high frequency side to which each of the $N \times N$ elements of the first transformed output signal belongs is defined as Gij = {0, 1} (i denotes the vertical down direction, j denotes the horizontal right direction, each of i and j denotes an origin starting from 1, 0 indicates a case where the element belongs to the first partial signal, and 1 indicates a case where the element belongs to the second partial element).

FIG. 26B is a conceptual diagram showing an example of selecting a division and synthesis information item from among plural division and synthesis information items, based on the prediction direction in intra direction. Assuming that the upper right direction is the origin for angles, the division and synthesis information is designed to be items obtained by dividing a range from 0 to n [rad] by angle. FIG. 26B is an example of the definition of four division and synthesis information items.

More specifically, in the case of an $S_0$ designed to have a horizontal angle, G0j is preferentially determined to have a value of 0 (that is, the first partial signal) assuming that the power is focused on the left side (DC in the horizontal direction) . More specifically, in the case of an $S_1$ designed to have a vertical angle, Gj0 is preferentially determined to have a value of 0 (that is, the first partial signal) assuming that the power is focused on the upper side (DC in the vertical direction). In the case of each of of the $S_1$ and $S_3$ designed to have a diagonal angle, for example, a Gij (i <= 1, j <= 1) is preferentially determined to have a value of 0.

FIG. 26C is an example of a case where eight angles and the corresponding eight kinds of division and synthesis information items are prepared when four elements in the $4 \times 4$ block is selected as the first partial signal. As shown in this example, it is possible to define the relationship between the angles and the corresponding positions of the coefficient values composing the first partial signal, and to determine, at arbitrary angles, the positions of the coefficient values composing the first partial signal.

As described above, in the case where a coding parameter shows a prediction mode by extrapolation in a predetermined direction in the second transform, a range including coefficient values in the predetermined direction among the plural coefficient values composing the first transformed output signal is determined as the target for the second transform. The range including the coefficient values in the predetermined direction is, for example, a range including the coefficient value at the origin in the predetermined direction that is the extrapolation direction.

For example, when the coding parameter shows the prediction mode by extrapolation in the approximately horizontal direction (right direction), the range including the coefficient values in the horizontal direction (more specifically, the left side coefficient values) among the plural coefficient values composing the first transformed output signal is determined as the target for the second transform. As another example, when the coding parameter shows the prediction mode by extrapolation in the approximately vertical direction (lower direction), the range including the coefficient values in the vertical direction (more specifically, the upper side coefficient values) among the plural coefficient values composing the first transformed output signal is determined as the target for the second transform.

In other words, when m number of coefficient values (elements) are determined as the target for the second transform, m number of coefficient values closer to the origin in the extrapolation direction are determined from among the n number of coefficient values composing the first transformed output signal. More specifically, the range includes the upper left coefficient values and the coefficient values closer to the origin in the extrapolation direction.

For example, in the case where the extrapolation direction toward the right direction such as So in FIG. 26B is selected, the origin in the extrapolation direction is the left side, and thus m number of coefficient values closer to the left side are selected as the first partial signal. Likewise, in the case where the extrapolation direction toward the lower right direction such as $S_1$ in FIG. 26B is selected, the origin in the extrapolation direction is the upper left side, and thus m number of coefficient values closer to the upper left side are selected as the first partial signal. Likewise, in the case where the extrapolation direction toward the lower right direction such as $S_2$ in FIG. 26B is selected, the origin in the extrapolation direction is the upper side, and thus m number of coefficient values closer to the upper side are selected as the first partial signal.

Here, in the case where the origin of the extrapolation direction is the lower left or the upper right as shown in $S_3$ in FIG. 26B or one of $S_0$, $S_1$, and $S_7$ in FIG. 26C, m number of coefficient values including the coefficient values of the upper left side, the coefficient values closer to the origin in the extrapolation direction, and the coefficient values along the extrapolation direction are determined as the target for the second transform. For example, $S_7$ in FIG. 26C is shifted to the left from $S_6$ by 22.5 degrees, and thus the second partial signal $S_7$ includes the coefficient values ((1, 1)) at the upper left, the coefficient values ((1, 2), and (1, 3)) at the upper side as with $S_6$, and further includes the coefficient values ((2, 1)) along the extrapolation direction (the lower left direction)).

[Embodiment 4]

A decoding apparatus and a decoding method according to Embodiment 4 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in any one of Embodiments 1 and 3). The decoding apparatus and decoding method according to Embodiment 4 of the present invention are characterized by performing two-stage inverse transforms on a coded signal generated by coding a prediction error signal presenting the difference between a coding target signal (input signal) and a prediction signal.

FIG. 27 is a block diagram showing an example of a structure of a decoding apparatus 700 according to Embodiment 4 of the present invention. As shown in FIG. 27, the decoding apparatus 700 according to Embodiment 4 of the present invention includes an entropy decoding unit 310, an inverse quantization unit 320, an inverse transform unit 730, a control unit 740, an adder 750, a memory 760, and a prediction unit 770. The same structural elements as those of the decoding apparatus 300 according to Embodiment 2 shown in FIG. 11A are assigned as the same reference signs, and the same descriptions thereof are not repeated here.

As with the inverse transform unit 330 described in Embodiment 2, the inverse transform unit 730 inverse transforms the decoded transformed output signal generated by the inverse quantization unit 320 to generate a decoded transformed input signal. More specifically, the inverse transform unit 730 performs two-stage inverse transforms on the decoded transformed output signal. The inverse transform coefficients to be used for inverse transform and the position for the division (the part to be the target for the second transform) are determined based on a control signal from the control unit 740. The inverse transform unit 730 is described in detail later.

The control unit 740 outputs a control signal for controlling operations performed by the inverse transform unit 730, based on local information. The local information is an example of coding parameters, and is information indicating an index associated with inverse transform coefficients and division and synthesis information, a prediction mode used in the coding, or the like. The control unit 740 determines the inverse transform coefficients and the division and synthesis information, based on the local information, and outputs the control information indicating the determined coefficients and information to the inverse transform unit 730.

The adder 750 generates a decoded signal by adding the decoded transformed input signal generated by the inverse transform unit 730 and the prediction signal resulting from prediction based on a decoded signal generated from a previously coded signal.

The memory 760 is an example of a storage unit for storing generated decoded signals.

The prediction unit 770 generates a prediction signal by performing a prediction based on the decoded signal generated from the previously coded signal. In other words, the prediction unit 770 generates a prediction signal based on an already decoded signal stored in the memory 760. For example, the prediction unit 770 generates prediction pixels (a prediction signal) of a decoding target block included in the prediction error image, based on the coding parameter. The adder 750 reconstructs an input image (a decoded signal) by adding the prediction pixels generated by the prediction unit 770 and the pixels of the decoding target block.

The inverse transform unit 730 may obtain the second inverse transform coefficients and division and synthesis information from the coding apparatus. Here, the inverse transform unit 730 may obtain the second transform coefficients from the coding apparatus, and may calculate the second inverse transform coefficients from the second transform coefficients. Here, the division and synthesis information is an example of selection range information indicating which part of the decoded transformed output signal corresponds to the second decoded transformed output signal.

Based on the control by the control unit 740, the decoding apparatus 700 according to Embodiment 4 of the present invention adaptively and temporally or spatially determines, as the second decoded transformed output signal, at least one of the range that is to be the target for the second inverse transform in the decoded transformed output signal and the second inverse transform coefficients. For example, based on the predetermined coding parameter, the decoding apparatus 700 determines, as the second decoded transformed output signal, at least one of the range that is to be the target for the second inverse transform in the decoded transformed output signal and the second inverse transform coefficients.

Next, decoding processes performed by the decoding apparatus 700 according to Embodiment 4 of the present invention are described with reference to FIG. 28. FIG. 28 is a flowchart showing an example of operations performed by the decoding apparatus 700 according to Embodiment 4 of the present invention.

In other words, the prediction unit 770 generates a prediction signal based on an already decoded signal stored in the memory 760 (Step S405). Step S405 is skipped in the case of decoding a coded signal generated according to a coding method for directly transforming an input signal.

Next, the entropy decoding unit 310 entropy decodes the input coded signal to generate decoded quantized coefficients (Step S210). Next, the inverse quantization unit 320 inverse quantizes the quantized coefficients to generate a decoded transformed output signal $y^{\wedge n}$ (Step S220).

Next, the inverse transform unit 730 inverse transforms the decoded transformed output signal $y^{\wedge n}$ to generate a decoded transformed input signal $X^{\wedge n}$ (Step S230). More specifically, as shown in FIG. 12 and FIG. 14, the inverse transform unit 730 generates the decoded transformed input signal $X^{\wedge n}$ by performing two-stage inverse transforms. Here, the inverse transform in the inverse transform unit 730 is transform in the decoding apparatus, and is not limited to the inverse transform inverse to the transform in the coding apparatus.

Next, the adder 750 generates the decoded signal by adding the decoded transformed input signal $X^{\wedge n}$ and the prediction signal. The decoded signal is output as an output signal from the entire decoding apparatus 700. The decoded signal is stored in the memory 760 (Step S440), and is referred to in the decoding of a following coded signal. In other words, the memory 760 functions as a delay unit.

Here, the output signal in the case of decoding sound data or audio data is one dimensional, and the output signal from a still image and video decoding apparatus is two dimensional. The decoding apparatus (or the operation mode) which directly outputs a decoded signal without performing any prediction can be illustrated as a decoding apparatus which does not include the prediction unit 770 and the memory 760.

Next, the structure of the inverse transform unit 730 according to Embodiment 4 of the present invention is described with reference to FIG. 29. FIG. 29 is a block diagram showing an example of a structure of the inverse transform unit 730 according to Embodiment 4 of the present invention.

The inverse transform unit 730 includes a dividing unit 400, a second inverse transform unit 410, a synthesizing unit 420, and a first inverse transform unit 430. The inverse transform unit 730 receives, as an input, the decoded transformed output signal $y^{\wedge n}$. The decoded transformed output signal $y^{\wedge n}$ corresponds to the transformed output signal $y^n$ generated by the transform unit 510 shown in FIG. 17.

The dividing unit 400 divides the decoded transformed output signal $y^{\wedge n}$ into the second decoded transformed output signal and the second decoded partial signal, according to the division and synthesis information.

The second inverse transform unit 410 generates a first decoded partial signal by performing, using a second inverse transform matrix, an inverse transform on the second decoded transformed output signal.

The synthesizing unit 420 generates a first decoded transformed output signal by synthesizing the second decoded partial signal and the first decoded partial signal, according to the division and synthesis information.

The first inverse transform unit 430 generates a decoded transformed input signal by inverse transforming the first decoded transformed output signal using a first inverse transform matrix. The decoded transformed input signal corresponds to a transform target input signal input to the transform unit 510 shown in FIG. 17.

The division and synthesis information is equivalent to the division and synthesis information in the earlier-described embodiments. Here, the number of dimensions of an input (a decoded transformed output signal) to the dividing unit 400 is n, and the number of dimensions of an input (a second decoded transformed output signal) to the second inverse transform unit 410 is m (m and n are natural number that satisfy m < n). Here, the second inverse transform unit 410 may use a transform matrix $A^4$ including a row in which the diagonal elements are 1 and the non-diagonal elements are 0 as shown in (b) in FIG. 8, assuming that the number of dimensions at the time of input to the second inverse transform unit 410 is n. The second transform unit may be of a separable type.

The second inverse transform matrix used for the second inverse transform is an inverse matrix with respect to the transform matrix of the second transform described in one of Embodiment 1 and Embodiment 3 or is approximate to the inverse matrix. The first inverse transform matrix used for the first inverse transform is an inverse matrix with respect to the transform matrix of the first transform described in one of Embodiment 1 and Embodiment 3 or is approximate to the inverse matrix. In order to suppress the calculation accuracy required for the inverse transform calculation to a low level, the effective accuracies of the first inverse transform coefficients and the second inverse transform coefficients may be set at a low level. In this case, the calculation accuracy of the inverse transform unit dominantly determines distortion in the entire coding and decoding. Thus, it is preferable to derive the first transform coefficients described in one of Embodiment 1 and Embodiment 2 based on the first inverse transform coefficients described in one of Embodiment 2 and this embodiment, and to derive the second transform coefficients based on the second inverse transform coefficients in the same manner.

In addition, the second inverse transform coefficients, the first inverse transform coefficients, and the division and synthesis information are multiplexed on a coded signal, and are notified from the coding apparatus to the decoding apparatus. Here, the second inverse transform coefficients, the first inverse transform coefficients, and the division and synthesis information may be notified using another transmission channel instead of being multiplexed on a coded signal, or may be notified using a transmission format or a storage format. Alternatively, these coefficients and information may be notified as specified values according to a standard or a profile level of the standard, or may be notified based on information obtained between the decoding apparatus and the coding apparatus.

Operations in the inverse transform processes in Embodiment 4 of the present invention are the same as in Embodiment 2. More specifically, as shown in FIG. 14, the dividing unit 400 firstly obtains the division and synthesis information (Step S231). The dividing unit 400 then divides the decoded transformed output signal into the second decoded transformed output signal and the second decoded partial signal, according to the obtained division and synthesis information (Step S232).

Next, the second inverse transform unit 410 obtains second inverse transform coefficients (Step S233). The second inverse transform unit 410 performs a second inverse transform on the second decoded transformed output signal to generate a first decoded partial signal (Step S234).

Next, the synthesizing unit 420 generates the first decoded transformed output signal by synthesizing the first decoded partial signal and the second decoded partial signal according to the division and synthesis information (Step S236).

Next, the first inverse transform unit 430 obtains first inverse transform coefficients (Step S237). The first inverse transform unit 430 performs a first inverse transform on the first decoded transformed output signal to generate a decoded transformed input signal (Step S238).

As described earlier, there are variations in how to make notifications in Step S231 for obtaining the division and synthesis information, in Step S232 and Step S234 for obtaining inverse transform coefficients. Thus, such notifications are not always made at time points as shown in this flowchart, and not essential operations as parts of this embodiment.

As described above, the decoding apparatus and the decoding method according to Embodiment 4 of the present invention make it possible to adapt to changes in the statistical properties of input signals while suppressing the calculation amounts required for transform processes and the data amounts of the inverse transform coefficients. Furthermore, as with the coding apparatus 500 shown in Embodiment 3, the decoding apparatus 700 is capable of correctly decoding the coded signal generated by performing two stages of transform using transform coefficients calculated based on the statistical properties of the input signal.

A decoding apparatus 700a shown in FIG. 30 is capable of selecting predetermined inverse transform coefficients and division and synthesis information based on a selection signal decoded from a coded signal, and performing inverse transform using the selected inverse transform coefficients and division and synthesis information. FIG. 30 is a block diagram showing an example of a structure of the decoding apparatus 700a according to Embodiment 4 of the present invention.

As shown in FIG. 30, the decoding apparatus 700a differs from the decoding apparatus 700 shown in FIG. 27 in the point of additionally including memories 781 and 782.

The memory 781 stores second inverse transform matrices and indices in association with each other. The memory 782 further stores division and synthesis information items used for division and synthesis of signals in association with the indices.

More specifically, the memory 781 stores, as candidate second inverse transform matrices, plural transform matrices each composed of coefficient values which are different, as a whole, from the coefficient values of the other transform matrices. Each of the transform matrices is associated one-to-one with index information that is an example of coding parameters. In the second inverse transform, the transform matrix specified by the index information indicated by the selection signal is determined as the second inverse transform coefficients.

Each of the memory 781 and the memory 782 selects inverse transform coefficients and division and synthesis information, based on the selection signal output from the entropy decoding unit 310, and outputs the selected coefficients and information to the inverse transform unit 730. More specifically, the selection signal is, for example, a signal indicating an index. Thus, the index associated with the inverse transform coefficients and division and synthesis information is output here.

More specifically, the entropy decoding unit 310 extracts a compressed selection signal by entropy decoding the coded signal, and decodes the selection signal from the compressed selection signal. The entropy decoding unit 310 outputs the decoded selection signal to the memory 781 and the memory 782. Each of the memories 781 and 782 outputs second inverse transform coefficients and division and synthesis information to the inverse transform unit 730.

This selection mechanism may be adapted temporally and spatially to perform an inverse transform in units of a block, a macroblock, a group of macroblocks, or a slice, according to the selection signal. In addition, an inverse transform may be performed adaptively using a combination of an intra-frame prediction mode and a selection signal. Here, it is possible to switch sets of second inverse transform coefficients and division and synthesis information, according to the following examples: the total number of non-zero coefficients in decoded quantized coefficients, the total number of non-zero coefficients in a low frequency area, the total sum of levels of non-zero coefficients, the total sum of a decoded transformed output signal y^ to be output by the inverse quantization unit 320, and the total sum of the low frequency areas.

A decoding apparatus 700b shown in FIG. 31 is capable of selecting predetermined inverse transform coefficients and division and synthesis information based on a prediction signal decoded from a coded signal, and performing inverse transform using the selected inverse transform coefficients and division and synthesis information. FIG. 31 is a block diagram showing an example of a structure of a decoding apparatus 700b according to Embodiment 4 of the present invention.

As shown in FIG. 31, the decoding apparatus 700b differs from the decoding apparatus 700a shown in FIG. 30 in the point of additionally including a selection signal determining unit 790.

The selection signal determining unit 790 obtains a prediction mode signal output from the entropy decoding unit 310, and generates a selection signal based on the obtained prediction mode signal. The selection signal is, for example, a signal indicating an index. Thus, an index indicated as the selection signal as being associated with the inverse transform coefficients and division and synthesis information is output to the inverse transform unit 730.

More specifically, the entropy decoding unit 310 extracts a compressed prediction mode signal by entropy decoding a coded signal, and decodes the prediction mode signal using, in combination, estimated values based on information of adjacent block(s). The prediction mode signal is output to the prediction unit 770, and the prediction unit 770 generates a prediction signal.

The prediction mode signal is transmitted to the selection signal determining unit 790. The selection signal determining unit 790 outputs a selection signal for selecting inverse transform coefficients and division and synthesis information corresponding to the prediction mode signal. The selection signal is output to the memories 781 and 782. Each of the memories 781 and 782 outputs the second inverse transform coefficients and division and synthesis information to the inverse transform unit 730.

This selection mechanism may be adapted temporally and spatially to perform the inverse transform in units of a block, a macroblock, a group of macroblocks, or a slice, according to the selection signal. Alternatively, it is possible to use, in combination, the selection signal corresponding to the prediction mode signal described in FIG. 31 and the selection signal decoded from the coded signal as described with reference to FIG. 30.

Here, it is possible to switch the second inverse transform coefficients and division and synthesis information, according to the following examples: the total number of non-zero coefficients in decoded quantized coefficients, the total number of non-zero coefficients in a low frequency area, the total sum of levels of non-zero coefficients, the total sum of decoded transformed output signals y^ to be output by the inverse quantization unit 320, and the total sum of the low frequency areas. Alternatively, it is also possible to switch the second inverse transform coefficients and division and synthesis information, based on the parity (an even or odd state) of the total sum of the decoded quantized coefficients.

Here, it is possible not to perform any second inverse transform when the total sum of the decoded quantized coefficients is 1.

As shown in Embodiment 3, Embodiment 4 determines, to be the target for a second inverse transform, a range including coefficient values in a predetermined direction from among the plural coefficient values composing a decoded transformed output signal in the case where a coding parameter indicates a prediction mode for extrapolation in the predetermined direction. The range including the coefficient values in the predetermined direction is, specifically, a range including the coefficient value at the origin in the predetermined direction.

For example, when the coding parameter shows the prediction mode by extrapolation in the approximately horizontal direction, the range including the coefficient values in the horizontal direction (more specifically, the left side coefficient values) among the plural coefficient values composing the decoded transformed output signal is determined as the target for the second transform. As another example, when the coding parameter shows the prediction mode indicating extrapolation in the approximately vertical direction, the range including the coefficient values in the vertical direction (more specifically, the upper side coefficient values) among the plural coefficient values composing the first transformed output signal is determined as the target for the second inverse transform.

[Embodiment 5]

A coding apparatus and a coding method according to Embodiment 5 of the present invention respectively include a transform unit and a transform method for transforming a coding target signal of audio data, still image data, video data, and/or the like by combining plural kinds of transforms. A coding apparatus and a coding method according to Embodiment 5 of the present invention are characterized by performing a first transform using a fixed transform matrix composed of predetermined fixed transform coefficients. The same structural elements as those of the earlier-described embodiments are assigned with the same reference signs, and the same descriptions may be skipped here.

A transform unit and a transform method according to Embodiment 5 of the present invention are described with reference to FIG. 32. FIG. 32 is a block diagram showing an example of a structure of the transform unit 810 according to Embodiment 5 of the present invention. The coding apparatus according to Embodiment 5 of the present invention differs from Embodiments 1 and 3 in the point of including a transform unit having a different structure. Thus, the structure of and operations by the transform unit are descried below.

As shown in FIG. 32, the transform unit 810 includes a first transform unit 200, a dividing unit 210, a second transform unit 220, a synthesizing unit 230, a second memory 611, a division and synthesis information calculating unit 612, a third memory 621, and a second transform coefficient deriving unit 222. The transform unit 810 differs from the transform unit 510 shown in FIG. 19 in the point of including a first transform unit 900 instead of the first transform unit 200 and not including the first memory 601 and the first transform coefficient deriving unit 202.

The transform target input signal is input to the first transform unit 900. The first transform unit 900 generates a first transformed output signal by performing a first transform on the transform target input signal using a transform matrix composed of predetermined transform coefficients and/or basis functions. The first transform unit 900 is configured to perform only a predetermined transform without flexibility to arbitrarily select and use transform coefficients. In this way, it is possible to reduce the processing complexity and the calculation amount. Here, such a transform is referred to as a fixed transform.

As mentioned above, FIG. 32 shows the structure including the memory and the deriving unit for deriving the division and synthesis information and second transform coefficients. As with the case of Embodiment 3, it is also possible to derive, in advance, any one or all sets of division and synthesis information items and second transform coefficients according to experience or an appropriate method instead of seeking the completely optimal solution.

The transform unit 810 according to Embodiment 5 of the present invention performs the following plural kinds of transforms: a first transform that is a fixed transform; and a second transform using an optimum transform matrix composed of optimum transform coefficients derived according to the statistical properties of (a first transformed output signal of) a set $S_B$ smaller than a set used in the first transform. The concept of the transform method according to Embodiment 5 of the present invention is described below with reference to FIG. 33. Here, FIG. 7 is approximately the same as FIG. 21, and thus only differences are described.

The first transform coefficients are designed, in advance, to be optimum based on the statistical properties of the set $S_A$ determined to be significantly large. It is possible to eliminate the necessity of updating the transform coefficients of the first transform unit 900 by designing the set $S_A$ determined to be significantly large, and thereby perform a fixed transform. Accordingly, the transform unit 810 does not have a flexibility to select and use different transform coefficients for each input signal, and thus does not need to include the first memory 601 and the first transform coefficient deriving unit 202 according to Embodiment 3.

Furthermore, it is also good to use transform conforming to an existing standard as the first transform. For example, it is also good to use discrete cosine transform conforming to the MPEG-1, 2, and/or 4 Standard(s), or integer-accuracy DCT employed in the H. 264/AVC Standard. These kinds of transforms can use a circuit having a butterfly structure, and can reduce the number of multiplications to an n-dimensional input to the value obtained according to n $\times$ Log2 (n) (or the value obtained according to n $\times$ n in the case of the first transform in Embodiment 3).

Here, there is a possibility that a transform in an existing standard is not precisely optimized for such significantly large set $S_A$ including the transform target input signal. This is because a prediction signal has a special correlation and thus a transform target signal also has a special correlation, in the case where an input signal to the coding apparatus has a special correlation influenced by the characteristics of an imaging device or the like, or in the case where the transform target input signal is a prediction error.

It is possible to compensate such a correlation by reflecting the correlation in the designing of the second transform coefficients in each of the embodiments of the present invention and performing de-correlation and energy compression using the second transform coefficients in the second transform. More specifically, among the set $S_c$ of the first transformed output signal, the set generated when the first transform unit 900 transforms the set $S_{B\,(1)}$ is determined to be a set $S_{c\,(1)}$, and the set generated when the first transform unit 900 transforms the set $S_{B\,(2)}$ is determined to be a set $S_{C\,(2)}$. In this case, the second transform coefficient deriving unit 222 derives second transform coefficients independently for each of the sets $S_{C\,(1)}$ and $S_{C\,(2)}$.

However, the second transform unit 220 is configured to receive only part of a signal from the dividing unit 210, and thus provides de-correlation and energy compression performances slightly decreased from those in Embodiment 3. However, the coding apparatus according to Embodiment 5 of the present invention eliminates the necessity of calculating the first transform coefficients and thus can reduce the calculation amount. In addition, since the coding apparatus eliminates the necessity of including a memory and a deriving unit for deriving first transform coefficients, and thus makes it possible to miniaturize the circuit.

The flow of transform processes in Embodiment 5 of the present invention is approximately similar to the flow in any one of Embodiments 1 and 3. Since the first transform is a fixed transform, Step S111 in FIG. 6 is skipped, and Steps S112 to 118 are executed. At this time, the first transform coefficients used in the first transform are not yet designed to be optimum for the first transform target input signal because the first transform is an existing transform. Thus, the second transform coefficients used in the second transform are optimized for the first transform target input signal (Step S115). Here, Steps S113 and S115 may be determined according to mutually different methods, and thus are not always performed as parts of this embodiment.

As described above, the coding apparatus and the coding method according to Embodiment 5 of the present invention make it possible to adapt to changes in the statistical properties of input signals while suppressing the calculation amounts required for the transforms and the data amounts of the transform coefficients. Furthermore, the coding apparatus and the coding method make it possible to reduce the calculation amounts by using a fixed transform.

Here, variances obtainable by performing shift and addition calculations without performing multiplication according to integer-accuracy DCT employed in the H. 264/AVC Standard may have mutually different transform matrix base sizes (norms). Accordingly, it is preferable to modify the norms when a fixed transform is used as the first transform.

FIG. 34 is a block diagram showing an example of a structure of a transform unit 810a according to Variation of Embodiment 5 of the present invention. The transform unit 810a differs from the transform unit 810 in the point of including a norm modifying unit 940.

The norm modifying unit 940 performs a norm modification on the first transformed output signal generated by the first transform unit 900. Then, the signal after the norm modification is output to the dividing unit 210. The norm modifying unit 940 modifies the first transformed output signal by normalizing the first transformed output signal by using modification parameters determined based on the first transform matrix. The modification parameters are, for example, the norms of the first transform matrix.

The norm modifying unit 940 modifies a first transformed output signal $y_1^n$ to be input, using the norms calculated from the first transform matrix $A_1^n$ using the first transform. The norms are calculated according to the following Expression 12.

[Math. 12]

$$N(i) = \sqrt{\sum_{k=1}^{n} a(i,k)^2} \quad \text{(Expression 12)}$$

Here, a (i, k) is an element included in the first transform matrix $A_1^n$.

Here, the norms change when the first transform matrix $A_1^n$ adaptively changes. Thus, the norm modifying unit 940 calculates the norms, and modifies the first transformed output signal $y_1^n$ using the calculated norms. When the first transform matrix $A_1^n$ is a fixed matrix, the norm modifying unit 940 may hold the norms in an internal memory or the like.

The norm modifying unit 940 modifies the first transformed output signal $y_1^n$ according to Expression 13. In other words, the norm modifying unit 940 generates a first transformed output signal $y'_1{}^n$ resulting from the norm modification by multiplying the first transformed output signal $y_1^n$ by the inverses of the norms. In other words, the norm modifying unit 940 generates a first transformed output signal $y'_1{}^n$ resulting from the norm modification by dividing the first transformed output signal $y_1^n$ by the norms.

[Math. 13]

$$y'_1(i) = y_1(i)/N(i) \quad \text{(Expression 13)}$$

The multiplication and division using norms are performed for each element included in the first transformed output signal $y_1^n$. In other words, the norm modifying unit 940 generates the element $y'_1$ (i) of the first transformed output signal $y'_1{}^n$ resulting from the norm modification by multiplying the element $y_1$ (i) of the first transformed output signal $y_1^n$ by the inverses of the norms N (i).

Here, the norm modification may be performed separately for the first partial signal and the second partial signal after the division by the dividing unit 210.

FIG. 35 is a block diagram showing an example of a structure of a transform unit 810b according to Variation of Embodiment 5 of the present invention. The transform unit 810b differs from the transform unit 810 in the point of including norm modifying units 941 and 942.

The norm modifying unit 941 performs norm modification on the first partial signal $y_{1L}^m$. Furthermore, the first partial signal $y'_{1L}{}^m$ resulting from the norm modification is output to the second transform unit 220. More specifically, the norm modifying unit 941 modifies the first partial signal $y_{1L}^m$ by using norms N calculated from the first transform matrix $A_1^n$ using the first transform (see Expression 13, $y'_1$ (i) is interpreted as $y'_{1L}$ (i), and $y_1$ (i) is interpreted as $y_{1L}$ (i)). In addition, the norms N are calculated according to Expression 12.

The norm modifying unit 942 performs a norm modification on the second partial signal $y_{1H}^{n-m}$. Furthermore, the second partial signal $y'_{1H}{}^{n-m}$ resulting from the norm modification is output to the synthesizing unit 230. More specifically, the norm modifying unit 942 modifies the second partial signal $y_{1H}^{n-m}$ to be input by using the norms N calculated from the first transform matrix $A_1^n$ using the first transform (see Expression 13, $y'_1$ (i) is interpreted as $y'_{1H}$ (i), and $y_1$ (i) is interpreted as $y_{1L}$ (i)). In addition, the norms N are calculated according to Expression 12.

The same advantageous effect is obtained by performing a norm modification on the second transform matrix $A_2^m$ instead of performing a norm modification on the first partial signal $y_{1L}^m$. A case of performing a norm modification on the second transform matrix $A_2^m$ is described below.

The norm modifying unit 941 derives modified coefficients by modifying the second transform coefficients composing the second transform matrix $A_2^m$ using the norms calculated from the first transform matrix $A_1^n$. In addition, the norms are calculated according to Expression 12.

More specifically, the norm modifying unit 941 modifies the second transform coefficients composing the second

transform matrix $A_2^m$ according to Expression 14. In other words, the norm modifying unit 941 generates a second transform matrix $A'_2{}^m$ resulting from the norm modification by multiplying the second transform matrix $A_2^m$ by the inverses to the norms. In other words, the norm modifying unit 941 generates modified second transform coefficients after the norm modification by dividing the second transform coefficients by the norms.

[Math. 14]

$$a'_2(i, j) = a_2(i, j)/N(i) \quad \text{(Expression 14)}$$

The multiplication and division using norms are performed for each of the elements of the second transform coefficients composing the second transform matrix $A_2^m$. In other words, the norm modifying unit 941 generates the second transform coefficients $a'_2$ (i, j) resulting from the norm modification by multiplying the second transform coefficients $a_2$ (i, j) by the norms N (i).

Next, the second transform unit 220 generates the second transformed output signal $y_2^m$ by transforming the first partial signal $y_{1L}{}^m$ using the second transform matrix $A'_2{}^m$ resulting from the norm modification.

As described above, it is possible to perform a norm modification on a signal resulting from a first transform, and thereby to make the bases of the transform matrix equal to each other and to the increase transform accuracy.

In addition to the norm modification, the norm modifying unit 940 (or the norm modifying units 941 and 942) may perform a weighting of the weight scale of the quantization matrix (Qmatrix) in the same manner as a quantizing unit conforming to H. 264. The weight scale of the quantization matrix is an example of modification parameters.

The norm modifying unit 940 modifies the first transformed output signal $y_1^n$ by weighting the first partial signal using the quantization matrix used in the quantizing unit 120. More specifically, the norm modifying unit 940 modifies the first transformed output signal $y_1^n$ according to Expressions 15 and 16. In other words, the norm modifying unit 940 generates a first transformed output signal $y_1^n$ resulting from the norm modification by multiplying the first transformed output signal $y_1^n$ an inverse mf of the quantization matrix. In other words, the norm modifying unit 940 generates a first transformed output signal $y'_1{}^n$ resulting from the norm modification by dividing the first transformed output signal $y_1^n$ by the quantization matrix.

[Math. 15]

$$y'_1(i) = y_1(i) * mf(i) \quad \text{(Expression 15)}$$

[Math. 16]

$$mf(i) = 1/f(i) \quad \text{(Expression 16)}$$

Here, f (i) is the value of each element of the weight scale derived from the quantization matrix.

It is preferable that the norm modifying unit 940 further perform a post scale modification after the second transform.

The norm modifying unit 940 generates the transformed output signal $y^n$, by multiplying the signal $y'^n$ output from the synthesizing unit 230 by modification coefficients mf_2 calculated from the quantization matrix. More specifically, the norm modifying unit 940 generates a transformed output signal $y^n$ by modifying the signal $y'^n$ resulting from the synthesis according to Expressions 17 and 18.

[Math. 17]

$$y(i) = y'(i) * mf_2(j) \qquad \text{(Expression 17)}$$

[Math. 18]

$$mf_2(j) = 1/S(i) \qquad \text{(Expression 18)}$$

Here, S (i) denotes each element of the matrix represented according to Expression 19.

[Math. 19]

$$S = \frac{1}{\sqrt{mf(1)^2 + \cdots + mf(4)^2}} \begin{bmatrix} mf(1) & 0 & \cdots & 0 \\ 0 & mf(2) & \ddots & \vdots \\ \vdots & \ddots & \ddots & 0 \\ 0 & \cdots & 0 & mf(4) \end{bmatrix} \qquad \text{(Expression 19)}$$

A transform unit 810b shown in FIG. 35 is also capable of performing a weighting of the wait scale of a quantization matrix in the same manner as described above. Such a post scale modification is only required to be performed on the second transformed output signal generated by the second transform unit 220.

In the example of FIG. 35, the second transform matrix $A_2^m$ may be modified instead of the first partial signal $y_{1L}^m$ in the weighting of the weight scale of the quantization matrix.

At this time, the norm modifying unit 941 modifies the second transform matrix $A_2^m$ using the quantization matrix. More specifically, the norm modifying unit 941 modifies the second transform matrix $A_2^m$ according to Expression 20. According to Expression 20, the norm modifying unit 941 multiplies, for each second transform coefficient $a_2$ (i, j), an inverse mf (i) of a corresponding one of the elements of the quantization matrix and a modification coefficient mf_2 (j) calculated from the quantization matrix.

[Math. 20]

$$a'_2(i,j) = a_2(i,j) * mf(i) * mf_2(j)$$

(Expression 20)

As described above, it is possible to increase the coding efficiency also by modifying the second transform matrix $A_2^m$ instead of the first partial signal $y_{1L}^m$.

Here, a norm modification and a weighting of a quantization matrix may be combined. In other words, the norm modifying unit 941 may perform both a norm modification and a modification of the quantization matrix on one of the first partial signal $y_{1L}^m$ and the second transform matrix $A_2^m$.

For example, in the case of modifying the first partial signal $y_{1L}^m$, the norm modifying unit 941 modifies the first partial signal $y_{1L}^m$ according to Expression 21. More specifically, the norm modifying unit 941 generates a first partial signal $y'_{1L}^m$ resulting from the modifications by multiplying, for each of the elements $y_{1L}$ (i) of the first partial signal $y_{1L}^m$, the inverse of the norm N (i) calculated from the first transform matrix $A_1^n$ and the inverse mf (i) of each of the elements of the quantization matrix.

[Math. 21]

$$y_2(i) = y'_2(i)/N(i) * mf(i)$$

(Expression 21)

More specifically, in the case of modifying the second transform matrix $A_2^m$, the norm modifying unit 941 modifies the second transform matrix $A_2^m$ according to Expression 22. More specifically, the norm modifying unit 941 generates a second transform matrix $A'_2^m$ resulting from the modifications by multiplying, for each of the elements $a_2$ (i, j) of the second transform coefficients, the inverse of the norm N (i) calculated from the first transform matrix $A_1^n$ and the modified coefficient mf_2 (j) calculated from the quantization matrix.

[Math. 22]

$$a'_2(i,j) = a_2(i,j)/N(i) * mf(i) * mf_2(j)$$

(Expression 22)

This structure also makes it possible to apply a more optimum second transform on the first partial signal.

Here, it is also good to modify a first transformed output signal by shifting down coefficient values composing the first partial signal to be input to the second transform unit 220 such that the effective data length in the second transform is equal to or smaller than a predetermined value. In this way, it is possible to decrease the accuracy required for the internal processing by the second transform unit 220, and to save the circuit resource.

In addition, it is also good to shift down coefficient values composing one of the first partial signal and the second transformed output signal such that the bit lengths of the coefficient values composing one of the first partial signal before the first transform and the first partial signal (the second transformed output signal) after the second transform is the same as the bit lengths of the coefficient values composing the second partial signal.

[Embodiment 6]

A decoding apparatus and a decoding method according to Embodiment 6 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in Embodiment 5). The decoding apparatus and the decoding method according to Embodiment 6 of the present invention are characterized by performing a first inverse transform using an inverse transform matrix composed of predetermined fixed inverse transform coefficients. The same structural elements as those of the earlier-described embodiments are assigned with the same reference signs, and the same descriptions may be skipped here.

An inverse transform unit and an inverse transform method according to Embodiment 6 of the present invention are described with reference to FIG. 36. FIG. 36 is a block diagram showing an example of a structure of the inverse transform unit 1030 according to Embodiment 6 of the present invention. The decoding apparatus according to Embodiment 6 of the present invention differs from Embodiments 2 and 4 in the point of including a transform unit having a different structure. Thus, only the structure of and operations by the inverse transform unit are described below.

As shown in FIG. 36, the inverse transform unit 1030 includes a dividing unit 400, a second inverse transform unit 410, a synthesizing unit 420, and a first inverse transform unit 1130. The inverse transform unit 1030 differs from the inverse transform unit 730 shown in FIG. 29 in the point of including the first inverse transform unit 1130 instead of the first inverse transform unit 430.

The inverse transform unit 1030 generates a decoded transformed input signal by performing a predetermined fixed inverse transform on the first decoded transformed output signal. The inverse transform unit 1030 performs a predefined fixed inverse transform, and thus does not need to obtain first (inverse) transform coefficients from outside (for example, a coding apparatus).

Furthermore, the first inverse transform unit 1130 may reduce the calculation amount by performing, as a first inverse transform, a discrete cosine transform conforming to the MPEG-1, 2, and/or 4 video coding standard(s), an integer-accuracy DCT employed in the H. 264/AVC Standard, or the like.

The flow of inverse transform processes in Embodiment 6 of the present invention is approximately similar to the flow in any one of Embodiments 2 and 4. The first inverse transform is a fixed inverse transform, Step S237 in FIG. 14 is skipped, and Steps S231 to S236 and S238 are executed. As described earlier, there are variations in how to make notifications in Step S231 for obtaining the division and synthesis information, and in Step S233 for obtaining second inverse transform coefficients. Thus, such notifications are not always made at time points as shown in this flowchart, and not essential operations as parts of this embodiment.

As described above, the decoding apparatus and the decoding method according to Embodiment 6 of the present invention make it possible to adapt to changes in the statistical properties of input signals while suppressing the calculation amount required for the transform and the data amount of the inverse transform coefficients. Furthermore, the coding apparatus and the coding method make it possible to reduce the calculation amounts by using a fixed transform.

Here, there is a case where the sizes (norms) of the bases of the inverse transform matrix are not equal to each other in a transform involving shift and addition calculations without involving multiplication according to an integer-accuracy DCT employed in the H. 264/AVC Standard. Accordingly, it is preferable to modify the norms when an inverse transform is used as the first inverse transform.

In H. 264, an inverse quantization unit performs a norm modification. However, the decoding apparatus according to Embodiment 6 of the present invention performs a norm modification on an input signal to the first inverse transform unit 1130 as shown in FIG. 37, for example. In short, the first decoded transformed output signal is modified after the second inverse transform.

FIG. 37 is a block diagram showing an example of a structure of an inverse transform unit 1030a according to Variation of Embodiment 6 of the present invention. The inverse transform unit 1030a differs from the inverse transform unit 1030 in the point of including a norm modifying unit 1140.

The norm modifying unit 1140 generates a first decoded transformed output signal by performing a norm modification on a signal including the first decoded partial signal and the second decoded partial signal synthesized by the synthesizing unit 420. The norm modifying unit 1140 modifies the first decoded transformed output signal by normalizing the first decoded partial signal by using modification parameters determined based on the first inverse transform matrix. The modification parameters are, for example, the norms of the first inverse transform matrix.

The norm modifying unit 1140 modifies a signal $y^{\wedge\prime}{}_1{}^n$ resulting from the synthesis, using the norms calculated from the first inverse transform matrix $A^{\wedge-1}{}_1{}^n$. The norms are calculated according to Expression 12 in the same manner as in Embodiment 5.

In the case where a first inverse transform matrix $A^{-1}{}_1{}^n$ included in a coded signal adaptively changes, the norms also change. Thus, the norm modifying unit 1140 calculates norms, and modifies the signal $y^{-1}{}_1{}^n$ resulting from the synthesis using the calculated norms. In the case where the first inverse transform coefficients are fixed coefficients, it is good that the norm modifying unit 1140 holds the norms in an internal memory or the like.

The norm modifying unit 1140 performs a process inverse to the process performed by the norm modifying unit 940 according to Variation of Embodiment 5. More specifically, the norm modifying unit 1140 generates the first decoded transformed output signal $y^{\wedge\prime}{}_1{}^n$ by multiplying the signal $y^{\wedge\prime}{}_1{}^n$ resulting from the synthesis by the norms according to Expression 23.

[Math. 23]

$$\hat{y}_1(i) = \hat{y}'_1(i) * N(i)$$

(Expression 23)

The multiplication according to Expression 23 is performed for each element of the signal $y^{\wedge\prime}{}_1{}^n$ resulting from the synthesis. In other words, the norm modifying unit 1140 generates the element $y^{\wedge}{}_1$ (i) of the first decoded transformed output signal $y^{\wedge}{}_1{}^n$ by multiplying the element $y^{\wedge\prime}{}_1$ (i) of the signal $y^{\wedge}1'{}_1{}^n$ resulting from the synthesis by the norm N (i).

Here, the norm modifications may be performed separately for the respective second decoded partial signal and first decoded partial signal which are two input signals before the synthesis by the synthesizing unit 420.

FIG. 38 is a block diagram showing an example of a structure of an inverse transform unit 1030b according to Variation of Embodiment 6 of the present invention. The inverse transform unit 1030b differs from the inverse transform unit 1030 in the point of including norm modifying units 1141 and 1142.

The norm modifying unit 1141 performs norm modification on the first decoded partial signal $y^{\wedge\prime}{}_{1L}{}^m$. More specifically, the norm modifying unit 1141 modifies the first decoded partial signal $y^{\wedge\prime}{}_{1L}{}^m$ to be input using the norms N calculated from the first inverse transform matrix $A^{-1}{}_1{}^n$ used in the first inverse transform (See Expression 23, $y^{\wedge}{}_1$ (i) is interpreted as $y^{\wedge}{}_{1L}$ (i), and $y^{\wedge\prime}{}_1$ (i) is interpreted as $y^{\wedge\prime}{}_{1L}$ (i)). In addition, the norms N are calculated according to Expression 12.

The norm modifying unit 1142 performs a norm modification on the second decoded partial signal $y^{\wedge\prime}{}_{1H}{}^{n-m}$. More specifically, the norm modifying unit 1142 modifies the second decoded partial signal $y^{\wedge\prime}{}_{1H}{}^{n-m}$ to be input using the norms N calculated from the first inverse transform matrix $A^{-1}{}_1{}^n$ used in the first inverse transform (See Expression 23, $y^{\wedge}{}_1$ (i) is interpreted as $y^{\wedge}{}_{1H}$ (i), and $y^{\wedge\prime}{}_1$ (i) is interpreted as $y^{\wedge\prime}{}_{1H}$ (i)).

The synthesizing unit 420 generates the first decoded transformed output signal by synthesizing the first decoded partial signal and the second decoded partial signal subjected to the norm modifications. In addition, the norms N are calculated according to Expression 12.

The same advantageous effect is obtained by performing a norm modification on the second inverse transform matrix $A^{-1}{}_2{}^m$ instead of performing a norm modification on the second decoded transformed output signal $y^{\wedge\prime}{}_{1L}{}^m$ resulting from the second inverse transform.

The norm modifying unit 1141 modifies second transform coefficients using the norms calculated from the first inverse transform matrix $A^{-1}{}_1{}^n$. In addition, the norms are calculated according to Expression 12. More specifically, the norm modifying unit 1141 modifies second inverse transform coefficients according to Embodiment 24. More specifically, the norm modifying unit 1141 generates the second inverse transform coefficients by multiplying the second inverse transform coefficients by the norms.

[Math. 24]

$$a^{-1\prime}{}_2(i, j) = a^{-1}{}_2(i, j) * N(i)$$

(Expression 24)

The second inverse transform unit 410 generates a first decoded partial signal $y\hat{}_{1L}^{m}$ by inverse transforming a second decoded transformed output signal $y\hat{}_{2}^{m}$ using the second inverse transform matrix $A^{-1'}{}_{2}^{m}$ resulting from the modification.

As described above, it is possible to perform a norm modification on a signal resulting from a first inverse transform, and thereby to make the bases of the inverse transform matrix equal to each other and to increase transform accuracy.

The structure shown in FIG. 37 is more advantageous than the structure shown in FIG. 38 because the former has the single norm modifying unit and thus can be mounted easily. On the other hand, the structure shown in FIG. 38 is advantageous in the case where two signals have mutually different effective accuracies because the structure includes the norm modifying unit which provides the minimum effective accuracy selected from among the effective accuracies of the respective signals.

As in the case of the norm modifications, the norm modifying unit shown in each of FIG. 37 and FIG. 38 may perform a weighting of the weight scale of the quantization matrix (Qmatrix) although such weighting is performed by an inverse quantization unit in H. 264. In other words, the norm modifying unit may modify the first decoded transformed output signal by weighting the first decoded partial signal using the weight scale of the quantization matrix.

The norm modifying unit 1140 performs a process inverse to the process performed by the norm modifying unit 940 according to Variation of Embodiment 5. More specifically, the norm modifying unit 1140 generates the first decoded transformed output signal $y_1^n$ by multiplying the signal $y\hat{}'_1{}^{n}$ resulting from the synthesis by the quantized parameter. As shown in Expression 25, this is equivalent to dividing the signal $y\hat{}'_1{}^{n}$ resulting from the synthesis by the modification coefficient mf according to Expression 25.

[Math. 25]

$$\hat{y}_1(i) = \hat{y}'_1(i)/mf(i)$$

(Expression 25)

Here, the modification coefficient mf is represented according to Expression 16.

As shown in FIG. 38, it is preferable that post scale inverse modification be performed before the second inverse transform when the scaling of the quantization matrix is performed on the first decoded partial signal.

More specifically, the second decoded transformed output signal $y\hat{}'_2{}^{m}$ resulting from the inverse modification is generated by multiplying the second decoded transformed output signal $y\hat{}_2{}^{m}$ by the inverse of the modification coefficient mf_2 calculated from the quantization matrix. As shown in Expression 26, this is equivalent to dividing the second decoded transformed output signal $y\hat{}_2{}^{m}$ by the modification coefficient mf_2.

[Math. 26]

$$\hat{y}'_2(i) = \hat{y}_2(i)/mf_2(j)$$

(Expression 26)

Here, the modification coefficient mf_2 (j) is represented according to Expressions 18 and 19.

In addition, in the example of FIG. 38, it is good to modify the second inverse transform matrix $A^{-1}{}_{2}^{m}$ instead of the second decoded transformed output signal $y\hat{}'_{1L}{}^{m}$ resulting from the inverse transform also in the weighting of the weight scale of the quantization matrix.

At this time, the norm modifying unit 1141 modifies the second inverse transform matrix $A^{-1}{}_{2}^{m}$ using the quantization matrix. More specifically, the norm modifying unit 1141 modifies the second inverse transform matrix $A^{-1}{}_{2}^{m}$

according to Expression 27. According to Expression 27, the norm modifying unit 1141 divides each of second inverse transform coefficients $a^{-1}_2$ (i, j) by an inverse mf (i) of a corresponding one of the elements of the quantization matrix and a modification coefficient mf_2 (j) calculated from the quantization matrix.

[Math. 27]

$$a^{-1\prime}_2(i,j) = a^{-1}_2(i,j)/mf(i)/mf_2(j)$$

(Expression 27)

As described above, it is possible to achieve the same advantageous effect of increasing the coding efficiency also by modifying the second inverse transform matrix $A^{-1}{}_2{}^m$ instead of the second decoded transformed output signal $y^{\wedge\prime}{}_{1L}{}^m$ resulting from the inverse transform.

Here, a norm modification and a weighting of a quantized parameter may be combined. In other words, the norm modifying unit 1141 may perform both the norm modification and the weighting of the quantization matrix on one of the second decoded transformed output signal $y^{\wedge\prime}{}_{1L}{}^m$ resulting from the inverse transform and the second inverse transform matrix $A^{-1}{}_2{}^m$.

For example, in the case of modifying the second decoded transformed output signal $y^{\wedge\prime}{}_{1L}{}^m$ resulting from the inverse transform, the norm modifying unit 1141 modifies it according to Expression 28. More specifically, the norm modifying unit 1141 generates the first decoded partial signal $y^{\wedge}{}_{1L}{}^m$ by multiplying each element $y^{\wedge\prime}{}_{1L}$ (i) of the second decoded transformed output signal $y^{\wedge\prime}{}_{1L}{}^m$ resulting from the inverse transform by the norm N (i) calculated from the first inverse transform matrix $A^{-1}{}_1{}^n$.

[Math. 28]

$$\hat{y}_{1L}(i) = \hat{y}'_{1L}(i) * N(i)/mf(i)$$

(Expression 28)

More specifically, in the case of modifying the second inverse transform matrix $A^{-1}{}_2{}^m$, the norm modifying unit 1141 modifies the second inverse transform matrix $A^{-1}{}_2{}^m$ according to Expression 29. More specifically, the norm modifying unit 1141 generates the second inverse transform matrix $A^{-1\prime}{}_2{}^m$ resulting from the modification by multiplying each second transform coefficient $a^{-1}_2$ (i, j) by the norm N (i) calculated from the first inverse transform matrix $A^{-1}{}_1{}^n$ and then dividing by the inverse mf (i) of a corresponding one of the elements of the quantization matrix and a modification coefficient mf_2 (j) calculated from the quantization matrix.

[Math. 29]

$$a^{-1\prime}_2(i,j) = a^{-1}_2(i,j) * N(i)/mf(i)/mf_2(j)$$

(Expression 29)

This structure also makes it possible to apply a more optimum second inverse transform on the second decoded transformed output signal.

Here, it is possible to perform these processes only when the transform target input signal has a small amount of data, and to skip the norm modification and the weighting of the weight scale with an aim to reduce the calculation amount when the transform target input signal has a large amount of data. Here, it is also possible to perform the norm modification and the weighting of the weight scale only when the modification target signal is composed of non-zero coefficients, with an aim to reduce the calculation amount.

Here, a transform target input signal having a large amount of data means a signal of a comparatively large transform block size. For example, when plural kinds of blocks of pixels such as 4 x 4 pixels, 8 x 8 pixels, 16 x 16 pixels, and 32 x 32 pixels are defined, a signal of 32 x 32 pixels is regarded to be a signal having an amount of data larger than that of a signal of 4 x 4 pixels, 8 x 8 pixels, or the like. In other words, a transform target input signal having a large amount of data may be interpreted as a signal of a transform matrix having a large number of non-zero coefficients.

Here, in the case of such a transform target input signal having a large amount of data, it is also possible to design the norm modification and the weighting of the weight scale to involve only shift and addition calculations instead of multiplications, with an aim to reduce the number of multiplications.

In general, a memory data size (here, a required bit length) required to precisely represent numerical values is increased by a matrix calculation. The second decoded partial signal and the first decoded partial signal may require mutually different bit lengths because the former is not subjected to any second inverse transform and the latter is subjected to multiplications by the second inverse transform unit 410. Accordingly, in the case where the required bit length in the multiplications by the second inverse transform unit 410 is increased by M bits, the second decoded partial signal may be subjected to a shift up by M bits in advance.

For example, in the structure of FIG. 36, it is possible to perform a modification for matching the bit lengths before input to the first inverse transform unit 1130. This eliminates the necessity of switching by the first inverse transform unit 1130. Thus, it is possible to simplify the structure of the first inverse transform unit 1130. Furthermore, in the structure of FIG. 37, it is possible to perform a modification for matching the bit lengths before input to the norm modifying unit 1140. This eliminates the necessity of switching between the second decoded partial signal and the first decoded partial signal by the norm modifying unit 1140. Thus, it is possible to simplify the structure of the norm modifying unit 1140.

Furthermore, in the case of the structure shown in FIG. 38, the bit length required for an input signal is kept to be small, and thus the norm modifying unit 1142 which receives the second decoded partial signal is capable of suppressing the bit length required for the internal signal processing and thereby saving the circuit resource. Alternatively, it is also possible to increase the effective accuracy of the norm modification amount and the weight scale weighting amount used for multiplications performed by the norm modifying unit 1142. In this case, it is possible to increase the calculation accuracy of the norm modification amount and the weight scale weighting amount.

Alternatively, it is also possible to previously shift down, by N bits, the second decoded transformed output signal that is an input to the second inverse transform unit 410 to decrease the accuracy required for the internal processing by the second inverse transform unit 410 and save the circuit resource. Here, when the bit length increased by the transform by the second inverse transform unit 410 is M bits, N may be designed to be smaller than M. In this case, when N-bit shift down is performed at the time of input to the second inverse transform unit, a shift down by a bit (s) obtained according to M - N is performed on the output from the second inverse transform unit.

In this way, it is also possible to modify the second decoded transformed output signal by shifting down the coefficient values composing the second decoded transformed output signal to be input to the second inverse transform unit 410 such that the effective data length in the second inverse transform is equal to or smaller than a predetermined value. In this way, it is possible to decrease the accuracy required for the internal processing by the second inverse transform unit 410, and to save the circuit resource.

Alternatively, it is also possible to shift down the coefficient values composing one of the first decoded partial signal and the second decoded transformed output signal such that the bit length of the coefficient values composing the one of the signals having the shift-down coefficient values are equal to the bit length of the coefficient values composing the second decoded partial signal.

The bit lengths in bit operations described in this embodiment may be controlled in units of any one(s) of a sequence, a GOP, a frame, and a block. Here, it is possible to increase the calculation accuracy by controlling the bit length in units of a block based on the effective bit length (the size of data which occupies part of a memory at a current moment) of blocks of the second decoded transformed output signal. For example, it is possible to increase the shift down amount before input to the second inverse transform unit 410 when the effective bit lengths of the blocks of the second decoded transformed output signal are large, and otherwise to decrease the shift down amount before input to the second inverse transform unit 410.

Here, the first transform and the first inverse transform may be designed to be performed by switching between a discrete cosine transform and a discrete sine transform. Switching flag information is multiplexed on a coded signal in the coding apparatus, notified from the coding apparatus to the decoding apparatus, and decoded in the decoding apparatus. The discrete cosine transform and the discrete sine transform are transforms having phases shifted by pi/2 from each other. Thus, the second transform coefficients and the second inverse transform coefficients may be designed to be shifted by pi/2 from each other, with an aim to reduce the information amount of the inverse transform coefficients.

[Embodiment 7]

A coding apparatus and a coding method according to Embodiment 7 of the present invention respectively include a transform unit and a transform method for transforming a coding target signal of audio data, still image data, video data, and/or the like by combining plural kinds of transforms. The coding apparatus and the coding method according to Embodiment 7 of the present invention are characterized by performing a separable transform and a non-separable transform on multi-dimensional signals. The same structural elements as those of the earlier-described embodiments are assigned with the same reference signs, and the same descriptions may be skipped here.

The coding apparatus according to Embodiment 7 of the present invention handles P-dimensional signals such as a transform target input signal, a first transformed output signal, a second partial signal, and a transformed output signal (P denotes an integer equal to or larger than 2). The second transform unit 220 may receive or output a P-dimensional signal or a one-dimensional signal. When the second transform unit 220 receives and outputs a one-dimensional signal, the second transform unit 220 performs the same processes as in Embodiment 1, 3, and 5.

The dividing unit 210 divides a P-dimensional transform target input signal into a first partial signal and a second partial signal according to division and synthesis information, and further rearranges the first partial signal into a one-dimensional signal. Rearrangement order information is additionally included in the division and synthesis information.

The synthesizing unit 230 generate a synthesized transformed output signal by synthesizing the second transformed output signal and the second partial signal according to the division and synthesis information. At this time, the synthesizing unit 230 rearranges the second transformed output signal that corresponds to a one-dimensional signal into a P-dimensional signal based on the rearrangement information included in the division and synthesis information, and then synthesizes the P-dimensional transformed output signal and the P-dimensional second partial signal. When the second transform unit 220 receives and outputs the P-dimensional signal, it is not necessary to rearrange the second transformed output signal into a one-dimensional signal.

In this case, the second transform unit 220 may further perform a separable transform (two-stage transforms in the horizontal axis direction and in the vertical axis direction). In other words, the second transform unit 220 performs a transform in the horizontal direction on a per row basis, and performs a transform in the vertical direction on a per column basis. The processing order of the transform in the horizontal direction and the transform in the vertical direction may be inverted.

Here, a transform on a row or a column made up of only one element does not provide any substantial effect even if it is performed. Thus, it is possible to skip such a transform or alternatively perform a norm modification process which is otherwise performed at a later stage. The transform coefficients for a row transform and the transform coefficients for a column transform may be mutually the same or different. The transform coefficient for a row transform may be subjected to reduction in the data amount by using the same transform coefficient for every row, or may be subjected to enhancement in the transform performance by adapting to the difference in the statistical properties of pixels in each row. The column transform is performed in the same manner as the row transform. The transform coefficients used for the columns may be the same as or different from those used for the rows.

The difference is whether to employ (i) a non-separable transform for rearranging a P-dimensional signal into a one-dimensional signal at the time of input for the transform or (ii) a separable transform for one-dimensional basis processing in the transform.

Here, it is good to reduce multiplication processing of the second transform coefficients by setting 0 to some of the second transform coefficients. The coefficients of elements having a low energy are set to 0 as mentioned earlier. In particular, when the size of the second transform matrix is the same as the size of the first transform matrix, the dividing unit 210 does not need to distinguish a signal (a first partial signal) that is input to the second transform unit 220 and a signal (a second partial signal) that is not input thereto. Accordingly, the synthesizing unit 230 is also unnecessary.

When the dividing unit 210 and the synthesizing unit 230 are not used, as shown in (b) in FIG. 8, it is possible to reduce multiplication processing on elements which are not the targets for the second transform by using a transform matrix in which the diagonal elements are set to 1 and the non-diagonal elements are set to 0, for rows corresponding to the elements which are not the targets for the second transform. It is possible to exclude the rows corresponding to elements having a small energy in the first transformed output singal from the targets for the second transform. Otherwise, it is possible to set, to 0, the elements which are of the transform matrix and correspond to elements having a small cross correlation in the first transformed output singal.

Operations before and after the operation by the second transform unit 220 are described with reference to FIG. 39, taking an example case where a 4 x 4 x 2 three-dimensional block signal (the number of input elements n = 32) is input.

The dividing unit 210 divides a P-dimensional (P = 3 in this example) first transformed output signal into a first partial signal and a second partial signal according to division and synthesis information. The second transform unit 220 performs a second transform on the first partial signal using a second transform matrix to generate a second transformed output signal. The synthesizing unit 230 synthesizes the second transformed output signal and the second partial signal to generate a synthesized transformed output signal.

First, the first transform performed by the first transform unit 200 is described. The first transform unit 200 generates plural first transformed output signals by performing a first transform on each of the P-dimensional input signal (for example, plural two-dimensional transform target input signals).

As shown in FIG. 39, it is possible to generate the first transformed output signals by applying a P - 1 dimensional first transform to a P-dimensional transform target input signal several times. For example, in the example shown in FIG. 39, the first transform unit 200 performs, twice in total, a 4 x 4 two-dimensional first transform on a 4 x 4 x 2 three-dimensional transform target signal.

In FIG. 39, two first transform units 200 are shown to simplify description. However, a single first transform unit 200 may perform a two-dimensional first transform twice. Alternatively, it is possible that the transform unit may actually include two first transform units 200, and each of the two first transform units 200 may perform a two-dimensional first transform once.

Alternatively, the first transform unit 200 may perform a P-dimensional first transform once on a P-dimensional transform target input signal. The P-dimensional first transform may be of a separable type or a non-separable type.

Next, the second transform performed by the second transform unit 220 is described. The second transform unit 220 performs once a second transform on a collective signal including plural first partial signals which are parts of the respectively corresponding first transformed output signals.

FIG. 40 is a diagram conceptually showing a data flow in a second transform of a separable type. When a signal including two two-dimensional blocks is input, the second transform unit 220 firstly performs transform on each of the blocks in a two-dimensional signal in the horizontal direction (S501). Next, the second transform unit 220 performs transform on each of the blocks in the two-dimensional signal in the vertical direction (S502). Lastly, the second transform unit 220 performs transform on the blocks in the two-dimensional signal in the direction in which the boundaries of the blocks are crossed (S503). Here, this processing order is an example. The processing order of processing in the horizontal, vertical, and boundary-crossing directions is not limited to the exemplary processing order. As in FIG. 40, a second inverse transform of a separable type is also performed according to the processing order such as the horizontal, vertical, and boundary-crossing directions. The processing order of inverse transforms is not limited thereto.

In this way, the second transform unit 220 according to Embodiment 7 of the present invention performs, on a P-dimensional first partial signal, a separable second transform for performing a one-dimensional transform on the one-dimensional signal transformed from the P-dimensional signal P times in total. In other words, in the example shown in FIG. 40, the second transform unit 220 performs, on a three-dimensional first partial signal, a separable second transform for performing a one-dimensional transform on the three dimensional signal three times in total.

The flow of transform processes according to Embodiment 7 of the present invention is approximately the same as in Embodiments 1, 3, and 5, and is described with reference to FIG. 6.

An input signal that is input to the coding apparatus according to Embodiment 7 of the present invention is, for example, an image signal corresponding to each of the plural blocks that compose one of an input image and a prediction error image. More specifically, as shown in FIG. 41, the plural blocks include one of luminance blocks and chrominance blocks of the one of the input image and the prediction error image. Alternatively, as shown in FIG. 42, the plural blocks may be blocks spatially adjacent to each other within the one of the input image and the prediction error image.

First, the first transform coefficient deriving unit 202 determines first transform coefficients (Step S111). Next, the first transform unit 200 generates a first transformed output signal by performing a first transform on a P-dimensional transform target input signal (Step S112). At this time, the first transform may be performed in a dimension or dimensions lower than that or those of the input signal(s) plural times.

Next, the division and synthesis information calculating unit 612 determines the division and synthesis information (Step S113). Next, the dividing unit 210 divides the first transformed output signal into a first partial signal and a second partial signal (Step S114), based on the division and synthesis information. At this time, the dividing unit 210 divides the first transformed output signal such that the correlation energy of the first partial information is larger than the correlation energy of the second partial signal.

Next, the second transform coefficient deriving unit 222 determines second transform coefficients, based on the statistical properties of local sets of the first partial signal (Step S115). The second transform unit 220 generates the second transformed output signal by performing a second transform using a second transform matrix for the first partial signal (Step S116).

Lastly, the synthesizing unit 230 generates the transformed output signal by synthesizing the second transformed output signal and the second partial signal (Step S118).

Here, when the first transform is a fixed transform, Step S111 is skipped. Here, Steps S111, S113, and S115 may be performed according to other methods, and thus are not always performed as parts of this embodiment. In addition, when the second transform is of a separable type, the dividing unit 210 rearranges the first partial signal from a P-dimensional signal to a one-dimensional signal in Step S114, the synthesizing unit 230 rearranges the second transformed output signal from the one-dimensional signal to a P-dimensional signal in Step S118, and synthesizes both the resulting signals with each other.

As described above, in this embodiment, a multi-dimensional transform target input signal may include a luminance signal (signal Y) and chrominance signals (a signal U and a signal V). FIG. 41 is a diagram conceptually showing an example of a data flow in the case where a multi-dimensional transform target input signal includes signals Y, U, and V.

The first transform unit 200 performs a three-dimensional first transform on the collective signal composed of the luminance signal (signal Y) and the two chrominance signals (signal U and signal V), or separately performs two-dimensional first transforms on the respective luminance signal (signal Y) and two chrominance signals (signal U and signal V).

The second transform unit 220 generates a second transformed output signal by performing a second transform on a first partial signal that is a low frequency side area having a large energy in each of the first transformed output signal including the signal Y, the first transformed output signal including the signal U, and the first transformed output signal including the signal V. At this time, for example, the second transform unit 220 collectively performs second transforms on plural second transformed output signals according to the processing order shown in FIG. 40.

The second transformed output signal and the second partial signal to which no second transform is performed are synthesized into a transformed output signal. The transformed output signal including the signal Y, the transformed output signal including the signal U, and the transformed output signal including the signal V are separately scanned and quantized. As described in Embodiment 11, the second transformed output signal may be scanned and quantized independently from the second partial signal.

In this embodiment, the multi-dimensional transform target input signal may be an image signal of spatially adjacent blocks. FIG. 42 is a diagram conceptually showing an example of a data flow in the case where a multi-dimensional transform target input signal corresponds to the signal of spatially adjacent blocks.

Each of the spatially adjacent small blocks (four blocks in the example shown in FIG. 42) is separately subjected to a first transform performed by the first transform unit 200. Next, the second transform unit 220 generates a second transformed output signal by performing a second transform on a first partial signal that is a low frequency side area including elements having a large energy in each of the first transformed output signals. At this time, for example, the second transform unit 220 collectively performs second transforms on plural second transformed output signals according to the processing order shown in FIG. 40.

The second transformed output signal and the second partial signal which is the part to which no second transform is performed are synthesized into a synthesized transformed output signal. The small block transformed output signals are separately scanned and quantized. As described in Embodiment 11, the second transformed output signal may be scanned and quantized separately from the second partial signal.

As described above, the coding apparatus and the coding method according to Embodiment 7 of the present invention make it possible to adapt to changes in the statistical properties of input signals while suppressing the calculation amounts required for the transform processes and the data amounts of the transform coefficients. In particular, the coding apparatus and the coding method according to Embodiment 7 are advantageous in the case of using P-dimensional input signals (P denotes an integer equal to or larger than 2).

In Embodiment 7 of the present invention, the second transform unit 220 may perform a non-separable second transform. In other words, the second transform unit 220 may perform, on a P-dimensional first partial signal, the non-separable second transform for rearranging the P-dimensional signal into a one-dimensional signal, and transforms the resulting signal. The details of the processing are the same as in Embodiment 1 and the like, and thus the details are not repeated here.

[Embodiment 8]

A decoding apparatus and a decoding method according to Embodiment 8 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in Embodiment 7). The decoding apparatus and the decoding method according to Embodiment 8 of the present invention are characterized by performing a separable transform and a non-separable inverse transform on multi-dimensional signals. The same structural elements as those of the earlier-described embodiments are assigned with the same reference signs, and the same descriptions may be skipped here.

The decoding apparatus according to Embodiment 8 of the present invention processes P-dimensional signals such as a decoded transformed output signal, a decoded transformed input signal, a decoded signal, and a prediction signal (P denotes an integer equal to or larger than 2). In other words, the decoded transformed output signal, the second decoded partial signal, the first decoded transformed output signal, and the decoded transformed input signal are P-dimensional signals. The second inverse transform unit 410 may receive or output a P-dimensional signal or a one-dimensional signal. When the second transform unit 220 receives and outputs a one-dimensional signal, the second inverse transform unit 410 performs the same processes in Embodiment 2, 4, and 6.

The dividing unit 400 divides the P-dimensional signal into the second decoded transformed output signal and the second decoded partial signal according to division and synthesis information, and further rearranges the second decoded transformed output signal into a one-dimensional signal. Rearrangement order information is additionally included in the division and synthesis information.

The synthesizing unit 420 generates a first decoded transformed output signal by synthesizing the first decoded partial signal and the second decoded partial signal, according to the division and synthesis information. At this time, the synthesizing unit 420 rearranges the first decoded partial signal that is a one-dimensional signal into a P-dimensional signal based on the rearrangement information included in the division and synthesis information, and then synthesizes the P-dimensional first decoded partial signal and the P-dimensional second decoded partial signal. When the second inverse transform unit 410 receives and outputs the P-dimensional signal, it is not necessary to rearrange the P-dimensional signal into a one-dimensional signal. The conceptual diagram of the data flow in this case is shown as FIG. 13B.

Furthermore, in this case, the second inverse transform unit 410 may further perform a separable transform (two-stage transforms in the horizontal axis direction and in the vertical axis direction). The conceptual diagram of the data flow in this case is shown as FIG. 43. In other words, the second inverse transform unit 410 performs an inverse transform for each row in the horizontal direction, and performs an inverse transform for each column in the vertical direction. The processing order of the transforms in the horizontal direction and the transform in the vertical direction may be inverted.

Here, transform on a row or a column made up of only one element does not provide any substantial effect even if it is performed. Thus, it is possible to skip such a transform or to alternatively perform a norm modification process which is otherwise performed at a later stage. The inverse transform coefficients for a row transform and the inverse transform coefficients for a column transform may be mutually the same or different. The inverse transform coefficients for the row transform may be subjected to reduction in the data amount in inverse transform coefficients by using the same inverse transform coefficient for every rows, and may be subjected to enhancement in the transform performance by adapting the difference in the statistical properties for each row using the inverse transform coefficient different for each row. The column transform is performed in the same manner as the row transform. The inverse transform coefficients to be used for the columns may be mutually the same or different.

The difference is whether to employ (i) a non-separable transform for rearranging a P-dimensional signal into a one-dimensional signal at the time of input for the inverse transform or (ii) a separable transform for one-dimensional basis processing inside the inverse transform unit.

Here, it is good to reduce multiplication processing of the second inverse transform coefficients by setting 0 to some of the second inverse transform coefficients. The coefficients of elements having a low energy are set to 0 as mentioned earlier. In particular, when the size of the second inverse transform matrix is the same as the size of the first inverse transform matrix, the dividing unit 400 does not need to divide the signal into a signal (the second decoded transformed output signal) that is input to the second inverse transform unit 410 and a signal (the second decoded partial signal) that is not input thereto. Accordingly, the synthesizing unit 420 is also unnecessary.

In other words, when the dividing unit 400 and the synthesizing unit 420 are not used, it is also good to reduce the multiplication processing for the second inverse transform coefficients by setting plural non-zero coefficients to the second inverse transform coefficients. At this time, it is possible to set zero coefficients at positions having a small energy or to coefficients having a small cross correlation. Here, in the case of the bases of a transform matrix, in which the non-diagonal elements are all 0, the diagonal elements are assumed to be 1.

FIG. 44 is a diagram conceptually showing a data flow in the inverse transform unit according to Embodiment 8 of the present invention.

The P-dimensional decoded transformed output signal (in the example of FIG. 44, a 4 x 4 x 2 three-dimensional signal, the number of input elements n = 32) is divided by the dividing unit 400 into a second decoded transformed output signal (the number of input elements m = 6), and the second decoded partial signal, according to the division and synthesis information. The second inverse transform unit 410 generates a first decoded partial signal by performing a second inverse transform on the second decoded transformed output signal using a second inverse transform matrix composed of the second inverse transform coefficients. In other words, the second inverse transform unit 410 generates plural first decoded partial signals by performing once second inverse transforms on a collective signal including the second decoded transformed output signals (in the example of FIG. 44, two two-dimensional second decoded transformed output signals) corresponding to parts of plural coded signals.

The synthesizing unit 420 generates the first decoded transformed output signal by synthesizing the first decoded partial signal and the second decoded partial signal. Then, the first inverse transform unit 430 generates a decoded transformed input signal by performing a first inverse transform on a first decoded transformed output signal using a first inverse transform matrix composed of first inverse transform coefficients. In other words, the first inverse transform unit 430 generates a decoded transformed input signal by performing a first inverse transform on each of the plural first partial signals and each of the first decoded transformed output signals including the second decoded partial signals respectively corresponding to the first partial signals.

Here, as in FIG. 40, the second inverse transform unit 410 performs inverse transforms according to processing orders such as the horizontal, vertical, and boundary-crossing directions when a signal including two two-dimensional blocks is input. The processing order of such inverse transforms is not limited thereto.

In addition, the first inverse transform unit 430 may generate a decoded transformed input signal by applying a P - 1 dimensional first inverse transform plural times in total as shown in FIG. 44. For example, in the example shown in FIG. 44, the first inverse transform unit 430 performs, twice in total, a 4 x 4 two-dimensional first inverse transform on a 4 x 4 x 2 three-dimensional first decoded transformed output signal.

In FIG. 44, two first inverse transform units 430 are shown to simplify description. However, one first inverse transform unit 430 may perform a two-dimensional first transform twice in total. Alternatively, it is possible that the transform unit may actually include two first inverse transform units 430, and each of the two first inverse transform units 430 may perform a two-dimensional first transform once.

Alternatively, the first inverse transform unit 430 may perform a P-dimensional first transform once on a P-dimensional transform target input signal. The P-dimensional first transform may be of a separable type, or a non-separable type.

In this way, the second inverse transform unit 410 according to Embodiment 8 of the present invention performs a separable second inverse transform on a P-dimensional second decoded transformed output signal. The separable second transform is intended to perform, P times in total, a one-dimensional transform on the one-dimensional signal transformed from the P-dimensional second decoded transformed output signal. In other words, in the example shown in FIG. 44, the second inverse transform unit 410 performs, on a three-dimensional second decoded transformed output signal, a separable second inverse transform for performing, three times in total, a one-dimensional transform on the one-dimensional signal from the three-dimensional second decoded transformed output signal (See FIG. 40).

The flow of inverse transform processes according to Embodiment 8 of the present invention is approximately the same as in Embodiments 2, 4, and 6, and is described with reference to FIG. 14.

A coded signal that is input to the decoding apparatus according to Embodiment 8 of the present invention is, for example, a coded image signal corresponding to each of the plural blocks that compose one of an input image and a prediction error image. More specifically, as shown in FIG. 45, the plural blocks include one of luminance blocks and chrominance blocks of the one of the input image and the prediction error image. Alternatively, as shown in FIG. 46, the plural blocks may be blocks spatially adjacent to each other within the one of the input image and the prediction error image.

First, the dividing unit 400 obtains the division and synthesis information (Step S231). Next, the dividing unit 400 then divides the decoded transformed output signal into the second decoded transformed output signal and the second decoded partial signal, according to the obtained division and synthesis information (Step S232).

Next, the second inverse transform unit 410 obtains second inverse transform coefficients (Step S233). The second inverse transform unit 410 performs a second inverse transform on the second decoded transformed output signal to generate a first decoded partial signal (Step S234).

Next, the synthesizing unit 420 generates the first decoded transformed output signal by synthesizing the first decoded partial signal and the second decoded partial signal according to the division and synthesis information (Step S236).

Next, the first inverse transform unit 430 obtains first inverse transform coefficients (Step S237). The first inverse transform unit 430 performs a first inverse transform on the first decoded transformed output signal to generate a decoded transformed input signal (Step S238).

As described earlier, there are variations in how to make notifications in Step S231 for obtaining the division and synthesis information, and in Step S233 and S237 for obtaining the inverse transform coefficients. Thus, such notifications are not always made at time points as shown in this flowchart, and not essential operations as parts of this embodiment. In the case where the second inverse transform is of a separable type, the dividing unit 400 rearranges the second decoded transformed output signal from a P-dimensional signal to a one-dimensional signal in Step S232, and rearranges the first decoded partial signal from the one-dimensional signal to a P-dimensional signal, and then synthesizes the first decoded partial signal and the second decoded partial signal.

As described above, in this embodiment, a multi-dimensional decoded transformed output signal may include a luminance signal (Y signal) and chrominance signals (a signal U and a signal V). FIG. 45 is a diagram conceptually showing an example of a data flow in the case where a multi-dimensional decoded transformed output signal includes signals Y, U, and V.

The decoded quantized coefficients including a signal Y, the decoded quantized coefficients including a signal U, and decoded quantized coefficients including a signal V are inverse transformed in the inverse quantization unit 320 into a decoded transformed output signal. The inverse quantization may be performed on each of the signals Y, U, and V, or may be collectively performed on the parts that are input to the second inverse transform unit 410 as described in Embodiment 11.

The second inverse transform unit 410 generates a first decoded partial signal by performing a second inverse transform on the second decoded transformed output signal that is a low frequency side area having a large energy in the decoded transformed output signal. The first decoded partial signal is synthesized with the second decoded partial signal that is the parts to which no second inverse transform is performed, resulting in a first decoded transformed output signal.

The first inverse transform unit 430 generates a decoded transformed input signal including the signals Y, U, and V, by performing a first inverse transform on the first decoded transformed output signal. The first inverse transform unit 430 may perform a three-dimensional transform on the collective signal of the signals Y, U, and V, or may separately perform a two-dimensional transform on each of the signals Y, U, and V. Here, as described in Embodiment 11, it is also good to perform an inverse scanning and an inverse quantization on each of the parts (the first decoded partial signals) to which a second inverse transform is applied, independently from the parts (the second decoded partial signals) to which no second inverse transform is applied.

In this embodiment, the multi-dimensional decoded transformed output signal may be an image signal of spatially adjacent blocks. FIG. 46 is a diagram conceptually showing an example of a data flow in the case where a multi-dimensional decoded transformed output signal corresponds to the signals of spatially adjacent blocks.

The decoded quantized coefficients corresponding to spatially adjacent small blocks (four blocks in the example of FIG. 46) are inverse quantized in the inverse quantization unit 320 into decoded transformed output signals. The inverse quantization is individually performed on the data corresponding to four small blocks. Alternatively, it is possible to firstly inverse quantize the data corresponding to the parts that are input to the second inverse transform unit 410, and separately inverse quantize the parts that are not input to the second inverse transform unit 410 in the data corresponding to the four small blocks.

The second inverse transform unit 410 generates first decoded partial signals by performing a second inverse transform on a second decoded transformed output signal which is of the low frequency side area including an element having a large energy in the decoded transformed output signal corresponding to the four small blocks. The first decoded partial signal that is an output of the second inverse transform and the second decoded partial signal that is of an area not subjected to the second inverse transform are synthesized into a first decoded transformed output signal.

The first inverse transform unit 430 generates a decoded transformed input signal by performing a first inverse transform on each of the small blocks of the first decoded transformed output signal. Here, as described in Embodiment 11, it is also good to perform an inverse scanning and an inverse quantization on the part (the first decoded partial signal) to which the second inverse transform is applied, independently from the part (the second decoded partial signal) to which no second inverse transform is applied. Furthermore, it is possible to switch internal state variables for an inverse scanning, an inverse quantization, and an entropy decoding of the part to which no second inverse transform is performed, according to the states of the quantized coefficients of the area to which the second inverse transform is performed.

The norm modification processing on the first inverse transform matrix is performed before the first inverse transform as shown in FIGs. 37 and 38. More specifically, it is possible that the parts to which the second inverse transform is performed are subjected to the second inverse transform first and then to a norm modification processing, and that the parts to which no second inverse transform is performed are subjected to a norm modification processing at any time before the first inverse transform.

As described above, the decoding apparatus and the decoding method according to Embodiment 8 of the present invention make it possible to adapt to changes in the statistical properties of input signals while suppressing the calculation amount required for the transform and the data amount of the inverse transform coefficients. In particular, the coding apparatus and the coding method according to Embodiment 7 are advantageous in the case of using P-dimensional input signals (P denotes an integer equal to or larger than 2).

In Embodiment 8 of the present invention, the second inverse transform unit 410 may perform non-separable second inverse transform. In other words, the second inverse transform unit 410 may perform, on a P-dimensional second decoded transformed output signal, the non-separable second transform for rearranging the P-dimensional signal into a one-dimensional signal, and transforms the one-dimensional signal. The details of the processing are the same as in Embodiment 1 and the like, and thus the details are not repeated here.

[Embodiment 9]

A coding apparatus and a coding method according to Embodiment 9 of the present invention respectively include a transform unit and a transform method for transforming a coding target signal of audio data, still image data, video data, and/or the like by combining plural kinds of transforms. The coding apparatus according to Embodiment 9 of the present invention is characterized by performing a separable transform as at least one of a first transform and a second transform. The same structural elements as those of the earlier-described embodiments are assigned with the same reference signs, and the same descriptions may be skipped here.

The coding apparatus and the coding method according to Embodiment 9 of the present invention receives a P-dimensional input signal (P denotes an integer equal to or larger than 2). For this reason, a transformed output signal, a decoded transformed output signal, a decoded transformed input signal, a decoded signal, and a prediction signal are also P-dimensional.

A first transform unit 200 according to Embodiment 9 of the present invention performs fixed transform processing in a part of or the entire calculation processes. More specifically, it is also good to use discrete cosine transform conforming to the MPEG-1, 2, and/or 4 Standard(s), or an integer-accuracy DCT employed in the H. 264/AVC Standard. Alternatively, a transform described in Embodiments 1, 3, 5, and 7 may be performed as a part of a separable transform.

A case where a 4 x 4 two-dimensional signal is input as a transform target input signal is described with reference to FIG. 47. FIG. 47 is a diagram conceptually showing an example of a data flow in the transform unit according to Embodiment 9 of the present invention.

The first transform unit 200 generates a first transformed output signal by performing a first transform that is a separable transform on a P-dimensional transform target input signal (in the example shown in FIG. 47, P = 2). The first transform unit 200 for separable transform performs a first coordinate axis transform in a row direction, and then a second coordinate axis transform in a column direction. Here, the first transform unit 200 may be configured to perform the transform in the row direction and the transform in the column direction in the reverse order.

The number of input elements of an n x n two-dimensional signal is n x n, and thus the calculation amount for the transform is huge. Therefore, preferably, the first transform unit 200 be configured to perform a separable transform. A separable transform makes it possible to reduce the calculation amount because the number of dimensions in the separable transform in each of the transforms units in a row direction and a column direction is n that is smaller than the number of n x n dimensions in a non-separable transform. The dividing unit 210, the second transform unit 220, and the synthesizing unit 230 operate in the same manner as described in Embodiments 1, 3, 5, and 7, and thus the same descriptions are not repeated here.

A transform method performed by the transform unit 110 according to Embodiment 9 of the present invention is described with reference to FIG. 48A. FIG. 48A is a flowchart showing an example of operations performed by the transform unit 110 according to Embodiment 9 of the present invention.

First, the first transform unit 200 generates a first transformed output signal by performing a first transform on a transform target input signal (Step S112). Step S112 includes the following two steps.

More specifically, first, the first transform unit 200 generates a first coordinate axis transform signal by transforming the transform target input signal in the first coordinate axis direction (Step S112a). Then, the first transform unit 200 generates a second coordinate axis transform signal by transforming the first coordinate axis transform signal in the second coordinate axis direction (Step S112b). The second coordinate axis transform signal generated in this way corresponds to the first transformed output signal in Embodiments 1, 3, 5, and 7.

Next, the division and synthesis information calculating unit 612 determines the division and synthesis information (Step S113). Next, the dividing unit 210 divides the second coordinate axis transform signal that is the first transformed output signal into a first partial signal and a second partial signal, based on division and synthesis information (Step S114). At this time, the dividing unit 210 divides the first transformed output signal such that the correlation energy of the first partial signal is larger than the correlation energy of the second partial signal. Furthermore, the dividing unit 210 rearranges the P-dimensional first partial signal into a one dimensional signal (P denotes an integer equal to or larger than 2).

Next, the second transform coefficient deriving unit 222 determines second transform coefficients, based on the statistical properties of local sets of the first partial signal (Step S115). The second transform unit 220 generates the second transformed output signal by performing a second transform on the first partial signal using a second transform matrix (Step S116).

Lastly, the synthesizing unit 230 generates a transformed output signal by rearranging the one-dimensional second transformed output signal into a P-dimensional signal, and synthesizing the second partial signal and the one-dimensional second transformed output signal generated from the P-dimensional signal (Step S118).

Here, the determination of the division and synthesis information (Step S113) and the determination of second transform coefficients (Step S115) may be made according to mutually different methods. As shown in FIG, 48B, it is not always necessary that these steps are performed as parts of this embodiment.

The earlier mentioned first coordinate axis transform and second coordinate axis transform (Step S112a and Step S112b) may be first transforms according to Embodiments 1, 3, 5, and 7. The earlier mentioned first coordinate axis transform and second coordinate axis transform (Step S112a and Step S112b) may be, for example, discrete cosine transforms conforming to the MPEG-1, 2, and/or 4 coding Standard(s), and an integer-accuracy DCT transform employed in the H. 264/AVC Standard.

As with the first transform in this embodiment, the second transform may also be of a separable type. Here is an example case of a separable first transform and a separable second transform. When an input is a two-dimensional signal, one-dimensional signal processing is performed on each of the one-dimensional signal divided from the two-dimensional signal, and thus two-stage processes as described in any one of Embodiments 1 to 8 are applicable.

FIG. 49 is a flowchart showing an example of operations performed by a transform unit 110 according to Variation of Embodiment 9 of the present invention. The steps for performing the same operations in FIGs. 48A and 48B are assigned with the same reference signs, and the same descriptions are not repeated here.

The dividing unit 210 divides the first transformed output signal into the first partial signal and the second partial signal (Step S114). At this time, the dividing unit 210 does not rearrange the P-dimensional first partial signal into a one-dimensional signal.

Next, the second transform unit 220 generates a first coordinate transform signal by performing a transform process in the row direction as the first coordinate axis transform in the second transform (S116a). Next, the second transform unit 220 generates a second coordinate axis transform signal by performing a transform process in the column direction as the second coordinate axis transform in the second transform on the first coordinate axis transform signal (S116b). The second coordinate axis transform signal generated in this way corresponds to the second transformed output signal. Here, the transform in the row direction and the transform in the column direction may be performed in the reverse order.

The transform processing in the first direction and the transform processing in the second direction may be performed in sequence. FIG. 50 is a flowchart showing an example of operations performed by a transform unit 110 according to Variation of Embodiment 9 of the present invention.

FIG. 50 shows transform processes performed in the reverse order from the transform processes shown in FIG. 49. The first transform unit 200 performs a first coordinate axis transform in a first transform in a row direction (S112a), and then the dividing unit 210 performs division in the row direction (S114a). Next, the second transform unit 220 performs a first coordinate axis transform in a second transform in a row direction (S116a), and then the synthesizing unit 230 performs a synthesis in the column direction (S118a).

Next, the first transform unit 200 performs a second coordinate axis transform in a first transform in a column direction (S112b), and then the dividing unit 210 performs a division in the column direction (S114b). Next, the second transform unit 220 performs a second coordinate axis transform in a second transform in a column direction (S116a), and then the synthesizing unit 230 performs a synthesis in the column direction (S118b).

Here, the transform in the row direction and the transform in the column direction may be performed in the reverse order. In addition, when transform coefficients include zero coefficients, it is not always necessary that the division processes and the synthesis processes are performed as explicit steps.

As described above, the coding apparatus and the coding method according to Embodiment 9 of the present invention make it possible to adapt to changes in the statistical properties of input signals while suppressing the calculation amounts required for the transform processes and the data amounts of the transform coefficients. In particular, the coding apparatus and the coding method according to Embodiment 7 are advantageous in the case of using P-dimensional input signals (P denotes an integer equal to or larger than 2).

[Embodiment 10]

A decoding apparatus and a decoding method according to Embodiment 10 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in Embodiment 9). The decoding apparatus and the decoding method according to Embodiment 10 of the present invention are characterized by performing a separable inverse transform as at least one of a first inverse transform and a second inverse transform. The same structural elements as those of the earlier-described embodiments are assigned with the same reference signs, and the same descriptions may be skipped here.

The decoding apparatus and the decoding method according to Embodiment 10 of the present invention processes P-dimensional signals such as a decoded transformed output signal, a decoded transformed input signal, a decoded signal, and a prediction signal (P denotes an integer equal to or larger than 2).

A first inverse transform unit 430 performs a fixed transform processing in a part of or the entire calculation processes. More specifically, it is also good to use a discrete cosine transform conforming to the MPEG-1, 2, and/or 4 Standard(s), or an integer-accuracy DCT employed in the H. 264/AVC Standard. Alternatively, an inverse transform described in Embodiments 2, 4, 6, and 8 may be performed as a part of a separable transform.

The dividing unit 400 receives a P-dimensional decoded transformed output signal (for example, P = 2), and divides the decoded transformed output signal into a second decoded transformed output signal and a second decoded partial signal according to division and synthesis information. The second inverse transform unit 410 generates a decoded partial signal by performing, using a second inverse transform matrix, a second inverse transform on the second decoded transformed output signal.

The synthesizing unit 420 generates a first decoded transformed output signal by synthesizing the second decoded partial signal and the first decoded partial signal, according to the division and synthesis information.

The first inverse transform unit 430 generates decoded transformed input signals, by performing a first inverse transform that is a separable transform on the first decoded transformed output signals. The first inverse transform unit 430 performs a first separable transform (that is, a first coordinate axis inverse transform) for a transform in the row direction, and then performs a second separable transform (that is, a second coordinate axis inverse transform) for a transform in the column direction. Here, the first inverse transform unit 430 may be configured to perform the transform in the row direction and the transform in the column direction in the reverse order.

The number of input elements of an n x n two-dimensional signal is n x n, and thus the calculation amount for the transform is huge. Therefore, preferably, the first inverse transform unit 430 be configured to perform a separable transform. A separable transform makes it possible to reduce the calculation amount because the number of dimensions in the separable transform in each unit of transform in a row direction and a column direction is n that is smaller than the number of n x n dimensions in the non-separable transform. The dividing unit 400, the second inverse transform unit 410, and the synthesizing unit 420 operate in the same manner as described in Embodiments 2, 4, 6, and 8, and thus the same descriptions are not repeated here.

An inverse transform method performed by the inverse transform unit 330 according to Embodiment 10 of the present invention is described with reference to FIG. 51A. FIG. 51A is a flowchart showing an example of operations performed by the inverse transform unit 330 according to Embodiment 10 of the present invention.

First, the dividing unit 400 obtains division and synthesis information (Step S231). Next, the dividing unit 400 rearranges the decoded transformed output signal that is a P-dimensional signal (P denotes an integer equal to or larger than 2), and divides the second decoded transformed output signal and the second decoded partial signal, according to the division and synthesis information (Step S232).

Next, the second inverse transform unit 410 obtains second inverse transform coefficients (Step S233). The second inverse transform unit 410 performs a second inverse transform on the second decoded transformed output signal to generate a first decoded partial signal (Step S234).

Next, the synthesizing unit 420 generates a first decoded transformed output signal by rearranging the first decoded partial signal that is a one-dimensional signal into a P-dimensional signal and synthesizing the P-dimensional signal and the second decoded partial signal according to the division and synthesis information (Step S236).

Next, the first inverse transform unit 430 obtains first inverse transform coefficients (Step S237). The first inverse transform unit 430 performs a first inverse transform on the first decoded transformed output signal to generate a decoded transformed input signal (Step S238). Step S238 includes the following two steps.

First, the first inverse transform unit 430 generates a first coordinate axis inverse transform signal by inverse transforming the first decoded transformed output signal in the first coordinate axis direction (Step S238a). Next, the first inverse transform unit 430 generates a second coordinate axis inverse transform signal by inverse performing the first coordinate axis inverse transform signal in the second coordinate axis direction (Step S238b). The second coordinate axis inverse transform signal generated in this way corresponds to the decoded transformed input signal in any one of Embodiments 2, 4, 6, and 8.

Here, there are many variations of notification methods as mentioned earlier with reference to FIG. 51B, the obtainment process of the division and synthesis information (Step S231) and the obtainment processes of the inverse transform coefficients (Step S233 and Step S237) are not always performed at time points shown in this flowchart.

The earlier mentioned first coordinate axis inverse transform and second coordinate axis inverse transform (Step S238a and Step S238b) may correspond to the first inverse transforms according to Embodiments 2, 4, 6, and 8. The earlier mentioned first coordinate axis transform and second coordinate axis transform (Step S238a and Step S238b) may be, for example, a discrete cosine transform conforming to the MPEG-1, 2, and 4 coding Standards, and an integer-accuracy DCT transform employed in the H. 264/AVC Standard.

As with the first inverse transform in this embodiment, the second inverse transform may also be of a separable type. Here is an example case of a separable first inverse transform and a separable second inverse transform. When an input is a two-dimensional signal, one-dimensional signal processing is performed on the signal in each dimension, and thus two-stage processes as described in any one of Embodiments 1 to 8 are applicable.

FIG. 52 is a flowchart showing an example of operations performed by an inverse transform unit 330 according to Variation of Embodiment 10 of the present invention. The steps for performing the same operations in FIGs. 51A and 51B are assigned with the same reference signs, and the same descriptions are not repeated here.

The dividing unit 400 divides the decoded transformed output signal into a first partial signal and a second partial signal (Step S232). At this time, the dividing unit 400 does not rearrange the P-dimensional first partial signal into a one-dimensional signal.

The second inverse transform unit 410 generates a first coordinate axis inverse transform signal by performing an inverse transform process in a row direction as a first coordinate axis transform in a second inverse transform (S234a). Next, the second inverse transform unit 410 generates a second coordinate axis inverse transform signal by performing an inverse transform process in a column direction as a second coordinate axis transform in a second inverse transform (S234b). The second coordinate axis transform signal generated in this way corresponds to the first decoded partial signal. Here, the transform in the row direction and the transform in the column direction may be performed in the reverse order.

The inverse transform processing in the first direction and the inverse transform processing in the second direction may be performed in sequence. FIG. 53 is a flowchart showing an example of operations performed by an inverse transform unit 330 according to Variation of Embodiment 10 of the present invention.

First, the dividing unit 400 performs a division in the row direction (S232a). Next, the second inverse transform unit 410 performs a first coordinate axis transform in the second inverse transform in the row direction (S234a). First, the synthesizing unit 420 performs a synthesis in the row direction (S236a). Next, the first inverse transform unit 430 performs a first coordinate axis transform in the first inverse transform in the row direction (S238a).

Next, the dividing unit 400 performs a division in the column direction (S232b). Next, the second inverse transform unit 410 performs a second coordinate axis transform in the second inverse transform in the column direction (S234b). Next, the synthesizing unit 420 performs a synthesis in the column direction (S236b). Next, the first inverse transform unit 430 performs a second coordinate axis transform in the first inverse transform in the column direction (S238b).

Here, the transform in the row direction and the transform in the column direction may be performed in the reverse order. In addition, when inverse transform coefficients include zero coefficients, it is not always necessary that the division process and the synthesis process are performed as explicit steps.

As described above, the decoding apparatus and the decoding method according to Embodiment 10 of the present invention make it possible to adapt to changes in the statistical properties of input signals while suppressing the calculation amount required for the transform and the data amount of the inverse transform coefficients. In particular, the coding apparatus and the coding method according to Embodiment 10 are advantageous in the case of using P-dimensional input signals (P denotes an integer equal to or larger than 2).

[Embodiment 11]

A coding apparatus and a coding method according to Embodiment 11 of the present invention respectively include a transform unit and a transform method for transforming a coding target signal of audio data, still image data, video data, and/or the like by combining plural kinds of transforms. The coding apparatus and the coding method according to Embodiment 11 of the present invention are characterized by performing mutually different processes on the part to which a second transform is already applied and the parts to which no second transform is applied. The same structural elements as those of the earlier-described embodiments are assigned with the same reference signs, and the same descriptions may be skipped here.

The coding apparatus according to Embodiment 11 of the present invention is described below with reference to FIG. 54A. FIG. 54A is a block diagram showing an example of a structure of a coding apparatus 1200 according to Embodiment 11 of the present invention.

As shown in FIG. 54, the coding apparatus 1200 differs from the coding apparatus 500 according to Embodiment 3 shown in FIG. 17 in the point of including a transform unit 1210, a quantization unit 1220, an entropy coding unit 1230, an inverse quantization unit 1240, and an inverse transform unit 1250, instead of a transform unit 510, a quantization unit 120, an entropy coding unit 130, an inverse quantization unit 540, and an inverse transform unit 550. The same structural elements as those of the coding apparatus 500 according to Embodiment 3 are not described here, and the different elements are focused on in the following descriptions.

In this embodiment, an output signal from the transform unit 1210 is divided into two signals and the two signals are output, depending on whether a second transform is applied or not. More specifically, the transform unit 1210 generates the two transformed output signals by performing a first transform and a second transform on the transform target input signal, and outputs, as the two transformed output signals, the part to which the second transform is already applied and the part to which no second transform is applied in the generated transformed output signals. In other words, the transform unit 1210 outputs the earlier mentioned second transformed output signal as a transformed output signal L, and outputs the earlier-mentioned partial signal as a transformed output signal H.

The second transformed output signal has statistical properties different from those of the second partial signal. Thus, it is possible to further increase the performances by separately performing the following processes. More specifically, the quantization unit 1220 performs a scanning and a quantization on the transformed output signal L and the transformed output signal H to generate quantized coefficients L and quantized coefficients H. In other words, the quantization unit 1220 generates the quantized coefficients by scanning coefficient values that compose the transformed output signal, and quantizing the scanned signal of the scanned coefficient values.

At this time, the quantization unit 1220 may perform control to suppress quantization loss of the quantized coefficients L at a low level and thereby to assign a larger amount of data to a low frequency signal that places a great influence on subjective image quality. In other words, the quantization unit 1220 quantizes, at a first accuracy, a first scanned signal which corresponds to the second transformed output signal in the scanned signal, and quantizes, at a second accuracy lower than the first accuracy, a second scanned signal which corresponds to the second partial signal. The quantization unit 1220 is capable of switching quantization accuracies.

The quantization unit 1220 may switch scanning operations on the coefficient values included in the transformed output signal L and scanning operations on the coefficient values included in the transformed output signal H. The quantization unit 1220 is capable of switching scan modes.

For example, when a second transform is of a non-separable type, the quantization unit 1220 performs a sequential scanning of the second transformed output signal that is a one-dimensional array resulting from the rearrangement, and performs a scanning, such as a zig-zag scanning, on the second partial signal to which no second transform is applied, by shifting in the horizontal direction and the vertical direction at approximately the same time and by making a turn at the end of a block. In other words, the quantization unit 1220 scans the coefficient values that compose the second transformed output signal according to the processing order of power in the second transform, and scans the coefficient values that compose the second partial signal according to a zig-zag scan.

Here, when a multi-dimensional signal is input and output in such a transform, it is possible to perform a multi-dimensional zig-zag scan on the second partial signal, or to perform a two-dimensional zig-zag scan thereon. For example, in the case where signals Y, U, and V are input, it is possible to perform a zig-zag scan on the second partial signal including the signal Y, to perform a zig-zag scan on the second partial signal including the signal U, and to perform a zig-zag scan on the second partial signal including the signal V. The scanning order of the signals Y, U, and V is not limited thereto.

The entropy coding unit 1230 generates a coded signal L by performing entropy coding of quantized coefficients L, and generates a coded signal H by performing entropy coding of quantized coefficients H. The entropy coding unit 1230 multiplexes the coded signal L and the coded signal H, and outputs the multiplexed signal.

The quantized coefficients L and the quantized coefficients H are different in the statistical properties. Thus, the entropy coding unit 1230 manages internal state variables (appearance probabilities, context, and the like) thereof independently from each other. The entropy coding unit 1230 is capable of switching entropy coding schemes. Furthermore, the entropy coding unit 1230 may perform binarization and/or switch context derivation schemes. The internal state variables in entropy coding consume memory capacity when stored therein and thus may be desired to be reduced. Accordingly, for example, it is possible to obtain internal state variables more frequently for the transformed output signals L than for the transformed output signals H. Here, "more frequently" indicates that the number of the independent internal state variables with respect to the number of the transformed output signals L is larger than the number of the independent internal state variables with respect to the number of the transformed output signals H.

In other words, the entropy coding unit 1230 performs entropy coding processes using different probability tables for the first quantized coefficients corresponding to the second transformed output signal and the second quantized coefficients corresponding to the second partial signal among the quantized coefficients. The entropy coding unit 1230 may entropy codes the quantized coefficients by performing different context derivation schemes on the first quantized coefficients and the second quantized coefficients among the quantized coefficients.

The inverse quantization unit 1240 inverse quantizes the quantized coefficients L to generate a decoded transformed output signal L, and inverse quantizes the quantized coefficients H to generate a decoded transformed output signal H. The inverse quantization unit 1240 performs a process inverse to the process performed by the quantization unit 1220.

The inverse transform unit 1250 generates a decoded signal by inverse transforming the decoded transformed output signal L and the decoded transformed output signal H. The inverse transform unit 1250 performs a process inverse to the process performed by the transform unit 1210.

The processes (scanning, quantization, and entropy coding) performed on the transformed output signal L may be performed at time points earlier than the processes (scanning, quantization, and entropy coding) performed on the transformed output signal H. When this processing priority order is used, it is possible to switch the operations on the transformed output signal H according to the result of the processes performed on the transformed output signal L. For example, it is possible to switch the internal state variables in the entropy coding of the quantized coefficients H, according to the number of non-zero coefficients of the transformed output signal L.

FIG. 54B is an example of a table of how shown signals are processed differently in the coding apparatus 1200 according to Embodiment 11 of the present invention. As shown in FIG. 54B, the coding apparatus 1200 according to Embodiment 11 of the present invention performs a different process on each of signals corresponding to the second transformed output signal and the second partial signal, in at least one of the scanning, quantization, and entropy coding.

The coding flow in Embodiment 11 of the present invention is approximately the same as the coding flow in the earlier described embodiments, and is described below with reference to FIG. 18.

First, when a prediction error signal is used as an input signal, the prediction unit 580 generates a prediction error signal (Step S305). Next, the transform unit 1210 transforms one of the prediction error signal and the input signal to generate a transformed output signal L to which a second transform is already applied and a transformed output signal H to which no second transform is applied (Step S110).

Next, the quantization unit 1220 quantizes the transformed output signal L to generate quantized coefficients L, and quantizes the transformed output signal H to generate quantized coefficients H (Step S120). Lastly, the entropy coding unit 1230 performs entropy coding of the quantized coefficients L and the quantized coefficients H, and thereby generates a coded signal (Step S130). Here, the internal state variables are mutually independent from the entropy coding of the quantized coefficients L and the entropy coding of the quantized coefficients H.

Next, the inverse quantization unit 1240 inverse quantizes the quantized coefficients L to generate a decoded transformed output signal L, and inverse quantizes the quantized coefficients H to generate a decoded transformed output signal H (Step S340). Next, the inverse transform unit 1250 generates a decoded signal by inverse transforming the decoded transformed output signal L and the decoded transformed output signal H (Step S350). Lastly, the generated decoded signal is stored in a memory 570 (Step S360).

With the configuration of Embodiment 3 intended to control the second transform coefficients according to variation in the local statistical properties of an input signal, it is also possible to switch such internal state variables for scanning, quantization, and entropy coding according to the variation. Here, it is to be noted that an increase in the number of switching produces a disadvantageous effect of increasing the required amount of internal memory. Therefore, it is possible to switch (i) scanning modes, (ii) quantization modes, and (iii) the internal state variables used in entropy coding, and (iv) the context derivation schemes for the entropy coding, only for the transformed output signal L without performing the corresponding switches for the transformed output signal H. In short, it is possible to use the same memory for both the transformed output signals H and L, with an aim to suppress the required memory area. Alternatively, it is possible to switch adaptation and non-adaptation to variations in terms of scanning, quantization, internal state variables for entropy coding, and context derivation schemes, instead of collectively switching adaptation and non-adaptation thereto.

Here, scanning may be performed according to a predetermined fixed pattern or a pattern that is dynamically changed based on the appearance frequencies of quantized coefficients. The frequencies of switching the scan modes, quantization accuracies, and entropy coding schemes may be higher for the signal corresponding to the second transformed output signal than for the signal corresponding to the second partial signal.

As described above, the coding apparatus and the coding method according to Embodiment 11 of the present invention make it possible to adapt to changes in the statistical properties of input signals while suppressing the calculation amounts required for the transform processes and the data amounts of the transform coefficients.

[Embodiment 12]

A decoding apparatus and a decoding method according to Embodiment 12 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in Embodiment 11). The decoding apparatus and the decoding method according to Embodiment 12 of the present invention are characterized by performing mutually different processing on the part to which the second transform is already applied and the part to which no second transform is applied. The same structural elements as those of the earlier-described embodiments are assigned with the same reference signs, and the same descriptions may be skipped here.

The decoding apparatus according to Embodiment 12 of the present invention is described below with reference to FIG. 55A. FIG. 55A is a block diagram showing an example of a structure of a decoding apparatus 1300 according to Embodiment 12 of the present invention.

As shown in FIG. 55A, the decoding apparatus 1300 differs from the decoding apparatus 700 according to Embodiment 4 shown in FIG. 27 in the point of including an entropy decoding unit 1310, an inverse quantization unit 1320, and an inverse transform unit 1330, instead of the entropy decoding unit 310, the inverse quantization unit 320, and the inverse transform unit 730. The same structural elements as those of the decoding apparatus 700 according to Embodiment 4 are not described here, and the different elements are focused on in the following descriptions.

The entropy decoding unit 1310 entropy decodes the coded signal to generate decoded quantized coefficients L and decoded quantized coefficients H. In the entropy decoding, the internal state variables (probability state variables, context) for the decoded quantized coefficients L and the internal state variables for the decoded quantized coefficients H are independent from each other.

Furthermore, the entropy decoding unit 1310 may perform binarization and/or switch context derivation schemes. The entropy decoding unit 1310 is capable of switching entropy decoding schemes. The internal state variables in entropy decoding consume memory capacity when stored therein and thus may be desired to be reduced. It is possible to obtain internal state variables more frequently for the decoded quantized coefficients L than for the decoded quantized coefficients H. Here, "more frequently" indicates that the number of independent internal state variables with respect to the number of decoded quantized coefficients L is larger than the number of independent internal state variables with respect to the number of decoded quantized coefficients H.

In other words, the entropy decoding unit 1310 performs entropy decoding using different probability tables for the first coded signal corresponding to the second decoded transformed output signal and the second coded signal corresponding to the second decoded partial signal among the coded signals. The entropy decoding unit 1310 may entropy decode the coded signal by performing different context derivation schemes on the first coded signal and the second coded signal among the coded signals.

The inverse quantization unit 1320 generates a decoded transformed output signal L by performing inverse quantization and inverse scanning on the decoded quantized coefficients L. Furthermore, the inverse quantization unit 1320 generates a decoded transformed output signal H by performing an inverse quantization and an inverse scanning on the decoded quantized coefficients H. In other words, the inverse quantization unit 1320 inverse quantizes the decoded quantized coefficients to generate a decoded scanned signal, and scans the coefficient values that compose the decoded scanned signal. In this way, decoded transformed output signal including the scanned coefficient values are generated.

Here, the inverse quantization unit 1320 may inverse quantize, with a first accuracy, the first decoded quantized coefficients corresponding to the second decoded transformed output signal, and inverse quantize, with a second accuracy, the second decoded quantized coefficients corresponding to the second decoded partial signal among the decoded quantized coefficients. The quantization unit 1220 is capable of switching quantization accuracies.

The inverse transform unit 1330 generates a decoded transformed input signal by inverse transforming the decoded transformed output signal L and the decoded transformed output signal H. Here, the decoded transformed output signal L and the decoded transformed output signal H respectively correspond to the second decoded transformed output signal and the second decoded partial signal.

Here, the inverse quantization unit 1320 may switch inverse scanning on the decoded quantized coefficients L and inverse scanning on the decoded quantized coefficients H. The inverse quantization unit 1320 is capable of switching scan modes. When a second inverse transform is of a non-separable type, the inverse quantization unit 1320 performs a sequential inverse scanning on the first decoded partial signal that is a one-dimensional array resulting from the rearrangement, and performs a scanning, such as a zig-zag scanning, on the second decoded partial signal to which a second inverse transform is applied, by shifting in the horizontal direction and the vertical direction at approximately the same time and by making a return at the end of a block.

In other words, the inverse quantization unit 1320 scans the coefficient values that compose the first decoded scanned signal corresponding to the second decoded transformed output signal in the decoded scanned signal according to the order of power in the second inverse transform, and scans the coefficient values that compose the second decoded scanned signal according to a zig-zag scan.

Here, when a multi-dimensional signal is input and output in such a transform, it is possible to perform a multi-dimensional zig-zag scan on the second decoded partial signal, or to perform a two-dimensional zig-zag scan thereon. For example, in the case where signals Y, U, and V are input, it is possible to perform an inverse zig-zag scan on the second decoded partial signal including the signal Y, to perform a zig-zag scan on the second decoded partial signal including the signal U, and to perform a zig-zag scan on the second decoded partial signal including the signal V. The scanning order for the signals Y, U, and V is not limited thereto.

Here, the processing on the decoded quantized coefficients L may be performed earlier than the processing on the decoded quantized coefficients H. When this processing priority order is used, it is possible to switch the operations on the decoded quantized coefficients H according to the result of processes performed on the decoded quantized coefficients L.

FIG. 55B is an example of a table of how shown signals are processed differently in a decoding apparatus 1300 according to Embodiment 12 of the present invention. As shown in FIG. 55B, the decoding apparatus 1300 according to Embodiment 12 of the present invention performs different processing on each of signals corresponding to the second decoded transformed output signal and the second decoded partial signal, in at least one of the entropy decoding, inverse quantization, and scanning.

The decoding flow in Embodiment 12 of the present invention is approximately the same as the decoding flow in the earlier described embodiments, and is described below with reference to FIG. 28.

In other words, the prediction unit 770 generates a prediction signal based on an already coded signal stored in the memory 760 (Step S405). Step S405 is skipped in the case of decoding a coded signal generated according to a coding method for directly transforming an input signal.

Next, the entropy decoding unit 1310 entropy decodes the coded signal to generate decoded quantized coefficients L and decoded quantized coefficients H (Step S210). Here, in the entropy decoding, the internal state variables (probability state variables, context) for the decoded quantized coefficients L and the internal state variables for the decoded quantized coefficients H are independent from each other.

Next, the inverse quantization unit 1320 inverse quantizes the decoded quantized coefficients L to generate a decoded transformed output signal L, and inverse quantizes the decoded quantized coefficients H to generate a decoded transformed output signal H (Step S220). Next, the inverse transform unit 1330 generates a decoded transformed input signal by inverse transforming the decoded transformed output signal L and the decoded transformed output signal H (Step S230).

Next, the adder 750 adds the prediction signal and the decoded transformed input signal to generate a decoded signal. The decoded signal is stored in the memory 760, for future reference (Step S440)

With the configuration of Embodiment 3 intended to control the second inverse transform coefficients according to variation in the local statistical properties of an input signal, it is also possible to switch (i) context derivation schemes in entropy decoding, (ii) internal state variables for entropy decoding, (iii) inverse quantization, and (iv) inverse scanning according to the variation. Here, it is to be noted that an increase in the number of switching produces a disadvantageous effect of increasing the required area of internal memory. Therefore, it is possible to switch (i) the internal state variables used in entropy decoding to output the decoded quantized coefficients L, inverse quantization performed on the decoded quantized coefficients L, and inverse scanning performed after the inverse quantization, without performing the corresponding switches for the decoded quantized coefficients H. In short, it is possible to use the same memory for both the decoded quantized coefficients L and decoded quantized coefficients H, with an aim to suppress the required amount of memory. Alternatively, it is possible to separately switch adaptation and non-adaptation to variations in terms of context derivation schemes, internal state variables for entropy decoding, inverse quantization, and, inverse scanning, instead of collectively switching adaptation and non-adaptation thereto.

Here, inverse scanning may be performed according to a predetermined fixed pattern or a pattern that is dynamically changed based on the appearance frequencies of quantized coefficients. The frequencies of switching the scan modes, inverse quantization accuracies, and entropy decoding schemes may be higher for the signal corresponding to the second decoded transformed output signal than for the signal corresponding to the second decoded partial signal.

As described above, the decoding apparatus and the decoding method according to Embodiment 12 of the present invention make it possible to adapt to changes in the statistical properties of input signals while suppressing the calculation amount required for the transform and the data amount of the inverse transform coefficients.

[Embodiment 13]

A coding apparatus, a coding method, a decoding apparatus, a decoding method according to Embodiment 13 of the present invention are characterized by coding and decoding transform coefficients utilizing the properties of second transform coefficients and second inverse transform coefficients such that coding efficiency is increased. A second transform matrix and a second inverse transform matrix are unique matrices as shown below, and thus make it possible to increase the transform performances or reduce the data amount of the transform coefficients.

As an example, this embodiment assumes a case of outputting a first partial transformed output signal $y_2^m$ by means that a first partial signal $y_{1L}^m$ composed of four elements is input to a second transform unit 220, and that the second transform unit 220 transforms the first partial signal $y_{1L}^m$ using a second transform matrix $A_2^m$ that is a 4 x 4 matrix.

As shown in FIG. 56A, each of the second transform coefficients composing the second transform matrix $A_2^m$ is denoted as a (i, j) (or $a_{ij}$). Here, i denotes 1, 2, 3, or 4, and j denotes 1, 2, 3, or 4. At this time, as shown in FIG. 56A, the elements ($a_{ij}$) that satisfies i = j are diagonal elements, and the elements that satisfies $i \neq j$ are non-diagonal elements. Furthermore, the non-diagonal elements are classified into upper triangle elements that are elements satisfying i < j, and lower triangle elements that are elements satisfying i > j.

First, the characteristics of the diagonal elements of the second transform matrix $A_2^m$ are described below.

Supposing that a current first transform is a transform that can completely de-correlate a first transformed output signal, a corresponding second transform cannot further de-correlate the first transformed output signal. Thus, it is possible to set all the diagonal elements to 1 (that is, 255 in the case of coefficients having an 8-bit accuracy) and set all the non-diagonal elements to 0.

However, as described earlier, the first transform coefficient deriving unit 202 derives a first transform matrix $A_1^n$ optimized, as a whole, for plural transform target input signals $X^n$ included in a set $S_A$, and thus the first transform matrix $A_1^n$ is not optimized for each of the transform target input signals $X^n$. For this reason, the first transform unit 200 cannot achieve such a complete de-correlation, and each of the first transformed output signal $y_1^n$ and the first partial signal $y_{1L}^m$ that is a part of the first transformed output signal $y_1^n$ are not completely de-correlated. Accordingly, the diagonal elements of the second transformed matrix $A_2^m$ composing the second transform coefficients derived by the second transform coefficient deriving unit 222 are not always set to 1, and the non-diagonal elements thereof are not always set to 0.

However, since the first partial signal $y_{1L}^m$ is already de-correlated to a certain level by the first transform, it is possible to set the diagonal elements of the second transform matrix $A_2^m$ to a value close to 1, and the non-diagonal elements of the second transform matrix $A_2^m$ to a value close to 0. Accordingly, when the second transform coefficients are coded, the difference between the diagonal element a (i, j) and 1 is a value close to 0, and thus it is possible to reduce the amount of information to be coded and thereby to increase the coding efficiency.

Furthermore, the diagonal elements are more likely to be affected by special correlation as the diagonal elements are higher frequency components, and thus it is possible to set a value more deviated from 1 to such diagonal elements. In other words, values more deviated from 1 may be set to diagonal elements located closer to the downward right end. For example, the diagonal elements in the second transform matrix may be determined such that the values thereof decreases from upper left to lower right according to a one-dimensional function or an arithmetical series. This is true of an inverse transform matrix.

FIG. 56B is a diagram showing examples of a second transform matrix and a second inverse transform matrix. As shown in FIG. 56B, the value of each diagonal element may be set to be at least four times larger than a value of each non-diagonal element. In an exemplary case where disturbance such as various noise signals is included, the value of each diagonal element may be set to at least twice a value of each non-diagonal element. In other words, in the case of using a matrix representation, the second transform unit 220 may perform a second transform using, as the second transform coefficients, a second transform matrix in which all the diagonal elements have a transform coefficient at least twice the transform coefficient of each non-diagonal element. Likewise, in the case of using a matrix representation, the second inverse transform unit 410 may perform a second inverse transform using, as the second inverse transform coefficients, a second inverse transform matrix in which all the diagonal elements have a transform coefficient at least twice the transform coefficient of each non-diagonal element.

In a next case where transform coefficients for the non-diagonal elements are denoted as a (i, j), the folding elements shown as a (j, i) may be set to have approximately the same absolute values. FIG. 56B is an example case where the transform coefficients of the non-diagonal elements have absolute values which are approximately the same as the values of the folding elements. Typical examples include a pair of $a_{12}$ = 48 and $a_{21}$ = -58, and a pair of $a_{13}$ = 64 and $a_{31}$ = -57. Here, "approximately the same" means that an error is equal to or less than 20 percent in absolute value.

FIG. 56C is a diagram showing average values of absolute values of predetermined elements and folding elements. As shown in FIG. 56B and FIG. 56C, the transform coefficients are determined such that the respective elements are approximately the same as the corresponding average values.

Here, FIG. 56D is a diagram showing the differences between the non-diagonal elements shown in FIG. 56B and the absolute average values shown in FIG. 56C. In this embodiment, the second transform coefficient values are determined such that the differences shown in FIG. 56D are small.

The second transform coefficients have a characteristic relationship in which the code (a (i, j)) of target elements and the code of the folding elements (a (j, i)) are different from each other. Typical examples include, as shown in FIG. 56B, a pair of $a_{12}$ = 48 and $a_{21}$ = -58, and a pair of $a_{13}$ = 64 and $a_{31}$ = -57.

Alternatively, it is possible to determine transform coefficients so that the relationship as shown in FIG. 56E is satisfied. Here, FIG. 56E is a diagram showing the relationship of signs between the upper triangle elements and the lower triangle elements. More specifically, in most cases, the signs of the upper triangle elements are positive and the signs of the lower triangle elements are negative.

Here, it is possible to reduce the number of multiplication processes and the memory area required to hold the transform coefficients by setting the transform coefficients to 0. However, it is also good to set, to 0, the transform coefficients having a small absolute value, based on the transform coefficients having the characteristics described in this embodiment. In other words, the second transform unit 220 may perform a second transform using, as the second transform coefficients, a transform matrix in which at least one non-diagonal element has a value of 0. Likewise, the second inverse transform unit 410 may perform a second inverse transform using, as the second inverse transform coefficients, an inverse transform matrix in which at least one non-diagonal element has a value of 0.

For example, in FIG. 56B, it is also possible to set, to 0, $a_{14}$ = 10, $a_{24}$ = 10, $a_{34}$ = 2, $a_{41}$ = -3, $a_{42}$ = -25, and $a_{43}$ = -28. FIG. 56F shows an example of a second transform matrix in which at least one of the non-diagonal elements is set to 0.

As described above, the coding apparatus, coding method, decoding apparatus, decoding method according to Embodiment 13 of the present invention are intended to determine transform coefficients having the characteristic properties, and thus make it possible to code and decode the transform coefficients utilizing the characteristic properties and to increase the coding efficiency.

[Embodiment 14]

A coding apparatus and a coding method according to Embodiment 14 of the present invention respectively include a transform unit and a transform method for transforming a coding target signal of audio data, still image data, video data, and/or the like by combining plural kinds of transforms. The coding apparatus and the coding method according to Embodiment 14 of the present invention are characterized by performing a second transform and quantization in parallel. The same structural elements as those of the earlier-described embodiments are assigned with the same reference signs, and the same descriptions may be skipped here.

Embodiment 14 according to the present invention reduces the processing time by means that a transform unit 110 and a quantization unit 120 perform some of their processes in parallel. FIG. 57A is a diagram showing an example of a timing chart of transform and quantization according to Embodiment 14 of the present invention.

In the example shown in FIG. 57A, the number of dimensions n of a transform target input signal is 8, and the number of dimensions m of an input signal (a first partial signal) to the second transform unit is 3. After the first transform process $T_1$, the second transform processes 1401 ($T_2$ (1) to $T_2$ (3)) are performed. In this example, the number of elements included in the first partial signal is three, and thus it is assumed that three units of time are required. Here, one unit of time is, for example, a period of time required to perform a second transform on a single element.

Next, as shown in FIG. 57A, quantization processes 1402 ($Q_2$ (1) to $Q_2$ (3)) are performed on the second transformed output signal, in parallel to the transform processes 1401 ($T_2$ (1) to $T_2$ (3)) with a delay of one unit of time. Subsequently, quantization processes 1403 ($Q_1$ (1) to $Q_1$ (5)) are performed on the second partial signal.

As described above, the coding apparatus and coding method according to Embodiment 14 are intended to perform, in parallel, a second transform of the k+1th element (k denotes a natural number) of the first partial signal and quantization of the kth element of the second transformed output signal. For example, as shown in FIG. 57A, the second transform ($T_2$ (2)) of the second element of the first partial signal and the first quantization ($Q_2$ (1)) of the second transformed output signal are performed in parallel at the same time. In this way, it is possible to reduce the processing time in the transform unit.

In the example shown in FIG. 57A, the second transform processes 1401 and the corresponding quantization processes 1402 can be performed in parallel with a delay of only one unit of time. Thus, the delay caused by introducing the second transform is small. The process on one element in the second transform requires that sum of product calculations is performed m times, that is, requires a large amount of calculation. Accordingly, it is possible to suppress the circuit size by increasing the processing time for the second transform processes and reducing the parallelism of the operation circuits.

More specifically, as shown in FIG. 57B, the second transform processes 1401 and the corresponding quantization processes 1402 are performed in parallel with a delay of only one unit of time. However, since the processing time for the second transform processes 1401 are increased, an idle time occurs in the corresponding quantization processes 1402. In this idle time, a quantization process 1403 is performed on the second partial signal in parallel.

For example, as shown in FIG. 57B, quantization processes (($Q_2$ (1) and $Q_2$ (2)) on the first element and the second element of the second partial signal are performed in the second transform process ($T_2$ (1)) on the first element of the first partial signal. In this way, it is possible to reduce the circuit size and reduce the processing time.

As described above, the coding apparatus and the coding method according to Embodiment 14 of the present invention make it possible to adapt to changes in the statistical properties of input signals while suppressing the calculation amounts required for the transform processes and the data amounts of the transform coefficients. In particular, it is possible to reduce increase in the amount of processing time.

[Embodiment 15]

A decoding apparatus and a decoding method according to Embodiment 15 of the present invention respectively include an inverse transform unit and an inverse transform method for inverse transforming, using a combination of plural kinds of transforms, a coded signal generated by coding a signal of audio data, still image data, video data, and/or the like (for example, the coded signal is a coded signal generated in Embodiment 14). A decoding apparatus and a decoding method according to Embodiment 15 of the present invention are characterized by performing second inverse transform processes and inverse quantization processes in parallel. The same structural elements as those of the earlier-described embodiments are assigned with the same reference signs, and the same descriptions may be skipped here.

Embodiment 15 according to the present invention reduces the processing time by means that an inverse quantization unit 320 and an inverse transform unit 330 perform some of their processes in parallel. FIG. 58A is a diagram showing an example of a timing chart of transform and quantization according to Embodiment 14 of the present invention.

In the example shown in FIG. 58A, the number of dimensions n of decoded quantized coefficients is 8, and the number of dimensions m of an input signal (a second decoded transformed output signal) to the second inverse transform unit is 3. After the inverse quantization processes 1501 (($Q_2$ (1) to $Q_2$ (3)) of the second decoded quantized coefficients, second inverse transform processes 1502 (($T_2$ (1) to $T_2$ (3)) of the second transformed output signal and inverse quantization processes 1503 (($Q_1$ (1) to $Q_1$ (5)) of the second decoded partial signal are performed.

As described above, the decoding apparatus and decoding method according to Embodiment 15 of the present invention are intended to perform, in parallel, the second inverse transform of the kth (k denotes a natural number) element of the second decoded transformed output signal and the inverse quantization of the kth element among the second decoded quantized coefficients. For example, as shown in FIG. 58A, the second inverse transform process ($T_2$ (1)) of the first element of the second decoded transformed output signal and the inverse quantization process ($Q_1$ (1)) of the first element of the second decoded quantized coefficients are performed at the same time in parallel. In this way, since the second inverse transform processes 1502 and the inverse quantization processes 1503 are executed in parallel, and thus it is possible to reduce the overall processing time for the inverse quantization and inverse transform.

Parallel configurations are not limited to the above exemplary configuration. For example, it is possible to perform, in parallel, the second inverse transform of the kth (k denotes a natural number) element of the second decoded transformed output signal and the inverse quantization of the k+1th element of the first decoded quantized coefficients.

In addition, it is also possible to reduce the parallelism of the inverse transform processes and thereby to increase the required processing time. As shown in FIG. 58B, the second inverse processes 1502 and the inverse quantization processes 1503 are executed in parallel. More specifically, the inverse quantization processes 1503 on the second decoded quantized coefficients are executed in parallel in the idle time in the second inverse transform processes 1502.

For example, as shown in FIG. 58B, the quantization processes (($Q_2$ (1) and $Q_2$ (2)) on the first element and the second element of the second decoded quantized coefficients are performed in the second transform process ($T_2$ (1)) on the first element of the second decoded transformed output signal. In this way, it is possible to reduce the circuit size and reduce the processing time.

As described above, the decoding apparatus and the decoding method according to Embodiment 15 of the present invention make it possible to adapt to changes in the statistical properties of input signals while suppressing the calculation amount required for the transform and the data amount of the inverse transform coefficients. In particular, it is possible to reduce increase in the amount of processing time.

The processing described in each of embodiments can be simply implemented in an independent computer system, by recording, in a recording medium, a program for implementing the configurations of the video coding method and the video decoding method described in each of the embodiments. The recording media may be any recording media as long as a program can be recorded, such as a magnetic disk, an optical disk, a magnetic optical disk, an IC card, and a semiconductor memory.

Hereinafter, the applications to the video coding method and the video decoding method described in each of the embodiments and systems using thereof will be described.

FIG. 59 illustrates an overall configuration of a content providing system ex100 for implementing content distribution services. The area for providing communication services is divided into cells of desired size, and base stations ex107 to ex110 which are fixed wireless stations are placed in each of the cells.

The content providing system ex100 is connected to devices, such as a computer ex111, a personal digital assistant (PDA) ex112, a camera ex113, a mobile phone ex114 and a gaming machine ex115, via the Internet ex101, an Internet service provider ex102, a telephone network ex104, as well as the base stations ex107 to ex110, respectively.

However, the configuration of the content providing system ex100 is not limited to the configuration shown in FIG. 59, and a combination in which any of the elements are connected is possible. In addition, each device may be directly connected to the telephone network ex104, rather than via the base stations ex107 to ex110 which are the fixed wireless stations. Furthermore, the devices may be interconnected to each other via a short distance wireless communication and others.

The camera ex113, such as a digital video camera, is capable of capturing videos. A camera ex116, such as a digital video camera, is capable of capturing both still images and videos. Furthermore, the mobile phone ex114 may be the one that conforms to any of the schemes specified in the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the mobile phone ex114 may be a Personal Handyphone System (PHS).

In the content providing system ex100, a streaming server ex103 is connected to the camera vex113 and others via the telephone network ex104 and the base station ex109, which enables distribution of images of a live show and others. In such a distribution, a content (for example, video of a music live show) captured by the user using the camera ex113 is coded as described above in each of the embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the mobile phone ex114, and the gaming machine ex115 that are capable of decoding the above-mentioned coded data. Each of the devices that have received the distributed data decodes and reproduces the received data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and videos captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the mobile phone ex114 is equipped with a camera, the video data obtained by the camera may be transmitted. The video data is data coded by the LSI ex500 included in the mobile phone ex114.

Furthermore, the streaming server ex103 may be composed of servers and computers, and may decentralize data and process, record, or distribute the decentralized data.

As described above, the clients may receive and reproduce the coded data in the content providing system ex100. In other words, the clients can receive and decode information transmitted by the user, and reproduce the decoded data in real time in the content providing system ex100, so that the user who does not have any right and equipment for such purposes can enjoy personal broadcasting.

Each of the devices composing this content providing system may perform coding and decoding according to a corresponding one of the image coding methods and image decoding methods described in the above embodiments.

The mobile telephone ex114 is described as an example.

FIG. 60 illustrates the mobile phone ex114 that uses the image coding method and the image decoding method described in the embodiments. The mobile phone ex114 includes: an antenna ex601 for transmitting and receiving radio waves through the base station ex110; a camera unit ex603, such as a CCD camera, capable of capturing videos and still images; a display unit ex602 such as a liquid crystal display for displaying the data such as decoded video captured by the camera unit ex603 or received by the antenna ex601; a main body unit including a set of operation keys ex604; an audio output unit ex608 such as a speaker for output of audio; an audio input unit ex605 such as a microphone for input of audio; a recording medium ex 607 for storing captured videos or still images, received e-mails, recorded audio, coded or decoded data of received videos or still pictures, or others; and a slot unit ex606 that is used to mount the recording medium ex 607 onto the mobile phone ex114. The recording medium ex607 is, for example, an SD card which stores, in its plastic casing, a flash memory that is a kind of an Electrically Erasable and Programmable Read Only Memory (EEPROM) that is a non-volatile memory onto and from which data can be electrically rewritten and erased.

The mobile phone ex114 will be further described with reference to FIG. 61. In the mobile phone ex114, a main control unit ex711 designed to integrally control each of the units of the main body including the display unit ex602 as well as the set of operation keys ex604 is connected mutually, via a synchronous bus ex713, to a power supply circuit unit ex710, an operation input control unit ex704, an image coding unit ex712, a camera interface unit ex703, a Liquid crystal Display (LCD) control unit ex702, an image decoding unit ex709, a multiplexing and demultiplexing unit ex708, a recording and reproducing unit ex707, a modulating and demodulating circuit unit ex706, and audio processing unit ex705.

When a call-end key or a power key is turned ON by a user's operation, the power supply circuit unit ex710 supplies the respective units with power from a battery pack so as to activate the mobile phone ex114 with a camera.

In the mobile phone ex114, the audio processing unit ex705 converts audio signals collected by the audio input unit ex605 in voice conversation mode into digital audio signals under the control of the main control unit ex711 including a CPU, a ROM, and a RAM. Then, the modulating and demodulating circuit unit ex706 performs spread spectrum processing on the digital audio signals, and the transmitting and receiving circuit unit ex701 performs digital-to-analog conversion and frequency conversion on the data, and transmits the data via the antenna ex601. The mobile phone ex114, amplifies the data received by the antenna ex350 in voice conversation mode and performs frequency conversion and the analog-to-digital conversion on the data. Then, the mobile phone ex114 causes the modulating and demodulating circuit unit ex706 to perform inverse spread spectrum processing on the data, and causes the audio processing unit ex705 to convert it into analog audio signals, and output them using the audio output unit ex608.

Furthermore, when an e-mail in data communication mode is transmitted, text data of the e-mail input by operating the set of operation keys ex604 of the main body is sent out to the main control unit ex711 via the operation input control unit ex704. The main control unit ex711 causes the modulating and demodulating circuit unit ex706 to perform spread spectrum processing on the text data, and the transmitting and receiving circuit unit ex701 performs the digital-to-analog conversion and the frequency conversion on the resulting data, and transmits the data to the base station ex110 via the antenna ex601.

In the case where image data captured by the camera unit ex603 is transmitted in data communication mode, the image data is supplied to the image coding unit ex712 via the camera interface unit ex703. In addition, in the case where the image data is not transmitted, the image data captured by the camera unit ex603 can be directly displayed on the display unit ex602 via the camera interface unit ex703 and the LCD control unit ex702.

The image coding unit ex712 is configured to include the image coding apparatus described in the present invention. The image coding unit ex712 converts the image data supplied from the camera unit ex603 into coded image data by performing compression coding according to the coding method for the image coding apparatus described in any of the embodiments, and transmits the coded image data to the multiplexing and demultiplexing unit ex708. At the same time, the mobile phone ex114 transmits, as digital audio data, the audio received by the audio input unit ex605 in the image capturing by the camera unit ex603 to the multiplexing and demultiplexing unit ex708 via the audio processing unit ex705.

The multiplexing and demultiplexing unit ex708 multiplexes coded image data supplied from the image coding unit ex712 and audio data supplied from the audio processing unit ex705 according to a predetermined scheme. The modulating and demodulating circuit unit ex706 performs spread spectrum processing on the resulting multiplexed data. The transmitting and receiving circuit unit ex701 performs digital-to-analog conversion and frequency conversion on the data, and transmits it via the antenna ex601.

In the case where video file data linked to a Web page or the like is received in data communication mode, the modulating and demodulating circuit unit ex706 performs spread spectrum processing on data received from the base station ex110 via the antenna ex601, and transmits the resulting multiplexed data to the multiplexing and demultiplexing unit ex708.

In addition, in order to decode the multiplexed data received via the antenna ex601, the multiplexing and demultiplexing unit ex708 demultiplexes the multiplexed data into an image data bit stream and an audio data bit stream, and supplies the image decoding unit ex709 with the coded image data and the audio processing unit ex705 with the coded audio data, through the synchronous bus ex713.

Next, the image decoding unit ex709 is configured to include the image decoding apparatus described in the present invention. The image decoding unit ex709 generates reproduced video data by decoding the image data bit stream according to the decoding method corresponding to the coding method in any of the embodiments, supplies the display unit ex602 with the reproduced video data via the LCD control unit ex702, and thereby displays, for example, video data included in the video file linked to the Web site. At the same time, the audio processing unit ex705 converts the audio data into analog audio data, supplies the audio output unit ex608 with the analog audio data, and thereby reproduces, for example, audio data included in the video file linked to the Web site.

Recently, not only the aforementioned exemplary system but also satellite or terrestrial digital broadcasting have become popular topics of conversation. As shown in FIG. 62, it is possible to incorporate at least any one of the image coding apparatuses and image decoding apparatuses according to the embodiments to the digital broadcasting system. More specifically, the broadcasting station ex201 transmits an audio bit stream, a video bit stream, or a bit stream of multiplexed audio and video data to a communication or broadcasting satellite ex202 using radio waves. Upon receiving the multiplexed data, the broadcasting satellite ex202 transmits radio waves for broadcasting. Then, a home-use antenna ex204 with a satellite broadcast reception function receives the radio waves. A device such as a television receiver ex300 and a set top box (STB) ex217 decodes the received bit stream, and reproduces the decoded data. Furthermore, it is possible to mount any of the image decoding apparatuses described in the embodiments onto a reader and recorder ex218 which reads and decodes the bit stream of multiplexed image and audio data recorded on a storage media ex215 and ex 216, such as CDs and DVDs that are recording media. In this case, the reproduced video signals are displayed on the monitor ex219. As another configuration, it is also conceivable to mount the image decoding apparatus in the set top box ex217 connected to the cable ex203 for a cable television receiver or to the antenna ex204 for satellite and/or terrestrial broadcasting, and display the video signals on the monitor ex219 of the television receiver ex300. The image decoding apparatus may be incorporated not in the set top box but in the television receiver. Furthermore, a car ex210 having an antenna ex205 can receive signals from the satellite ex202, base stations, or the like, and reproduce video on a display device such as a car navigation system ex211 set in the car ex210.

Furthermore, it is possible to mount any of the video decoding apparatuses and video coding apparatuses described in the embodiments onto the reader and recorder ex218 which reads and decodes the audio bit stream, video bit stream and bit stream of multiplexed video and audio data recorded on the recording medium ex215, such as a DVD or a BD. In this case, the reproduced video signals are displayed on the monitor ex219, and can be reproduced by another device or system using the recording medium ex215 on which the coded bit stream is recorded. As another configuration, it is also conceivable to mount the video decoding apparatus in the set top box ex 217 connected to the cable ex203 for a cable television receiver or to the antenna ex204 for satellite and/or terrestrial broadcasting, and display the video signals on the monitor ex219 of the television receiver ex300. The video decoding apparatus may be incorporated not in the set top box but in the television receiver ex300.

FIG. 63 illustrates the television receiver ex300 that uses the video decoding method and the video coding method described in each of the embodiments. The television receiver ex300 includes: a tuner ex301 that obtains or provides bit streams of video information through the antenna ex204 or the cable ex203, etc. that receives the broadcast; a modulating and demodulating unit ex302 that demodulates the received coded data or modulates the data into coded data to be supplied outside; and a multiplexing and demultiplexing unit ex303 that demultiplexes the modulated video data and audio data, or multiplexes the coded video data and audio data. The television receiver ex300 further includes: a signal processing unit ex306 including an audio signal processing unit ex304 and a video signal processing unit ex305 that decode audio data and video data and code audio data and video data, respectively; and an output unit ex309 including a speaker ex307 that provides the decoded audio signal, and a display unit ex308 that displays the decoded video signal, such as a display. Furthermore, the television receiver ex300 includes an interface unit ex317 including an operation input unit ex312 that receives an input of a user operation. Furthermore, the television receiver ex300 includes a control unit ex310 that integrally controls each constituent element of the television receiver ex300, and a power supply circuit unit ex311 that supplies electric power to each of the elements. Other than the operation input unit ex312, the interface unit ex317 may include: a bridge ex313 that is connected to an external device, such as the reader and recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory device. The constituent elements of the television receiver ex300 are connected to each other through a synchronous bus.

First, a description is given of the configuration in which the television receiver ex300 decodes data obtained from outside through the antenna ex204 and others and reproduces the decoded data. In the television receiver ex300, upon a user operation through a remote controller ex220 and others, the multiplexing and demultiplexing unit ex303 demultiplexes the video and audio data demodulated by the modulating and demodulating unit ex302, under control of the control unit ex310 including a CPU. Furthermore, the television receiver ex300 may cause the audio signal processing unit ex304 to decode the demultiplexed audio data, and cause the video signal processing unit ex305 to decode the demultiplexed video data using the decoding method described in any one of the embodiments. The output unit ex309 provides the decoded audio signal and video signal outside, respectively. When the output unit ex309 provides the audio signal and the video signal, the signals may be temporarily stored in buffers ex318 and ex319, and others so that the audio and video signals are reproduced in synchronization with each other. Furthermore, the television receiver ex300 may read coded bit stream not through a broadcast and others but from the recording media ex215 and ex216, such as a magnetic disk, an optical disk, and an SD card. Next, a description is given of a configuration in which the television receiver ex300 codes an audio signal and a video signal, and transmits the data outside or writes the data on a recording medium or the like. Upon receiving a user operation through the remote controller ex220 and others, the television receiver ex300 causes the audio signal processing unit ex304 to code an audio signal, and causes the video signal processing unit ex305 to code a video signal, under control of the control unit ex310 using the coding method described in any one of the embodiments. The multiplexing and demultiplexing unit ex303 multiplexes the coded audio signal and video signal, and provides the multiplexed signal outside. Prior to the multiplexing, the audio and video signals may be temporarily stored in buffers ex320 and ex321, or others so that the audio and video signals are reproduced in synchronization with each other. Here, the television receiver ex300 may be configured such that the buffers ex318 to ex321 may be plural as illustrated, or at least one buffer may be shared therein. In addition to the illustrated example, it is also possible to store data in a buffer so as to avoid a system overflow and a system underflow between the modulating and demodulating unit ex302 and the multiplexing and demultiplexing unit ex303.

Furthermore, the television receiver ex300 may include an element for receiving an AV input from a microphone or a camera other than the element for obtaining audio and video data from a broadcast or a recording medium, and may code the obtained data. Although the television receiver ex300 can code, multiplex, and provide outside data in the description, it may be capable of only receiving, decoding, and outputting data without being capable of coding, multiplexing, and outputting data.

Furthermore, when the reader and recorder 218 reads or writes a coded bit stream from or onto a recording media, one of the television receiver ex300 and the reader and recorder 218 may decode or code the coded bit stream, or the television receiver ex300 and the reader and recorder 218 may share the decoding or coding.

As an example, FIG. 64 illustrates a configuration of an information reproducing and recording unit ex400 when data is read or written from or onto an optical disk. The information reproducing and recording unit ex400 includes constituent elements ex401 to ex407 described below. The optical head ex401 writes, by irradiating a laser spot, information on a recording surface of the recording medium ex215 that is an optical disk, and reads the information by detecting reflected light from the recording surface of the recording medium ex215. The modulating and recording unit ex402 electrically drives a semiconductor laser included in the optical head ex401, and modulates the laser light according to recorded data. The reproducing and demodulating unit ex403 amplifies a reproduction signal generated by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls the entire information reproducing and recording unit ex400. The reading and writing processes can be executed, by means that the system control unit ex407 generates and adds new information as necessary utilizing various information stored in the buffer ex404 and generating and adding new information, and causes the modulating and recording unit ex402, the reproducing and demodulating unit ex403, and the servo control unit ex406 to cooperatively record and reproduce information using the optical head ex401. The system control unit ex407 includes, for example, a microprocessor, and executes processing by causing a computer to execute a program for read and write.

Although the optical head ex401 irradiates a laser spot in the description, it may perform high-density recording using near field light.

FIG. 65 is a schematic diagram of the recording medium ex215 that is the optical disk. On the recording surface of the recording medium ex215, guide grooves are spirally formed, and an information track ex230 records, in advance, address information indicating an absolute position on the disk according to change in the shapes of the guide grooves. The address information includes information for determining positions of recording blocks ex231 that are a unit for recording data. Thus, an apparatus that records and reproduces the data can determine the positions of the recording blocks by reading the address information. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing and recording unit ex400 reads and writes coded audio data, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and recording information having different layers from various angles.

Furthermore, in the digital broadcasting system ex200, a car ex210 having an antenna ex205 can receive data from the satellite ex202 and others, and reproduce video on a display device such as a car navigation system ex211 set in the car ex210. Here, the car navigation system ex211 may be configured to further include a GPS receiving unit in addition to the configuration illustrated in FIG. 63. The same is true for the computer ex111, the mobile phone vex114, and the like. Furthermore, similarly to the television receiver ex300, a terminal such as the mobile phone ex114 probably have three types of implementations including not only (i) a transmitting and receiving terminal including both a coding apparatus and a decoding apparatus, but also (ii) a transmitting terminal including only a coding apparatus and (iii) a receiving terminal including only a decoding apparatus.

As such, each of the above described apparatuses and systems is capable of performing a corresponding one of the video coding methods and the video decoding methods described in the embodiments, and thereby provides the advantageous effects described in the embodiments.

Furthermore, the present invention is not limited to the above embodiments, and various variations and modifications are possible without departing from the scope of the present invention.

[Embodiment 17]

Each of the video coding method, the video coding apparatus, the video decoding method, and the video decoding apparatus in each of the embodiments is typically achieved in the form of an integrated circuit or a Large Scale Integrated (LSI) circuit. As an example of the LSI, FIG. 66 illustrates a configuration of the LSI ex500 that is made into one chip. The LSI ex500 includes elements ex501 to ex509 described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, and a stream controller ex504. The received AV signal is temporarily stored in an external memory ex511, such as an SDRAM. Under control of the control unit ex501, the stored data is segmented into data portions as necessary according to the processing amount and transmission speed, and the data portions are transmitted to a signal processing unit ex507. Then, the signal processing unit ex507 codes an audio signal and/or a video signal. Here, the coding of the video signal is the coding described in each of the embodiments. Furthermore, the signal processing unit ex507 multiplexes the coded audio data and the coded video data as necessary, and a stream IO ex506 outputs the multiplexed data. The output bit stream is transmitted to the base station ex107, or written on the recording media ex215. Prior to the multiplexing, the audio and video data be preferably temporarily stored in the buffer ex508 so that the audio and video data are synchronized with each other.

Furthermore, for example, when decoding is performed, the LSI ex500 temporally stores, in a memory ex511 or the like, coded data obtained by the stream I/O ex 506 through a base station ex107 or read from the recording medium ex215, under control of the control unit ex501. Under control of the control unit ex501, the stored data is segmented into data portions as necessary according to the processing amount and transmission speed, and the data portions are transmitted to a signal processing unit ex507. Then, the signal processing unit ex507 decodes audio data and/or video data. Here, the decoding of the video signal is the decoding described in each of the embodiments. Furthermore, preferably, the LSI ex500 temporally stores, as necessary, the decoded audio and video signals in a buffer ex508 or the like so that these signals can be reproduced in synchronization with each other. Decoded output signals are output from output units such as the mobile phone ex114, the gaming machine ex115, and the television receiver ex300, through the memory ex511 or the like as necessary.

Although the memory ex511 is described as an element outside the LSI ex500, it may be included in the LSI ex500. Buffers are not limited to the buffer ex508, and a plurality of buffers equivalent to the buffer ex508 may be included therein. Furthermore, the LSI ex500 may be made into a single chip or a plurality of chips.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose.

Furthermore, when a circuit integration technology for replacing LSIs with new circuits appears in the future with advancement in semiconductor technology and derivative other technologies, the circuit integration technology may be naturally used to integrate functional blocks. Application of biotechnology is one such possibility.

The coding method, coding apparatus, decoding method, and decoding apparatus according to the present invention have been described based on the above embodiments. However, the present invention is not limited to these embodiments. Those skilled in the art will readily appreciate that many modifications are possible in the exemplary embodiments and other embodiments are possible by arbitrarily combining the structural elements of the different embodiments without materially departing from the novel teachings and advantageous effects of the present invention. Accordingly, all such modifications and embodiments are intended to be included within the scope of the present invention.

[Industrial Applicability]

The present invention provides an advantageous effect of suppressing increase in the calculation amount in coding and the data amount of transform coefficients. The present invention is applicable to coding apparatuses which code audio, still images, and video, and decoding apparatuses which decode the data coded by the coding apparatuses. For example, the present invention is applicable to various kinds of audio visual (AV) apparatuses such as audio apparatuses, mobile phones, digital cameras, BD recorders, digital television apparatuses.

[Reference Signs List]

| | |
|---|---|
| 100, 100a, 500, 500a, | |
| 500c, 500d, 1200, 1600 | Coding apparatus |
| 110, 110a, 510, 510a, 510b, | |
| 510c, 510d, 810, 810a, | |
| 810b, 1210, 1610 | Transform unit |
| 120, 1220, 1620 | Quantization unit |
| 130, 1230, 1630 | Entropy coding unit |
| 200, 900 | First transform unit |
| 202 | First transform coefficient deriving unit |
| 210, 400 | Dividing unit |
| 220, 220a | Second transform unit |
| 222, 222c | Second transform coefficient coefficient deriving unit |

| | |
|---|---|
| 230, 420 | Synthesizing unit |
| 300, 300a, 700, 700a, 700b, 1300 | Decoding apparatus |
| 310, 1310 | Entropy decoding unit |
| 320, 540, 1240, 1320 | Inverse quantization unit |
| 330, 330a, 550, 730, 1030, 1030a, 1030b, 1250, 1330 | Inverse transform unit |
| 410, 410a | Second inverse transform unit |
| 430, 1130 | First inverse transform unit |
| 505 | Subtractor |
| 560, 750 | Adder |
| 570, 624, 760, 781, 782 | Memory |
| 580, 770 | Prediction unit |
| 585 | Prediction control unit |
| 590, 740 | Control unit |
| 601 | First memory |
| 611 | Second memory |
| 612 | Division and synthesis information calculating unit |
| 621 | Third memory |
| 623, 623c, 623d | Local set determining unit |
| 790 | Selection signal determining unit |
| 940, 941, 942, 1140, 1141, 1142 | Norm modifying unit |
| 1401 | Second transform (processing/process) |
| 1402, 1403 | Quantization (processing/process) |
| 1501, 1503 | Inverse quantization (processing/process) |
| 1502 | Second inverse quantization (processing/process) |
| ex100 | Content providing system |
| ex101 | Internet |

| | |
|---|---|
| ex102 | Internet provider |
| ex103 | Streaming server |
| ex104 | Telephone network |
| ex106, ex107, ex108, | |
| ex109, ex110 | Base station |
| ex111 | Computer |
| ex112 | PDA |
| ex113, ex116 | Camera |
| ex114 | Digital mobile phone with camera (mobile phone) |
| ex115 | Gaming machine |
| ex117 | Microphone |
| ex200 | Digital broadcasting system |
| ex201 | Broadcasting station |
| ex202 | Broadcasting satellite |
| ex203 | Cable |
| ex204, ex205, ex601 | Antenna |
| ex210 | Car |
| ex211 | Car navigation |
| ex212 | Reproducing apparatus |
| ex213, ex219 | Monitor |
| ex214, ex215, | |
| ex216, ex607 | Recording medium |
| ex217 | Set top box |
| ex218 | Reader and Recorder |
| ex220 | Remote controller |
| ex230 | Information track |
| ex231 | Recording block |
| ex232 | Inner circumference area |
| ex233 | Data recording area |

| | |
|---|---|
| ex234 | Outer circumference area |
| ex300 | Television receiver |
| ex301 | Tuner |
| ex302 | Modulating and demodulating unit |
| ex303 | Multiplexing and demultiplexing unit |
| ex304 | Audio signal processing unit |
| ex305 | Video signal processing unit |
| ex306, ex507 | Signal processing unit |
| ex307 | Speaker |
| ex308, ex602 | Display unit |
| ex309 | Output unit |
| ex310, ex501 | Control unit |
| ex311, ex505, ex710 | Power supply circuit unit |
| ex312 | Operation input unit |
| ex313 | Bridge |
| ex314, ex606 | Slot unit |
| ex315 | Driver |
| ex316 | Modemn |
| ex317 | Interface unit |
| ex318, ex319, ex320, ex321, ex404, ex508 | Buffer |
| ex400 | Information reproducing and recording unit |
| ex401 | Optical head |
| ex402 | Modulating and recording unit |
| ex403 | Reproducing and demodulating unit |
| ex405 | Disc motor |
| ex406 | Servo control unit |
| ex407 | System control unit |
| ex500 | LSI |

| | |
|---|---|
| ex502 | CPU |
| ex503 | Memory controller |
| ex504 | Stream controller |
| ex506 | Stream I/O |
| ex509 | AV I/O |
| ex510 | Bus |
| ex511 | Memory |
| ex603 | Camera unit |
| ex604 | Operation keys |
| ex605 | Audio input unit |
| ex608 | Audio output unit |
| ex701 | Transmitting and receiving circuit unit |
| ex702 | LCD control unit |
| ex703 | Camera interface unit (Camera I/F unit) |
| ex704 | Operation input control unit |
| ex705 | Audio processing unit |
| ex706 | Modulating and demodulating circuit unit |
| ex707 | Recording and reproducing unit |
| ex708 | Multiplexing and demultiplexing unit |
| ex709 | Image decoding unit |
| ex711 | Main control unit |
| ex712 | Image coding unit |
| ex713 | Synchronous bus |

**Claims**

**1.** A coding method comprising:

transforming an input signal to generate a transformed output signal;
quantizing the transformed output signal to generate quantized coefficients; and
entropy coding the quantized coefficients to generate a coded signal,
wherein said transforming includes:
generating a first transformed output signal by performing a first transform on the input signal using a first transform coefficient;
generating a second transformed output signal by performing, using a second transform coefficient, a second transform on a first partial signal which is a part of the first transformed output signal, and generating the transformed output signal including the generated second transformed output signal and a second partial signal which is a remaining part of the first transformed output signal other than the first partial signal; and
modifying the first transformed output signal.

**2.** The coding method according to Claim 1,
wherein, in said generating of the first transformed output signal, the first transform is performed using a predetermined coefficient as the first transform coefficient.

**3.** The coding method according to one of Claim 1 and Claim 2,
wherein, in said modifying, the first transformed output signal is modified by normalizing the first transformed output signal using a modification parameter determined based on the first transform coefficient.

**4.** The coding method according to one of Claim 1 and Claim 2,
wherein, in said modifying, the first transformed output signal is modified by weighting the first transformed output signal using a weight scale of a quantization matrix that is used in said quantizing.

**5.** The coding method according to any one of Claim 1 to Claim 4,
wherein, in said modifying, the first partial signal and the second partial signal are separately modified.

**6.** The coding method according to any one of Claim 1 to Claim 3,
wherein, in said modifying, the first transformed output signal is modified by shifting down coefficient values that compose the first partial signal such that an effective data length in the second transform is equal to or smaller than a predetermined value.

**7.** The coding method according to any one of Claim 1 to Claim 6,
wherein, in said modifying, coefficient values that compose the first partial signal or coefficient values that compose the second transformed output signal are shifted down such that a bit length of the coefficient values of the first partial signal or the second transformed output signal is equal to a bit length of coefficient values that compose the second partial signal.

**8.** A decoding method comprising:

entropy decoding a coded signal to generate decoded quantized coefficients;
inverse quantizing the decoded quantized coefficients to generate a decoded transformed output signal; and
inverse transforming the decoded transformed output signal to generate a decoded signal,
wherein said inverse transforming includes:
generating a first decoded partial signal by performing, using the second inverse transform coefficient, a second inverse transform on a second decoded transformed output signal which is a part of the decoded transformed output signal;
generating the decoded signal by performing, using a first inverse transform coefficient, a first transform on a first decoded transformed output signal including the first decoded partial signal and a second decoded partial signal which is a remaining part of the decoded transformed output signal other than the second decoded transformed output signal; and
modifying the first decoded partial signal.

**9.** The decoding method according to Claim 8,
wherein, in said generating of the decoded signal, the first inverse transform is performed using a predetermined coefficient as the first inverse transform coefficient.

**10.** The decoding method according to one of Claim 8 and Claim 9,
wherein, in said modifying, the first decoded transformed output signal is modified by normalizing the first decoded transformed output signal using a modification parameter determined based on the first inverse transform coefficient.

**11.** The decoding method according to one of Claim 8 and Claim 9,
wherein, in said modifying, the first decoded transformed output signal is modified by weighting the first decoded partial signal using a weight scale of a quantization matrix that is used in said inverse quantizing.

**12.** The decoding method according to any one of Claim 8 to Claim 11, wherein, in said modifying, the first decoded partial signal and the second decoded partial signal are separately modified.

**13.** The decoding method according to any one of Claim 8 to Claim 10, wherein, in said modifying, the first decoded transformed output signal is modified by shifting down coefficient values that compose the second decoded transformed output signal such that an effective data length in the second inverse transform is equal to or smaller than a predetermined value.

**14.** The decoding method according to any one of Claim 8 to Claim 13, wherein, in said modifying, coefficient values that compose the first decoded partial signal or coefficient values that compose the second decoded transformed output signal are shifted down such that a bit length of each of the coefficient values of the first decoded partial signal or the second decoded transformed output signal is equal to a bit length of a corresponding one of coefficient values that compose the second decoded partial signal.

**15.** A coding apparatus comprising:

a transform unit configured to transform an input signal to generate a transformed output signal;
a quantization unit configured to quantize the transformed output signal to generate quantized coefficients; and
an entropy coding unit configured to entropy code the quantized coefficients to generate a coded signal,
wherein said transform unit includes:
a first transform unit configured to generate a first transformed output signal by performing a first transform on the input signal using a first transform coefficient;
a second transform unit configured to generate a second transformed output signal by performing, using a second transform coefficient, a second transform on a first partial signal which is a part of the first transformed output signal, and generate the transformed output signal including the generated second transformed output signal and a second partial signal which is a remaining part of the first transformed output signal other than the first partial signal; and
a modifying unit configured to modify the first transformed output signal.

**16.** A decoding apparatus comprising:

an entropy decoding unit configured to entropy decode a coded signal to generate decoded quantized coefficients;
an inverse quantization unit configured to inverse quantize the decoded quantized coefficients to generate a decoded transformed output signal; and
an inverse transform unit configured to inverse transform the decoded transformed output signal to generate a decoded signal,
wherein said inverse transform unit includes:
a second inverse transform unit configured to generate a first decoded partial signal by performing, using a second inverse transform coefficient, a second inverse transform on a second decoded transformed output signal which is a part of the decoded transformed output signal;
a first inverse transform unit configured to generate the decoded signal by performing, using a first inverse transform coefficient, a first transform on a first decoded transformed output signal including the first decoded partial signal and a second decoded partial signal which is a remaining part of the decoded transformed output signal other than the second decoded transformed output signal; and
modifying the first decoded partial signal.

**17.** An integrated circuit comprising:

a transform unit configured to transform an input signal to generate a transformed output signal;
a quantization unit configured to quantize the transformed output signal to generate quantized coefficients; and
an entropy coding unit configured to entropy code the quantized coefficients to generate a coded signal,
wherein said transform unit includes:
a first transform unit configured to generate a first transformed output signal by performing a first transform on the input signal using a first transform coefficient;
a second transform unit configured to generate a second transformed output signal by performing, using a second transform coefficient, a second transform on a first partial signal which is a part of the first transformed output signal, and generate the transformed output signal including the generated second transformed output signal and a second partial signal which is a remaining part of the first transformed output signal other than the first partial signal; and a modifying unit configured to modify the first transformed output signal.

**18.** An integrated circuit comprising:

an entropy decoding unit configured to entropy decode a coded signal to generate decoded quantized coefficients;
an inverse quantization unit configured to inverse quantize the decoded quantized coefficients to generate a decoded transformed output signal; and
an inverse transform unit configured to inverse transform the decoded transformed output signal to generate a decoded signal,
wherein said inverse transform unit includes:
a second inverse transform unit configured to generate a first decoded partial signal by performing, using a second inverse transform coefficient, a second inverse transform on a second decoded transformed output signal which is a part of the decoded transformed output signal;
a first inverse transform unit configured to generate the decoded signal by performing, using a first inverse transform coefficient, a first transform on a first decoded transformed output signal including the first decoded partial signal and a second decoded partial signal which is a remaining part of the decoded transformed output signal other than the second decoded transformed output signal; and
modifying the first decoded partial signal.

**19.** A program for causing a computer to execute a coding method including:

transforming an input signal to generate a transformed output signal;
quantizing the transformed output signal to generate quantized coefficients; and
entropy coding the quantized coefficients to generate a coded signal,
wherein the transforming includes:
generating a first transformed output signal by performing a first transform on the input signal using a first transform coefficient;
generating a second transformed output signal by performing, using a second transform coefficient, a second transform on a first partial signal which is a part of the first transformed output signal, and generating the transformed output signal including the generated second transformed output signal and a second partial signal which is a remaining part of the first transformed output signal other than the first partial signal; and
modifying the first transformed output signal.

**20.** A program for causing a computer to execute a decoding method including:

entropy decoding a coded signal to generate decoded quantized coefficients;
inverse quantizing the decoded quantized coefficients to generate a decoded transformed output signal; and
inverse transforming the decoded transformed output signal to generate a decoded signal,
wherein the inverse transforming includes:
generating a first decoded partial signal by performing, using the second inverse transform coefficient, a second inverse transform on a second decoded transformed output signal which is a part of the decoded transformed output signal;
generating the decoded signal by performing, using a first inverse transform coefficient, a first transform on a first decoded transformed output signal including the first decoded partial signal and a second decoded partial signal which is a remaining part of the decoded transformed output signal other than the second decoded transformed output signal; and
modifying the first decoded partial signal.

FIG. 1

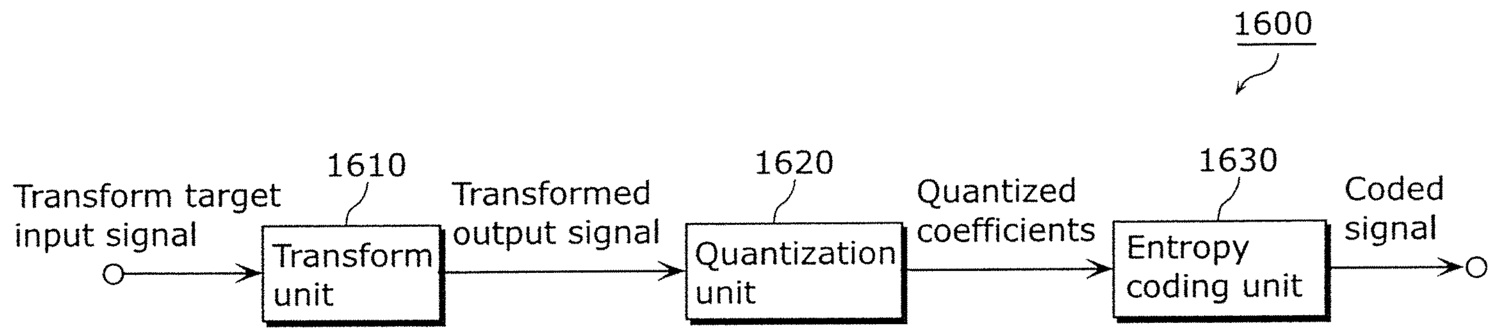


FIG. 2

| The number of dimensions of input signal | DCT | KLT | Ratio |
|---|---|---|---|
| 4 | 8 | 16 | 2.0 |
| 8 | 24 | 64 | 2.6 |
| 16 | 64 | 256 | 4.0 |
| M | M * log2 (M) | M * M | |

FIG. 3

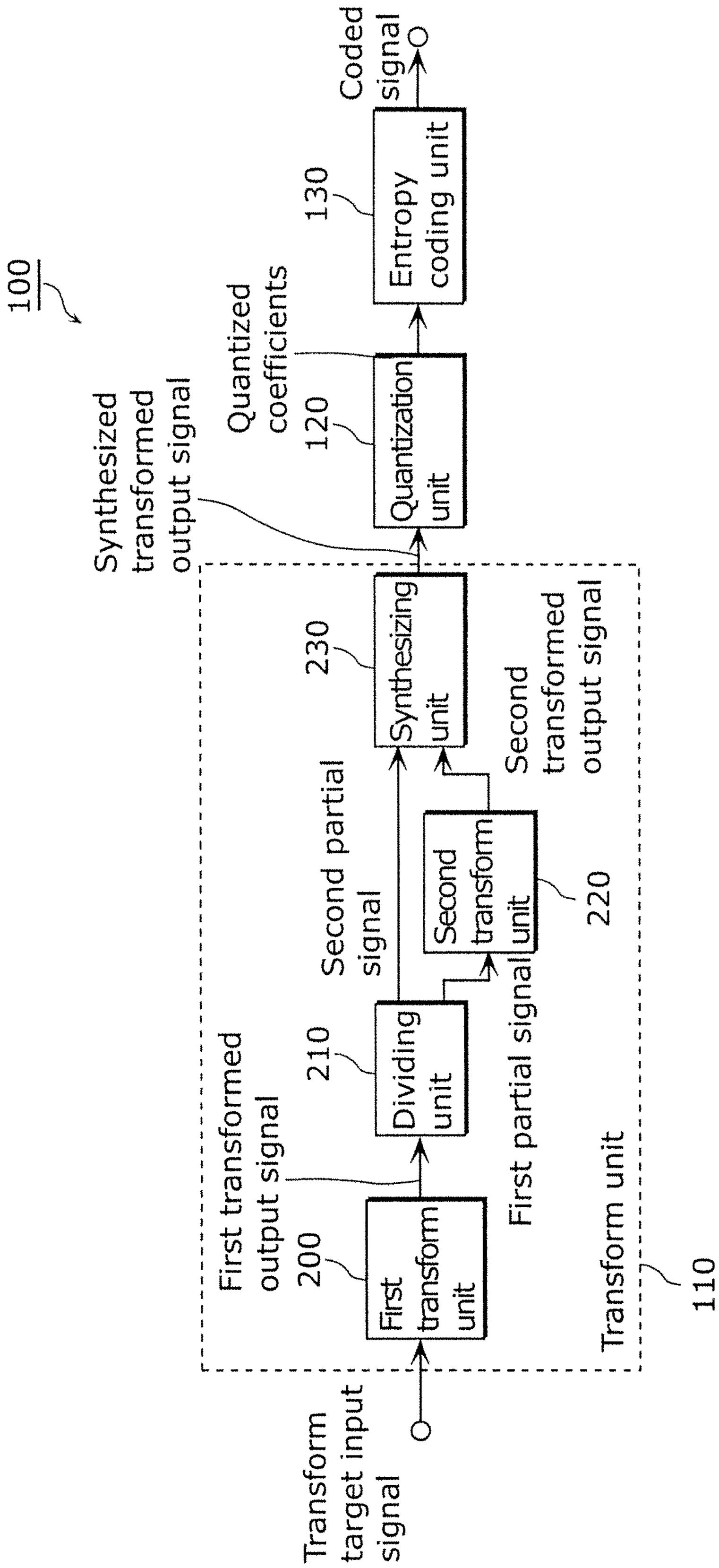
100
Transform target input signal
First transform unit
200
First transformed output signal
Dividing unit
210
Second partial signal
First partial signal
Second transform unit
220
Synthesizing unit
230
Second transformed output signal
Transform unit
110
Synthesized transformed output signal
Quantization unit
120
Quantized coefficients
Entropy coding unit
130
Coded signal

FIG. 4

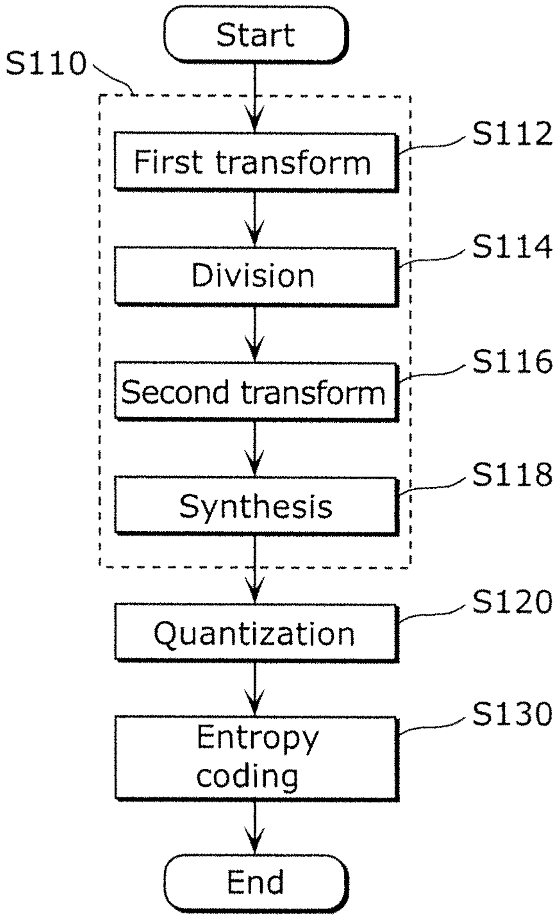
Start
S110
First transform
S112
Division
S114
Second transform
S116
Synthesis
S118
Quantization
S120
Entropy coding
S130
End

FIG. 5A

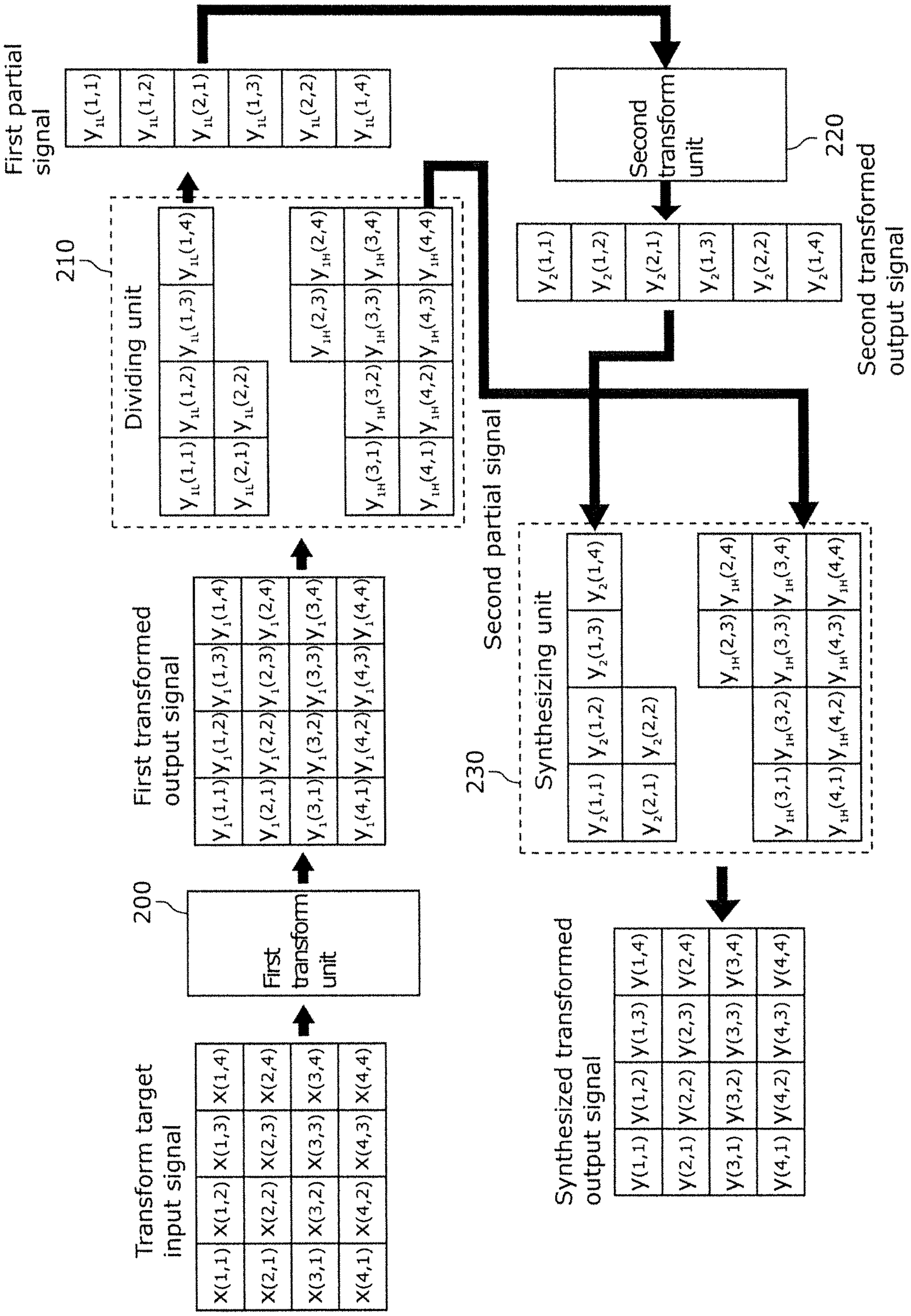
Transform target input signal
First transform unit
200
First transformed output signal
210
Dividing unit
First partial signal
Second partial signal
Second transform unit
220
Second transformed output signal
230
Synthesizing unit
Synthesized transformed output signal

FIG. 5B

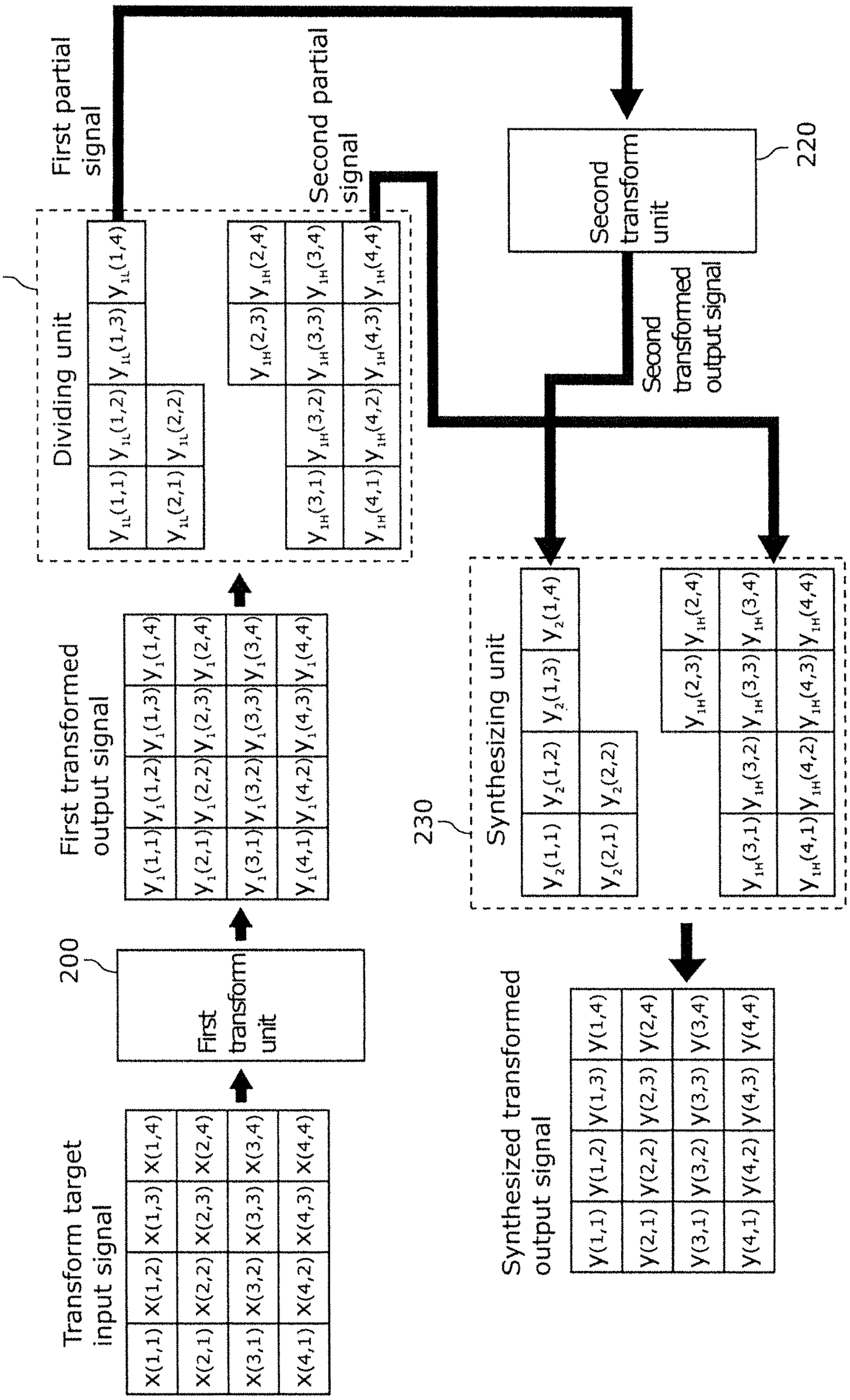
Transform target input signal
First transform unit
200
First transformed output signal
Dividing unit
210
First partial signal
Second partial signal
Second transform unit
220
Second transformed output signal
Synthesizing unit
230
Synthesized transformed output signal

FIG. 6

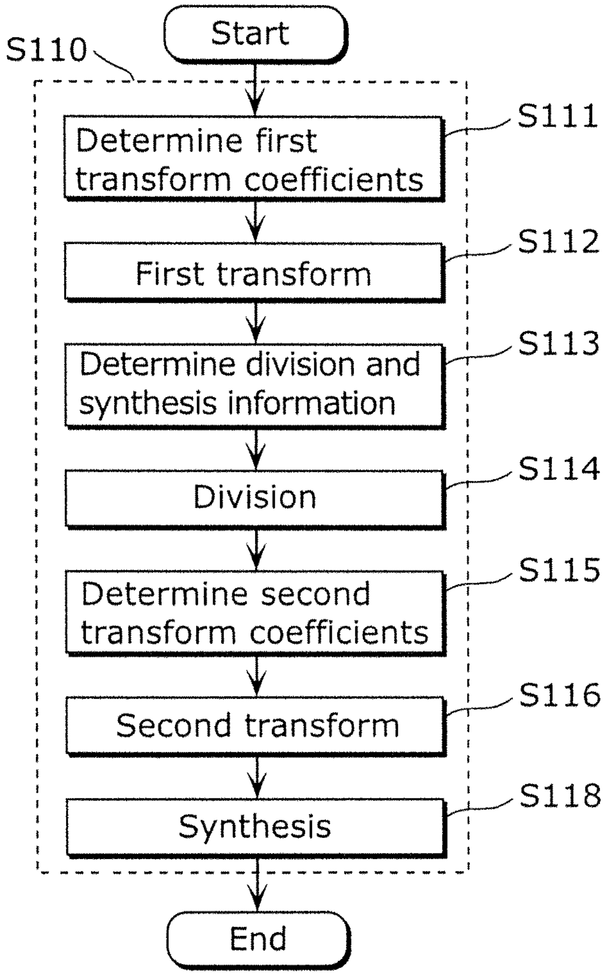
Start
S110
Determine first transform coefficients
S111
First transform
S112
Determine division and synthesis information
S113
Division
S114
Determine second transform coefficients
S115
Second transform
S116
Synthesis
S118
End

FIG. 7

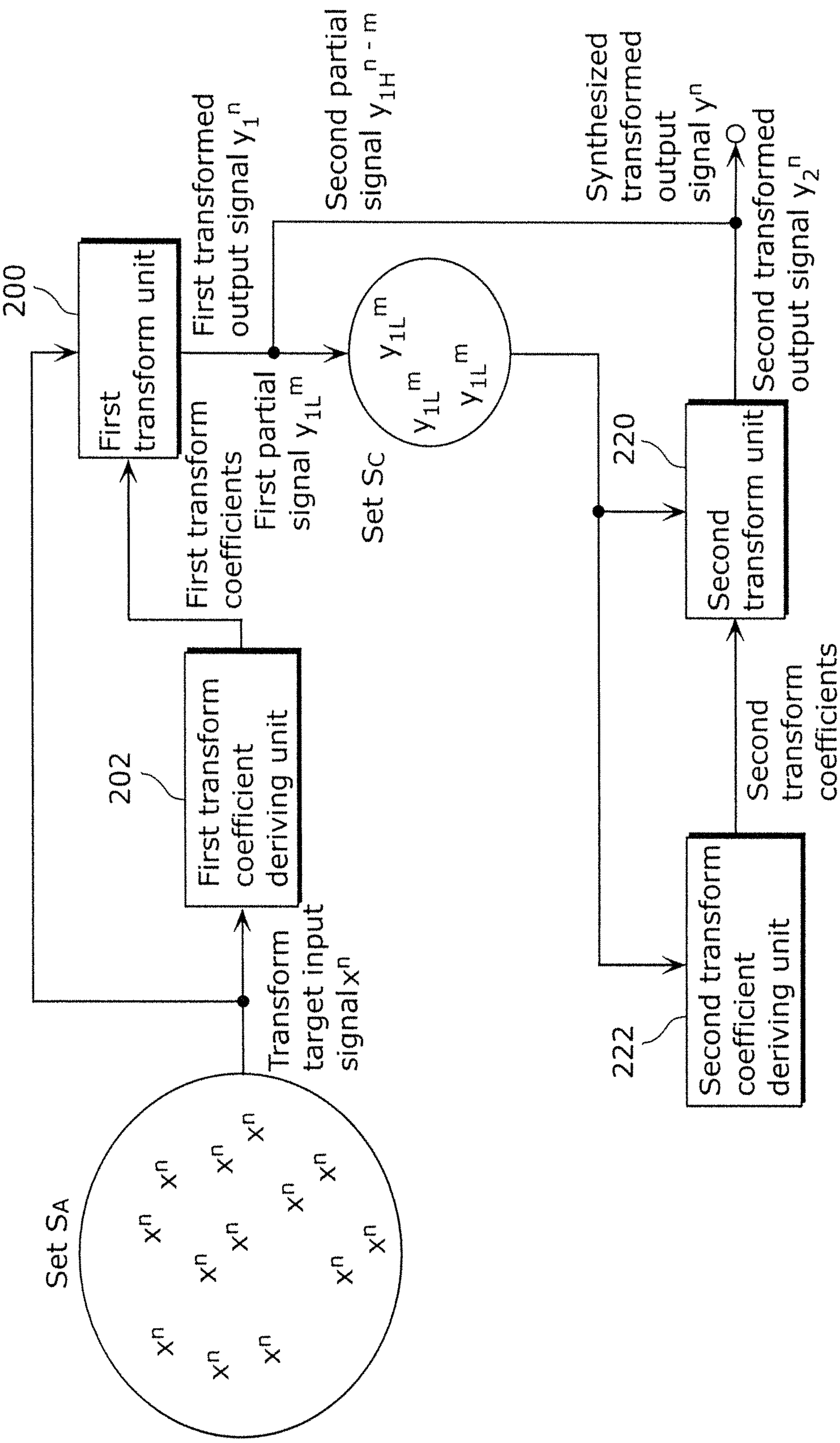
Set $S_A$
$x^n$
Transform target input signal $x^n$
202
First transform coefficient deriving unit
First transform coefficients
200
First transform unit
First transformed output signal $y_1^n$
First partial signal $y_{1L}^m$
Set $S_C$
$y_{1L}^m$
Second partial signal $y_{1H}^{n-m}$
222
Second transform coefficient deriving unit
Second transform coefficients
220
Second transform unit
Second transformed output signal $y_2^n$
Synthesized transformed output signal $y^n$

FIG. 8

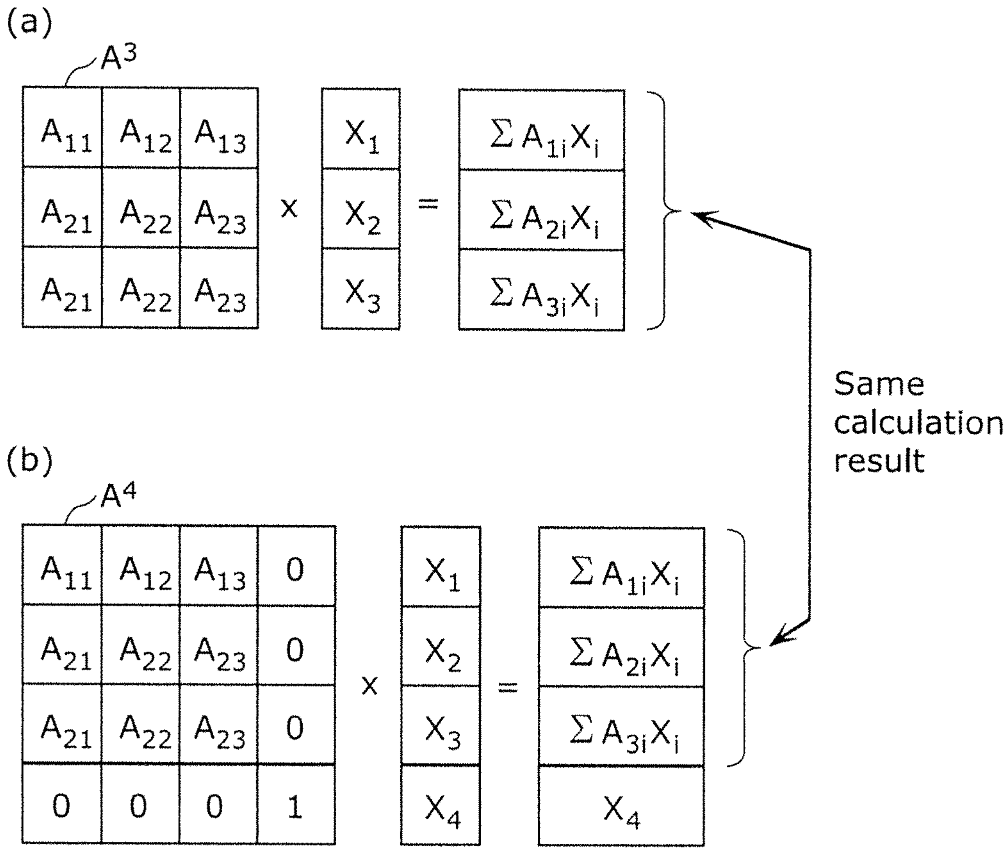
(a)
A3
A11
A12
A13
A21
A22
A23
A21
A22
A23
x
X1
X2
X3
=
Σ A1iXi
Σ A2iXi
Σ A3iXi
Same calculation result
(b)
A4
A11
A12
A13
0
A21
A22
A23
0
A21
A22
A23
0
0
0
0
1
x
X1
X2
X3
X4
=
Σ A1iXi
Σ A2iXi
Σ A3iXi
X4

FIG. 9

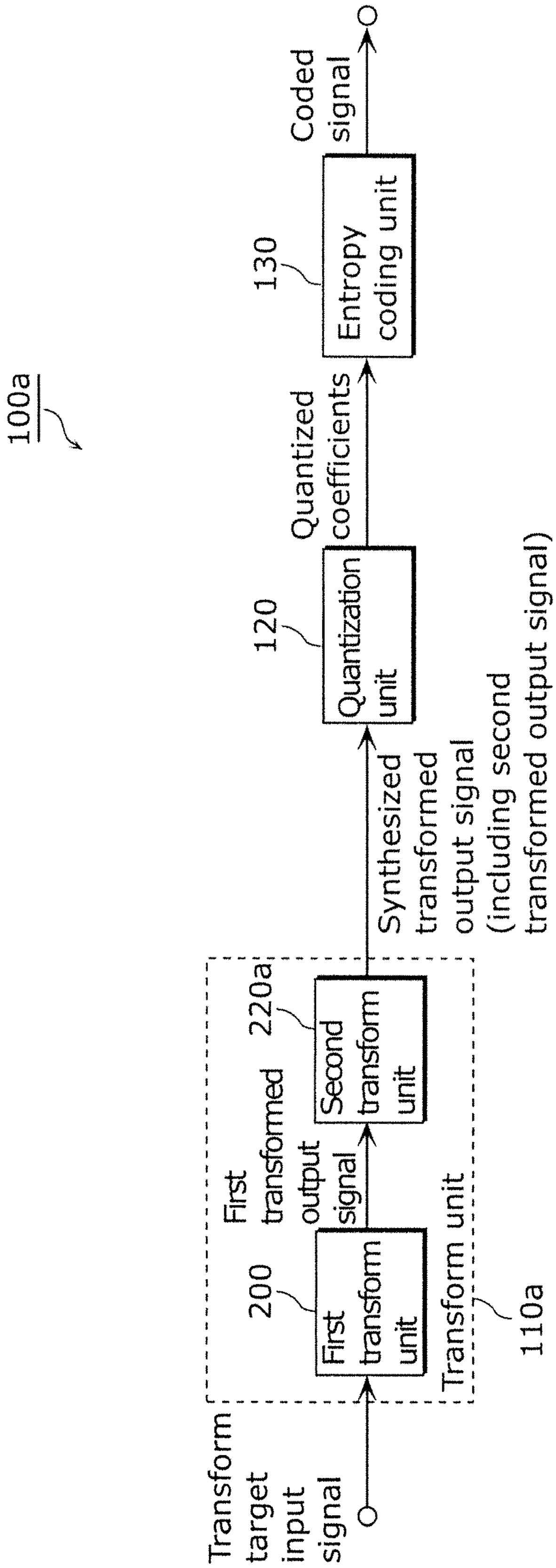
100a
Transform target input signal
200
First transform unit
First transformed output signal
220a
Second transform unit
Transform unit
110a
Synthesized transformed output signal (including second transformed output signal)
120
Quantization unit
Quantized coefficients
130
Entropy coding unit
Coded signal

FIG. 10

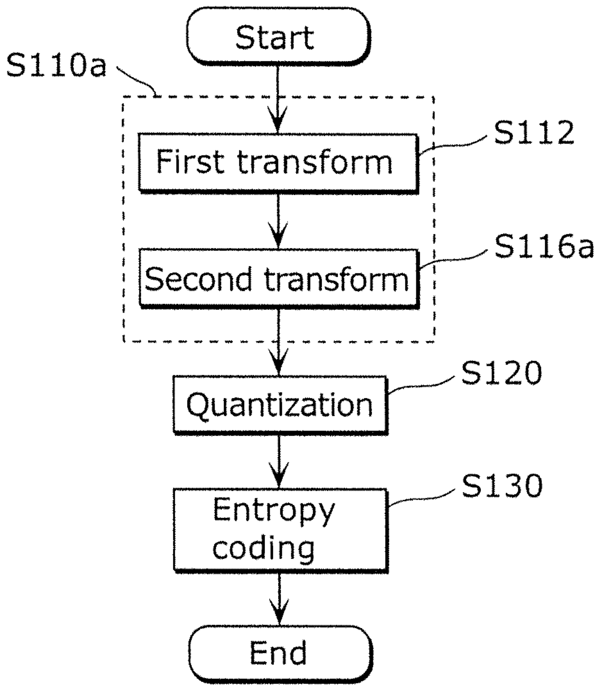
Start
S110a
First transform
S112
Second transform
S116a
Quantization
S120
Entropy coding
S130
End

FIG. 11A

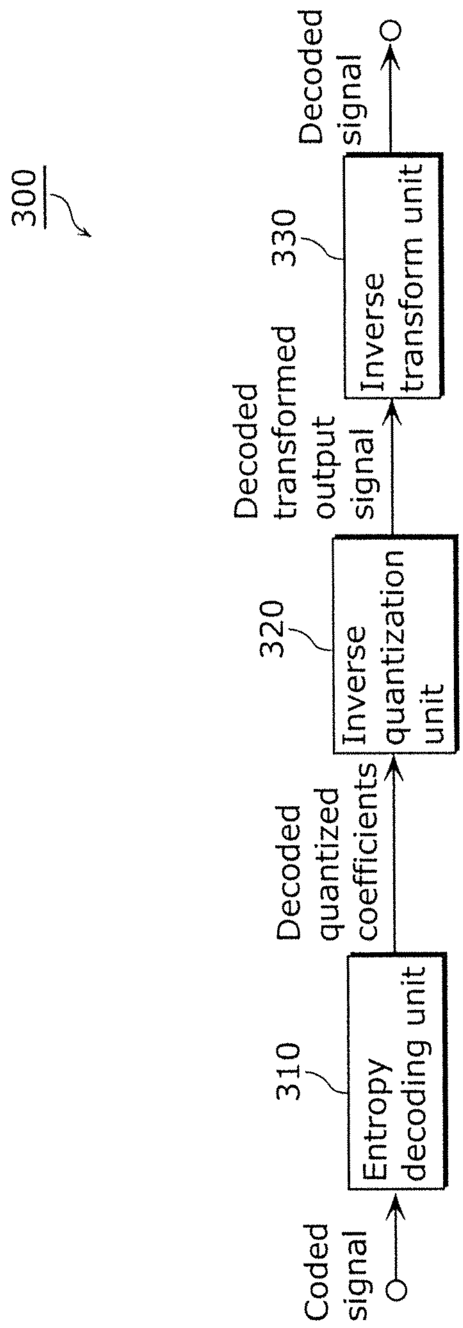
300
Coded signal
310
Entropy decoding unit
Decoded quantized coefficients
320
Inverse quantization unit
Decoded transformed output signal
330
Inverse transform unit
Decoded signal

FIG. 11B

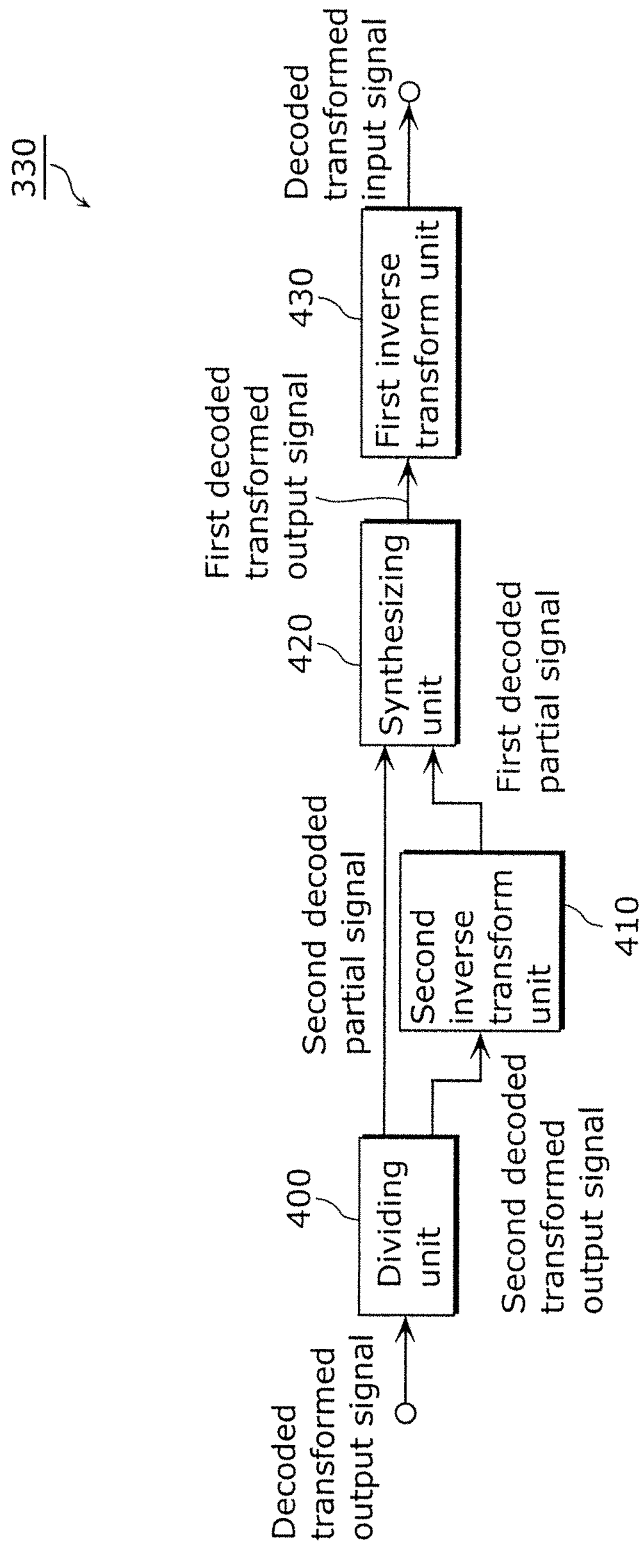
330
Decoded transformed output signal
400
Dividing unit
Second decoded partial signal
Second decoded transformed output signal
Second inverse transform unit
410
First decoded partial signal
420
Synthesizing unit
First decoded transformed output signal
430
First inverse transform unit
Decoded transformed input signal

FIG. 12

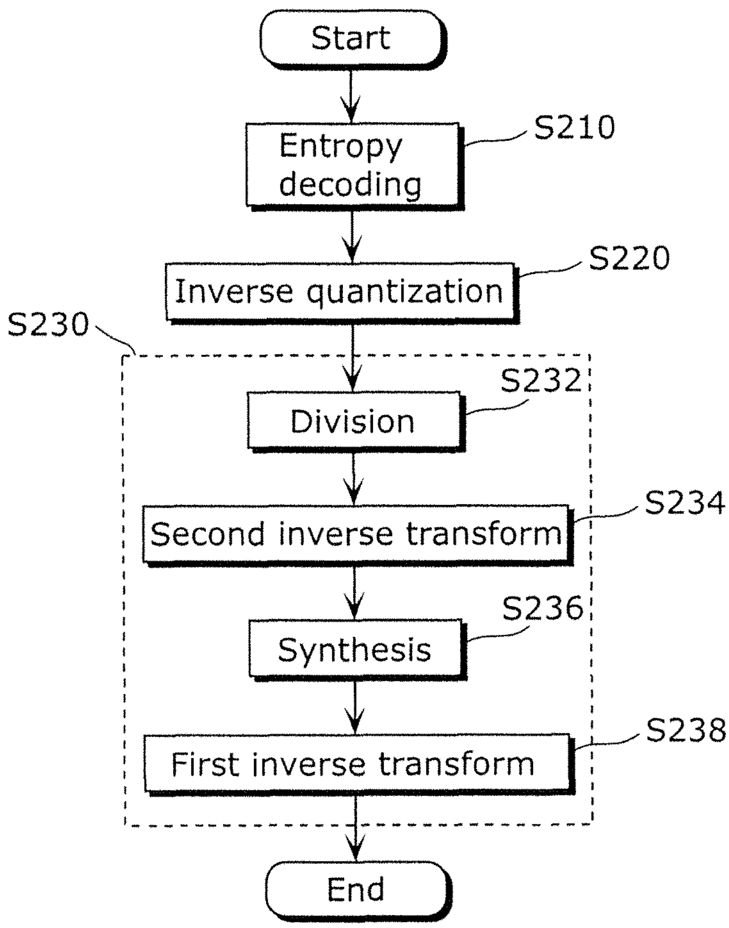
Start
Entropy decoding
S210
Inverse quantization
S220
S230
Division
S232
Second inverse transform
S234
Synthesis
S236
First inverse transform
S238
End

FIG. 13A

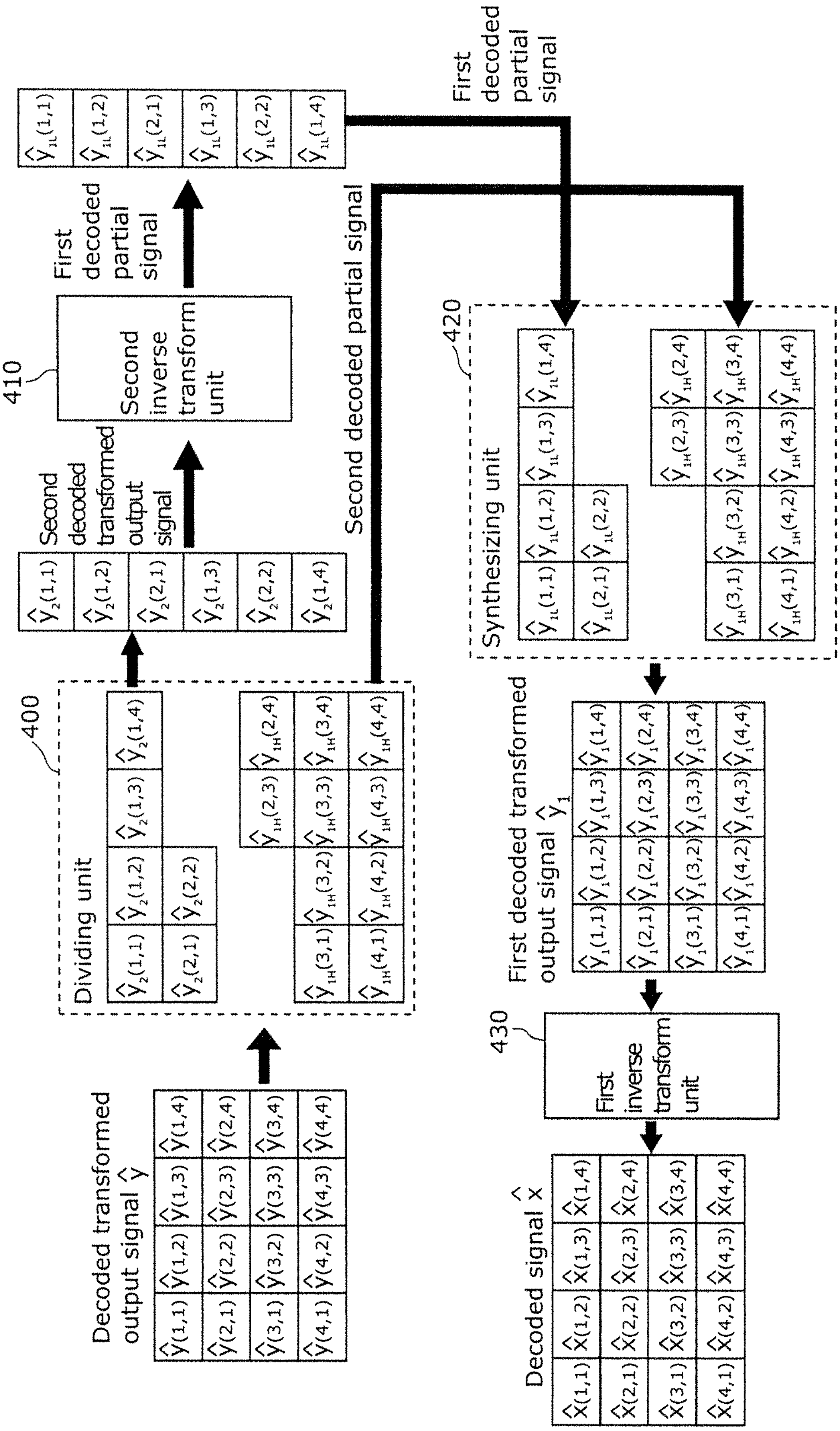
Decoded transformed output signal ŷ
400
Dividing unit
Second decoded transformed output signal
410
Second inverse transform unit
First decoded partial signal
Second decoded partial signal
First decoded partial signal
420
Synthesizing unit
First decoded transformed output signal ŷ1
430
First inverse transform unit
Decoded signal x̂

FIG. 13B

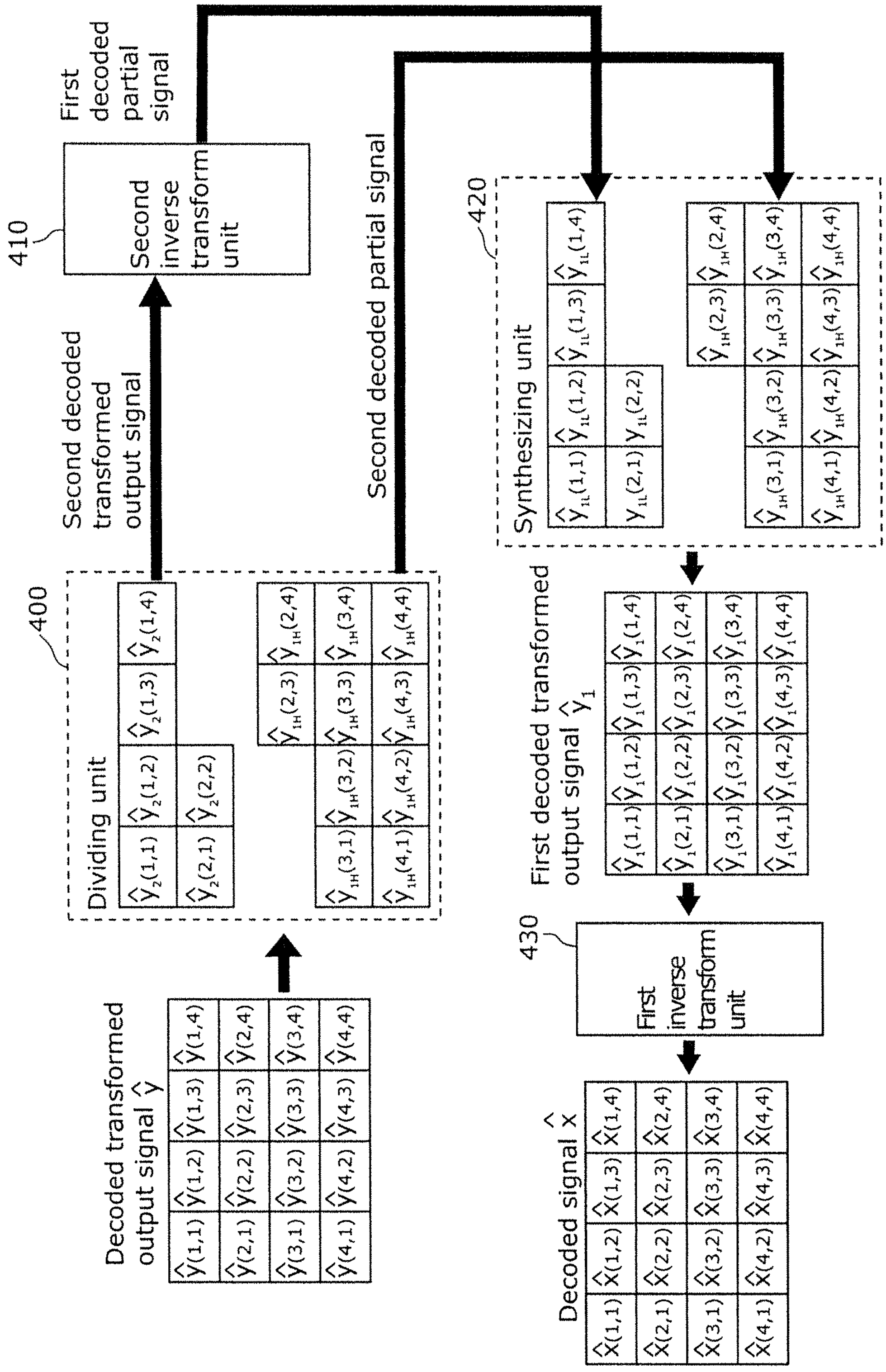
First decoded partial signal
410
Second inverse transform unit
Second decoded transformed output signal
Second decoded partial signal
400
Dividing unit
420
Synthesizing unit
Decoded transformed output signal ŷ
First decoded transformed output signal ŷ1
430
First inverse transform unit
Decoded signal x̂

FIG. 14

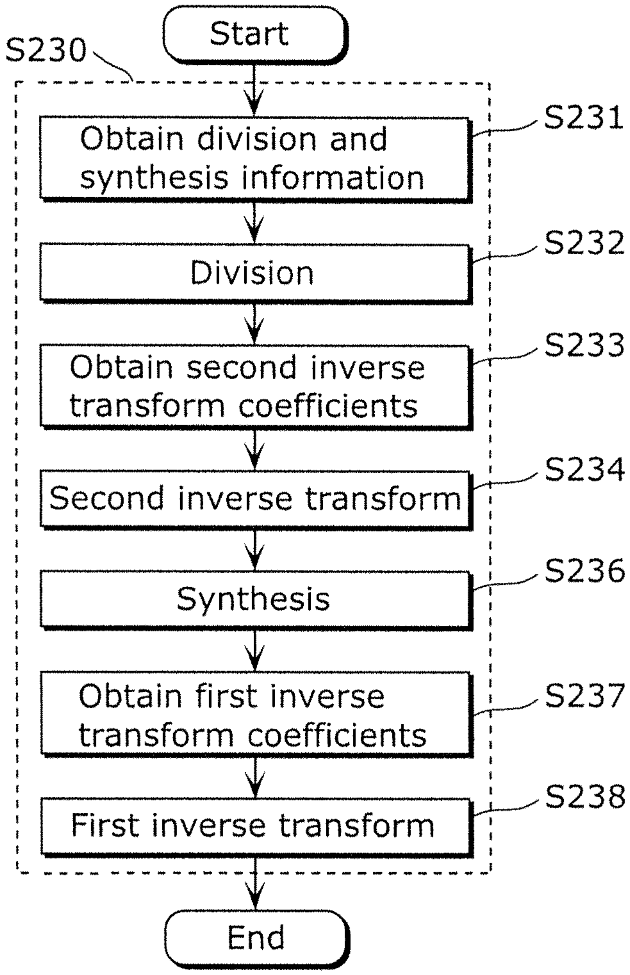
Start
S230
Obtain division and synthesis information
S231
Division
S232
Obtain second inverse transform coefficients
S233
Second inverse transform
S234
Synthesis
S236
Obtain first inverse transform coefficients
S237
First inverse transform
S238
End

FIG. 15

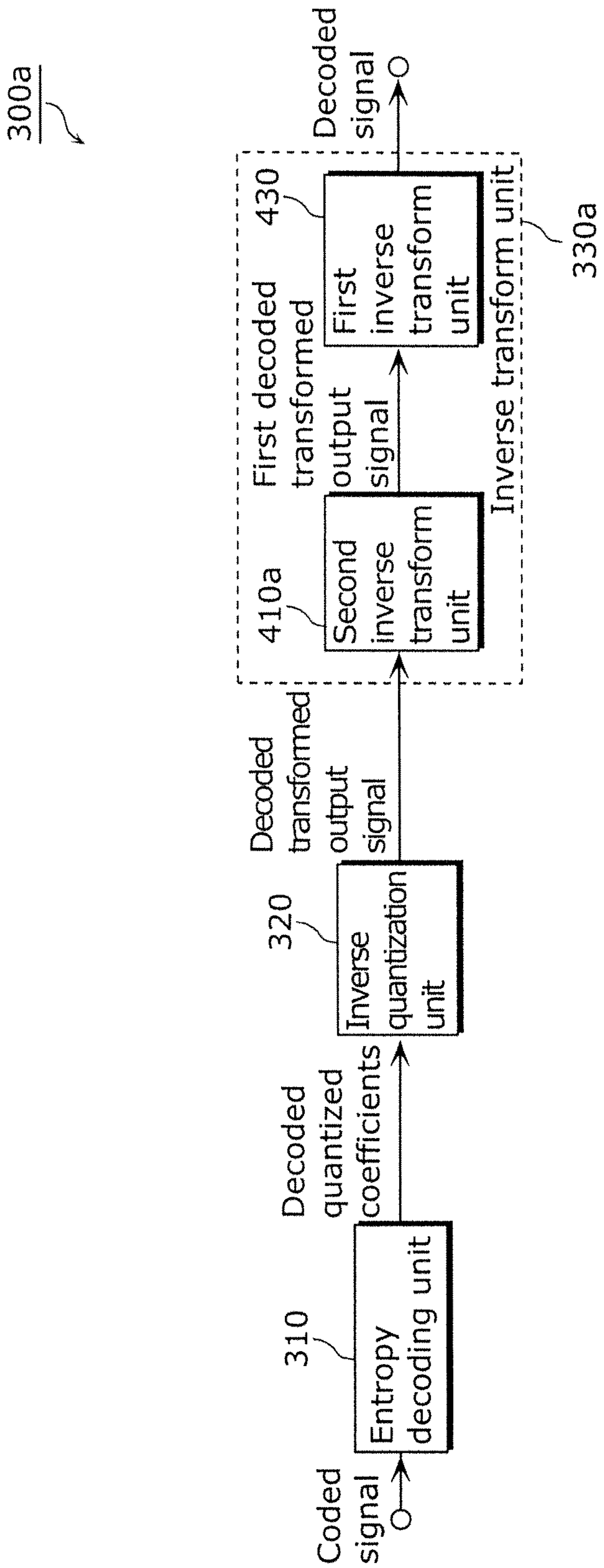
300a
Coded signal
310
Entropy decoding unit
Decoded quantized coefficients
320
Inverse quantization unit
Decoded transformed output signal
410a
Second inverse transform unit
First decoded transformed output signal
430
First inverse transform unit
Inverse transform unit
330a
Decoded signal

FIG. 16

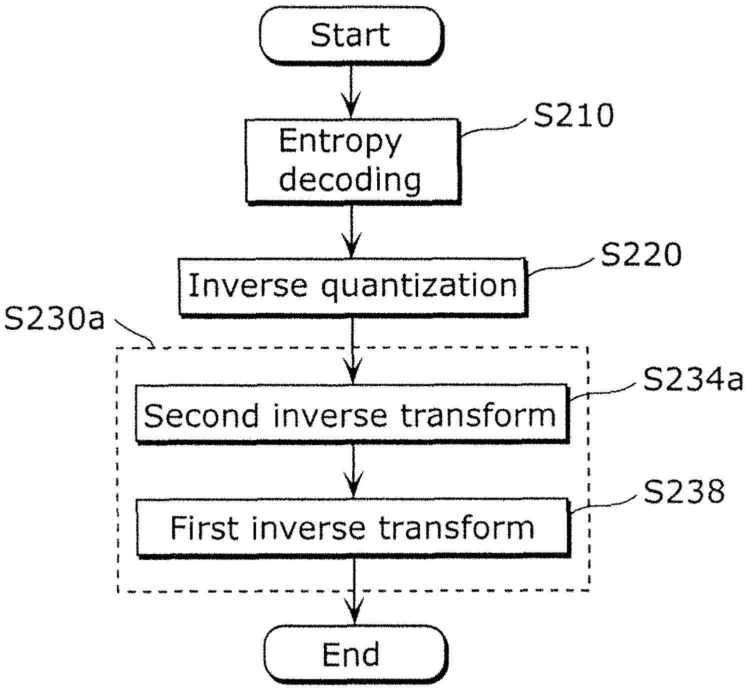
Start
Entropy decoding
S210
Inverse quantization
S220
S230a
Second inverse transform
S234a
First inverse transform
S238
End

FIG. 17

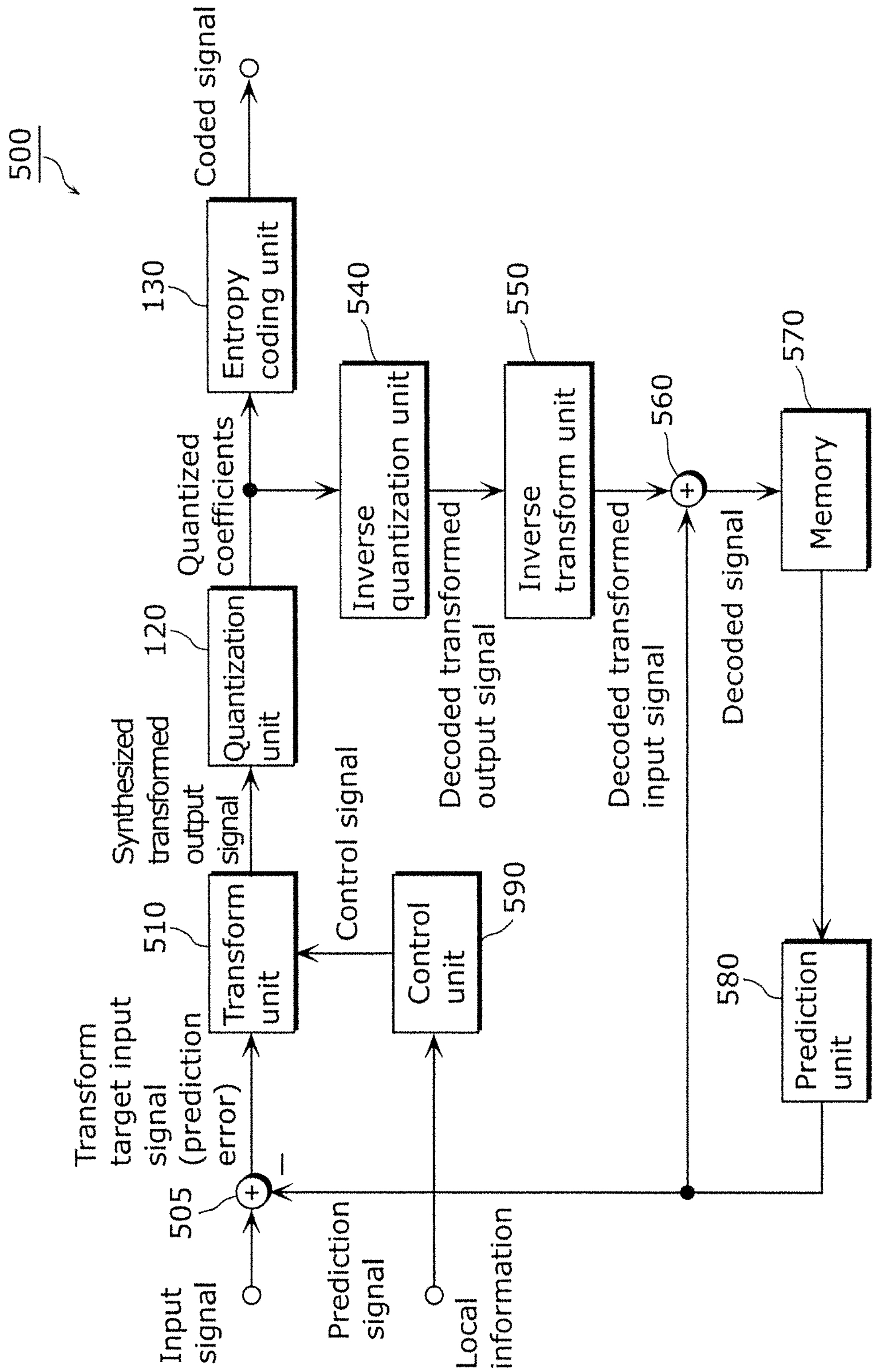
500
Input signal
505
Prediction signal
Local information
Transform target input signal (prediction error)
510
Transform unit
Control unit
590
Control signal
Synthesized transformed output signal
120
Quantization unit
Quantized coefficients
130
Entropy coding unit
Coded signal
540
Inverse quantization unit
Decoded transformed output signal
550
Inverse transform unit
Decoded transformed input signal
560
Decoded signal
570
Memory
580
Prediction unit

FIG. 18

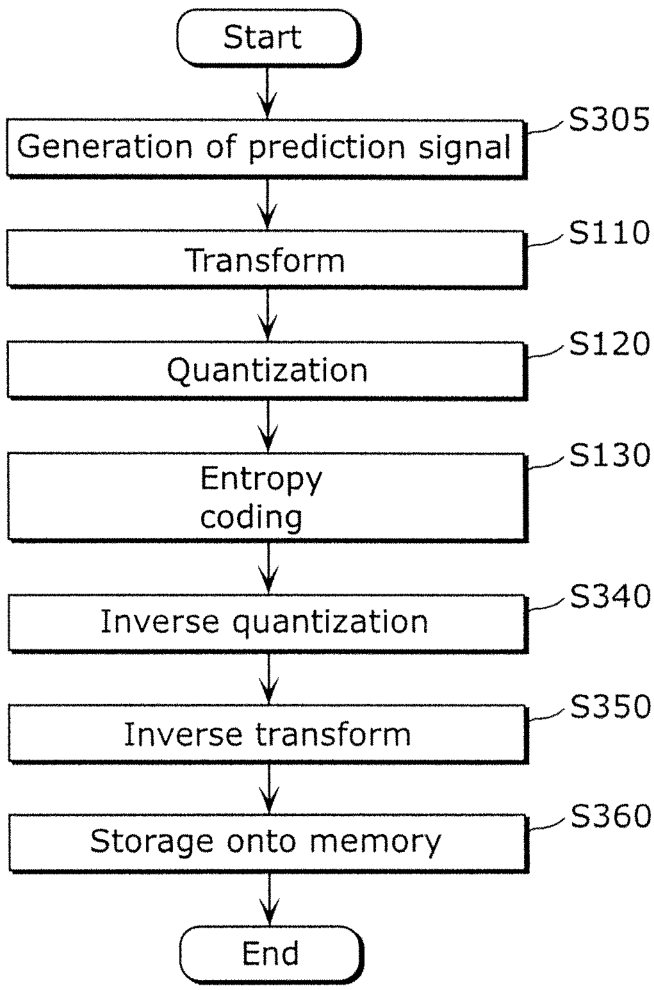
Start
Generation of prediction signal
S305
Transform
S110
Quantization
S120
Entropy coding
S130
Inverse quantization
S340
Inverse transform
S350
Storage onto memory
S360
End

FIG. 19

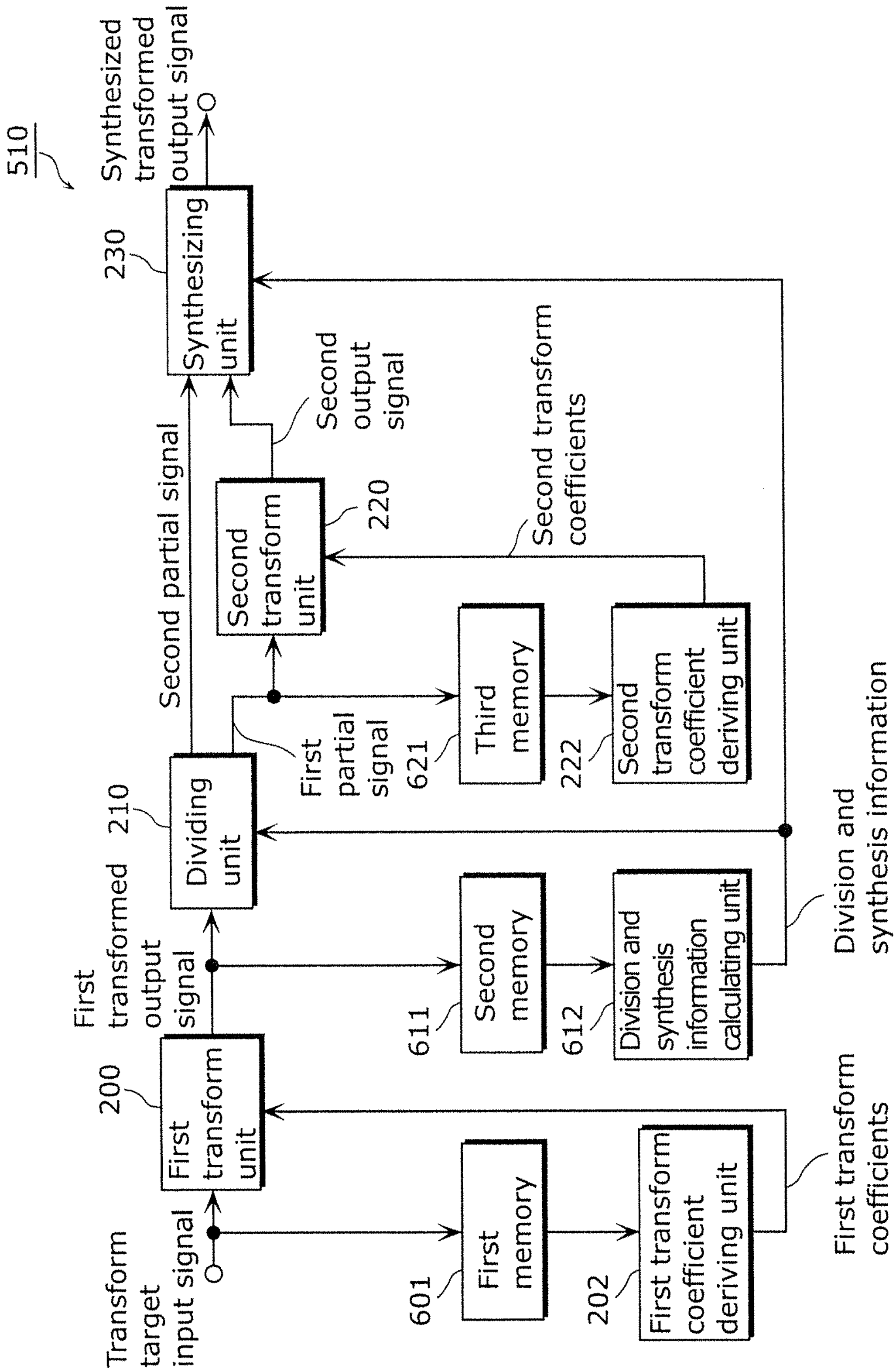
510
Transform target input signal
200
First transform unit
First transformed output signal
601
First memory
202
First transform coefficient deriving unit
First transform coefficients
611
Second memory
612
Division and synthesis information calculating unit
Division and synthesis information
210
Dividing unit
First partial signal
Second partial signal
621
Third memory
222
Second transform coefficient deriving unit
Second transform coefficients
220
Second transform unit
Second output signal
230
Synthesizing unit
Synthesized transformed output signal

FIG. 20

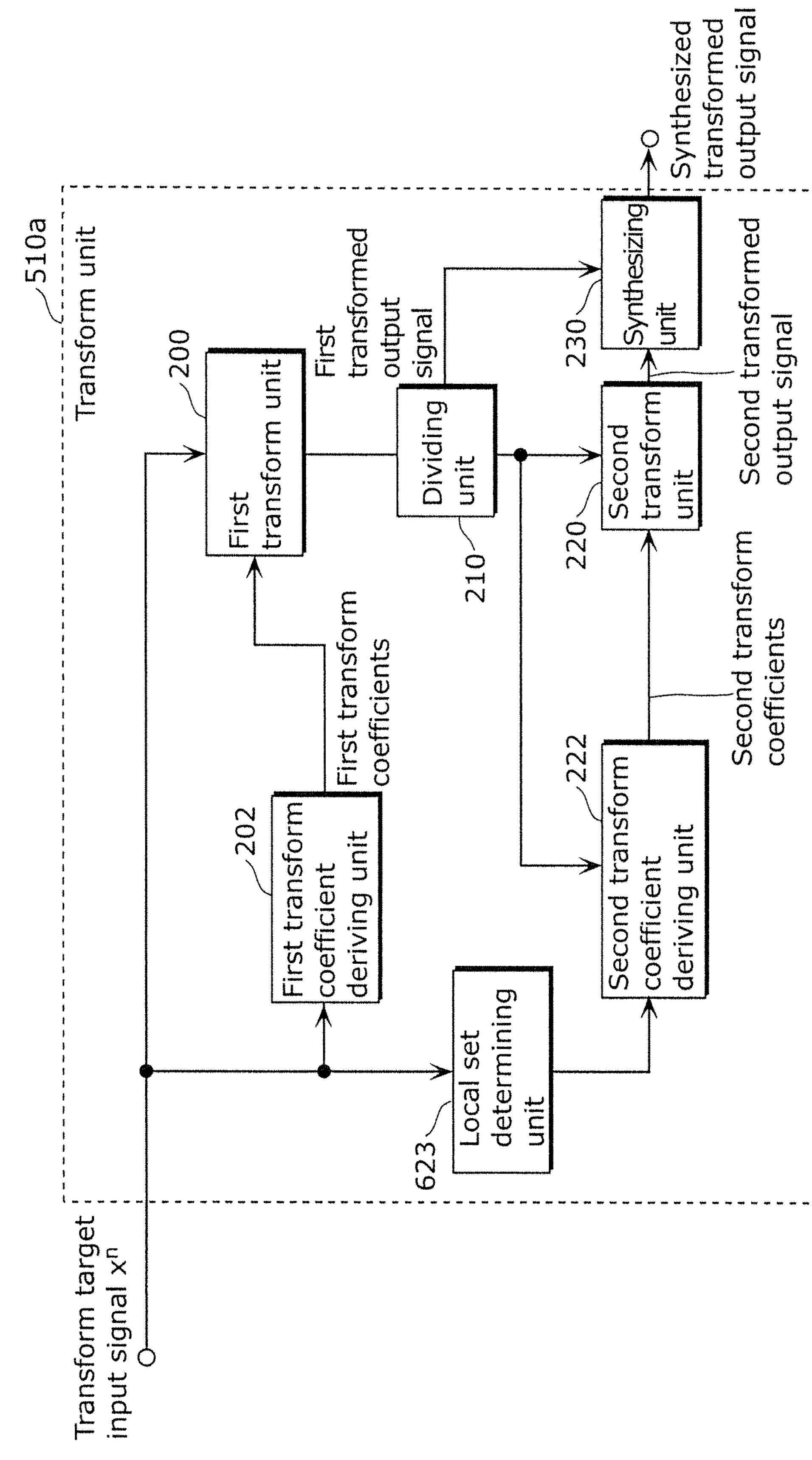
510a
Transform unit
Transform target input signal $x^n$
200
First transform unit
202
First transform coefficient deriving unit
First transform coefficients
First transformed output signal
210
Dividing unit
220
Second transform unit
222
Second transform coefficient deriving unit
Second transform coefficients
Second transformed output signal
230
Synthesizing unit
Synthesized transformed output signal
623
Local set determining unit

FIG. 21

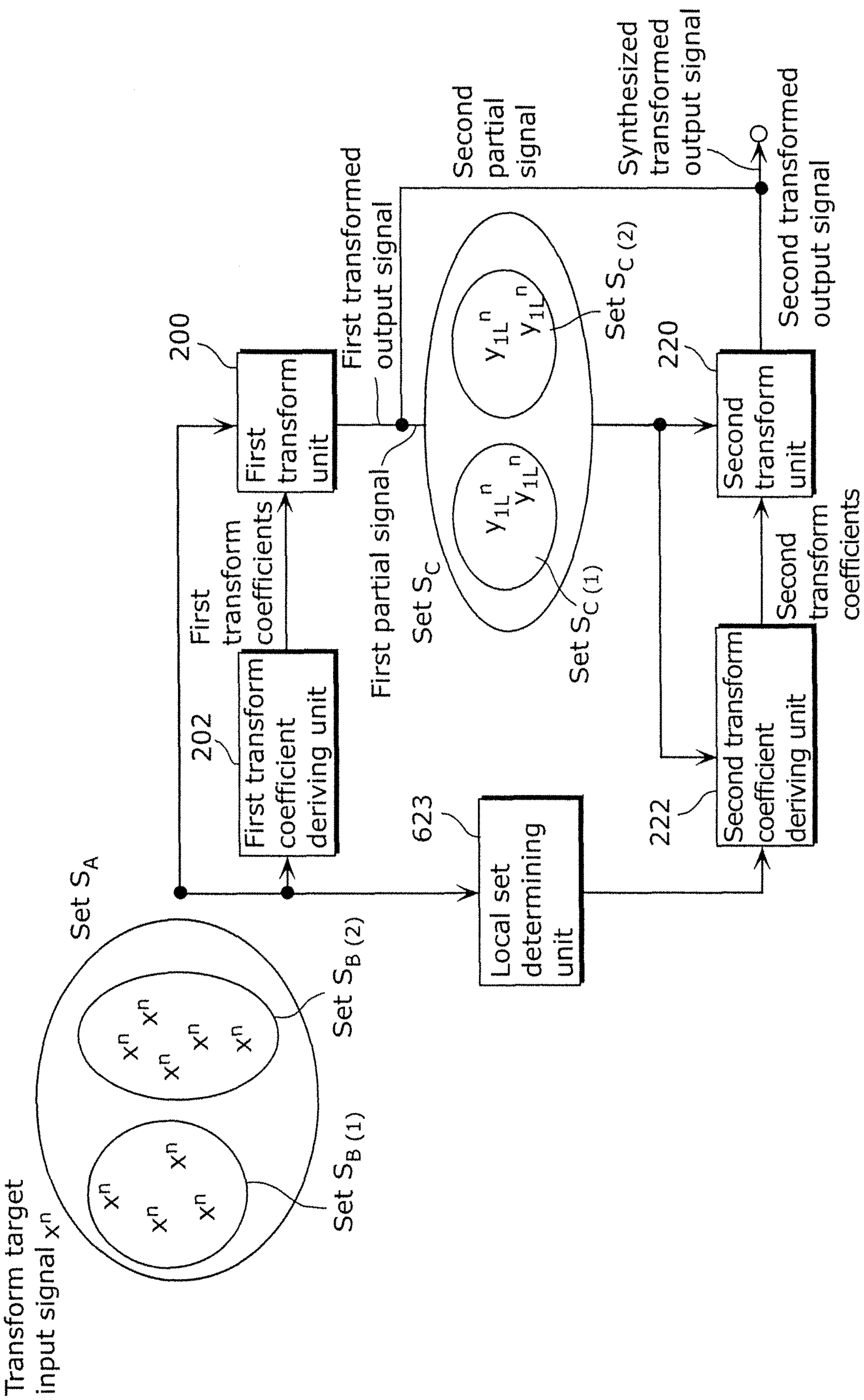
Transform target input signal $x^n$
Set $S_A$
Set $S_{B(1)}$
Set $S_{B(2)}$
$x^n$
200
First transform unit
202
First transform coefficient deriving unit
First transform coefficients
623
Local set determining unit
First transformed output signal
First partial signal
Set $S_C$
Set $S_{C(1)}$
Set $S_{C(2)}$
$y_{1L}^n$
Second partial signal
220
Second transform unit
222
Second transform coefficient deriving unit
Second transform coefficients
Synthesized transformed output signal
Second transformed output signal

FIG. 22

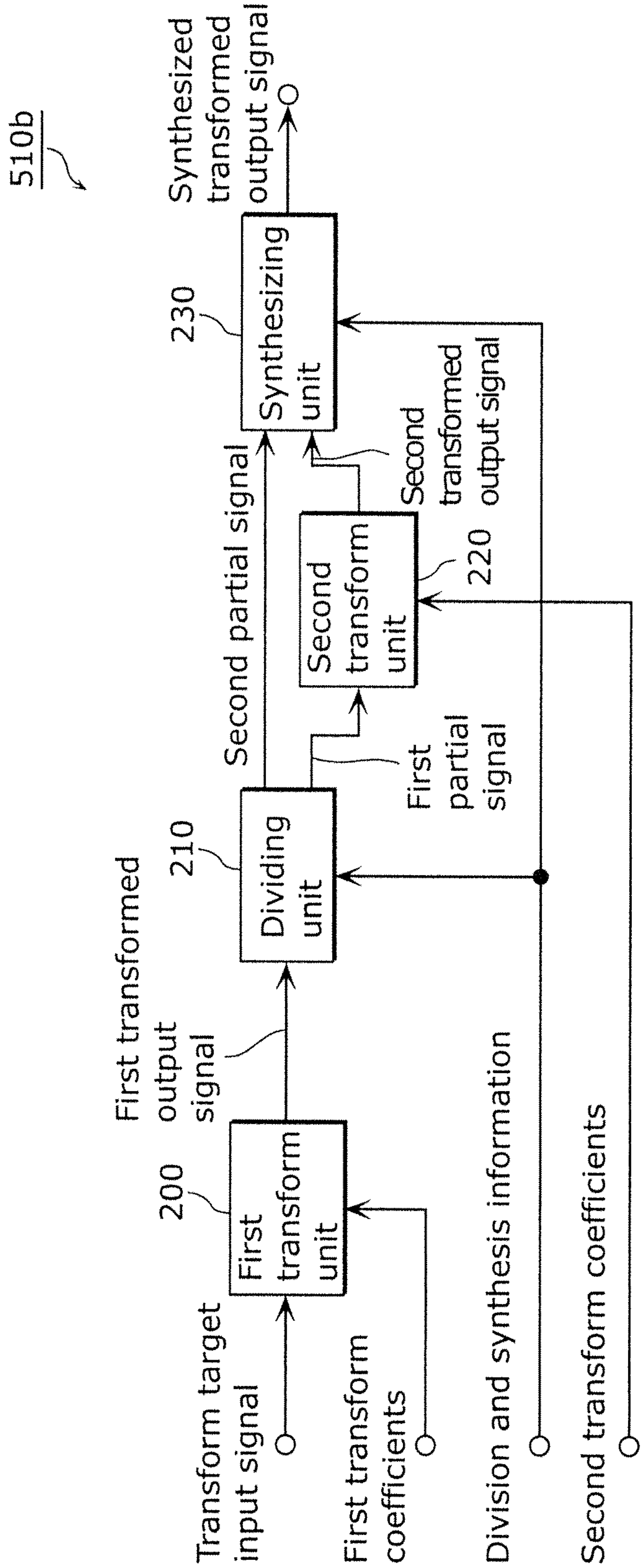
510b
Transform target input signal
First transform coefficients
Division and synthesis information
Second transform coefficients
200
First transform unit
First transformed output signal
210
Dividing unit
First partial signal
Second partial signal
220
Second transform unit
Second transformed output signal
230
Synthesizing unit
Synthesized transformed output signal

FIG. 23

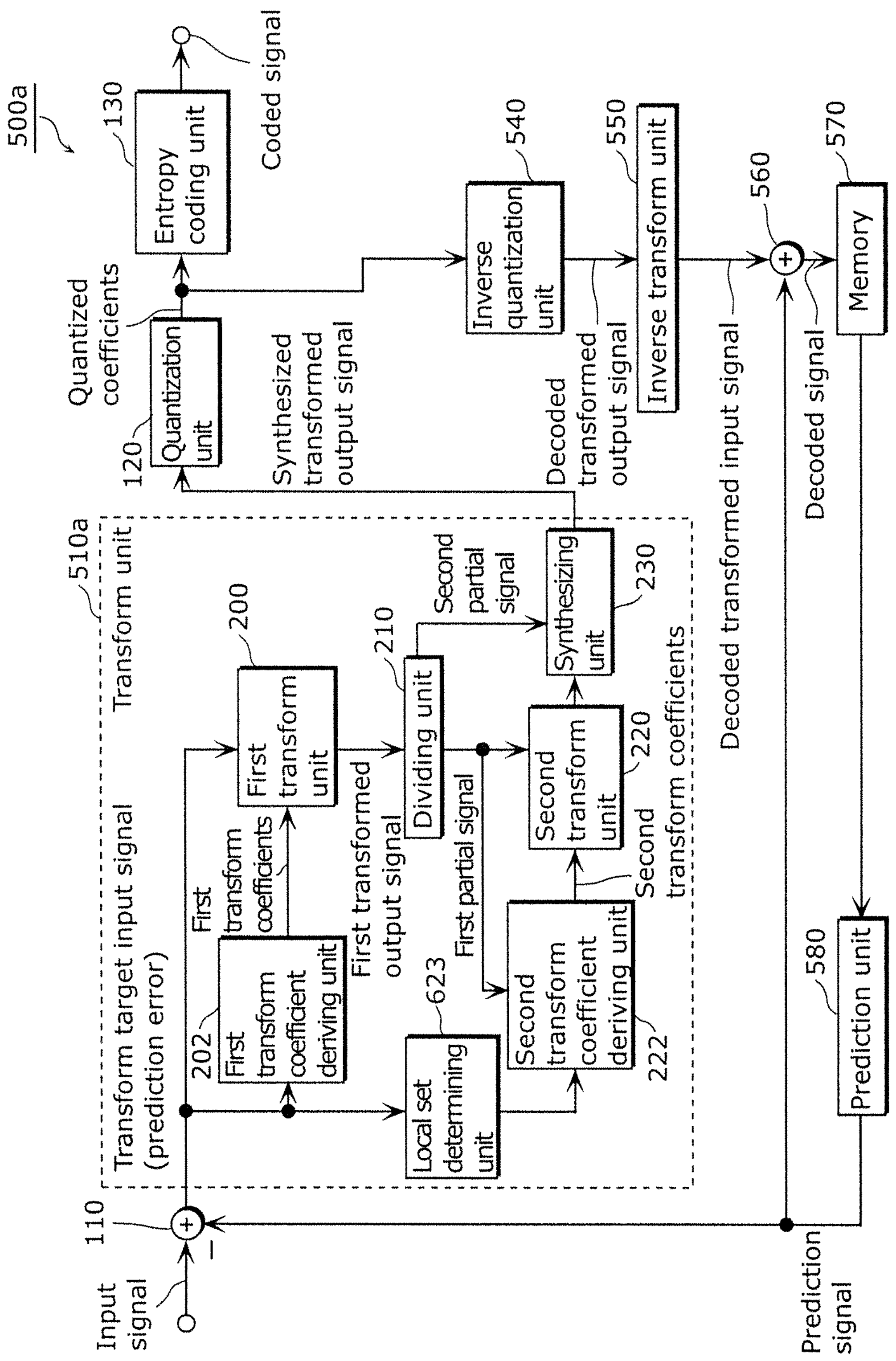

500a
Entropy coding unit
130
Coded signal
Quantized coefficients
Quantization unit
120
Synthesized transformed output signal
Inverse quantization unit
540
Inverse transform unit
550
Decoded transformed output signal
Decoded transformed input signal
560
Memory
570
Decoded signal
510a
Transform unit
Transform target input signal (prediction error)
First transform unit
200
Dividing unit
210
Second partial signal
Synthesizing unit
230
First transformed output signal
First partial signal
Second transform unit
220
Second transform coefficients
First transform coefficients
First transform coefficient deriving unit
202
Local set determining unit
623
Second transform coefficient deriving unit
222
Prediction unit
580
110
Input signal
Prediction signal

FIG. 24A

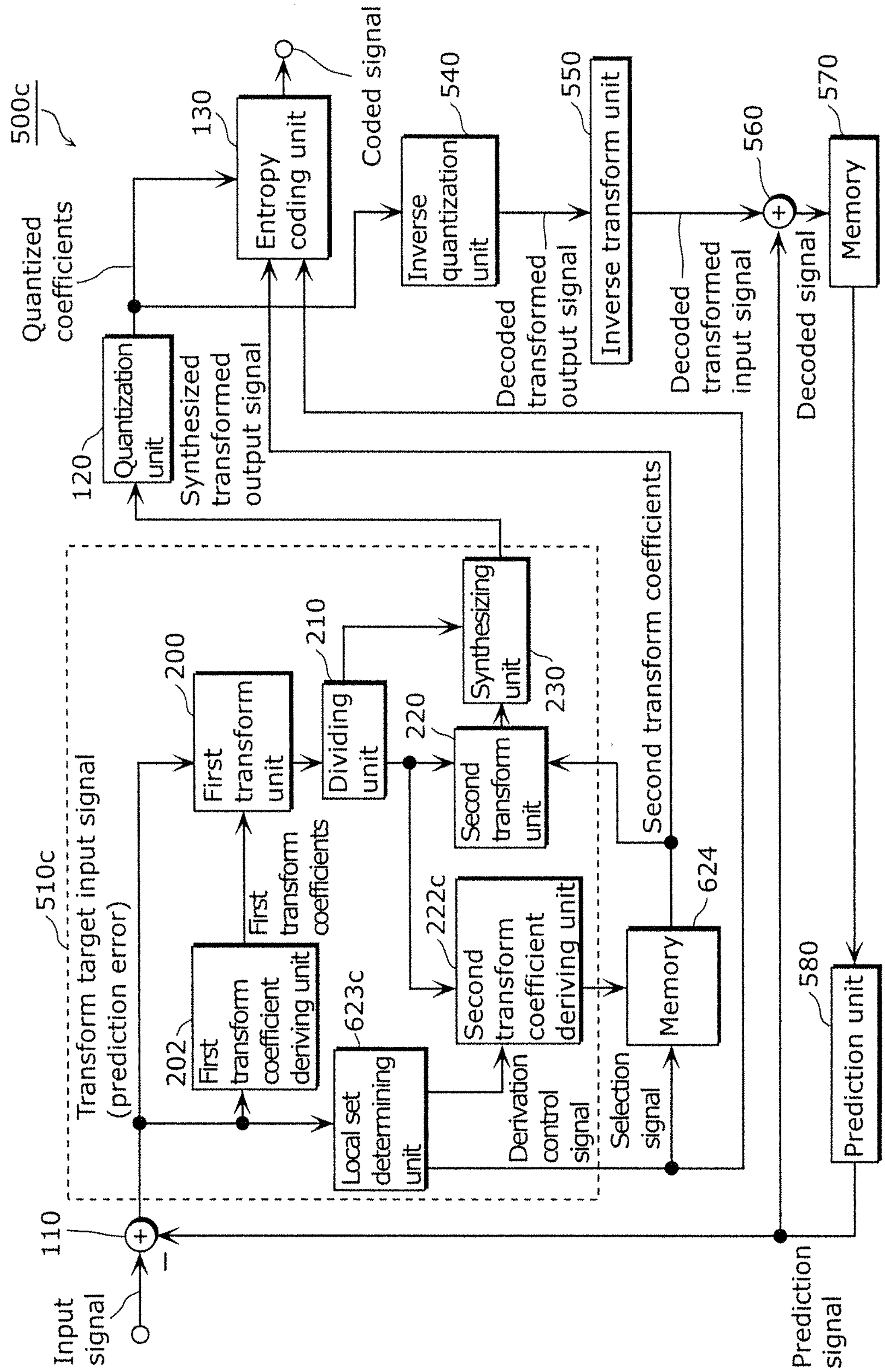
500c
Input signal
110
Transform target input signal (prediction error)
510c
First transform coefficient deriving unit
202
First transform coefficients
First transform unit
200
Dividing unit
210
Local set determining unit
623c
Second transform coefficient deriving unit
222c
Second transform unit
220
Synthesizing unit
230
Memory
624
Derivation control signal
Selection signal
Second transform coefficients
Quantization unit
120
Quantized coefficients
Synthesized transformed output signal
Entropy coding unit
130
Coded signal
Inverse quantization unit
540
Decoded transformed output signal
Inverse transform unit
550
Decoded transformed input signal
560
Memory
570
Decoded signal
Prediction unit
580
Prediction signal

FIG. 24B

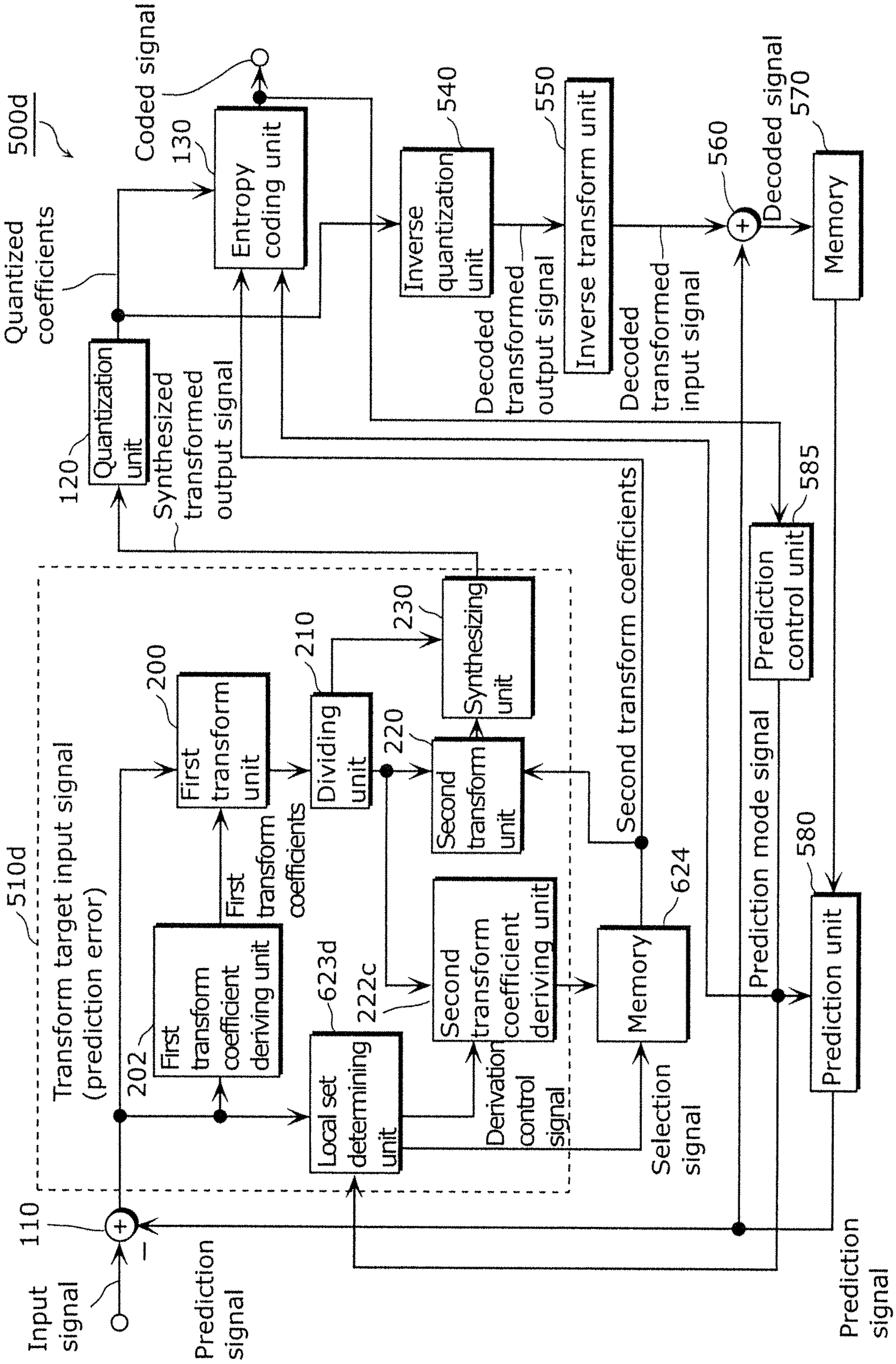
500d
510d
Input signal
110
Prediction signal
Transform target input signal (prediction error)
202
First transform coefficient deriving unit
First transform coefficients
200
First transform unit
210
Dividing unit
220
230
Synthesizing unit
Second transform unit
623d
Local set determining unit
222c
Second transform coefficient deriving unit
Derivation control signal
624
Memory
Selection signal
Second transform coefficients
Synthesized transformed output signal
120
Quantization unit
Quantized coefficients
130
Entropy coding unit
Coded signal
540
Inverse quantization unit
Decoded transformed output signal
550
Inverse transform unit
Decoded transformed input signal
560
Decoded signal
570
Memory
585
Prediction control unit
Prediction mode signal
580
Prediction unit
Prediction signal

FIG. 25

| Index | Second transform coefficients | Selection range information |
|---|---|---|
| 1 | Coefficients $a_{ij}$ of transform matrix A | Division and synthesis information A |
| 2 | Coefficients $b_{ij}$ of transform matrix B | Division and synthesis information B |
| 3 | Coefficients $c_{ij}$ of transform matrix C | Division and synthesis information C |
| ⋮ | ⋮ | ⋮ |

FIG. 26A

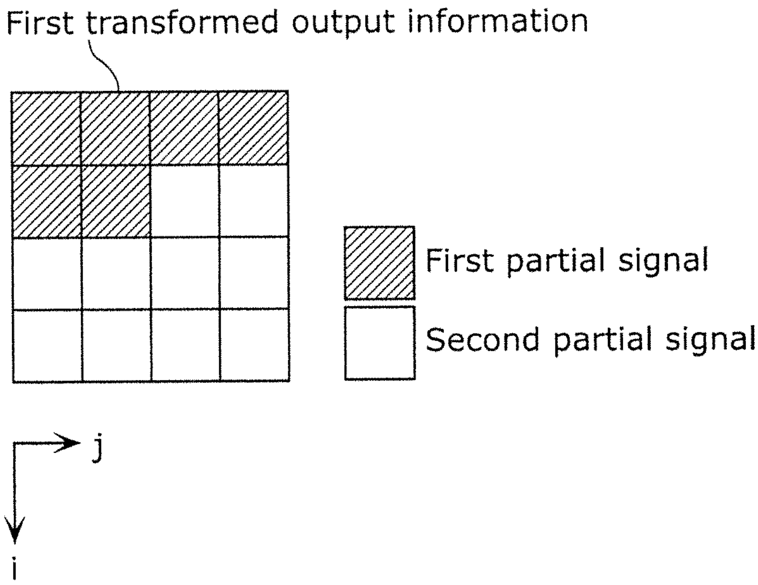

FIG. 26B

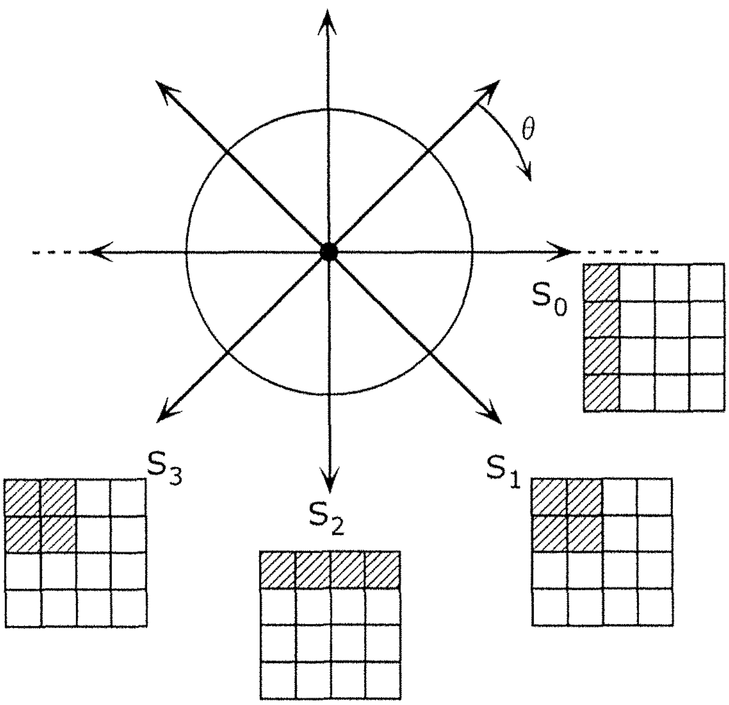

FIG. 26C

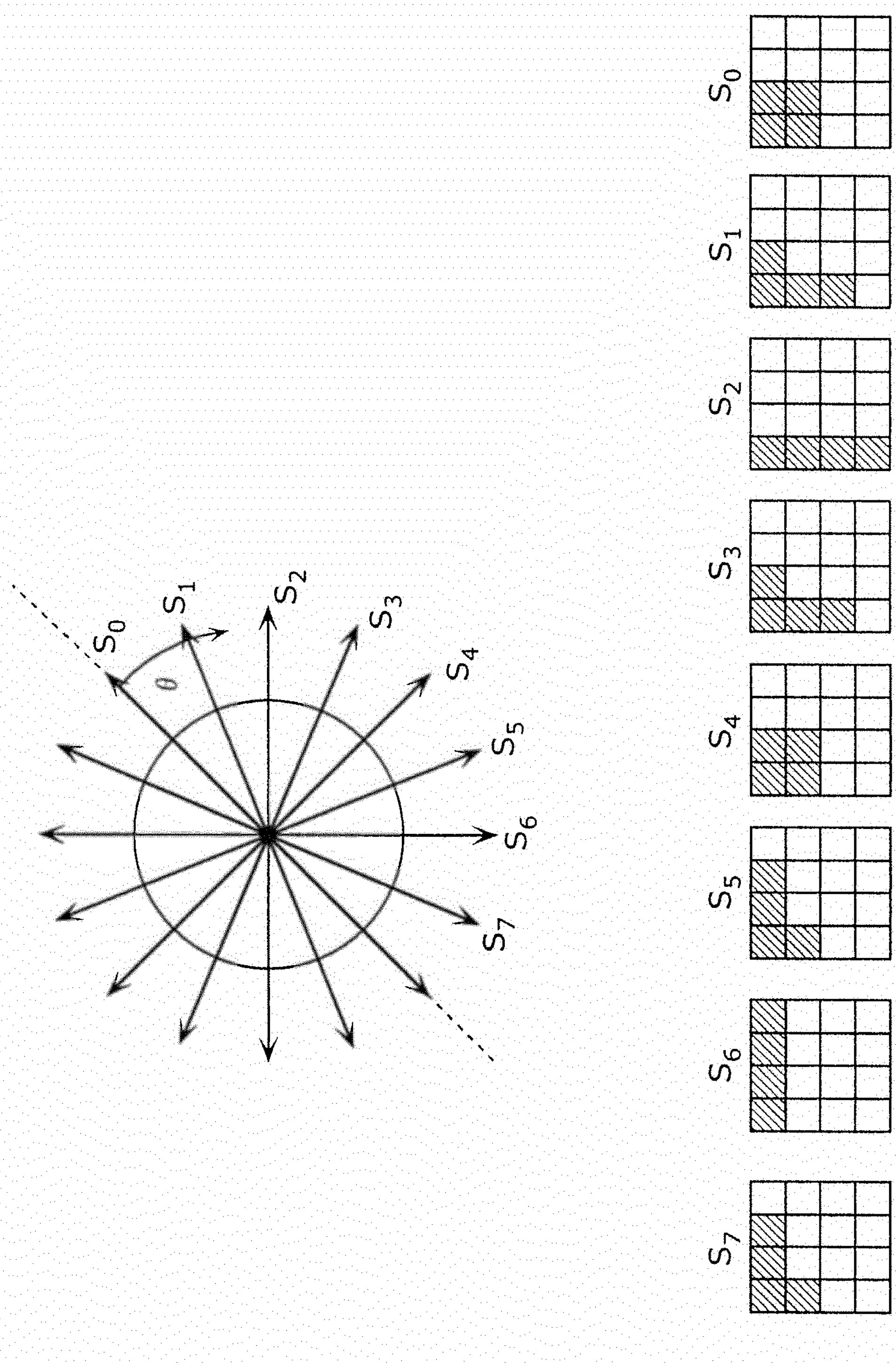

FIG. 27

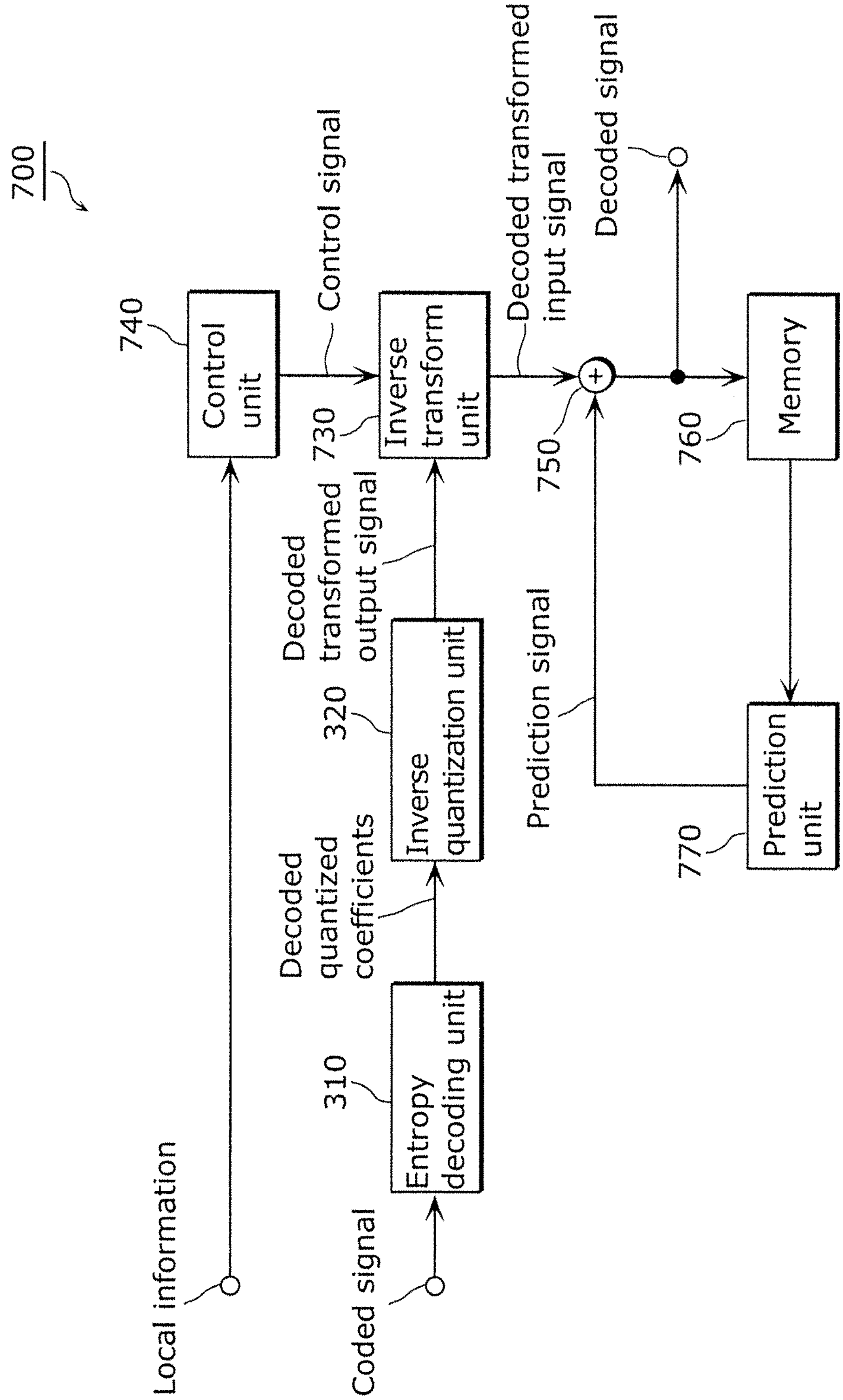
700
740
Control unit
Control signal
730
Inverse transform unit
Decoded transformed input signal
750
Decoded signal
760
Memory
Local information
Coded signal
310
Entropy decoding unit
Decoded quantized coefficients
320
Inverse quantization unit
Decoded transformed output signal
Prediction signal
770
Prediction unit

FIG. 28

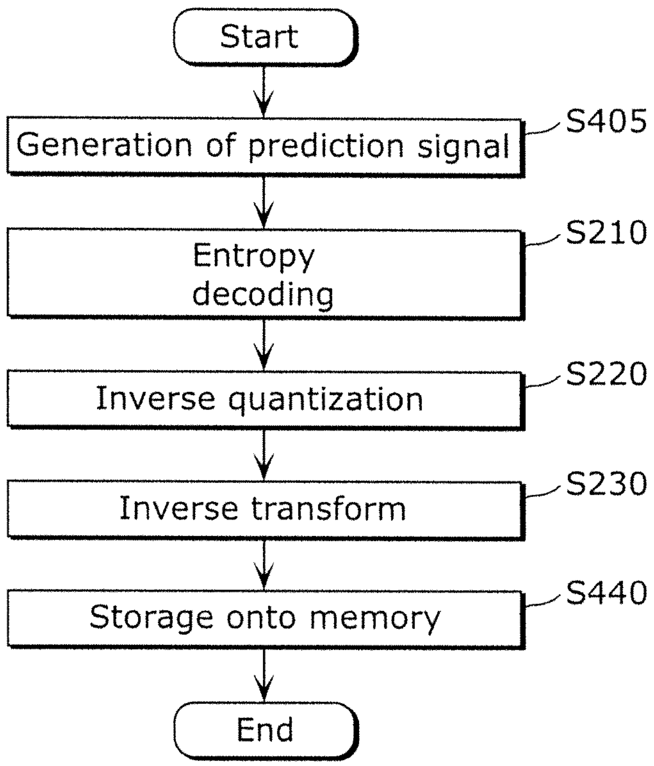
Start
Generation of prediction signal
S405
Entropy decoding
S210
Inverse quantization
S220
Inverse transform
S230
Storage onto memory
S440
End

FIG. 29

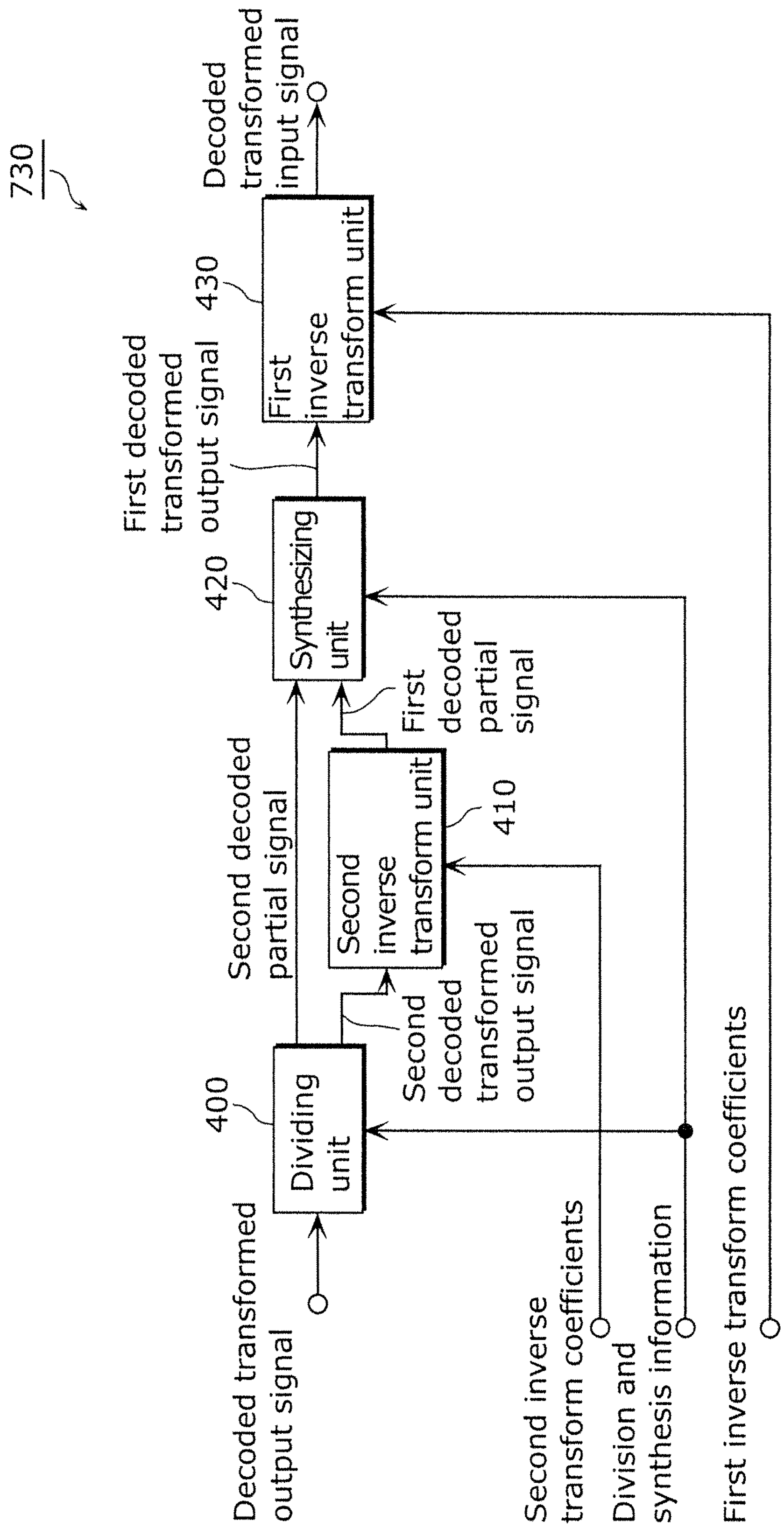
730
Decoded transformed output signal
Dividing unit
400
Second decoded partial signal
Second decoded transformed output signal
Second inverse transform unit
410
First decoded partial signal
Synthesizing unit
420
First decoded transformed output signal
First inverse transform unit
430
Decoded transformed input signal
Second inverse transform coefficients
Division and synthesis information
First inverse transform coefficients

FIG. 30

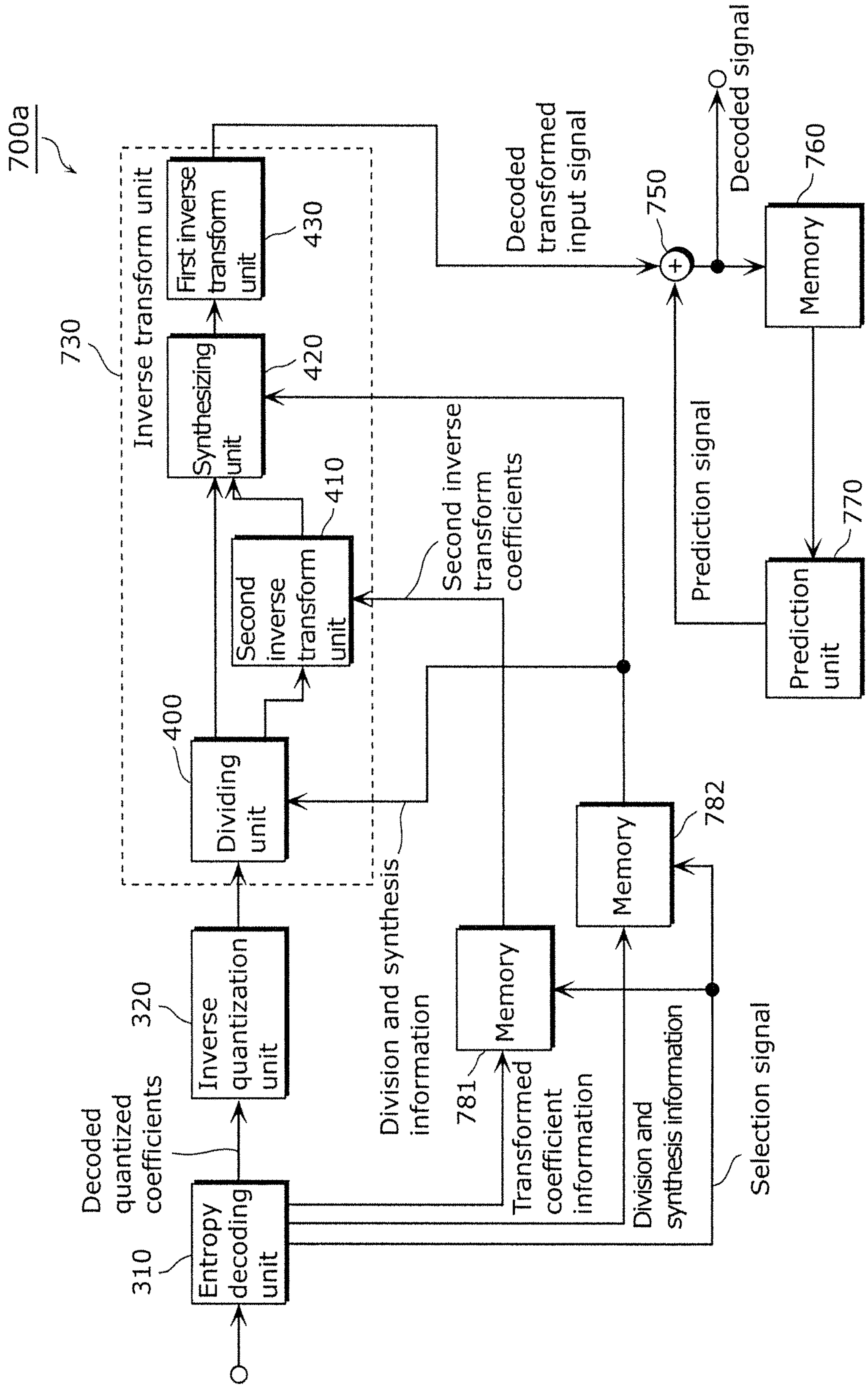
700a
730
Inverse transform unit
First inverse transform unit
430
Synthesizing unit
420
410
Second inverse transform unit
400
Dividing unit
320
Inverse quantization unit
310
Entropy decoding unit
Decoded quantized coefficients
Division and synthesis information
Second inverse transform coefficients
Memory
781
Memory
782
Transformed coefficient information
Division and synthesis information
Selection signal
Decoded transformed input signal
750
Decoded signal
Memory
760
Prediction signal
770
Prediction unit

FIG. 31

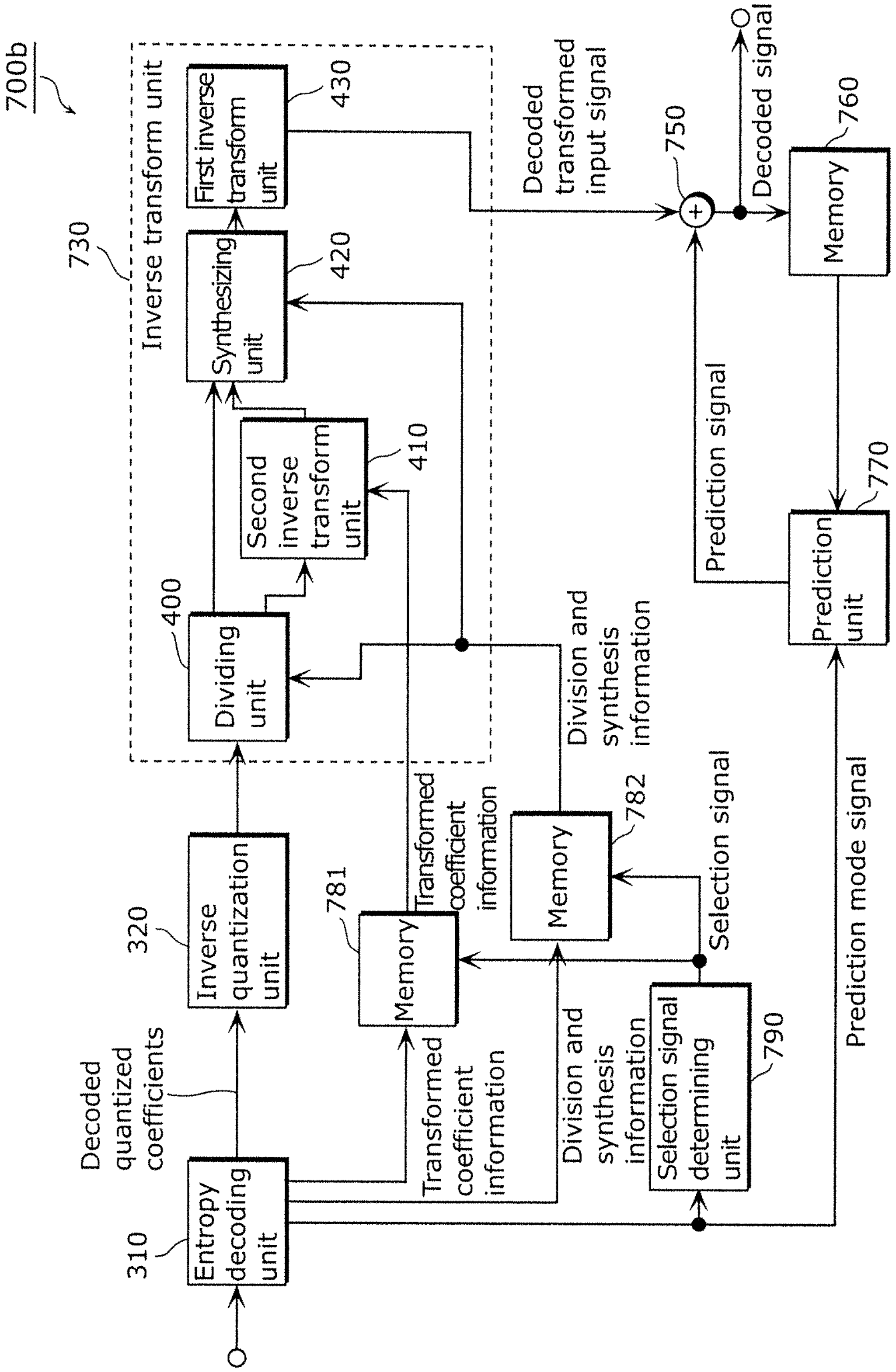
700b
730
Inverse transform unit
First inverse transform unit
430
Synthesizing unit
420
Second inverse transform unit
410
Dividing unit
400
Decoded transformed input signal
750
Decoded signal
Memory
760
Prediction signal
Prediction unit
770
Division and synthesis information
Inverse quantization unit
320
Decoded quantized coefficients
Entropy decoding unit
310
Memory
781
Transformed coefficient information
Memory
782
Selection signal
Transformed coefficient information
Division and synthesis information
Selection signal determining unit
790
Prediction mode signal

FIG. 32

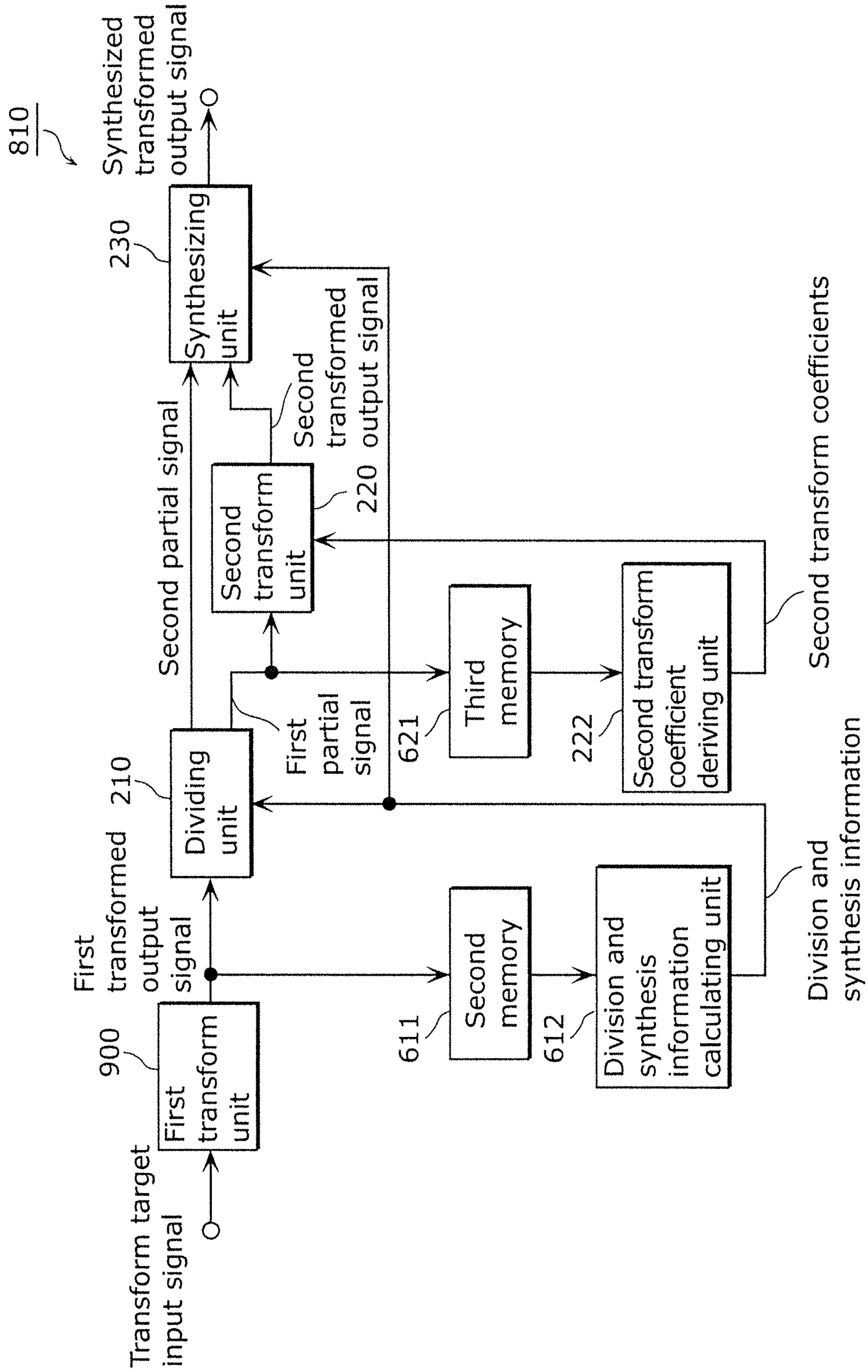
810
Transform target input signal
900
First transform unit
First transformed output signal
210
Dividing unit
First partial signal
Second partial signal
220
Second transform unit
Second transformed output signal
230
Synthesizing unit
Synthesized transformed output signal
611
Second memory
612
Division and synthesis information calculating unit
Division and synthesis information
621
Third memory
222
Second transform coefficient deriving unit
Second transform coefficients

FIG. 33

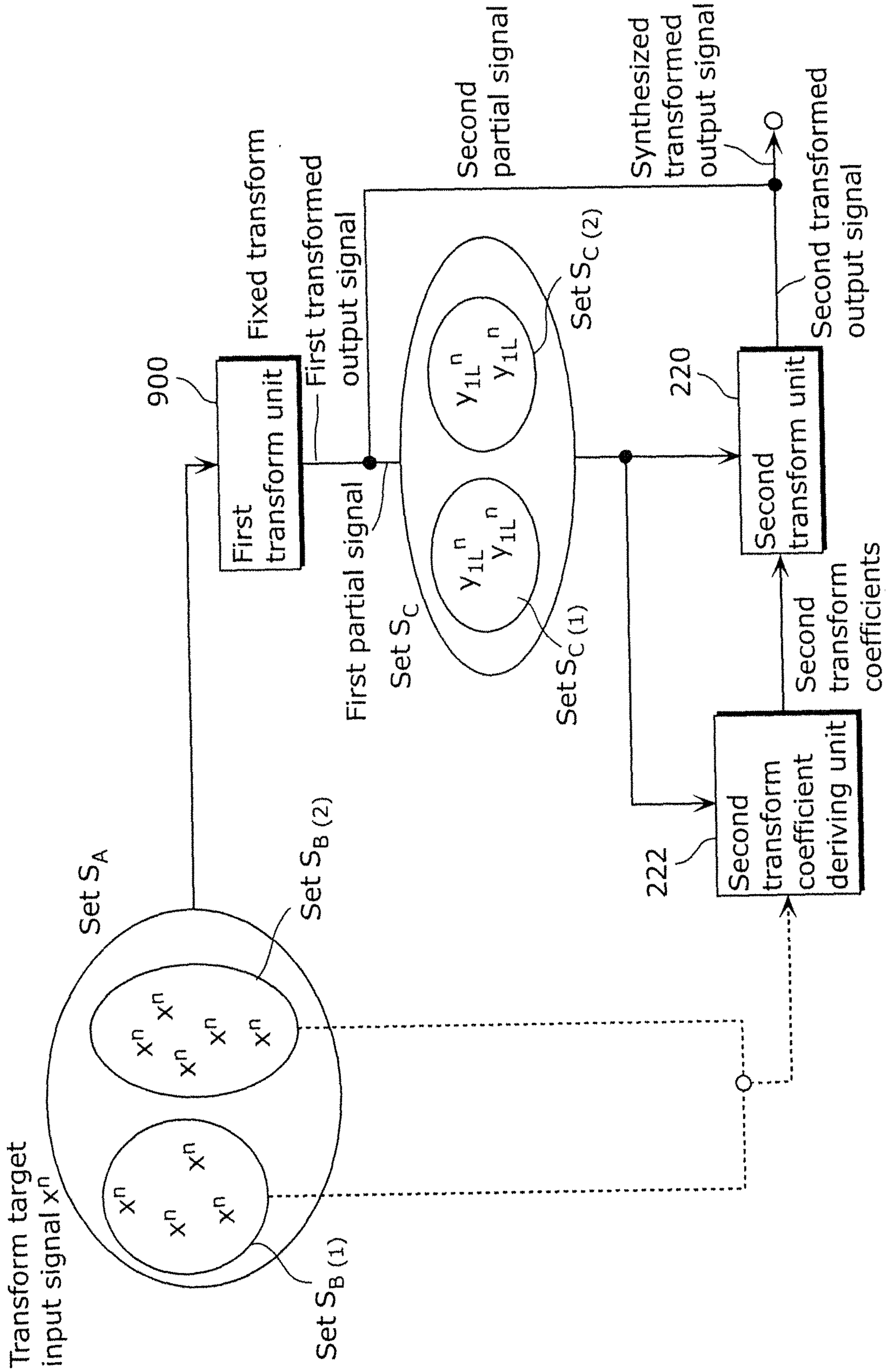
Transform target input signal $x^n$
Set $S_A$
Set $S_{B(1)}$
Set $S_{B(2)}$
$x^n$
900
First transform unit
Fixed transform
First transformed output signal
First partial signal
Set $S_C$
Set $S_{C(1)}$
Set $S_{C(2)}$
$y_{1L}^n$
Second partial signal
Synthesized transformed output signal
220
Second transform unit
Second transformed output signal
Second transform coefficients
222
Second transform coefficient deriving unit

FIG. 34

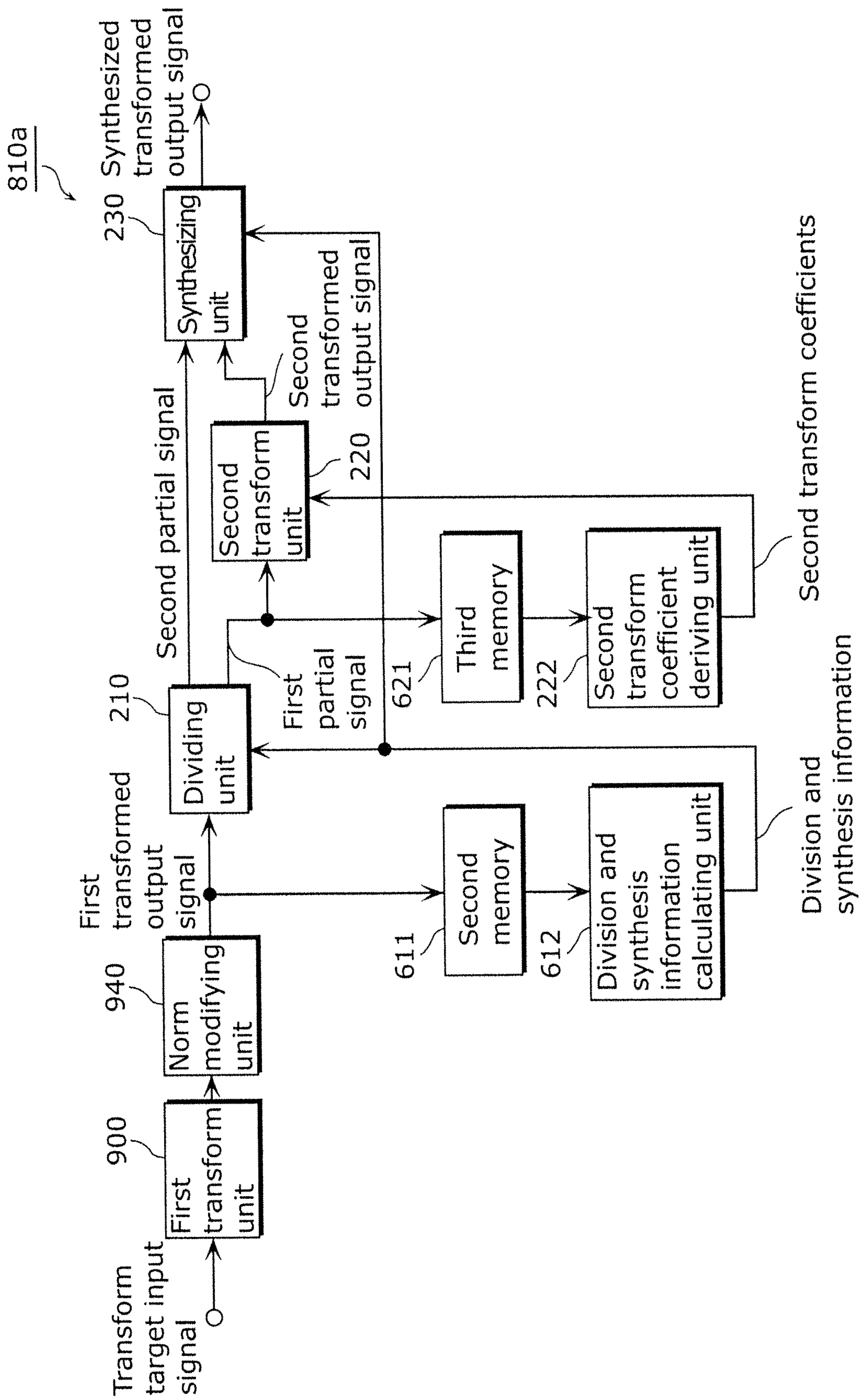
810a
Transform target input signal
900
First transform unit
940
Norm modifying unit
First transformed output signal
210
Dividing unit
611
Second memory
612
Division and synthesis information calculating unit
Division and synthesis information
First partial signal
621
Third memory
222
Second transform coefficient deriving unit
Second transform coefficients
Second partial signal
220
Second transform unit
Second transformed output signal
230
Synthesizing unit
Synthesized transformed output signal

FIG. 35

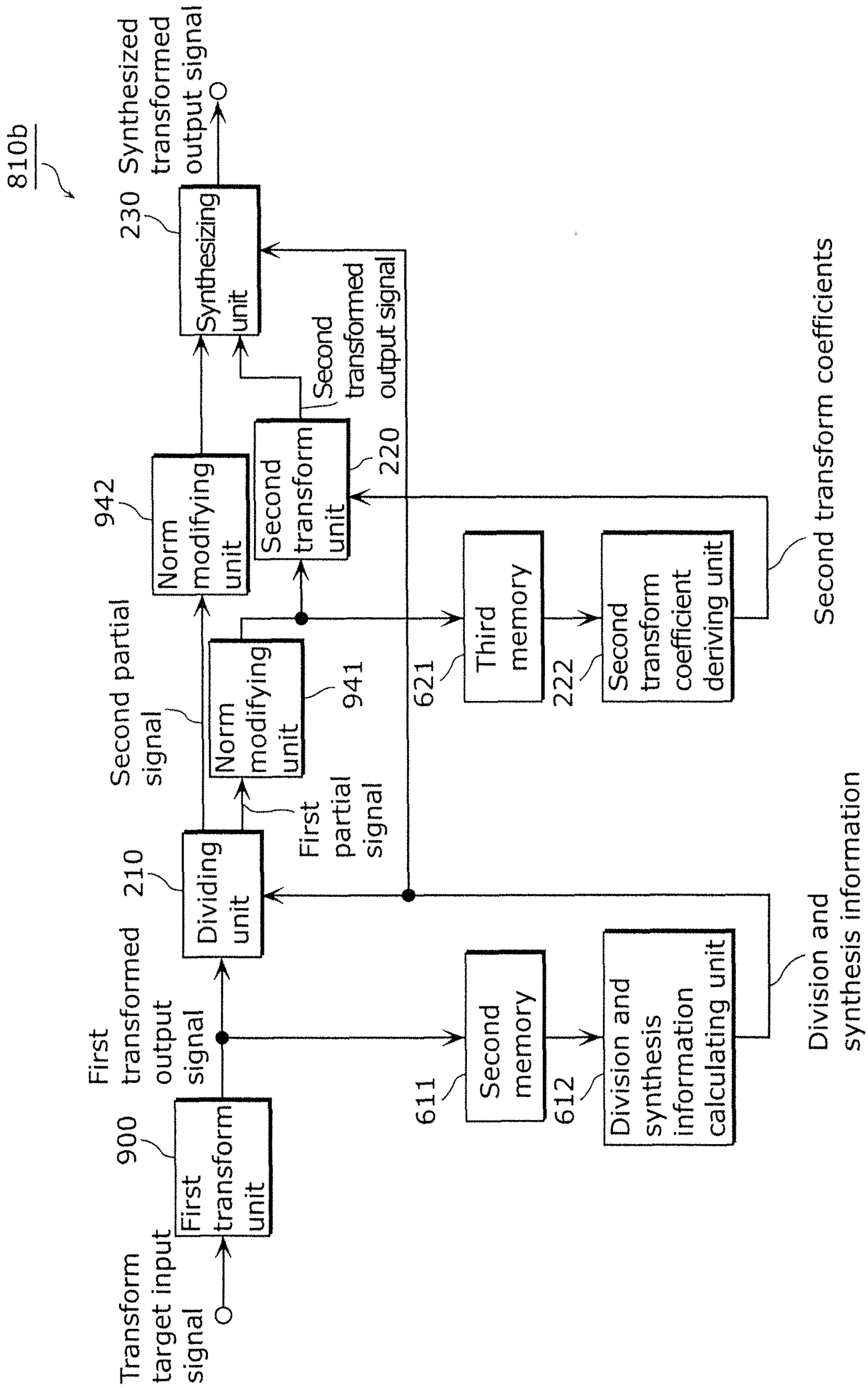
810b
Transform target input signal
First transform unit
900
First transformed output signal
Dividing unit
210
First partial signal
Second partial signal
Norm modifying unit
941
Norm modifying unit
942
Second transform unit
220
Second transformed output signal
Synthesizing unit
230
Synthesized transformed output signal
Second memory
611
Division and synthesis information calculating unit
612
Division and synthesis information
Third memory
621
Second transform coefficient deriving unit
222
Second transform coefficients

FIG. 36

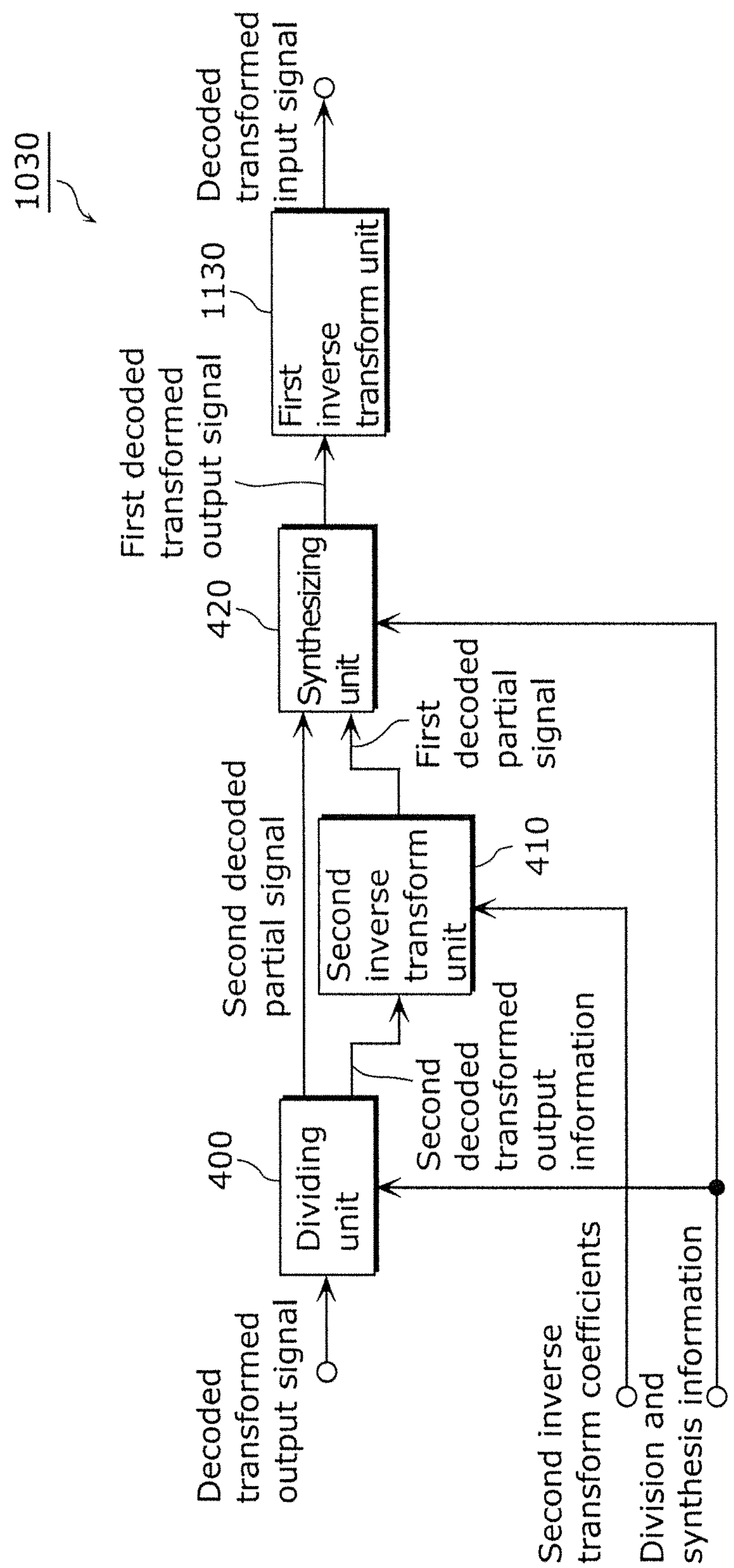
1030
Decoded transformed output signal
400
Dividing unit
Second decoded transformed output information
Second decoded partial signal
410
Second inverse transform unit
First decoded partial signal
420
Synthesizing unit
First decoded transformed output signal
1130
First inverse transform unit
Decoded transformed input signal
Second inverse transform coefficients
Division and synthesis information

FIG. 37

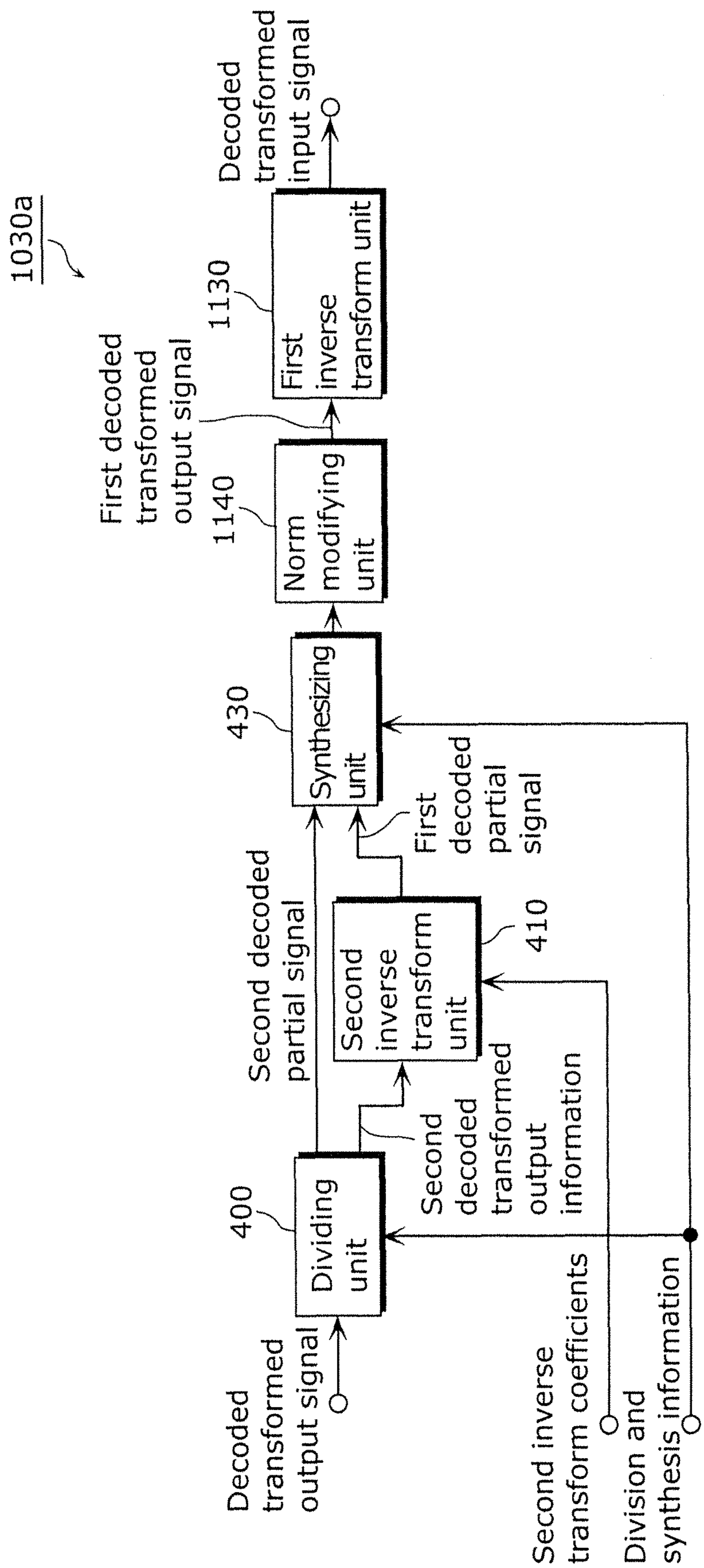
1030a
Decoded transformed output signal
400
Dividing unit
Second decoded partial signal
Second decoded transformed output information
Second inverse transform unit
410
Second inverse transform coefficients
Division and synthesis information
First decoded partial signal
430
Synthesizing unit
1140
Norm modifying unit
First decoded transformed output signal
1130
First inverse transform unit
Decoded transformed input signal

FIG. 38

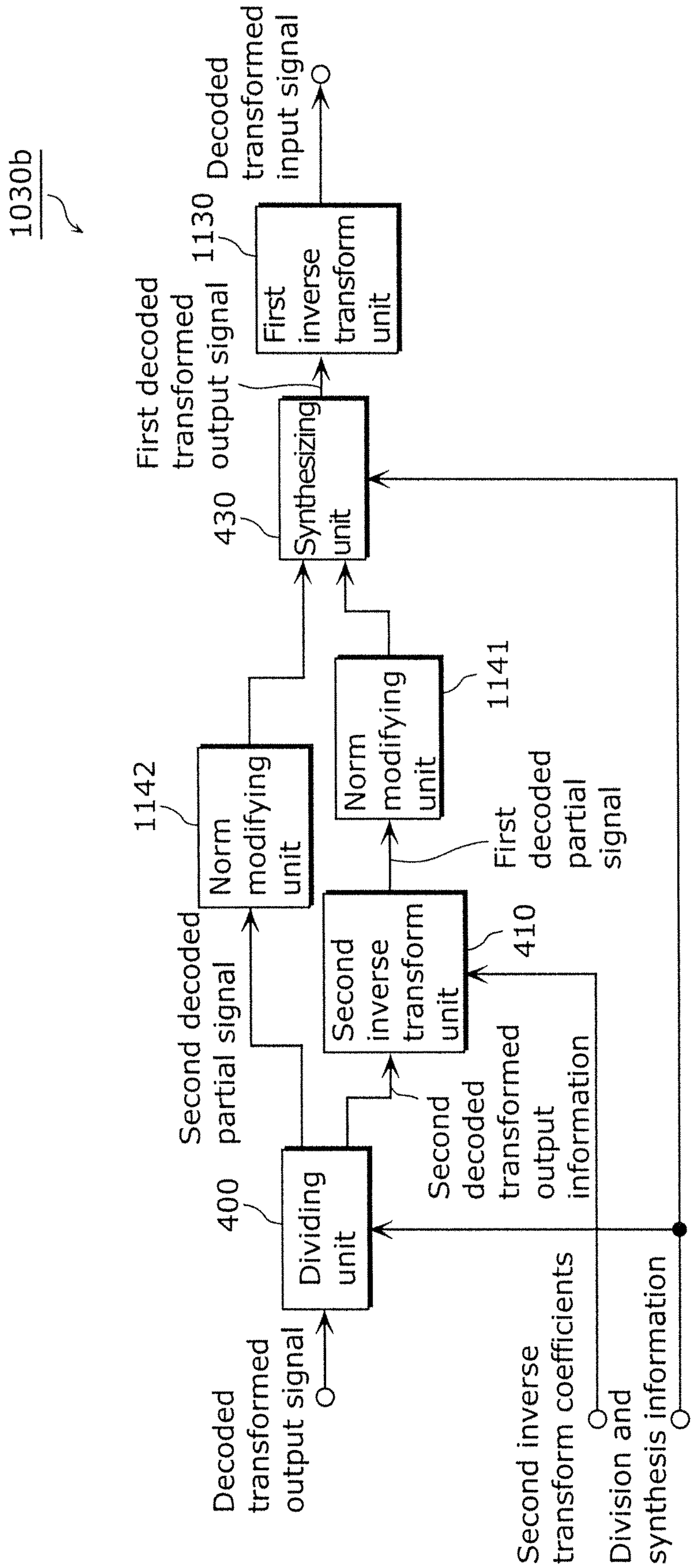
1030b
Decoded transformed output signal
Dividing unit
400
Second inverse transform coefficients
Division and synthesis information
Second decoded partial signal
Second decoded transformed output information
Second inverse transform unit
410
First decoded partial signal
Norm modifying unit
1142
Norm modifying unit
1141
Synthesizing unit
430
First decoded transformed output signal
First inverse transform unit
1130
Decoded transformed input signal

FIG. 39

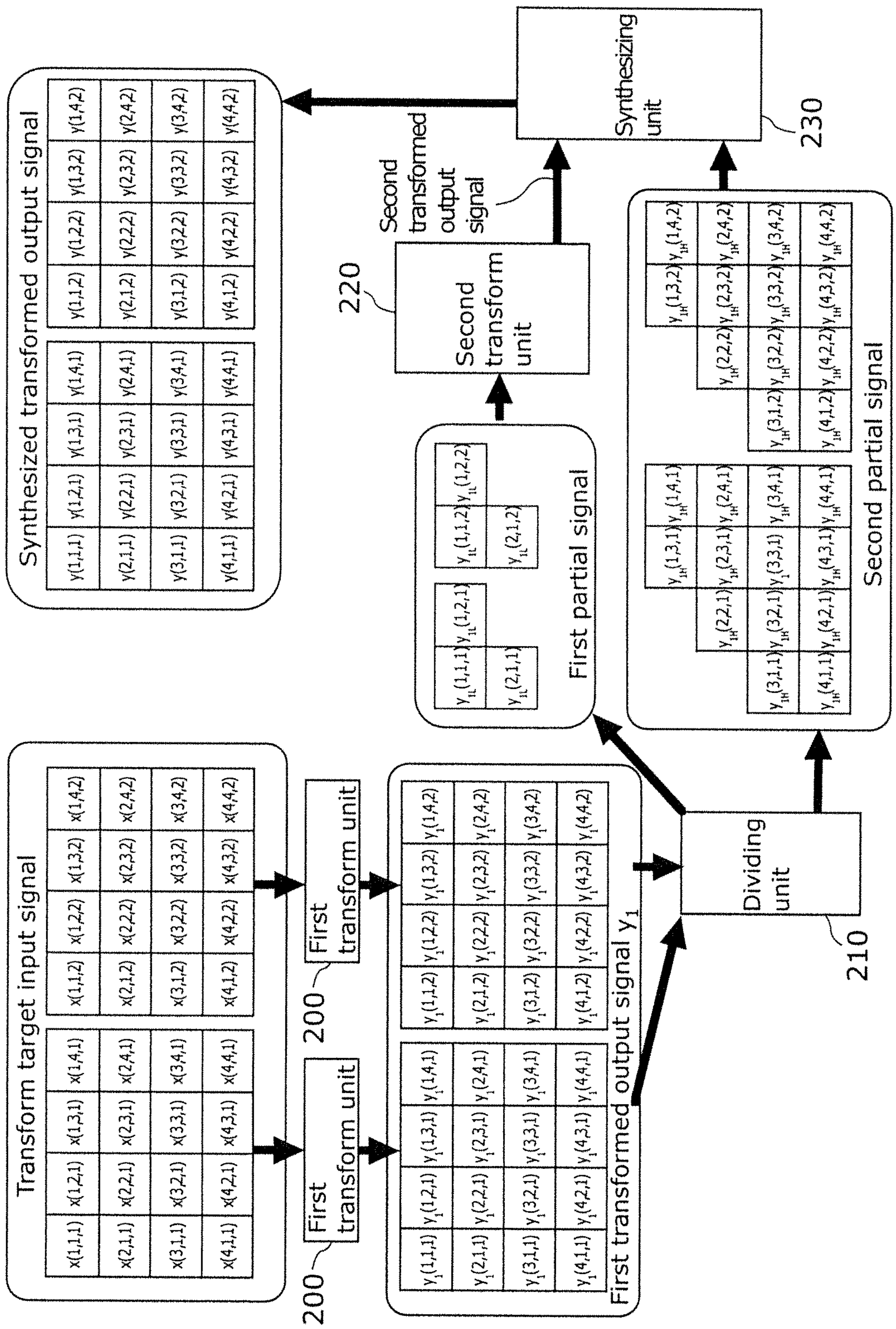
Transform target input signal
200
First transform unit
200
First transform unit
First transformed output signal $y_1$
210
Dividing unit
First partial signal
Second partial signal
220
Second transform unit
Second transformed output signal
230
Synthesizing unit
Synthesized transformed output signal

FIG. 40

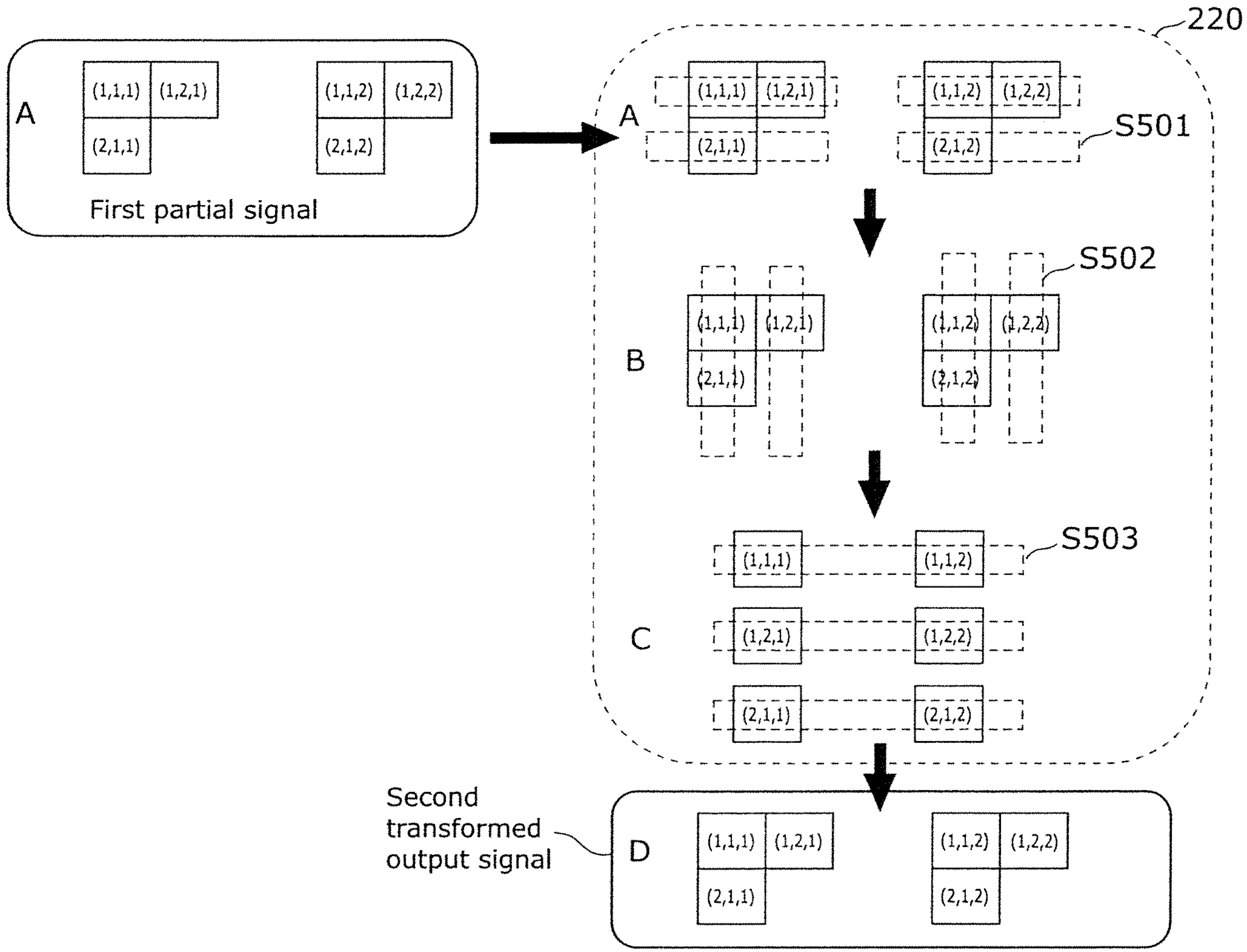

A
(1,1,1)
(1,2,1)
(2,1,1)
(1,1,2)
(1,2,2)
(2,1,2)
First partial signal
220
S501
S502
S503
B
C
D
Second transformed output signal

FIG. 41

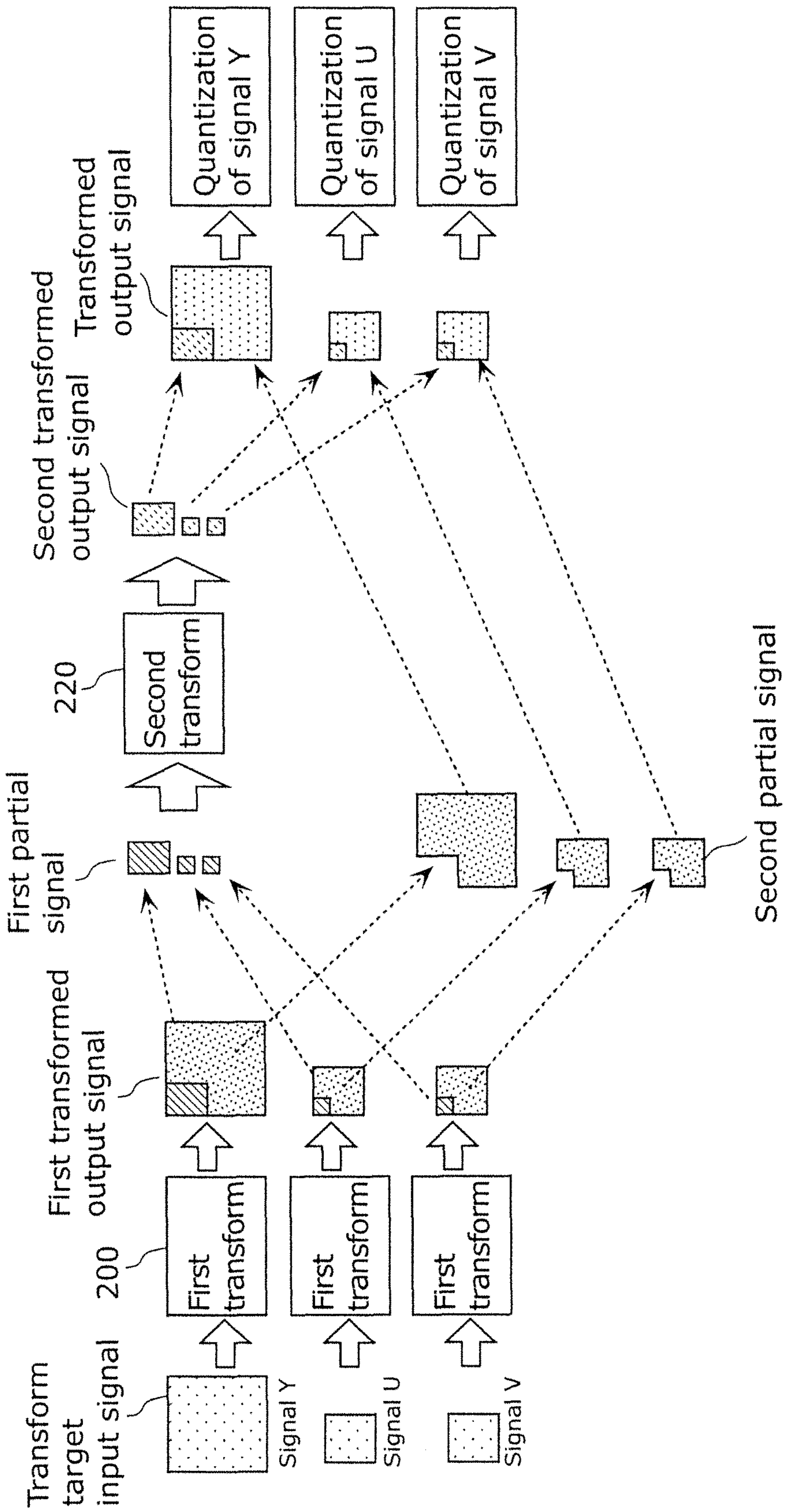
Transform target input signal
Signal Y
Signal U
Signal V
200
First transform
First transform
First transform
First transformed output signal
First partial signal
Second partial signal
220
Second transform
Second transformed output signal
Transformed output signal
Quantization of signal Y
Quantization of signal U
Quantization of signal V

FIG. 42

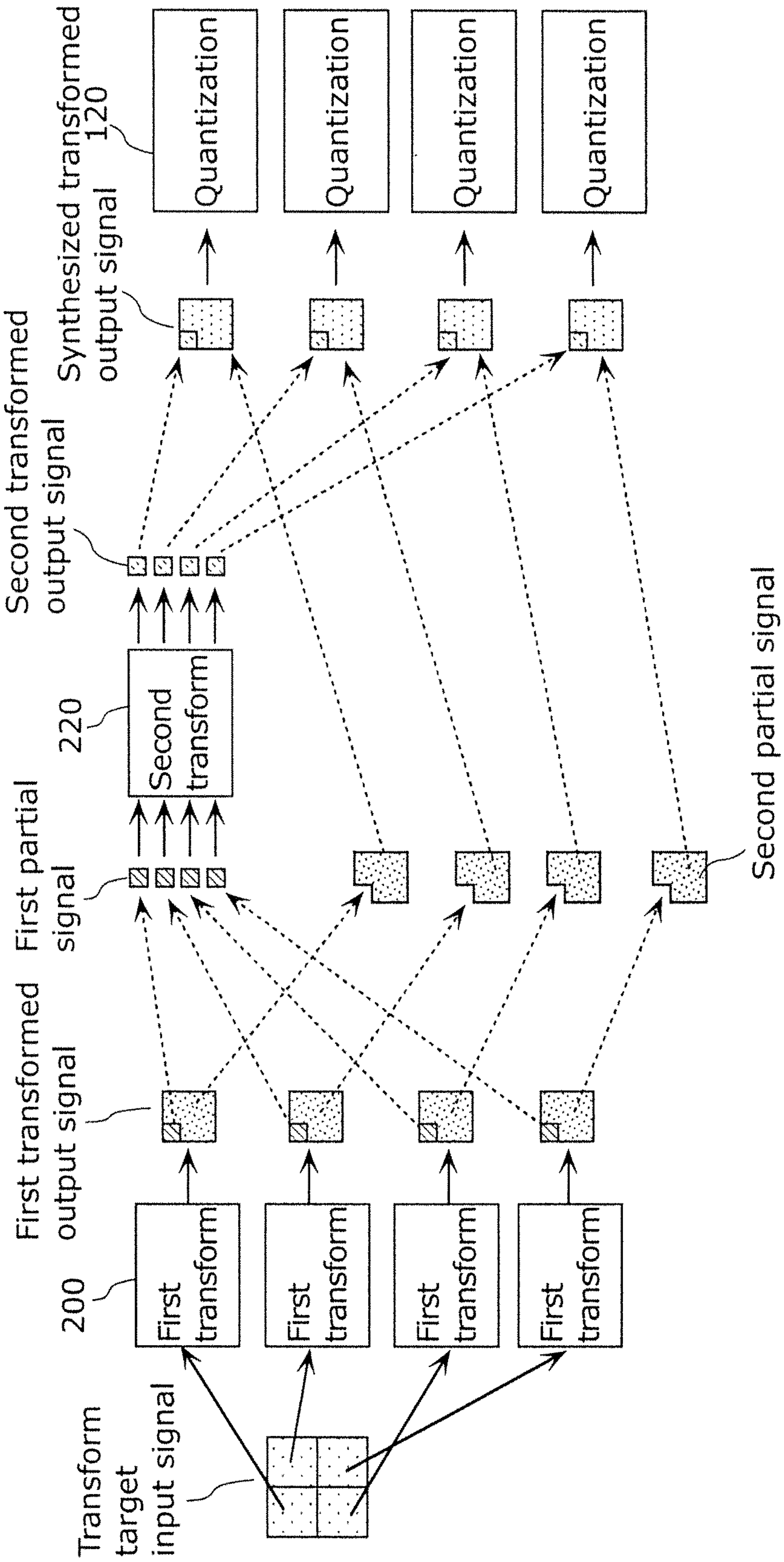
Transform target input signal
200
First transform
First transform
First transform
First transform
First transformed output signal
First partial signal
Second partial signal
220
Second transform
Second transformed output signal
Synthesized transformed output signal
120
Quantization
Quantization
Quantization
Quantization

FIG. 43

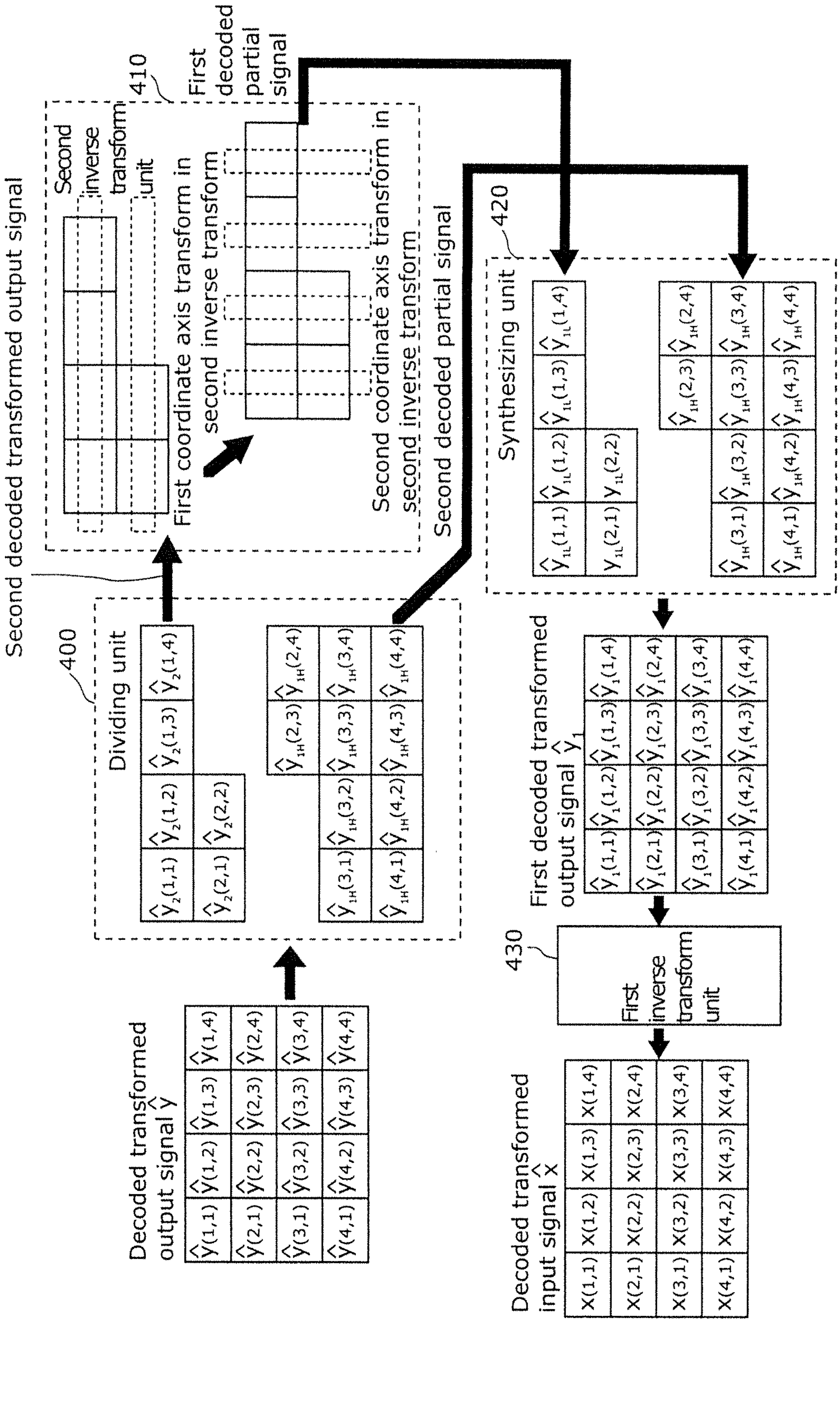
Decoded transformed output signal ŷ
400
Dividing unit
Second decoded transformed output signal
410
Second inverse transform unit
First coordinate axis transform in second inverse transform
First decoded partial signal
Second coordinate axis transform in second inverse transform
Second decoded partial signal
420
Synthesizing unit
First decoded transformed output signal ŷ1
430
First inverse transform unit
Decoded transformed input signal x̂

FIG. 44

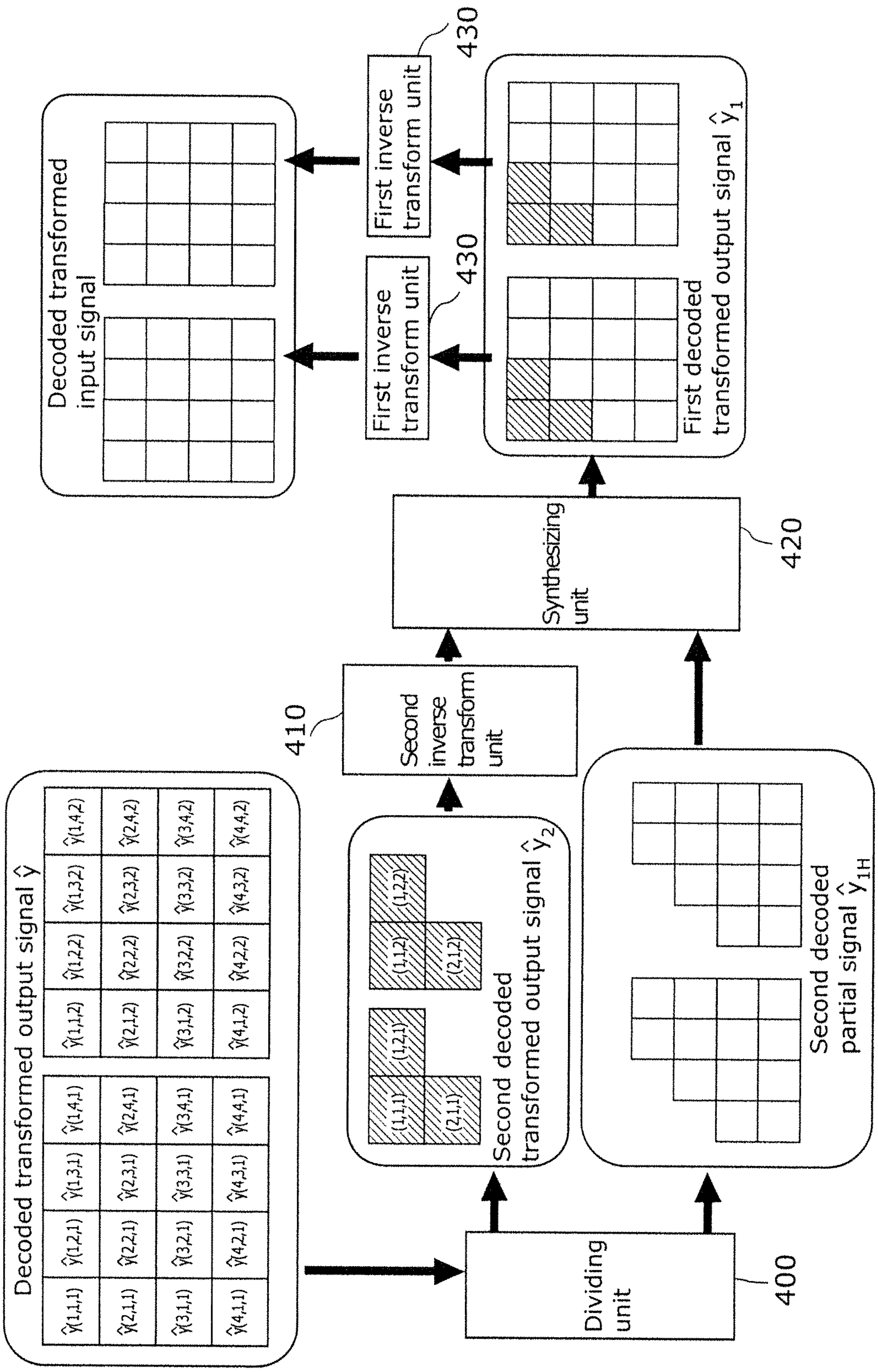
Decoded transformed output signal ŷ
ŷ(1,1,1)
ŷ(1,2,1)
ŷ(1,3,1)
ŷ(1,4,1)
ŷ(1,1,2)
ŷ(1,2,2)
ŷ(1,3,2)
ŷ(1,4,2)
ŷ(2,1,1)
ŷ(2,2,1)
ŷ(2,3,1)
ŷ(2,4,1)
ŷ(2,1,2)
ŷ(2,2,2)
ŷ(2,3,2)
ŷ(2,4,2)
ŷ(3,1,1)
ŷ(3,2,1)
ŷ(3,3,1)
ŷ(3,4,1)
ŷ(3,1,2)
ŷ(3,2,2)
ŷ(3,3,2)
ŷ(3,4,2)
ŷ(4,1,1)
ŷ(4,2,1)
ŷ(4,3,1)
ŷ(4,4,1)
ŷ(4,1,2)
ŷ(4,2,2)
ŷ(4,3,2)
ŷ(4,4,2)
Dividing unit
400
(1,1,1)
(1,2,1)
(2,1,1)
(1,1,2)
(1,2,2)
(2,1,2)
Second decoded transformed output signal ŷ2
Second decoded partial signal ŷ1H
Second inverse transform unit
410
Synthesizing unit
420
First decoded transformed output signal ŷ1
First inverse transform unit
430
First inverse transform unit
430
Decoded transformed input signal

FIG. 45

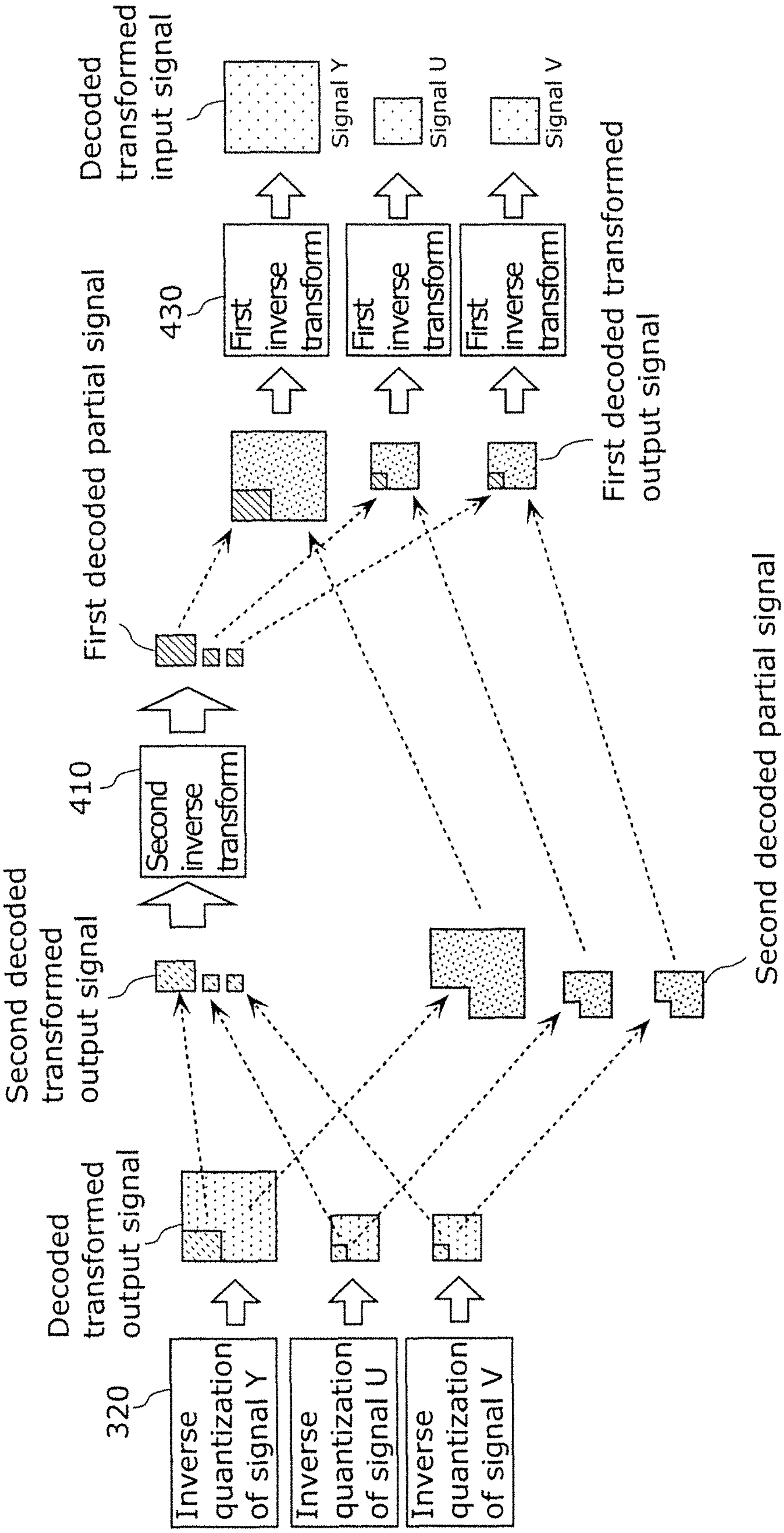
320
Inverse quantization of signal Y
Inverse quantization of signal U
Inverse quantization of signal V
Decoded transform output signal
Second decoded transformed output signal
410
Second inverse transform
First decoded partial signal
Second decoded partial signal
430
First inverse transform
First inverse transform
First inverse transform
First decoded transformed output signal
Decoded transformed input signal
Signal Y
Signal U
Signal V

FIG. 46

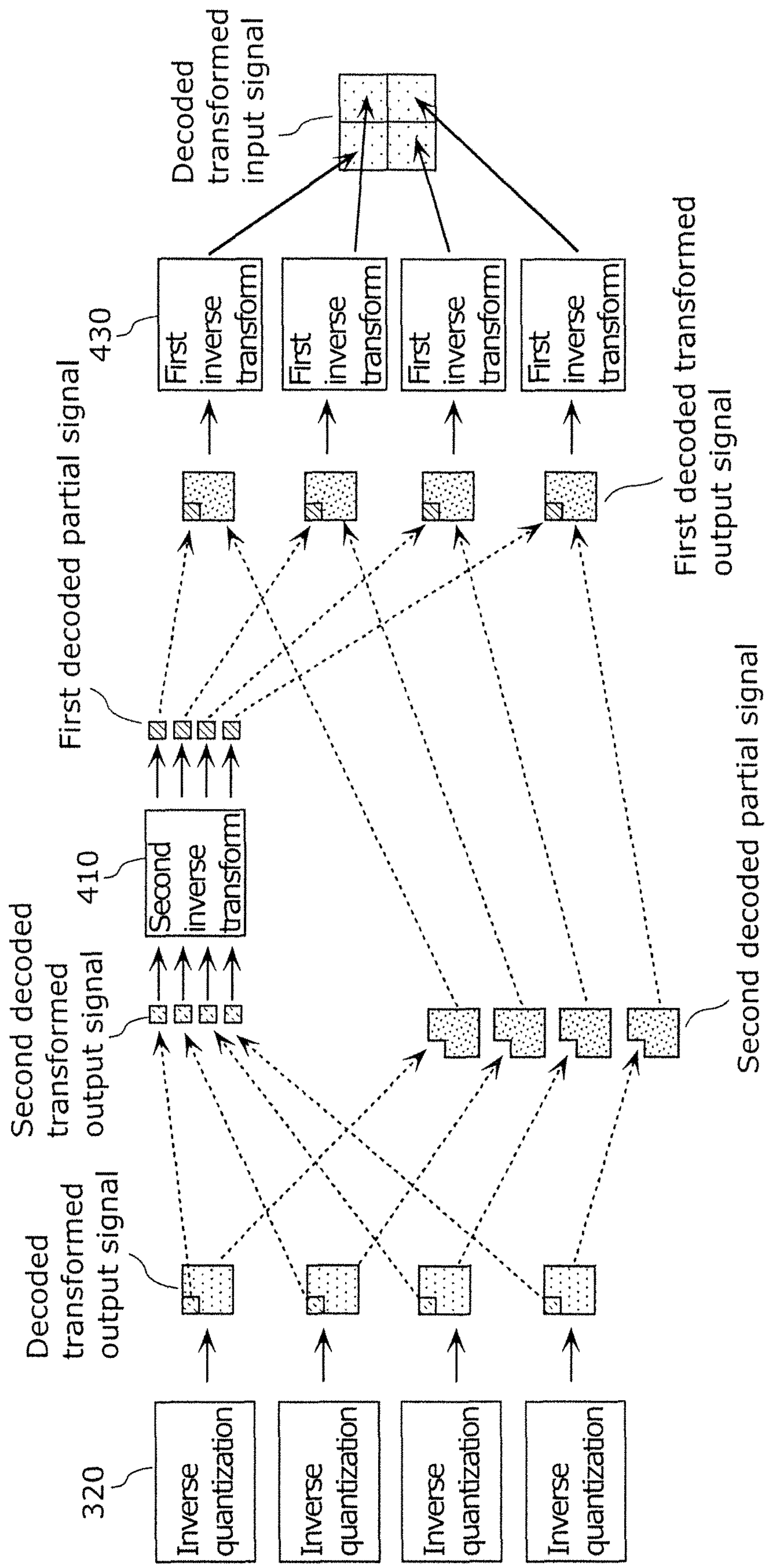
320
Inverse quantization
Inverse quantization
Inverse quantization
Inverse quantization
Decoded transformed output signal
Second decoded transformed output signal
410
Second inverse transform
Second decoded partial signal
First decoded partial signal
430
First inverse transform
First inverse transform
First inverse transform
First inverse transform
First decoded transformed output signal
Decoded transformed input signal

FIG. 47

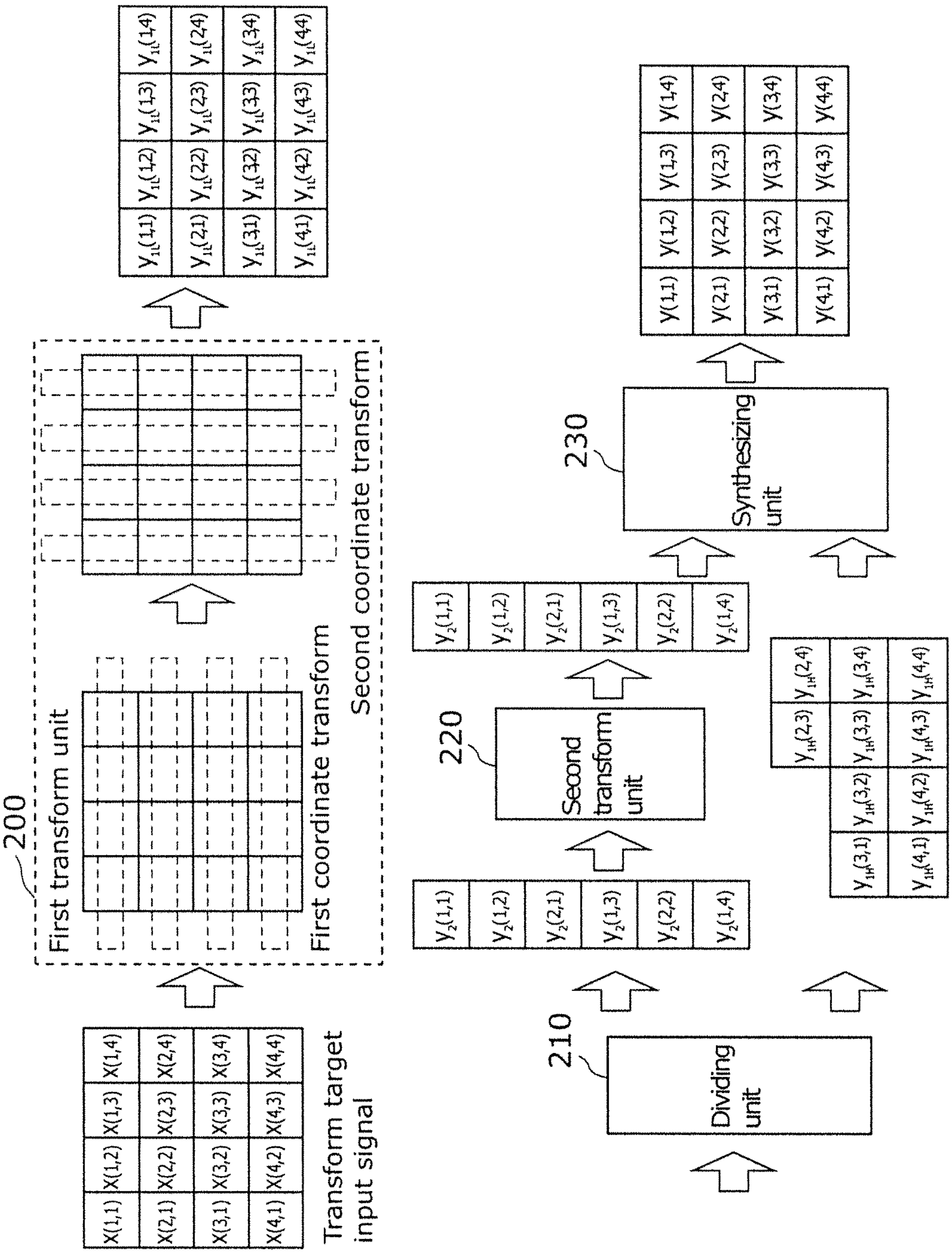
Transform target input signal
X(1,1) X(1,2) X(1,3) X(1,4)
X(2,1) X(2,2) X(2,3) X(2,4)
X(3,1) X(3,2) X(3,3) X(3,4)
X(4,1) X(4,2) X(4,3) X(4,4)
200
First transform unit
First coordinate transform
Second coordinate transform
y1L(1,1) y1L(1,2) y1L(1,3) y1L(1,4)
y1L(2,1) y1L(2,2) y1L(2,3) y1L(2,4)
y1L(3,1) y1L(3,2) y1L(3,3) y1L(3,4)
y1L(4,1) y1L(4,2) y1L(4,3) y1L(4,4)
210
Dividing unit
y2(1,1) y2(1,2) y2(2,1) y2(1,3) y2(2,2) y2(1,4)
220
Second transform unit
y2(1,1) y2(1,2) y2(2,1) y2(1,3) y2(2,2) y2(1,4)
y1H(2,3) y1H(2,4)
y1H(3,1) y1H(3,2) y1H(3,3) y1H(3,4)
y1H(4,1) y1H(4,2) y1H(4,3) y1H(4,4)
230
Synthesizing unit
Y(1,1) Y(1,2) Y(1,3) Y(1,4)
Y(2,1) Y(2,2) Y(2,3) Y(2,4)
Y(3,1) Y(3,2) Y(3,3) Y(3,4)
Y(4,1) Y(4,2) Y(4,3) Y(4,4)

FIG. 48A

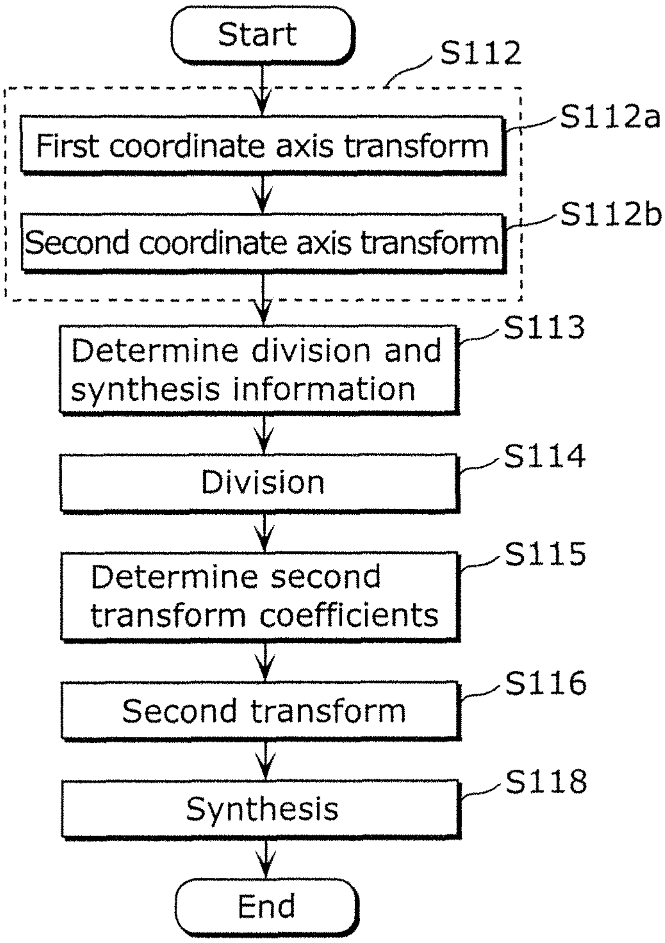
Start
S112
S112a
First coordinate axis transform
S112b
Second coordinate axis transform
S113
Determine division and synthesis information
S114
Division
S115
Determine second transform coefficients
S116
Second transform
S118
Synthesis
End

FIG. 48B

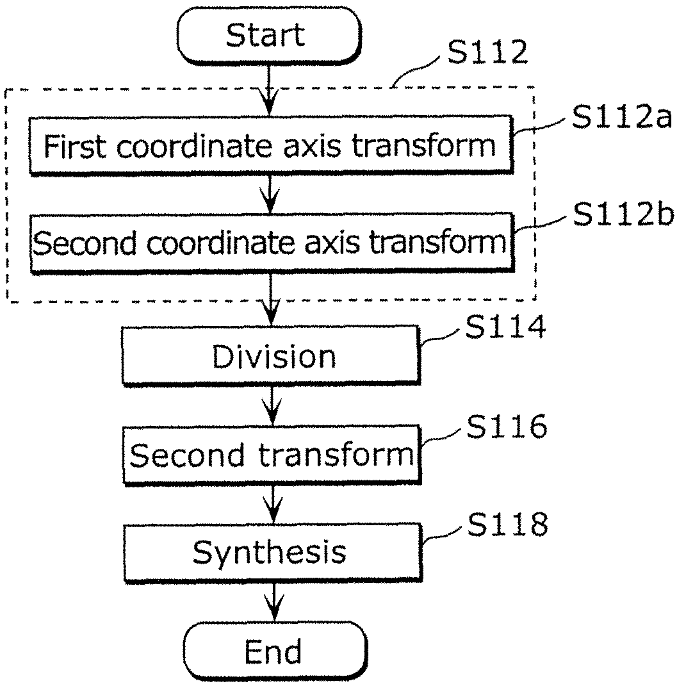
Start
S112
First coordinate axis transform
S112a
Second coordinate axis transform
S112b
Division
S114
Second transform
S116
Synthesis
S118
End

FIG. 49

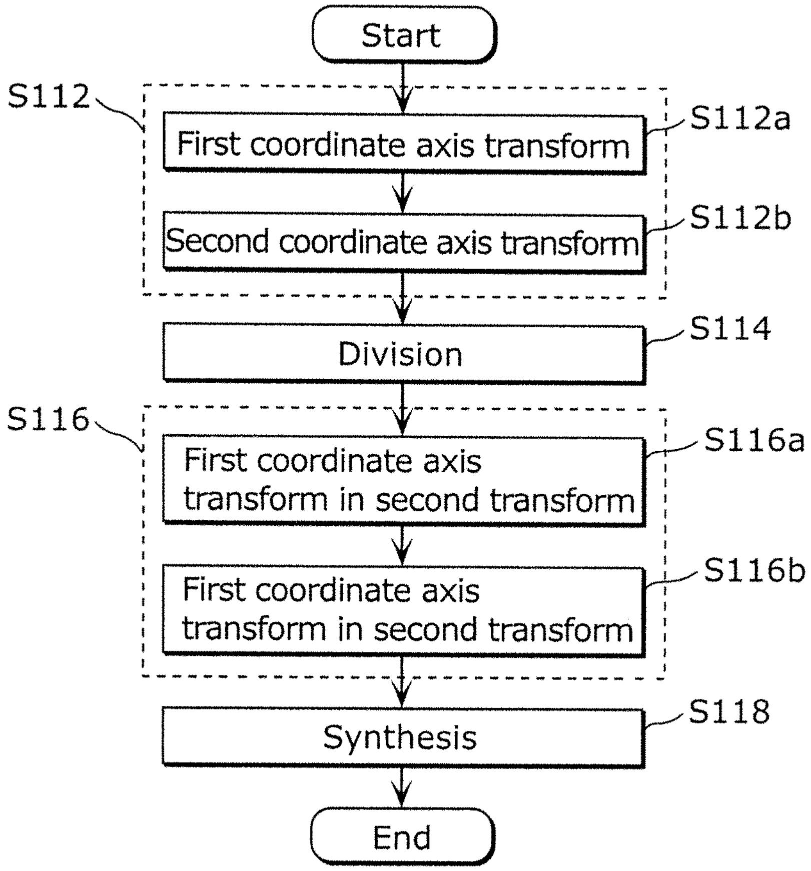
Start
S112
First coordinate axis transform
S112a
Second coordinate axis transform
S112b
Division
S114
S116
First coordinate axis transform in second transform
S116a
First coordinate axis transform in second transform
S116b
Synthesis
S118
End

FIG. 50

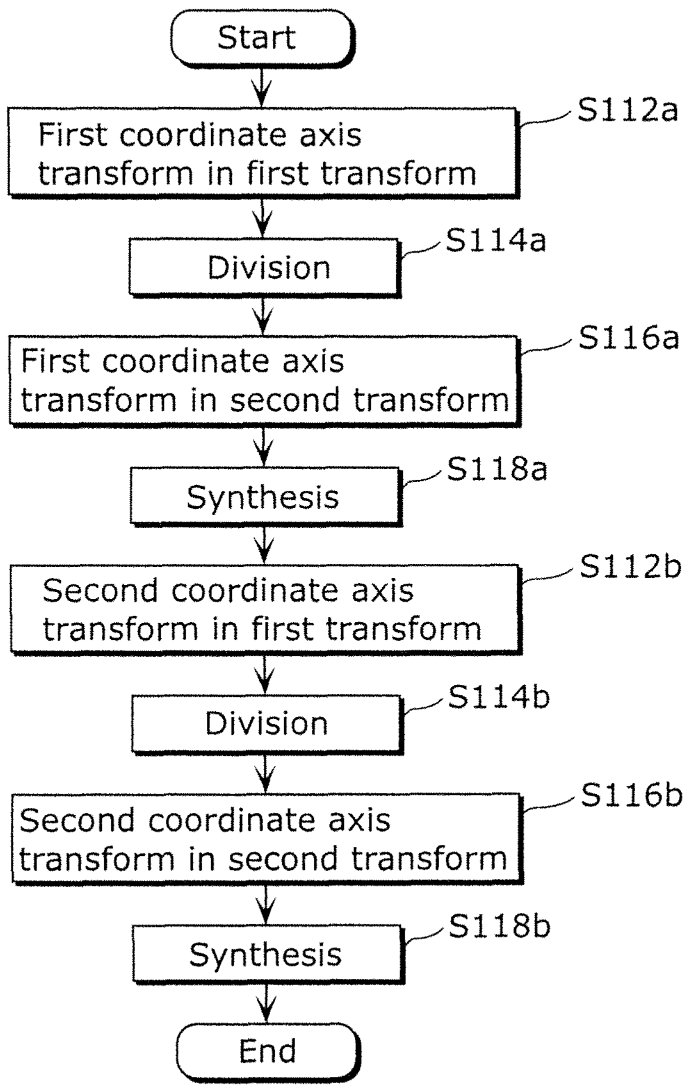
Start
First coordinate axis transform in first transform
S112a
Division
S114a
First coordinate axis transform in second transform
S116a
Synthesis
S118a
Second coordinate axis transform in first transform
S112b
Division
S114b
Second coordinate axis transform in second transform
S116b
Synthesis
S118b
End

FIG. 51A

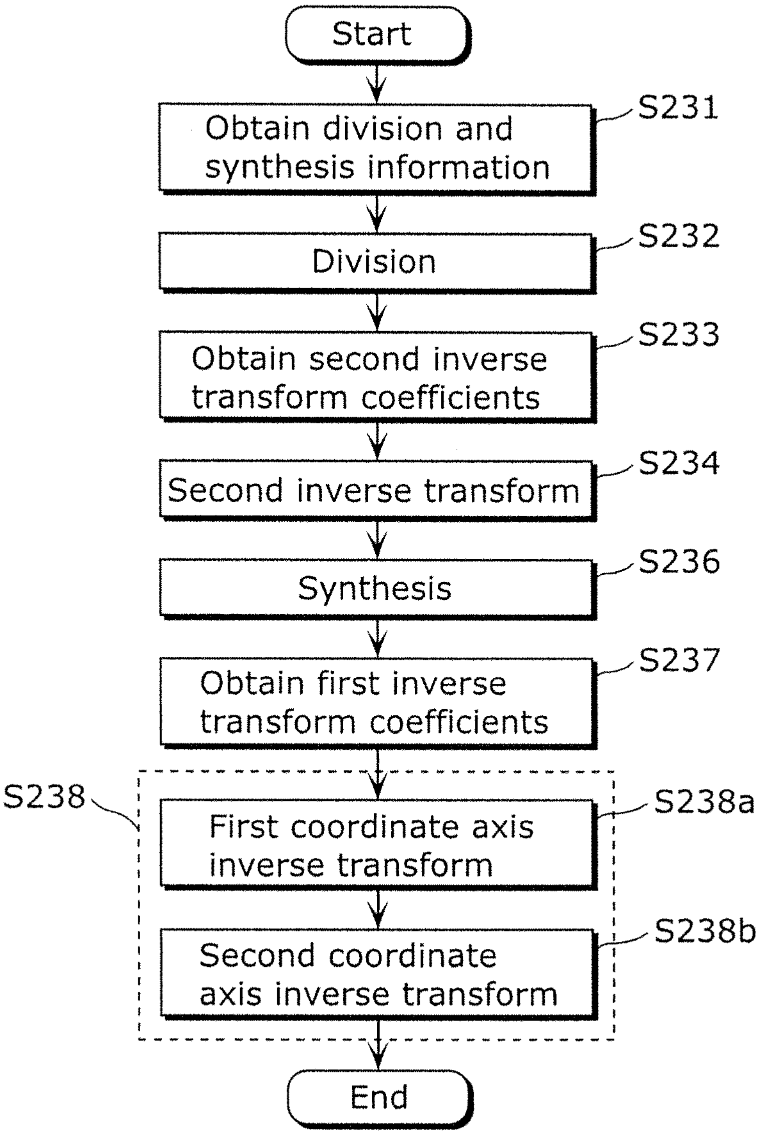
Start
Obtain division and synthesis information
S231
Division
S232
Obtain second inverse transform coefficients
S233
Second inverse transform
S234
Synthesis
S236
Obtain first inverse transform coefficients
S237
S238
First coordinate axis inverse transform
S238a
Second coordinate axis inverse transform
S238b
End

FIG. 51B

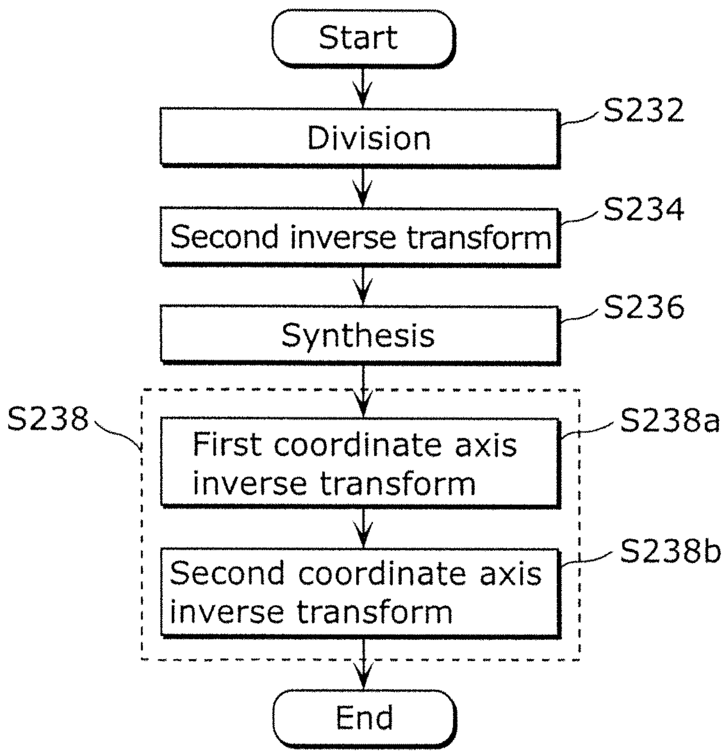
Start
S232
Division
S234
Second inverse transform
S236
Synthesis
S238
S238a
First coordinate axis inverse transform
S238b
Second coordinate axis inverse transform
End

FIG. 52

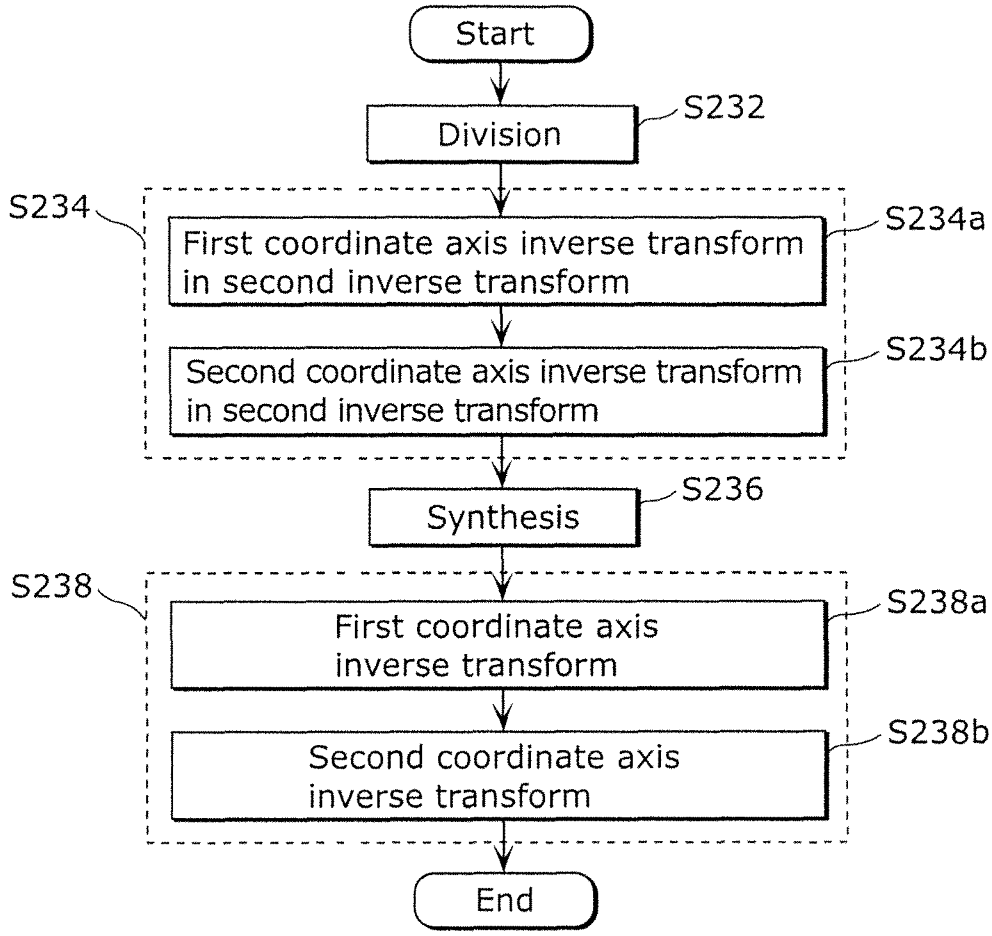
Start
Division
S232
S234
First coordinate axis inverse transform in second inverse transform
S234a
Second coordinate axis inverse transform in second inverse transform
S234b
Synthesis
S236
S238
First coordinate axis inverse transform
S238a
Second coordinate axis inverse transform
S238b
End

FIG. 53

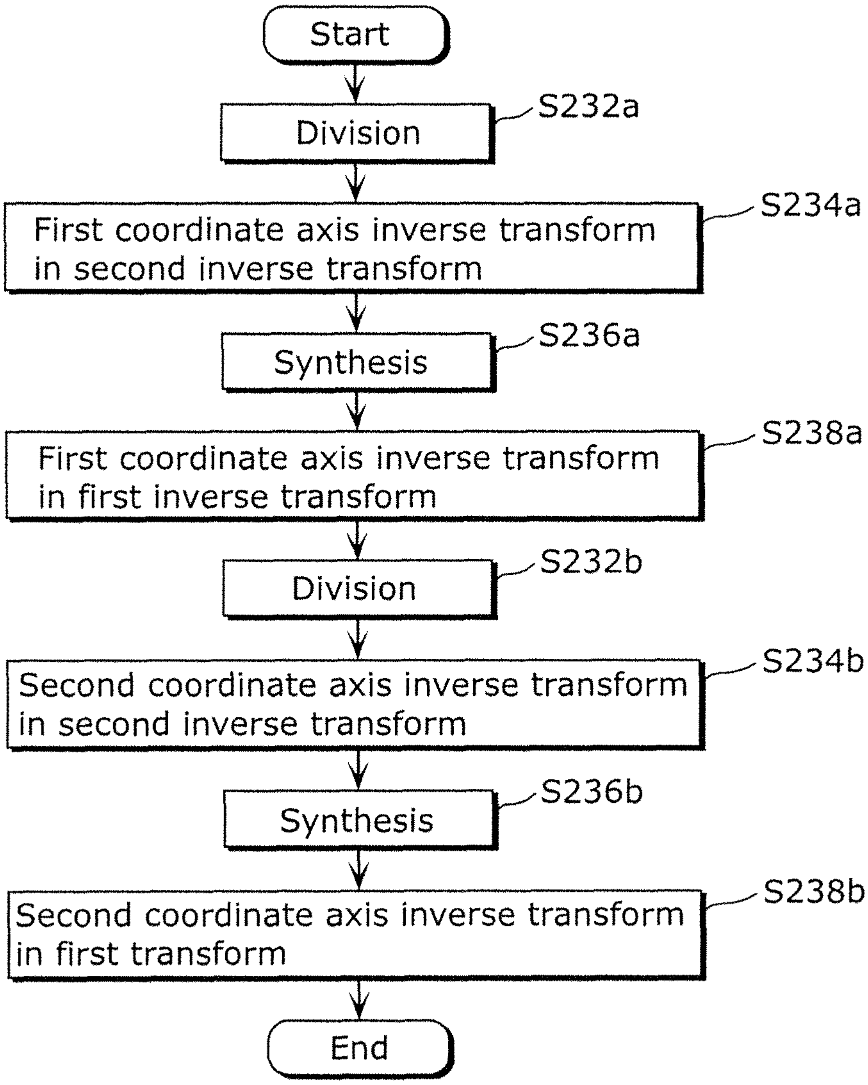
Start
Division
S232a
First coordinate axis inverse transform in second inverse transform
S234a
Synthesis
S236a
First coordinate axis inverse transform in first inverse transform
S238a
Division
S232b
Second coordinate axis inverse transform in second inverse transform
S234b
Synthesis
S236b
Second coordinate axis inverse transform in first transform
S238b
End

FIG. 54A

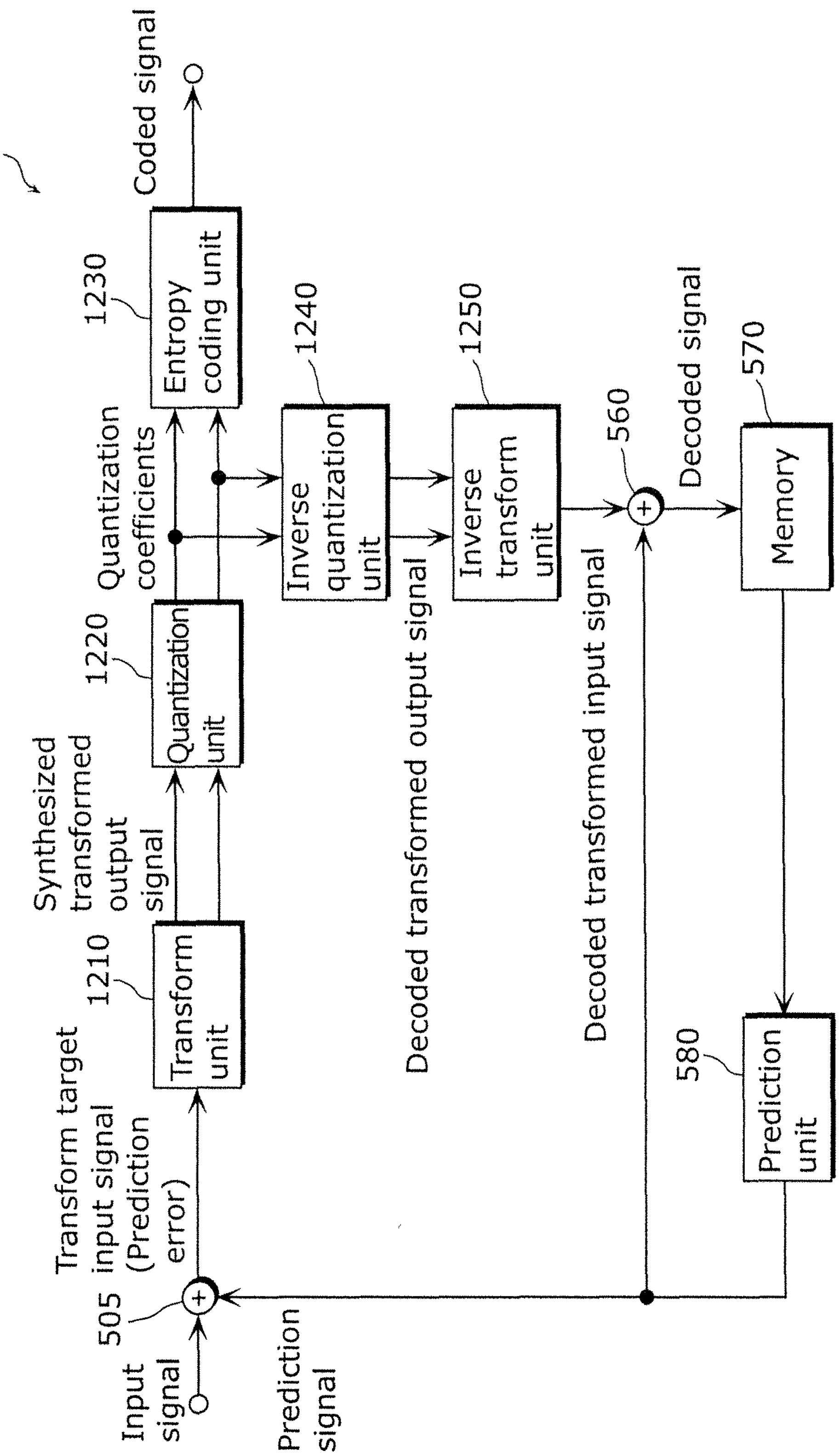
1200
Input signal
505
Prediction signal
Transform target input signal (Prediction error)
1210
Transform unit
Synthesized transformed output signal
1220
Quantization unit
Quantization coefficients
1230
Entropy coding unit
Coded signal
1240
Inverse quantization unit
Decoded transformed output signal
1250
Inverse transform unit
Decoded transformed input signal
560
Decoded signal
570
Memory
580
Prediction unit

FIG. 54B

| | Second transformed output signal (L) | Second partial signal (H) |
|---|---|---|
| Scan | Power order | Zig-zag scan |
| Quantization | High accuracy | Low accuracy |
| Entropy coding | Probability table A | Probability table B |
| | Context deriving scheme A | Context deriving scheme B |
| Switching frequency | High | Low |

FIG. 55A

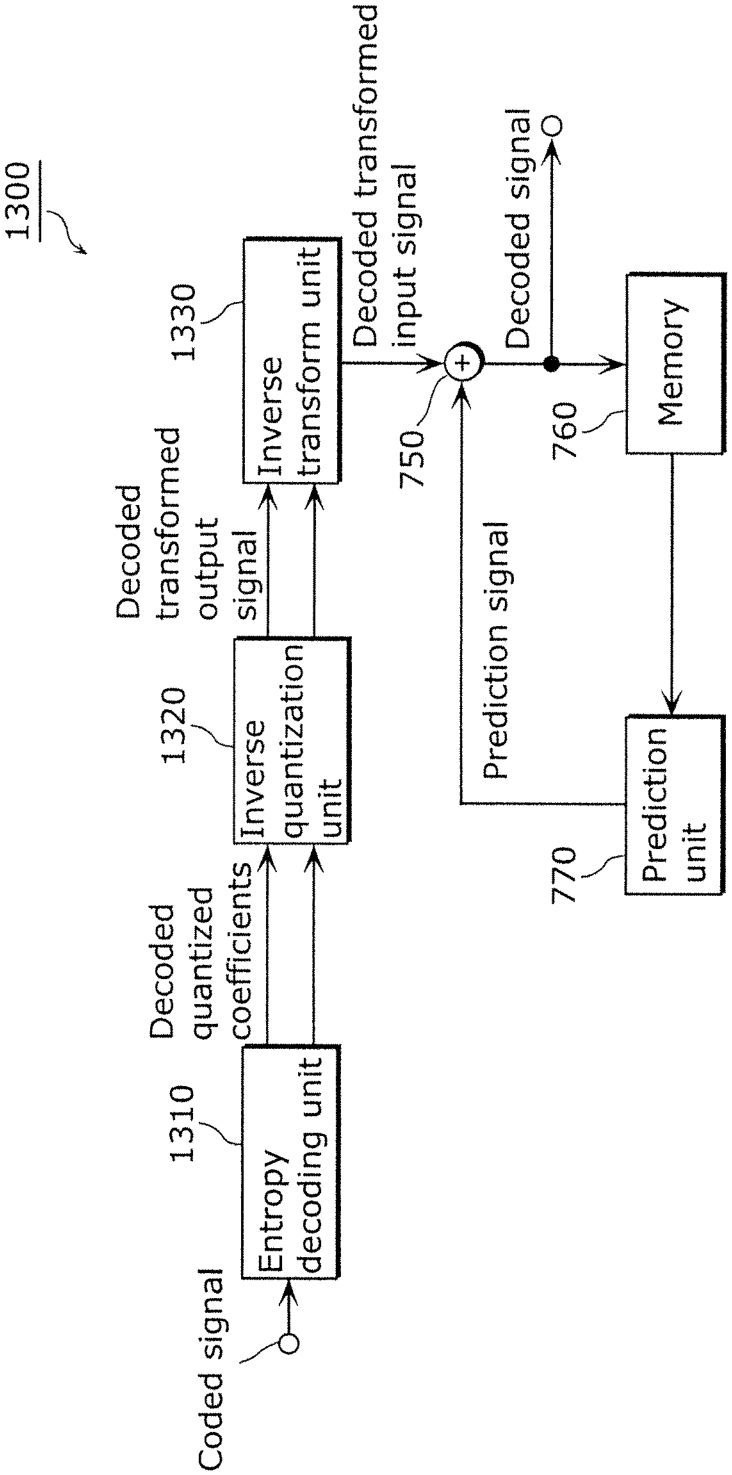
1300
Coded signal
1310
Entropy decoding unit
Decoded quantized coefficients
1320
Inverse quantization unit
Decoded transformed output signal
1330
Inverse transform unit
Decoded transformed input signal
750
760
Memory
Decoded signal
Prediction signal
770
Prediction unit

FIG. 55B

| | Second decoded transformed output signal (L) | Second decoded partial signal (H) |
|---|---|---|
| Entropy decoding | Probability table A | Probability table B |
| | Context deriving scheme A | Context deriving scheme B |
| Inverse quantization | High accuracy | Low accuracy |
| Scan | Power order | Zig-zag scan |
| Switching frequency | High | Low |

FIG. 56A

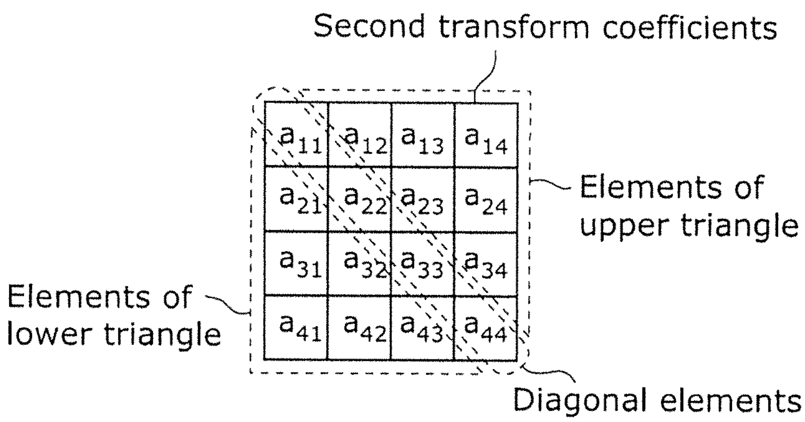


FIG. 56B

| | | | |
|---|---|---|---|
| 242 | 48 | 64 | 10 |
| -58 | 243 | 28 | 10 |
| -57 | -46 | 241 | 2 |
| -3 | -25 | -28 | 224 |

FIG. 56C

| | | | |
|---|---|---|---|
| | 53 | 61 | 7 |
| | | 37 | 18 |
| | | | 10 |
| | | | |

FIG. 56D

| | | | |
|---|---|---|---|
| | -5 | 3 | 3 |
| 5 | | -9 | -8 |
| -4 | 9 | | -8 |
| -4 | 7 | 8 | |

FIG. 56E

| | Elements of upper triangle | Elements of lower triangle |
|---|---|---|
| Largest (number of elements) | + | - |
| Large (number of elements) | - | + |
| Small (number of elements) | ++ | |
| Small (number of elements) | - | - |

FIG. 56F

| | | | |
|---|---|---|---|
| 242 | 48 | 64 | 0 |
| -58 | 243 | 28 | 0 |
| -57 | -46 | 241 | 0 |
| 0 | 0 | 0 | 224 |

FIG. 57A

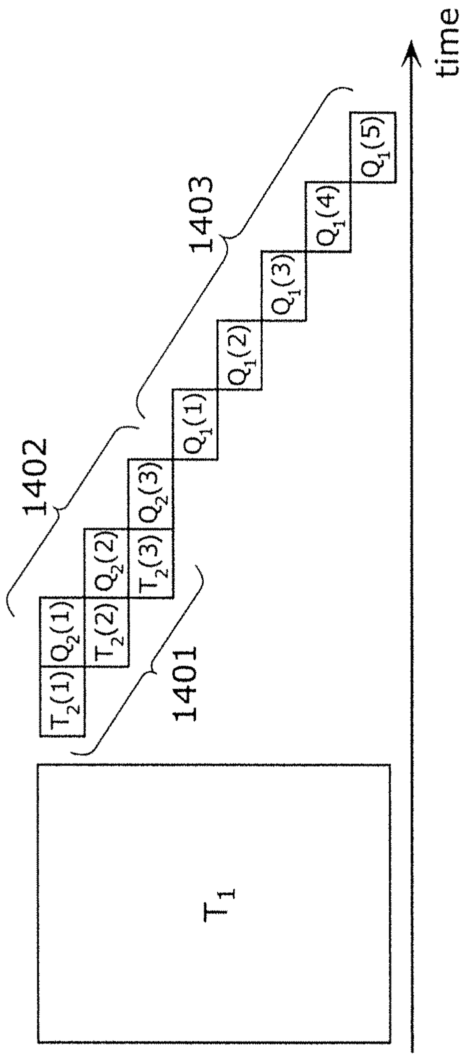
T$_1$
T$_2$(1)
Q$_2$(1)
T$_2$(2)
Q$_2$(2)
T$_2$(3)
Q$_2$(3)
Q$_1$(1)
Q$_1$(2)
Q$_1$(3)
Q$_1$(4)
Q$_1$(5)
1401
1402
1403
time

FIG. 57B

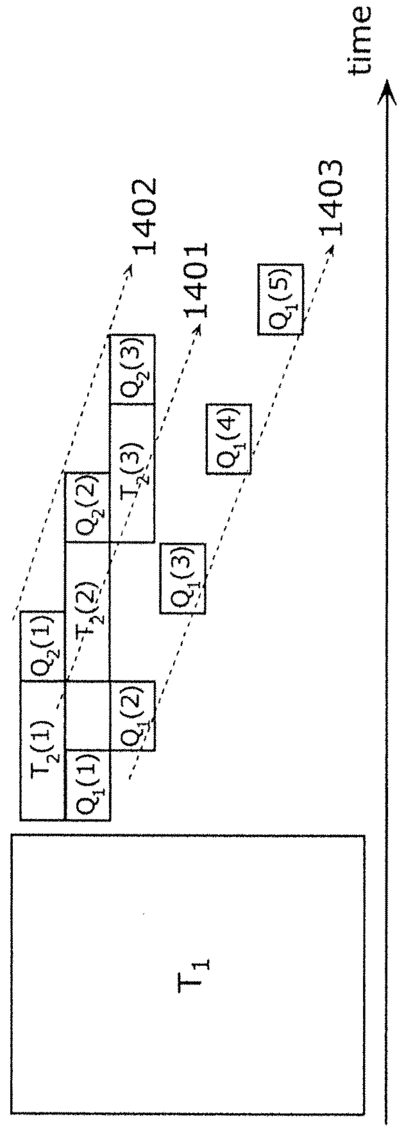
$T_1$
$T_2(1)$
$Q_2(1)$
$Q_1(1)$
$Q_1(2)$
$T_2(2)$
$Q_2(2)$
$Q_1(3)$
$T_2(3)$
$Q_2(3)$
$Q_1(4)$
$Q_1(5)$
1402
1401
1403
time

FIG. 58A

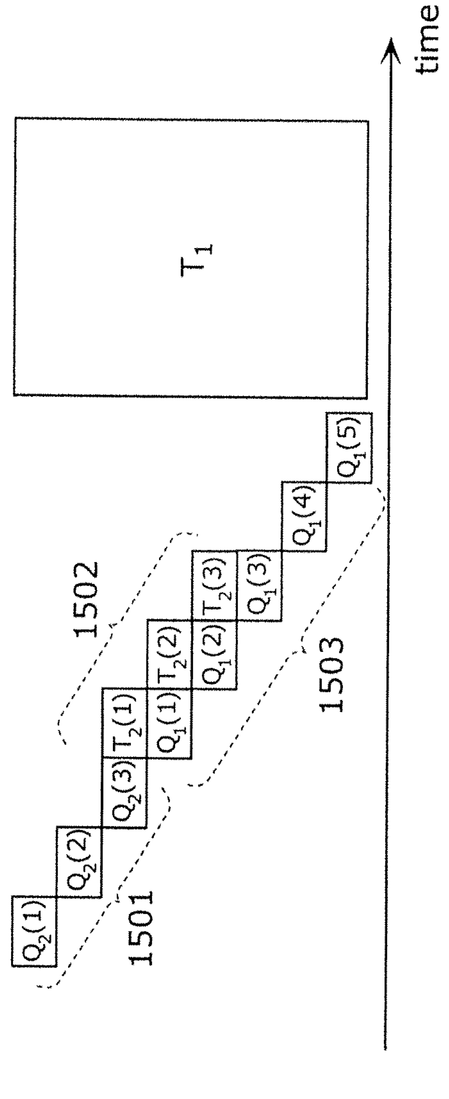
time
T1
Q2(1)
Q2(2)
Q2(3)
T2(1)
Q1(1)
T2(2)
Q1(2)
T2(3)
Q1(3)
Q1(4)
Q1(5)
1501
1502
1503

FIG. 58B

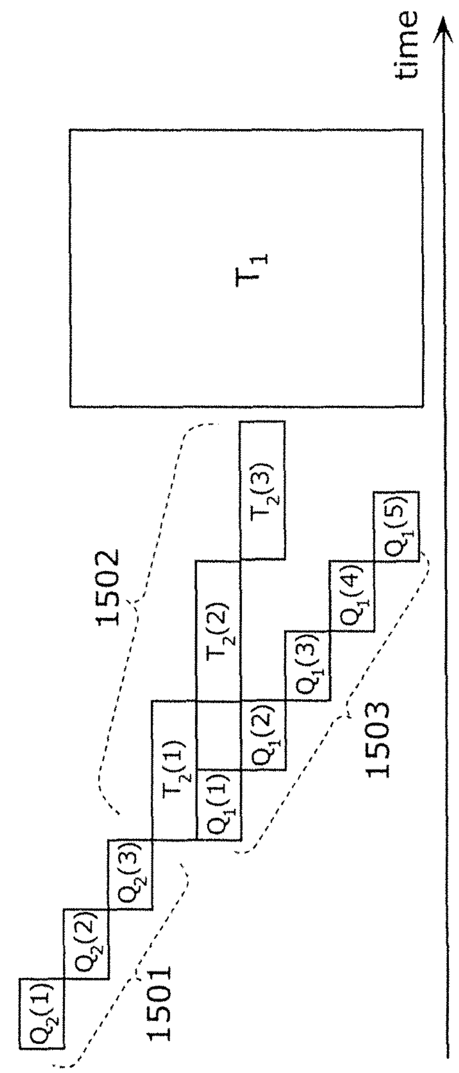
time
$T_1$
$T_2(3)$
$T_2(2)$
$T_2(1)$
$Q_2(1)$
$Q_2(2)$
$Q_2(3)$
$Q_1(1)$
$Q_1(2)$
$Q_1(3)$
$Q_1(4)$
$Q_1(5)$
1501
1502
1503

FIG. 59

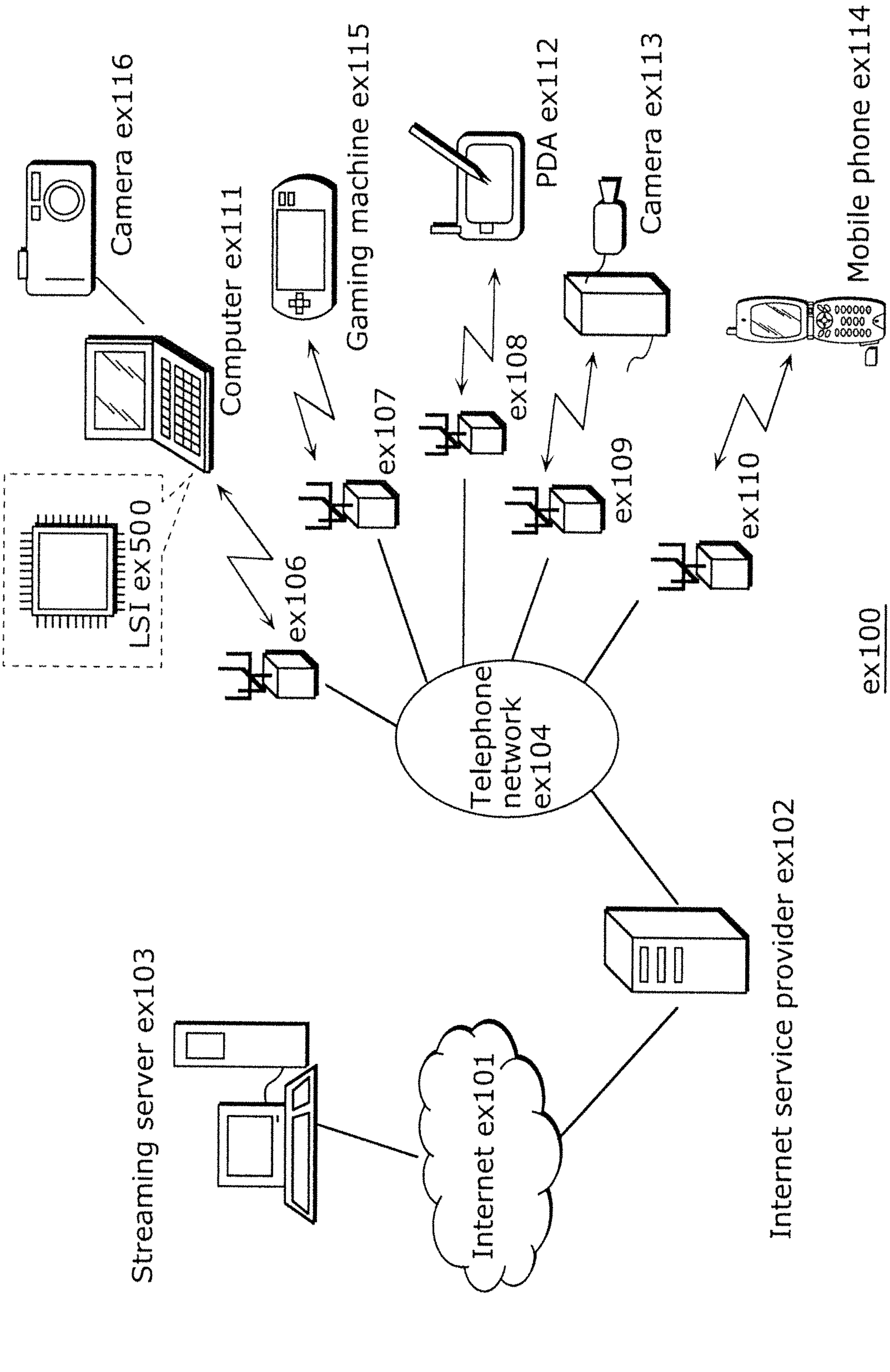
Camera ex116
Computer ex111
LSI ex500
Gaming machine ex115
PDA ex112
Camera ex113
Mobile phone ex114
ex106
ex107
ex108
ex109
ex110
Telephone network ex104
ex100
Streaming server ex103
Internet ex101
Internet service provider ex102

FIG. 60

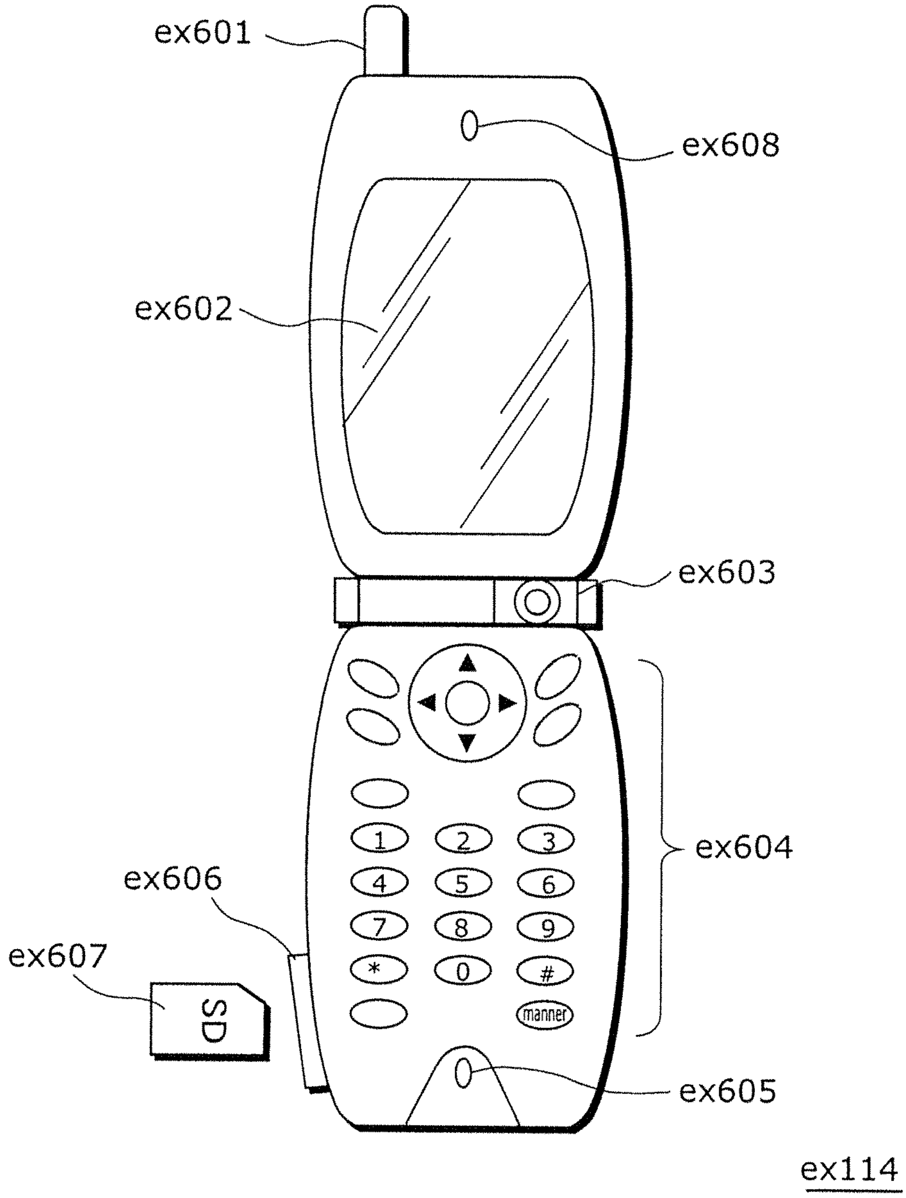
ex601
ex608
ex602
ex603
ex604
ex606
ex607
SD
1
2
3
4
5
6
7
8
9
*
0
#
manner
ex605
ex114

FIG. 61

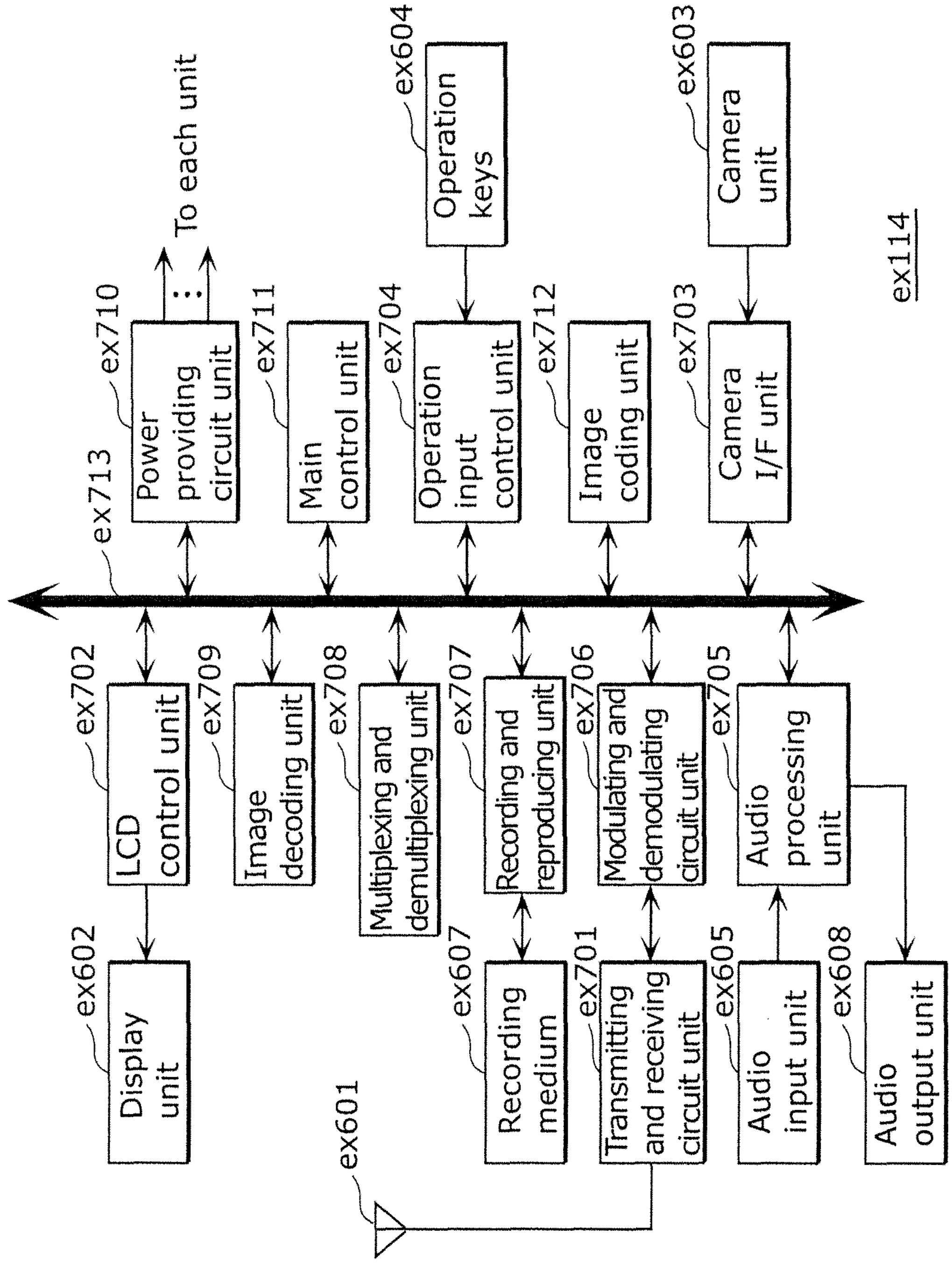

ex713
Power providing circuit unit
ex710
To each unit
Main control unit
ex711
Operation keys
ex604
Operation input control unit
ex704
Image coding unit
ex712
Camera unit
ex603
Camera I/F unit
ex703
ex114
LCD control unit
ex702
Display unit
ex602
Image decoding unit
ex709
Multiplexing and demultiplexing unit
ex708
Recording and reproducing unit
ex707
Recording medium
ex607
Modulating and demodulating circuit unit
ex706
Transmitting and receiving circuit unit
ex701
ex601
Audio processing unit
ex705
Audio input unit
ex605
Audio output unit
ex608

FIG. 62

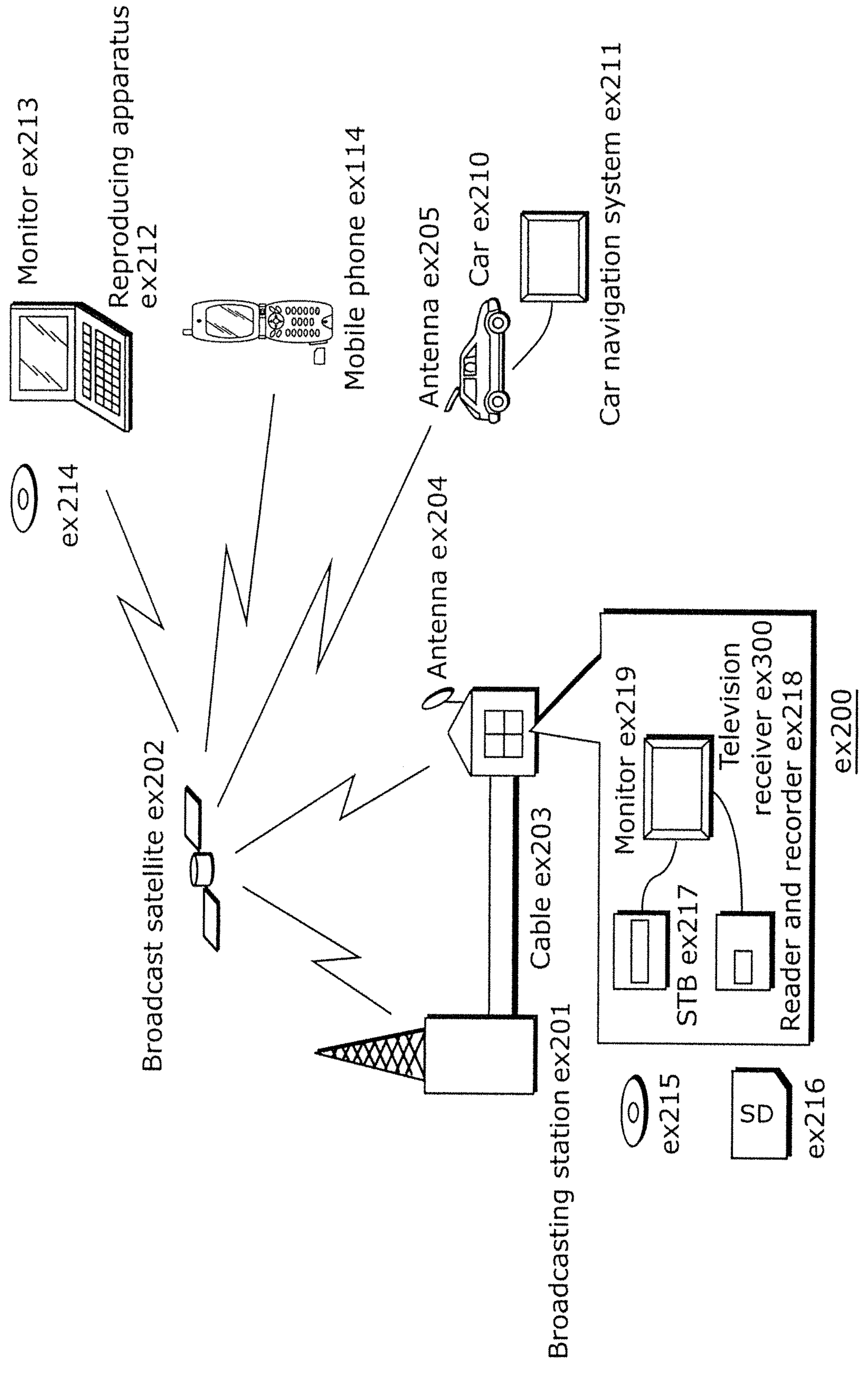
Monitor ex213
Reproducing apparatus ex212
ex214
Mobile phone ex114
Antenna ex205
Car ex210
Car navigation system ex211
Antenna ex204
Broadcast satellite ex202
Antenna
Cable ex203
Monitor ex219
Television receiver ex300
Reader and recorder ex218
STB ex217
ex200
Broadcasting station ex201
ex215
SD
ex216

FIG. 63

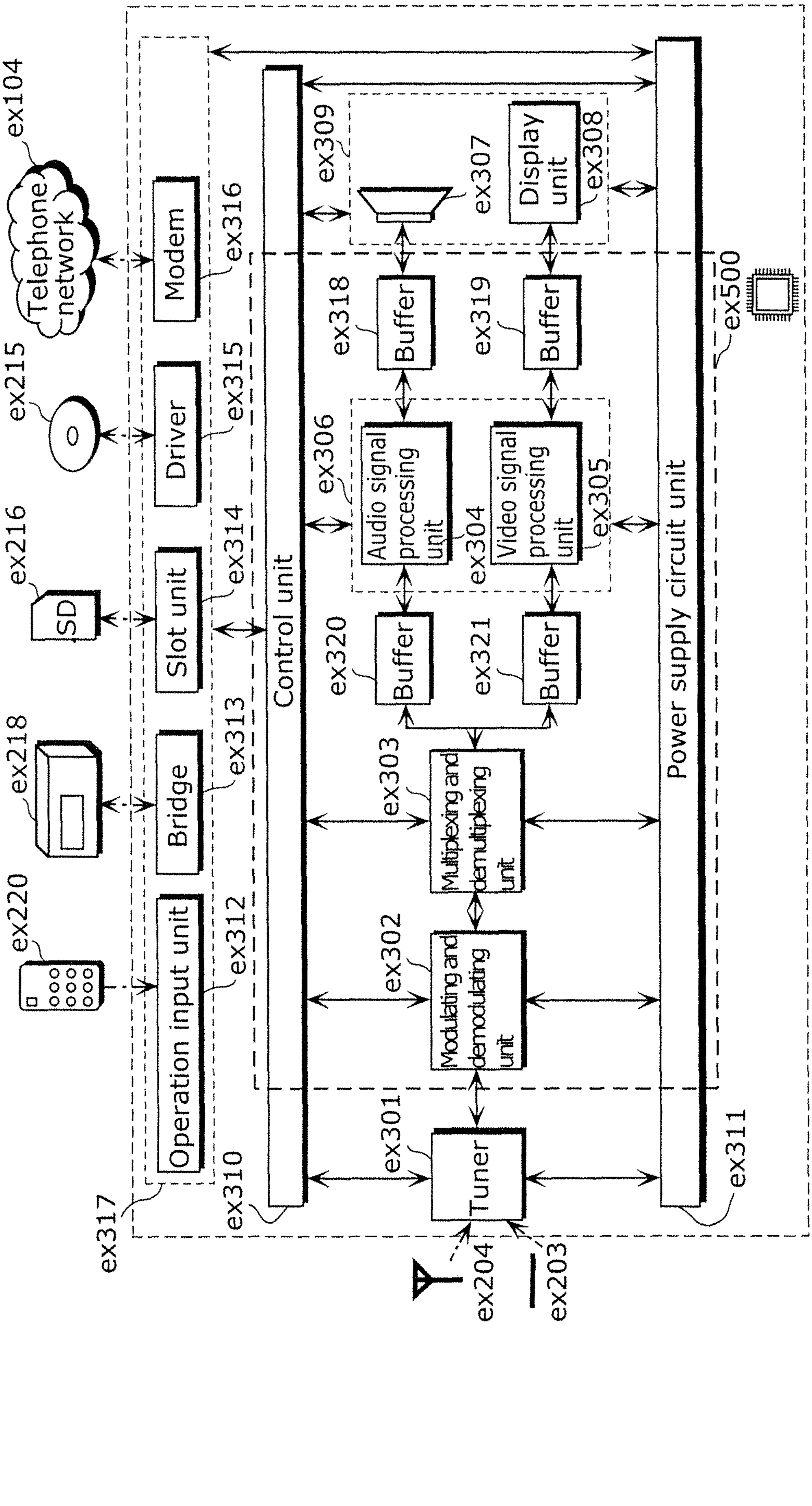

ex104
Telephone network
ex215
ex216
SD
ex218
ex220
Operation input unit
ex312
Bridge
ex313
Slot unit
ex314
Driver
ex315
Modem
ex316
ex317
Control unit
ex310
ex309
ex307
Display unit
ex308
ex318
Buffer
ex319
Buffer
ex306
Audio signal processing unit
ex304
Video signal processing unit
ex305
ex320
Buffer
ex321
Buffer
ex303
Multiplexing and demultiplexing unit
ex302
Modulating and demodulating unit
ex301
Tuner
ex204
ex203
Power supply circuit unit
ex311
ex500
ex300

FIG. 64

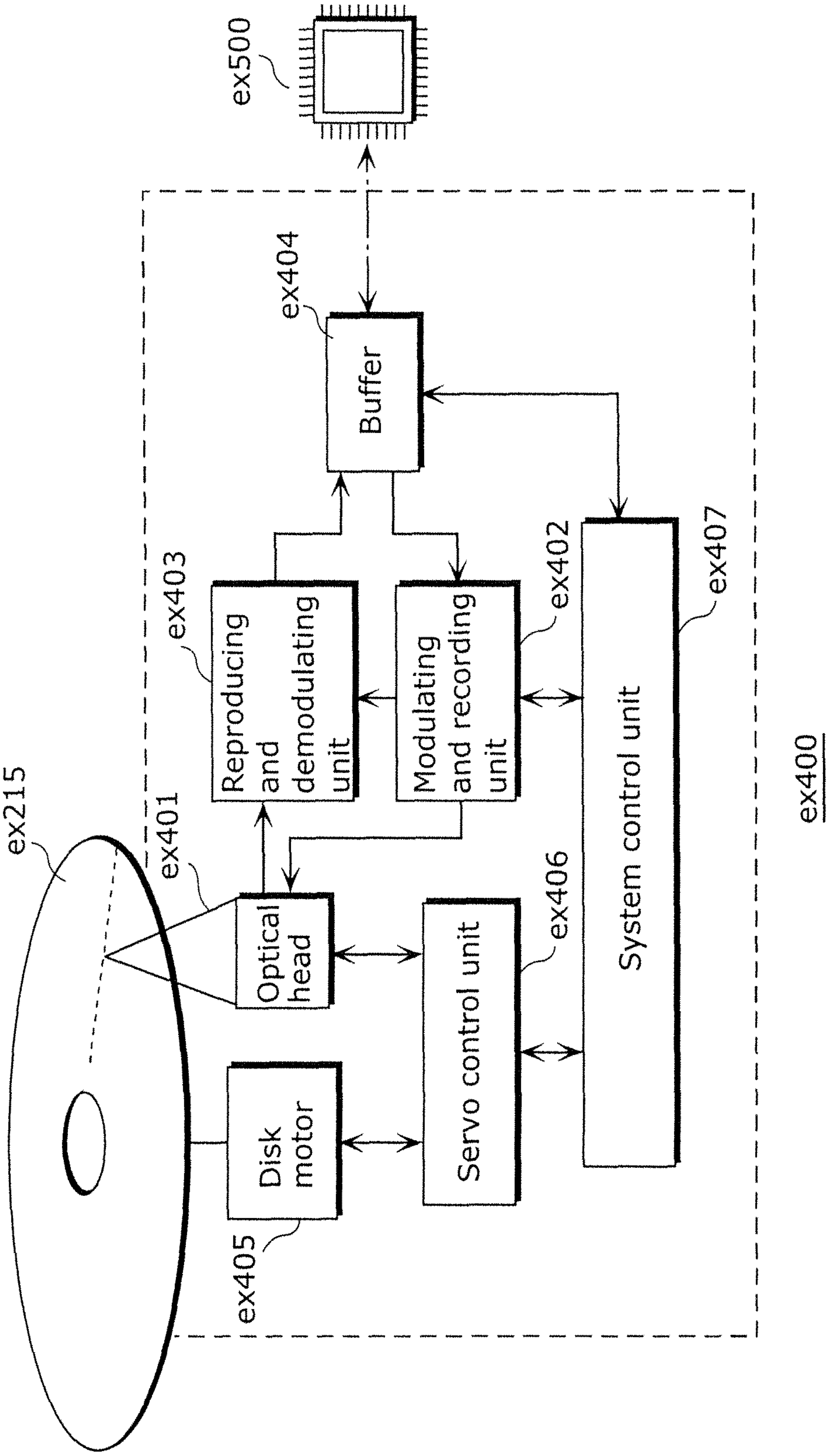
ex500
ex404
Buffer
ex403
Reproducing and demodulating unit
ex402
Modulating and recording unit
ex407
System control unit
ex215
ex401
Optical head
ex406
Servo control unit
ex405
Disk motor
ex400

FIG. 65

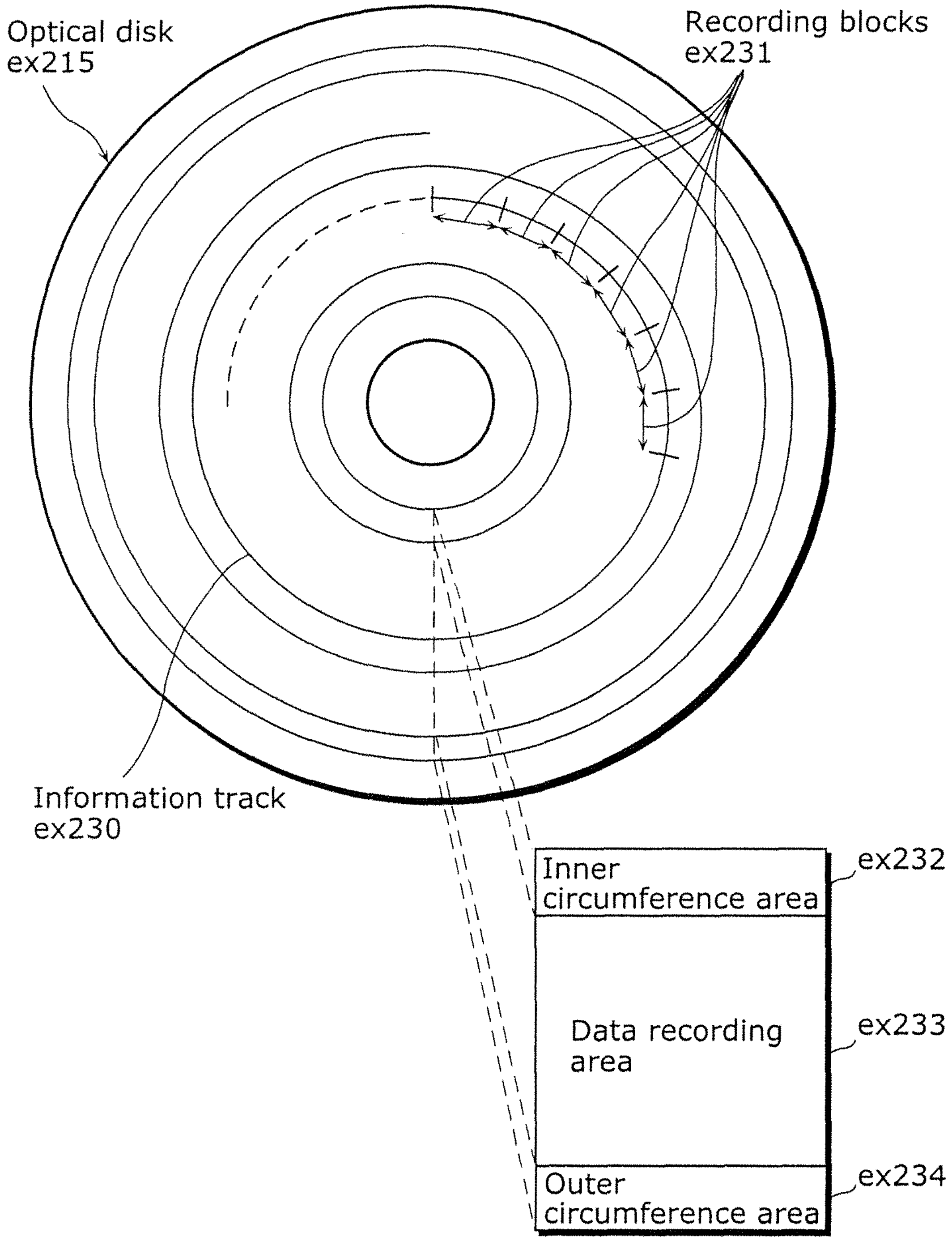
Optical disk
ex215
Recording blocks
ex231
Information track
ex230
Inner
circumference area
ex232
Data recording
area
ex233
Outer
circumference area
ex234

FIG. 66

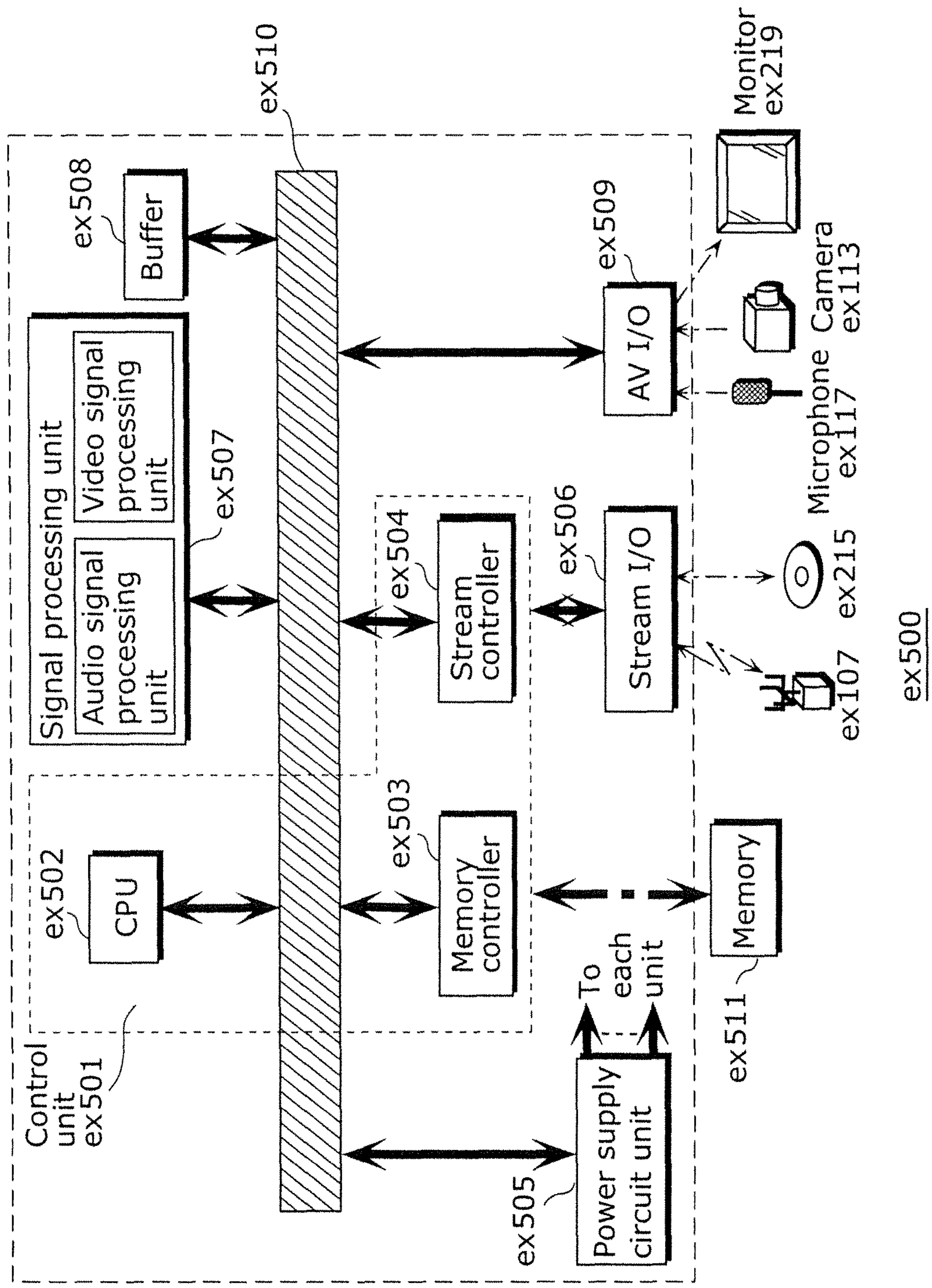
Control unit ex501
CPU
ex502
Memory controller
ex503
Stream controller
ex504
Power supply circuit unit
ex505
To each unit
Stream I/O
ex506
Signal processing unit
Audio signal processing unit
Video signal processing unit
ex507
Buffer
ex508
AV I/O
ex509
ex510
Memory
ex511
ex107
ex215
Microphone ex117
Camera ex113
Monitor ex219
ex500

**INTERNATIONAL SEARCH REPORT**

International application No. PCT/JP2010/004951

A. CLASSIFICATION OF SUBJECT MATTER
*H03M7/30*(2006.01)i, *H04N7/30*(2006.01)i, *H04N7/32*(2006.01)i

According to International Patent Classification (IPC) or to both national classification and IPC

B. FIELDS SEARCHED

Minimum documentation searched (classification system followed by classification symbols)
H03M7/30, H04N7/30, H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 9-200762 A (Daewoo Electronics Co., Ltd.), 31 July 1997 (31.07.1997), entire text; all drawings<br>& US 5724096 A & GB 2308771 A<br>& KR 10-0255746 B1 | 1-4,8-11, 15-20<br>5-7,12-14 |
| Y<br><br>A | WO 2006/006564 A1 (Sony Corp.), 19 January 2006 (19.01.2006), paragraphs [0025], [0026]<br>& JP 2006-54846 A & JP 2010-119153 A<br>& JP 2010-136454 A & JP 2010-141926 A<br>& EP 1662801 A1 & CN 1860796 A | 1-4,8-11, 15-20<br>5-7,12-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 October, 2010 (21.10.10) | 02 November, 2010 (02.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/004951

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-46499 A (Matsushita Electric Industrial Co., Ltd.), 12 February 2004 (12.02.2004), entire text; all drawings & US 2005/0080784 A1 & CN 1472964 A | 1-20 |
| A | JP 3-85080 A (NEC Corp.), 10 April 1991 (10.04.1991), entire text; all drawings (Family: none) | 1-20 |

Form PCT/ISA/210 (continuation of second sheet) (July 2009)